(19) Europäisches Patentamt
European Patent Office
Office européen des brevets

(11) **EP 4 556 112 A2**

(12) **EUROPEAN PATENT APPLICATION**

(43) Date of publication:
**21.05.2025 Bulletin 2025/21**

(21) Application number: **24203718.2**

(22) Date of filing: **30.09.2024**

(51) International Patent Classification (IPC):
***B01J 20/22*** *(2006.01)*

(52) Cooperative Patent Classification (CPC):
**B01J 20/226; B01D 53/02; B01J 20/28004; B01J 20/3204; B01J 20/3248; B01J 20/3259; B01J 20/3263**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.10.2023 US 202363592783 P**
**06.12.2023 PCT/US2023/082721**

(71) Applicant: **General Electric Technology GmbH**
**5400 Baden (CH)**

(72) Inventors:
- **DOHERTY, Mark D.**
  **Niskayuna, 12309 (US)**
- **LIPINSKI, Bryce Martin**
  **Niskayuna, 12309 (US)**
- **O BRIEN, Michael Joseph**
  **Niskayuna, 12309 (US)**
- **LITTLEJOHN, Matthew H.**
  **Niskayuna, 12309 (US)**
- **LIU, Jie Jerry**
  **Niskayuna, 12309 (US)**
- **CAO, Hongbo**
  **Niskayuna, 12309 (US)**
- **SHI, Xiaolei**
  **Niskayuna, 12309 (US)**
- **CAO, Jinbo**
  **Niskayuna, 12309 (US)**
- **SU, Yali**
  **Niskayuna, 12309 (US)**
- **DUGGAL, Anil R.**
  **Niskayuna, 12309 (US)**
- **MOORE, David R.**
  **Niskayuna, 12309 (US)**
- **CHAKRABORTY, Soumya**
  **Niskayuna, 12309 (US)**
- **STELLA, Albert S.**
  **Niskayuna, 12309 (US)**
- **NAYAK, Mohandas**
  **Niskayuna, 12309 (US)**
- **GAIKWAD, Amit**
  **Niskayuna, 12309 (US)**
- **ANTONIO, Alexandra**
  **Niskayuna, 12309 (US)**
- **GOSWAMI, Subhadip**
  **Niskayuna, 12309 (US)**
- **WOODRUFF, David W.**
  **Niskayuna, 12309 (US)**

(74) Representative: **Openshaw & Co.**
**8 Castle Street**
**Farnham, Surrey GU9 7HR (GB)**

(54) **SORBENT COMPOSITIONS, SYSTEMS, AND METHODS**

(57) Described herein are sorbents functionalized with ligands having an aminosilicone functional group, methods of making same, and methods of using same. Also described herein are methods of preparing aminoalkyl-substituted disiloxanes and aminoalkyl-substituted disiloxanes produced by same. Also described herein are systems that facilitate optimizing the adsorption and desorption of carbon dioxide gas by an absorbent bed using water management and functionalized sorbents. Also described herein are methods of systems and methods for modeling expected performance of sorbents in a post combustion carbon capture system and for operating the post combustion carbon capture system using one or more prospective sorbents based on a carbon capture performance value as determined by the modeling.

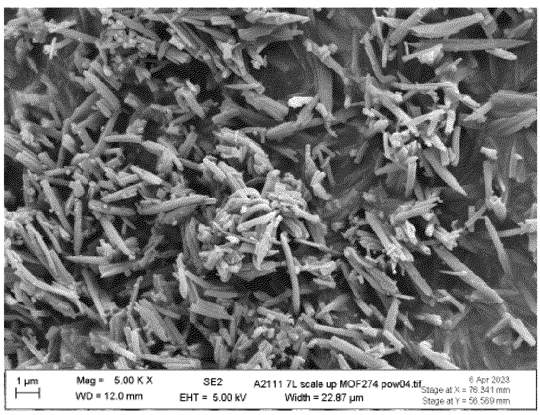


**FIG. 19**

EP 4 556 112 A2

## Description

RELATED APPLICATIONS

This application claims priority to U.S. Provisional Application Serial No. 63/386,231, filed on December 6, 2022, and also claims priority to International Application PCT/US2023/021542, filed on May 9, 2023, and also claims priority to PCT/US2023/023746, filed on May 26, 2023, and also claims priority to U.S. Provisional Application Serial No. 63/592,783, filed on October 24, 2023, the contents of which are hereby incorporated by reference in their entirety.

FIELD OF DISCLOSURE

The present disclosure relates generally to sorbents functionalized with ligands having an aminosilicone functional group, methods of making the same, and methods of using the same. The present disclosure also relates generally to methods of preparing aminoalkyl-substituted disiloxanes and aminoalkyl-substituted disiloxanes produced by the same. The present disclosure also relates generally to capture systems and, more specifically, to systems that facilitate optimizing the adsorption and desorption of carbon dioxide gas by an adsorbent bed using water management and functionalized sorbents. The present disclosure also relates generally to modeling post combustion or direct air carbon capture systems, and more particularly, to systems and methods for modeling expected performance of novel sorbents, specifically metal organic frameworks, in a post combustion or direct air carbon capture system and for operating the post combustion or direct air carbon capture system using one or more prospective sorbents based on a carbon capture performance value as determined by the modeling.

BACKGROUND

Solid sorbents are useful for a wide variety of purposes. For example, they are particularly useful in carbon capture sorbent systems, such as for use in point source, post-combustion carbon capture (PCC) and direct air capture (DAC) of carbon dioxide ($CO_2$). Solid sorbents used in carbon capture offer a viable and superior techno-economic alternative to conventional liquid-amine based $CO_2$ capture processes. For example, solid sorbents tend to have better adsorption capacity, lower regeneration energy requirements, and reduced system complexity and environmental and safety risks as compared to active liquid amines.

There are two types of sorbent materials based on their underlying adsorption mechanisms. A first type, physisorbents, rely on non-covalent interactions (e.g., van der Waals interactions, dipole-dipole interactions, etc.) to adsorb gaseous species such as $CO_2$ and $H_2O$. Examples of physisorbents include activated carbon, zeolites, and metal organic frameworks (MOFs). A second type, chemisorbents, adsorb $CO_2$ through reversible chemical reactions and through the formation of ammonium carbamate, carbamic acid, ammonium carbonate, and/or ammonium bicarbonate. Examples of chemisorbents include amine-functionalized silica particles, amine-functionalized polymers and resins, amine-functionalized metal-organic frameworks (MOFs), and amine-functionalized covalent organic frameworks (COFs).

As a result of chemical bonding, chemisorbent materials generally have superior selectivity of $CO_2$ adsorption as compared to physisorbent materials for interfering species like $N_2$, methane, and CO. However, the effectiveness of chemisorbent systems may be limited by the compositional nature of the functionalizing molecules performing the chemisorption and the functionalization process. Accordingly, there is a need for functionalized sorbents that contain chemically- and thermally-stable molecular species that selectively uptake $CO_2$ with high capacities and rapid kinetics.

Relatedly, at least some known industrial and power generation processes may result in the production of a gas stream containing contaminants, such as in the form of $CO_2$. As such, capture systems may be used to facilitate removing the contaminants from the gas stream prior to an exhaust stream being released into the atmosphere. For example, carbon capture systems may be used to attempt to capture $CO_2$ and store it underground to reduce an amount of $CO_2$ released into the atmosphere.

At least some known carbon capture systems may use adsorbent beds to capture and release $CO_2$. In some known systems, to improve the adsorption capacity and efficiency of the system, solid sorbent materials may be used with adsorbent beds to enhance the adsorption and desorption of $CO_2$, as opposed to other known systems that use liquid-amine based $CO_2$ capture processes. However, the effectiveness of chemisorbent systems is often limited by functionalization, and detailed operation conditions as well.

To facilitate increasing the amount of $CO_2$ captured, at least some known carbon capture systems use water to improve the efficiency of $CO_2$ capture. For example, carbon capture systems may use wet conditions to improve $CO_2$ adsorption performance. However, interference from the $H_2O$ molecules may reduce the $CO_2$ adsorption capacity of the chemisorbent material used in the adsorbent beds if too much $H_2O$ is adsorbed. Accordingly, there exists a need for capture systems that use functionalized chemisorbents in the presence of water to optimize the efficiency and productivity of carbon dioxide adsorption and desorption.

Relatedly, aminoalkyl-substituted disiloxanes are useful for a wide variety of purposes. For example, they are particularly useful in carbon capture systems or aminosilicone-based products.

Substituted disiloxanes are often produced via known reactions. However, known reactions may be limited in scope and may be ineffective for producing aminoalkyl-substituted disiloxanes. For example, the process described in CN102675596 involves a reaction pathway which is not suitable for aminoalkyl-substituted disiloxanes due to side reactions that preferentially form cyclic products. Likewise, the process described in CN102351893 starts from a material that can only hydrolyze to one compound. Further, some processes, like the process described in Li, et al., Thermochimica Acta, 2012, 545, 75, require multi-step reaction pathways and intermediate purification steps which may require a relatively large number of reaction steps, and/or which may reduce the overall yields and increase the costs and complexity of the process.

Therefore, opportunities for preparing aminoalkyl-substituted disiloxanes are limited. Accordingly, there is a need for simplified methods of preparing aminoalkyl-substituted disiloxanes.

Relatedly, some power plant systems may include post combustion carbon capture systems that are configured to capture carbon dioxide ($CO_2$) from the waste gas (flue gas) produced. PCC systems may be used to capture $CO_2$ from the waste gas produced by power plants that include, for example, coal-burning systems, gas turbines, and/or boilers. Some types of PCC systems use metal-organic frameworks to facilitate carbon capture. Metal-organic frameworks typically include two main components, an inorganic metal constituent (often called a secondary building unit, or SBU) and an organic constituent (often called a linker). Various different MOFs have been developed and tested for their capture capacity (e.g., a measure of how effective a particular MOF performs at capturing $CO_2$). However, there are potentially millions of combinations of metals, linkers, and other functional groups that could be employed in an MOF, some of which could yield greater capture capacity and productivity than existing MOFs, and the real-world creation and study of each possible combination of constituents is economically prohibitive.

What is needed is a system and method for modeling MOF performance using known MOFs in order to predict how other proposed MOFs may perform and adjust the operation of a carbon capture system to use a MOF based on the predicted carbon capture performance.

The present disclosure separately and collectively addresses these related needs.

## BRIEF DESCRIPTION

In one aspect, a functionalized sorbent is provided. The functionalized sorbent includes a sorbent and at least one functionalization ligand including an aminosilicone group. The sorbent has an average particle length $\leq 3\ \mu m$.

In another aspect, a method of making a sorbent is provided. The method includes: (I) forming a mixture including: a sorbent precursor; a crystal growth inhibitor; optionally a solvent; and optionally a non-solvent; and (II) reacting the mixture. The sorbent has an average particle length $\leq 3\ \mu m$.

In another aspect, a method of capturing at least one gas is provided. The method includes: (I) receiving a gas source including the at least one gas at a functionalized sorbent, wherein the functionalized sorbent includes a sorbent and at least one functionalization ligand including an aminosilicone group; and (II) capturing an amount of the at least one gas with the functionalized sorbent. The sorbent has an average particle length $\leq 3\ \mu m$ .

In another aspect, a method of collecting at least one gas is provided. The method includes: (I) receiving a gas source including the at least one gas at a functionalized sorbent, wherein the functionalized sorbent includes a sorbent and at least one functionalization ligand including an aminosilicone group; (II) capturing an amount of the at least one gas with the functionalized sorbent; and (III) releasing the at least one gas from the functionalized sorbent. The sorbent has an average particle length $\leq 3\ \mu m$ .

## BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:

Figure 1 is a schematic illustration of an exemplary capture system that may be used to capture $CO_2$ in accordance with the present disclosure;

Figure 2 is a schematic illustration of an alternative capture system that may be used to capture $CO_2$ in accordance with the present disclosure;

Figure 3 illustrates the exemplary types of moisture adsorption isotherms that may be possessed by the capture system of Figure 2 in accordance with the present disclosure;

Figure 4 is a schematic of an exemplary control system that may be used with the capture systems of Figure 1 and Figure 2 in accordance with the present disclosure;

Figure 5 illustrates an exemplary potential $H_2O$ adsorption capacity of sorbents functionalized with AEAM, spermidine, a first hybrid of amines (Hybrid Compound 1, spermine:AEAM=0.65:0.35), or a second hybrid of amines (Hybrid Compound 2, spermine:AEAM=0.32:0.46) measured at 25°C using a dynamic vapor sorption (DVS) gravimetric method in accordance with the present disclosure;

Figure 6 illustrates an exemplary potential $H_2O$ adsorption capacity of sorbents functionalized with the first hybrid of amines (Hybrid Compound 1, spermine:AEAM=0.65:0.35) as a function of $H_2O$ partial pressure at varying temperatures using the DVS gravimetric method in accordance with the present disclosure;

Figure 7 illustrates an exemplary potential $H_2O$ adsorption capacity of sorbents functionalized with the first hybrid of amines (Hybrid Compound 1, spermine:AEAM=0.65:0.35) as a function of relative humidity at varying temperatures measured using the DVS gravimetric method in accordance with the present disclosure;

Figure 8 illustrates an exemplary potential $CO_2$ and $H_2O$ adsorption capacity of sorbents functionalized with the first hybrid of amines (Hybrid Compound 1, spermine:AEAM=0.65:0.35) as a function of relative humidity at 40°C measured using the DVS gravimetric method in accordance with the present disclosure;

Figure 9 illustrates an exemplary potential $CO_2$ adsorption capacity of sorbents functionalized with the first hybrid of amines (Hybrid Compound 1, spermine:AEAM=0.65:0.35) as a function of water pressure at varying temperatures measured using the DVS gravimetric method in accordance with the present disclosure;

Figure 10 illustrates an exemplary potential $H_2O$ adsorption capacity of sorbents functionalized with the first hybrid of amines (Hybrid Compound 1, spermine:AEAM=0.65:0.35) as a function of water pressure at varying temperatures measured using the DVS gravimetric method in accordance with the present disclosure;

Figure 11 illustrates an exemplary potential $CO_2$ adsorption capacity of sorbents functionalized with the first hybrid of amines (Hybrid Compound 1, spermine:AEAM=0.65:0.35) as a function of relative humidity at varying temperatures measured using the DVS gravimetric method in accordance with the present disclosure;

Figure 12A illustrates exemplary potential $CO_2$ adsorption isotherms of sorbents functionalized with the first hybrid of amines (Hybrid Compound 1, spermine:AEAM=0.65:0.35) for dry $CO_2$ and wet $CO_2$ with 30% relative humidity at 40°C measured using the DVS gravimetric method in accordance with the present disclosure;

Figure 12B illustrates exemplary $CO_2$ adsorption and an $H_2O$ isotherm of a sorbent functionalized with Hybrid Compound 3 (spermine:AEAM=0.69:0.23) for dry $CO_2$ and wet $CO_2$ with varying relative humidity at 25°C and 400ppmv $CO_2$ concentration measured using the break through test rig with individual $CO_2$ and $H_2O$ sensors in accordance with the present disclosure;

Figure 13 is an exemplary method flow chart in accordance with the present disclosure;

Figure 14 illustrates an example PCC modeling system that can be used to anticipate how particular MOFs may perform in capturing carbon dioxide ($CO_2$) from exhaust gases of a coal-fired power plant in accordance with the present disclosure;

Figure 15 is a graph that illustrates a drop in $CO_2$ adsorptive productivity for an example sorbent (e.g., an example MOF) when going from a synthesized powder measured under equilibrium conditions to a final film coating on a substrate measured under dynamic conditions in accordance with the present disclosure;

Figures 16A - 16C are a flow chart illustrating an example method for analyzing anticipated performance for prospective sorbents in post-combustion carbon capture systems in accordance with the present disclosure;

Figure 17 illustrates an example correlation matrix in accordance with the present disclosure;

Figure 18 illustrates an 1H NMR analysis of $Mg_2(dobpdc)_1(IPA)_{1.92}$ in accordance with the present disclosure;

Figure 19 is a scanning electron microscope (SEM) image of an exemplary MOF-274 (sample ID# A2111) made in accordance with the present disclosure;

Figure 20 depicts SEM images of exemplary MOF-274 made using salicylic acid (left) and fluoro-salicylic acid (right) as crystal-growth inhibitors in accordance with the present disclosure;

Figure 21 depicts powder X-ray diffraction (XRD) spectra of MOF-274 synthesized using 4,4'-biphenol as crystal-growth inhibitor per the input molar ratios of 4,4'-biphenol:$H_4$dobpdc indicated with arrows in accordance with the present disclosure;

Figure 22 depicts SEM images of exemplary MOF-274 made without (left) and with 9.24 wt% 4,4'-biphenol incorporation (right) in accordance with the present disclosure;

Figure 23 depicts crystal-growth inhibitor 2,2'-Bipyridine-5,5'-dicarboxylic acid (BPYDC) and powder XRD spectra of MOF-274 synthesized using BPYDC per the input molar ratios of BPYDC:$H_4$dobpdc indicated above each line in accordance with the present disclosure;

Figure 24 depicts SEM images of exemplary MOF-274 made using BPYDC as crystal-growth inhibitor (0.13wt%, 2.29wt% and 24.78wt% incorporation) in accordance with the present disclosure;

Figure 25 depicts crystal-growth inhibitor 2,2'-Bipyridine-5,5'-dimethanol (BPYDM) and powder XRD spectra of MOF-274 synthesized using BPYDM per the input molar ratios of BPYDM:$H_4$dobpdc indicated above each line in accordance with the present disclosure;

Figure 26 depicts SEM images of exemplary MOF-274 made using BPYDM as crystal-growth inhibitor (1.17wt%, 3.43wt% and 6.80wt% incorporation) in accordance with the present disclosure;

Figure 27 depicts chemical structures of spermine and exemplary aminosilicones in accordance with the present disclosure;

Figure 28 depicts an SEM image of a comparative example of sorbent (GE115-A259) (comparative-3) using MOF-274 (ID#: A21) synthesized according to a conventional procedure;

Figure 29 depicts an SEM image of an inventive example of sorbent (GE115-A272) (Inventive-4) including mortar and pestled MOF-274 (ID# A21) in accordance with the present disclosure;

Figure 30 depicts an SEM image of an inventive example of sorbent (GE115-A279) (Inventive-5) including mechanically ground MOF-274 in accordance with the present disclosure;

Figure 31 is a graph depicting $CO_2$ uptake of sorbents including pure spermine, pure APAP, and mixtures with different ratios as a function of spermine loading under 25°C, 50%RH and 400ppmv $CO_2$ measured using a break-through test rig in accordance with the present disclosure;

Figure 32 is a graph depicting $CO_2$ uptake of sorbents including pure spermine, pure APAP, and mixtures with different ratios as a function of spermine loading at 120°C under 100mBar $CO_2$ partial pressure measured using the DVS gravimetric method in accordance with the present disclosure;

Figure 33 is a graph depicting $CO_2$ adsorption working capacity of sorbents including pure spermine, pure APAP, and mixtures with different ratios as a function of spermine loading in accordance with the present disclosure.

Figure 34 is an exemplary method flow chart in accordance with the present disclosure;

Figure 35 is an exemplary method flow chart in accordance with the present disclosure;

Figure 36 is an exemplary method flow chart in accordance with the present disclosure; and

Figure 37 is an exemplary method flow chart in accordance with the present disclosure;

Unless otherwise indicated, the drawings provided herein are meant to illustrate features of embodiments of the disclosure. These features are believed to be applicable in a wide variety of systems including one or more embodiments of the disclosure. As such, the drawings are not meant to include all conventional features known by those of ordinary skill in the art to be required for the practice of the embodiments disclosed herein.

DETAILED DESCRIPTION

Embodiments of this disclosure can be combined in any manner, including various combinations of composition embodiments, system embodiments, and method embodiments. Subject headings are provided for convenience and do not separate or limit the embodiments of this disclosure. The following embodiments are, therefore, to be construed as merely illustrative, and not limiting of the disclosure in any way whatsoever.

Systems for Carbon Dioxide Capture Using Functionalized Sorbents and Water Management

In one aspect, a capture system for use in capturing carbon dioxide is provided. The capture system includes an adsorbent bed comprising at least one adsorption module and a functionalized sorbent, the at least one adsorption module oriented to receive a gas stream, adsorb carbon dioxide from the gas stream via the functionalized sorbent, and discharge an exhaust stream. The capture system further includes a contactor for use in dynamically controlling a temperature and a relative humidity of the at least one adsorption module and a controller configured to modulate the temperature and the relative humidity based on the functionalized sorbent to facilitate increasing an amount of carbon dioxide captured by the adsorbent bed.

The embodiments described herein relate to systems that use functionalized chemisorbents in the presence of water to facilitate optimizing the adsorption and desorption of carbon dioxide by an adsorbent bed. The advantages of the systems described herein include, at least: (i) increasing the efficiency and performance of carbon dioxide adsorption and desorption due to the use of changes in temperature of the adsorbent bed; (ii) increasing the efficiency and performance of carbon dioxide adsorption and desorption due to the use of functionalized sorbents within the adsorbent bed; (iii) increasing the efficiency and performance of carbon dioxide adsorption and desorption due to the use of changes in water relative humidity within the adsorbent bed; and (iv) increasing the performance of the capture system due to the modulation of temperature and water relative humidity within one or more adsorption modules within the adsorbent bed based on the functionalized sorbent within the one or more adsorption modules.

Figure 1 is a schematic illustration of an exemplary capture system 100 that may be used to capture $CO_2$ using an adsorbent bed 102. In the exemplary embodiment, the absorbent bed 102 includes at least one adsorption module 104. More specifically, in the exemplary embodiment, the adsorbent bed 102 includes four adsorption modules 104a-d. In some embodiments, the capture system 100 may include more than or less than four adsorption modules 104. Moreover, in the exemplary embodiment, the adsorbent bed 102 includes an inlet 106 and an outlet 108. The inlet 106 and the outlet 108 are oriented such that during operation, a gas stream 110 received through the inlet 106 is channeled through each adsorption module 104 in series towards the outlet 108. As the gas stream 110 is channeled through each adsorption module 104, the adsorbent bed 102 captures $CO_2$ from the gas stream 110 and an exhaust stream 112 is discharged through the outlet 108.

The adsorption module 104 may include a solid sorbent to preferentially capture specific components of the gas stream 110, such as $CO_2$ and $H_2O$. In the exemplary embodiment, the adsorption module 104 includes a functionalized sorbent 114 including a sorbent and a functionalization ligand including at least one amine group such as, but not limited to, an aminosilicone group to facilitate enhancing the $CO_2$ capture capacity and productivity of the adsorbent bed 102. Generally, the functionalized sorbent 114 may be in any form known in the art that facilitates the systems described herein. For example, the functionalized sorbent 114 may be in the form of powder, composites mixed with binders, films or coatings, packed beds, and/or columns.

In the exemplary embodiment, after being received by the inlet 106, the gas stream 110 is channeled through a first module 104a of adsorption modules 104. Each of the absorption modules 104 includes the functionalized sorbent 114 to adsorb the $CO_2$ included in the gas stream 110. In some embodiments, the functionalized sorbent 114 may be the same for each adsorption module 104. In other embodiments, the functionalized sorbent 114 may vary within at least one adsorption module 104.

Generally, the gas stream 110 may be any suitable gas known in the art that facilitates the systems described herein. For example, the gas stream 110 may be air, flue gas, post-combustion gas, natural gas, and/or combinations thereof. In the exemplary embodiment, the gas stream 110 includes $CO_2$ and $H_2O$. In some embodiments, $CO_2$ may be present in the gas stream 110 in a range of from about 1v% to about 10v%. In other embodiments, $CO_2$ may be present in the gas stream 110 in an amount less than 1v%, such as a volume of about or less than 300-500ppm. In still other embodiments, $CO_2$ may be present in the gas stream 110 in an amount greater than 10v%. In some embodiments, $H_2O$ may be present in the gas stream 110 in a range of from about 0.01v% to about 20v%. In other embodiments, $H_2O$ may be present in the gas stream 110 in an amount of less than 7v%, such as approximately 2v% to 7v% as in the air during hot and

humid summers, or less than 2v% as in the air during cold winters. In still other embodiments, $H_2O$ may be present in the gas stream 110 in an amount of more than 5v%, such as in the post-combustion gases.

In the exemplary embodiment, the concentration of $CO_2$ of the gas stream 110 is generally highest as the gas stream 110 enters the inlet 106. As $CO_2$ is adsorbed by the functionalized sorbent 114 of each subsequent adsorption module 104, the concentration of $CO_2$ in the gas stream 110 is reduced as the gas stream 110 is channeled through the adsorption modules 104a-d towards the outlet 108. In the exemplary embodiment, the concentration of $CO_2$ in the gas stream 110 flowing through the adsorption modules 104a-d is lowest at the outlet 108 during a designated adsorption cycle.

In the exemplary embodiment, the capture system 100 also includes a controller 116 that dynamically adjusts operation of the capture system 100. For example, the controller 116 may facilitate maximizing the capture of $CO_2$ by changing the temperature of one or more adsorption module 104 and/or changing an $H_2O$ content within one or more adsorption module 104, as described further herein.

The controller 116 modulates the operating conditions of the capture system 100 by dynamically adjusting the temperature of each adsorption module 104a-d. In the exemplary embodiment, the adsorption module 104 includes a contactor 118. The contactor 118 includes a contactor inlet 120 and a contactor outlet 121. In the exemplary embodiment, a first stream 122 received through the contactor inlet 118 modulates the temperature of the adsorption module 104 via heat transfer. The contactor 118 may use indirect or direct heat transfer to adjust the temperature of the adsorption module 104. For example, the contactor 118 may include a fluid circuit (not shown) defined between and extending from the contactor inlet 120 and to the contactor outlet 121, such that indirect heat transfer occurs between the first stream 122 flowing within the fluid circuit (not shown) and the functionalized sorbent 114 within the adsorption module 104. Additionally, for example, the contactor 118 may be in direct flow communication with the adsorption module 104, wherein direct heat transfer occurs between the first stream 122 and the functionalized sorbent 114 within the adsorption module 104. In some embodiments, the contactor 118 of one or more adsorption modules 104a-d may be coupled in series and/or in parallel.

The controller 116 may adjust the temperature of one or more adsorption modules 104 while monitoring a regulated temperature $T_{reg}$ of the first stream 122. In some embodiments, the first stream 122 may be in a liquid form. In other embodiments, the first stream 122 may be in a gaseous form. Heat transfer, either direct or indirect, between the first stream 122 and the functionalized sorbent 114 within one or more adsorption modules 104 facilitates controlling a temperature of the functionalized sorbent 114. The controller 116 may monitor the regulated temperature $T_{reg}$ of the first stream 122 using a contactor sensor 130 (shown in Figure 4). Additionally, the controller 116 may monitor a control temperature $T_{cnt1}$ of at least one adsorption module 104 using a module sensor 134 (shown in Figure 4). In operating conditions where the control temperature $T_{cnt1}$ of at least one adsorption module 104 is lower than desired, the controller 124 may selectively increase the regulated temperature $T_{reg}$ of the first stream 122, thereby increasing the temperature of the at least one adsorption module 104. Alternatively, in operating conditions where the control temperature $T_{cnt1}$ of at least one adsorption module 104 is higher than desired, the controller 124 may selectively decrease the regulated temperature $T_{reg}$ of the first stream 122, thereby reducing the temperature of the at least one adsorption module 104.

Generally, the regulated temperature $T_{reg}$ of the first stream 122, and thereby the temperature of the adsorption module 104, may be any suitable temperature known in the art that facilitates the capture of $CO_2$ by the systems described herein. In some embodiments, the regulated temperature $T_{reg}$ of the first stream 122 may be in a range of from about 0°C to about 150°C. In other embodiments, the regulated temperature $T_{reg}$ of the first stream 122 may be in a range of from about 60°C to about 250°C. In the exemplary embodiment, the regulated temperature $T_{reg}$ of the first stream 122 is monitored within each adsorption module 104a-d. In some embodiments, the regulated temperature $T_{reg}$ of the first stream 122 may be substantially uniform across each adsorption module 104. In other embodiments, the regulated temperature $T_{reg}$ of the first stream 122 may vary across different adsorption modules 104a-d.

Additionally, the controller 116 may vary the regulated temperature $T_{reg}$ of the first stream 122 within any of the adsorption modules 104a-d. For example, one or more adsorption modules 104a-d may include more than one module sensor 134 (shown in Figure 4). Thus, the controller 116 may create a temperature profile that includes varying values of the regulated temperature $T_{reg}$ of the first stream 122 within any or all of the adsorption modules 104a-d. In some embodiments, the varying values of the regulated temperature $T_{reg}$ of the first stream 122 may form a gradient temperature profile within any or all of the adsorption modules 104a-d. In other embodiments, the varying values of the regulated temperature $T_{reg}$ of the first stream 122 may form a discrete temperature profile within any or all of the adsorption modules 104a-d.

Figure 2 is a schematic illustration of an exemplary capture system 200 that may be used to capture $CO_2$ using the adsorbent bed 102. The embodiment illustrated in Figure 2 is similar to the embodiment illustrated in Figure 1, with the differences noted herein, and as such, the same reference numbers are used in Figure 2 as were used in Figure 1. The controller 116 facilitates modulating the operating conditions of the capture system 200 by dynamically adjusting an $H_2O$ relative humidity through adjusting the $H_2O$ content within each adsorption module 104a-d. In the exemplary embodiment, the adsorption module 104 includes an injector 202 including an injector inlet 204. A second stream 206 received through the injector inlet 204 facilitates modulating the $H_2O$ relative humidity by adjusting $H_2O$ content within the adsorption

module 104. In the exemplary embodiment, the second stream 206 includes $H_2O$. The second stream 206 may include $H_2O$ in a liquid (e.g., water) or a gas (e.g., water vapor) form. In some embodiments, $H_2O$ may be present in the second stream 206 in a range of from about 0.1v% to about 20v%. In other embodiments, $H_2O$ may be present in the second stream 206 in a range of from about 4v% to about 15v%. In still other embodiments, $H_2O$ may be present in the second stream 206 in a range of from about 0.5v% to about 4v%, such as generally occurs in ambient air.

The controller 116 may adjust the $H_2O$ content within one or more adsorption modules 104 by regulating the flow of the second stream 206 into one or more adsorption modules 104. For example, the controller 116 may monitor relative humidity level for an $H_2O$ concentration C of the adsorption module 104 using the module sensor 134 (shown in Figure 4). In operating conditions where the $H_2O$ relative humidity level for the $H_2O$ concentration C is lower than desired in at least one adsorption module 104, the controller 116 may selectively increase the flow of the second stream 206, thereby injecting additional $H_2O$ into the at least one adsorption module 104. In operating conditions where the $H_2O$ relative humidity level is higher than desired in at least one adsorption module 104, the controller 116 may selectively decrease the flow of the second stream 206, thereby reducing the amount of additional $H_2O$ injected into the at least one adsorption module 104. In another embodiment, at the beginning of the adsorption cycle, the controller 116 may selectively increase the flow of the second stream 206, thereby injecting additional $H_2O$ into the at least one adsorption module 104 to increase the relative humidity beyond the desirable relative humidity level to allow fast $H_2O$ adsorption. Then at later stage of the adsorption cycle, the controller 116 may selectively decrease or stop the flow of the second stream 206 to reduce relative humidity level of the at least one adsorption module 104.

The controller 116 may also adjust the $H_2O$ relative humidity within one or more adsorption modules 104 by monitoring the regulated temperature $T_{reg}$ of the first stream 122 of one or more absorption modules 104. In operating conditions where the $H_2O$ relative humidity level is higher than desired in at least one adsorption module 104, the controller 116 may selectively increase the regulated temperature $T_{reg}$ of the first stream 122, thereby increasing the temperature of at least one adsorption module 104, causing a decrease in the $H_2O$ relative humidity due to increased saturated vapor pressure at elevated temperatures. In operating conditions where the $H_2O$ relative humidity is lower than desired in at least one adsorption module 104, the controller 116 may selectively decrease the regulated temperature $T_{reg}$ of the first stream 122, thereby decreasing the temperature of at least one adsorption module 104 and causing an increase in the $H_2O$ relative humidity. The regulated temperature $T_{reg}$ of the first stream 122 may be increased or decreased using any systems described herein.

The controller 116 modulates the operating conditions of the capture system 200 to facilitate optimizing the adsorption and desorption of $CO_2$ by maintaining a relative humidity of each adsorption module 104a-d. The relative humidity of each adsorption module 104a-d may be based on the regulated temperature $T_{reg}$ of the first stream 122 and on the $H_2O$ concentration C of the adsorption module 104. In the exemplary embodiment, the controller 116 adjusts the regulated temperature $T_{reg}$ of the first stream 122 and the $H_2O$ concentration C of the adsorption module 104 based on its $H_2O$ adsorption isotherm of the functionalized sorbent 114 within the adsorption module 104 to facilitate optimizing the adsorption and desorption of $CO_2$ through monolayer adsorption of $H_2O$.

Generally, the capture system 200 may possess any suitable adsorption isotherm that facilitates the capture of $CO_2$ by the systems described herein. There are six types of moisture adsorption isotherms as defined by IUPAC, the shapes of which are dependent on relative humidity and temperature (shown in Figure 3). Of these six types, type II, type IV, and type VI each display a flattened region (e.g. an "inflection point") up to a knee point generally corresponding to monolayer coverage and adsorption of $H_2O$ (shown in Figure 3). In the exemplary embodiment, the controller 116 modulates the operating conditions of the capture system 200 for monolayer coverage and adsorption of $H_2O$ by the functionalized sorbent 114, thereby facilitating optimizing the adsorption and desorption of $CO_2$. For example, the capture system 200 may possess a type II, type IV, or type VI adsorption isotherm (shown in Figure 3), which are particularly advantageous to ensure monolayer coverage and adsorption of $H_2O$, thereby increasing the $CO_2$ adsorption capacity of the functionalized sorbent 114.

In addition to being dependent on relative humidity and temperature, adsorption isotherms are dependent on the sorbent material. In many embodiments, the functionalized sorbent 114 may be any functionalized sorbent material that facilitates the capture of $CO_2$ by the systems described herein. In the exemplary embodiment, the functionalized sorbent 114 includes a sorbent and at least one functionalization ligand that includes an aminosilicone group to optimize the capacity and productivity of $CO_2$ capture relative to the adsorption of $H_2O$.

Generally, functionalized sorbents in accordance with the present disclosure may be used with compositions according to the present disclosure, systems according to the present disclosure, and methods according to the present disclosure. The functionalized sorbents are not limited to any particular embodiment disclosed herein.

In some embodiments, the functionalized sorbent includes a first type of functionalization ligand, wherein the first type of functionalization ligand includes at least one functionalization ligand that includes an aminosilicone group. Generally, the at least one functionalization ligand that includes an aminosilicone group may include any such suitable ligand that facilitates the functionalized sorbent described herein. The at least one functionalization ligand that includes an aminosilicone group may include only one functionalization ligand that includes an aminosilicone group or two or more

functionalization ligands that each include an aminosilicone group.

Generally, the sorbent may be any suitable sorbent known in the art that facilitates the functionalized sorbent described herein. In some embodiments, the sorbent is selected from the group consisting of coordination framework compounds, metal-organic framework (MOF) compounds, porous coordination polymers (PCPs), covalent organic framework (COF) compounds, zeolitic imidazolate framework (ZIF) compounds, crystalline porous materials, crystalline open frameworks, reticular chemistry, silica particles, zeolites, silico-alumino-phosphates (SAPOs), alumino-phosphates (AlPOs), polyaromatic frameworks (PAFs), activated carbons, molecular organic solids, and combinations thereof.

As used herein, MOF compounds are a class of compounds including metal ions or clusters coordinated to organic ligands to form one-, two-, or three-dimensional structures. The metal ions or clusters act as joints and are bound by multidirectional organic ligands, which act as linkers in a network structure. MOF compounds have a modular nature that allows for synthetic tunability, which affords fine chemical and structural control. Properties such as porosity, stability, particle morphology, and conductivity can be tailored for specific applications.

In many embodiments, the sorbent is a MOF compound including a MOF metal or metal-containing cluster and a MOF linker.

In some embodiments, the MOF metal may be any suitable MOF metal known in the art that facilitates the functionalized sorbent described herein. In other embodiments, the MOF metal is a metal selected from the group consisting of alkali metals, alkaline earth metals, transition metals, Ca, Mn, Cr, Fe, Co, Ni, Cu, Zn, ions thereof, hydrates thereof, salts thereof, halides thereof, fluorides thereof, chlorides thereof, bromides thereof, iodides thereof, nitrates thereof, acetates thereof, sulfates thereof, phosphates thereof, carbonates thereof, oxides thereof, formates thereof, carboxylates thereof, and combinations thereof. In some embodiments, the MOF metal includes Mg.

In some embodiments, the MOF metal-containing cluster may be any suitable MOF metal-containing cluster known in the art that facilitates the functionalized sorbent described herein. In some embodiments, the MOF metal-containing cluster includes an MOF metal node and a linker strut, with the MOF metal and the linker each defined as described herein. In other embodiments, the MOF metal-containing cluster includes an MOF metal-oxy cluster.

In some embodiments, the MOF linker may be any suitable MOF linker known in the art that facilitates the functionalized sorbent described herein. Generally, the geometry and connectivity of a linker contribute to the structure of the resulting MOF compound. Adjustments of linker geometry, length, ratio, and functional-group can tune the size, shape, and internal surface property of a MOF compound for a targeted application.

In at least some embodiments, the MOF linker is a linker selected from the group consisting of polytopic linkers, ditopic linkers, tritopic linkers, tetratopic linkers, pentatopic linkers, hexatopic linkers, heptatopic linkers, octatopic linkers, mixed linkers, desymmetrized linker, metallo linkers, N-heterocyclic linkers, and combinations thereof.

In at least some embodiments, the MOF linker is a linker selected from the group consisting of polytopic linkers, 4,4'-dihydroxy-[1,1'-biphenyl]-3,3'-dicarboxylic acid ($H_4$dobpdc), 4,4'-dioxidobiphenyl-3,3'-dicarboxylate (dobpdc$^{4-}$), 4,4''-dioxido-[1,1':4',1''-terphenyl]-3,3''-dicarboxylate (dotpdc$^{4-}$), 2,5-dioxidobenzene-1,4-dicarboxylate (dobdc$^{4-}$), 4,6-Dihydroxyisophthalic acid (m-dobdc$^{4-}$), 3,3'-dioxido-biphenyl-4,4'-dicarboxylate (para-carboxylate-dobpdc$^{4-}$), 4,4'-[oxalylbis(imino)]bis(2-hydroxybenzoic acid) ($H_4$ODA), 4,4'-[1,4-phenylenebis-(carbonylimino)]bis(2-hydroxybenzoic acid) ($H_4$TDA), 4,4'-Dihydroxyazobenzene-3,3'-dicarboxylic acid ($H_4$OSA), protonated, partially and fully deprotonated forms thereof, and combinations thereof. As another example, in at least some embodiments, the MOF linker is a linker selected from the group consisting of dicarboxylates (e.g., terephthalic acid), tricarboxylates (e.g., 1,3,5-benzentricarboxylic acid), azolates, tetrazolates, and combinations thereof.

As another example, in at least some embodiments, the MOF linker is a dicarboxylic acid linker selected from the group consisting of 1,4-butanedicarboxylic acid, 4-oxopyran-2,6-dicarboxylic acid, 1,6-hexanedicarboxylic acid, decanedicarboxylic acid, 1,8-heptadecanedicarboxylic acid, 1,9-heptadecanedicarboxylic acid, heptadecanedicarboxylic acid, acetylenedicarboxylic acid, 1,2-benzenedicarboxylic acid, 2,3-pyridinedicarboxylic acid, pyridine-2,3-dicarboxylic acid, 1,3-butadiene-1,4-dicarboxylic acid, 1,4-benzenedicarboxylic acid, p-benzenedicarboxylic acid, imidazole-2,4-dicarboxylic acid, 2-methylquinoline-3,4-dicarboxylic acid, quinoline-2,4-dicarboxylic acid, quinoxaline-2,3-dicarboxylic acid, 6-chloroquinoxaline-2,3-dicarboxylic acid, 4,4'-diaminophenylmethane-3,3'-dicarboxylic acid, quinoline-3,4-dicarboxylic acid, 7-chloro-4-hydroxyquinoline-2,8-dicarboxylic acid, diimidedicarboxylic acid, pyridine-2,6-dicarboxylic acid, 2-methylimidazole-4,5-dicarboxylic acid, thiophene-3,4-dicarboxylic acid, 2-isopropylimidazole-4,5-dicarboxylic acid, tetrahydropyran-4,4-dicarboxylic acid, perylene-3,9-dicarboxylic acid, perylenedicarboxylic acid, Pluriol E 200-dicarboxylic acid, 3,6-dioxaoctanedicarboxylic acid, 3,5-cyclohexadiene-1,2-dicarboxylic acid, octanedicarboxylic acid, pentane-3,3-carboxylic acid, 4,4'-diamino-1,1'-diphenyl-3,3'-dicarboxylic acid, 4,4'-diaminodiphenyl-3,3'-dicarboxylic acid, benzidine-3,3'-dicarboxylic acid, 1,4-bis-(phenylamino)benzene-2,5-dicarboxylic acid, 1,1'-dinaphthyl-8,8'-dicarboxylic acid, 7-chloro-8-methylquinoline-2,3-dicarboxylic acid, 1-anilinoanthraquinone-2,4'-dicarboxylic acid, polytetrahydrofuran-250-dicarboxylic acid, 1,4-bis(carboxymethyl)piperazine-2,3-dicarboxylic acid, 7-chloroquinoline-3,8-dicarboxylic acid, 1-(4-carboxy)phenyl-3-(4-chloro) phenylpyrazoline-4,5-dicarboxylic acid, 1,4,5,6,7,7,-hexachloro-5-norbornene-2,3-dicarboxylic acid, phenylindanedicarboxylic acid, 1,3-dibenzyl-2-oxoimidazolidine-4,5-dicarboxylic acid, 1,4-cyclohexanedicarboxylic acid, naphthalene-1,8-dicarboxylic acid, 2-benzoylbenzene-1,3-dicarboxylic acid, 1,3-dibenzyl-2-oxoimidazolidine-4,5-cisdicarboxylic acid, 2,2'-biquinoline-4,4'-dicarboxylic acid, pyridine-3,4-dicarboxylic acid, 3,6,9-trioxaundecanedicarboxylic acid, o-hydroxybenzophenonedicarboxylic acid, Pluriol E 300-dicarboxylic acid, Pluriol E 400-dicarboxylic acid, Pluriol E 600-dicarboxylic acid, pyrazole-3,4-dicarboxylic acid, 2,3-pyrazinedicarboxylic acid, 5,6-dimethyl-2,3-pyrazinedicarboxylic acid, 4,4'-diaminodiphenyletherdiimidedicarboxylic acid, 4,4'-diaminodiphenylmethanediimidedicarboxylic acid, 4,4'-diaminodiphenylsulfonediimidedicarboxylic acid, 2,6-naphthalenedicarboxylic acid, 1,3-adamantanedicarboxylic acid, 1,8-naphthalenedicarboxylic acid, 2,3-naphthalenedicarboxylic acid, 8-methoxy-2,3-naphthalenedicarboxylic acid, 8-nitro-2,3-naphthalenedicarboxylic acid, 8-sulfo-2,3-naphthalenedicarboxylic acid, anthracene-2,3-dicarboxylic acid, 2'-3'-diphenyl-p-terphenyl-4,4''-dicarboxylic acid, diphenylether-4,4'-dicarboxylic acid, imidazole-4,5-dicarboxylic acid, 4(1H)-oxothiochromene-2,8-dicarboxylic acid, 5-t-butyl-1,3-benzenedicarboxylic acid, 7,8-quinolinedicarboxylic acid, 4,5-imidazoledicarboxylic acid, 4-cyclohexene-1,2-dicarboxylic acid, hexatriacontanedicarboxylic acid, tetradecanedicarboxylic acid, 1,7-heptanedicarboxylic acid, 5-hydroxy-1,3-benzenedicarboxylic acid, pyrazine-2,3-dicarboxylic acid, furan-2,5-dicarboxylic acid, 1-nonene-6,9-dicarboxylic acid, eicosenedicarboxylic acid, 4,4'-dihydroxydiphenylmethane-3,3'-dicarboxylic acid, 1 -amino-4-methyl-9,10-dioxo-9,10-dihydroanthracene-2,3-dicarboxylic acid, 2,5-pyridinedicarboxylic acid, cyclohexene-2,3-dicarboxylic acid, 2,9-dichlorofluorubin-4,11-dicarboxylic acid, 7-chloro-3-methylquinoline-6,8-dicarboxylic acid, 2,4-dichlorobenzophenone-2',5'-dicarboxylic acid, 1,3-benzenedicarboxylic acid, 2,6-pyridinedicarboxylic acid, 1-methylpyrrole-3,4-dicarboxylic acid, 1-benzyl-1H-pyrrole-3,4-dicarboxylic acid, anthraquinone-1,5-dicarboxylic acid, 3,5-pyrazoledicarboxylic acid, 2-nitrobenzene-1,4-dicarboxylic acid, heptane-1,7-dicarboxylic acid, cyclobutane-1,1-dicarboxylic acid, 1,14-tetradecanedicarboxylic acid, 5,6-dehydronorbornane-2,3-dicarboxylic acid, 5-ethyl-2,3-pyridinedicarboxylic acid, and combinations thereof.

As another example, in at least some embodiments, the MOF linker is a tricarboxylic acid linker selected from the group consisting of 2-hydroxy-1,2,3-propanetricarboxylic acid, 7-chloro-2,3,8-quinolinetricarboxylic acid, 1,2,4-benzenetricarboxylic acid, 1,2,4-butanetricarboxylic acid, 2-phosphono-1,2,4-butanetricarboxylic acid, 1,3,5-benzenetricarboxylic acid, 1-hydroxy-1,2,3-propanetricarboxylic acid, 4,5-dihydro-4,5-dioxo-1H-pyrrolo[2,3-F]quinoline-2,7,9-tricarboxylic acid, 5-acetyl-3-amino-6-methylbenzene-1,2,4-tricarboxylic acid, 3-amino-5-benzoyl-6-methylbenzene-1,2,4-tricarboxylic acid, 1,2,3-propanetricarboxylic acid, aurinetricarboxylic acid, and combinations thereof.

As another example, in at least some embodiments, the MOF linker is a tetracarboxylic acid linker selected from the group consisting of 1,1-dioxide-perylo[1,12-BCD]thiophene-3,4,9,10-tetracarboxylic acid, perylenetetracarboxylic acids, perylene-3,4,9,10-tetracarboxylic acid, perylene-1,12-sulfone-3,4,9,10-tetracarboxylic acid, butanetetracarboxylic acids, 1,2,3,4-butanetetracarboxylic acid, meso-1,2,3,4-butanetetracarboxylic acid, decane-2,4,6,8-tetracarboxylic acid, 1,4,7,10,13,16-hexaoxacyclooctadecane-2,3,11,12-tetracarboxylic acid, 1,2,4,5-benzenetetracarboxylic acid, 1,2,11,12-dodecanetetracarboxylic acid, 1,2,5,6-hexanetetracarboxylic acid, 1,2,7,8-octanetetracarboxylic acid, 1,4,5,8-naphthalenetetracarboxylic acid, 1,2,9,10-decanetetracarboxylic acid, benzophenonetetracarboxylic acid, 3,3',4,4'-benzophenonetetracarboxylic acid, tetrahydrofurantetracarboxylic acid, cyclopentanetetracarboxylic acids, cyclopentane-1,2,3,4-tetracarboxylic acid, and combinations thereof.

In the exemplary embodiment, the MOF linker is 4,4'-dihydroxy-[1,1'-biphenyl]-3,3'-dicarboxylic acid ($H_4$dobpdc) and/or 4,4'-dioxidobiphenyl-3,3'-dicarboxylate (dobpdc$^{4-}$). In some embodiments, dobpdc includes 4,4'-dihydroxy-[1,1'-biphenyl]-3,3'-dicarboxylic acid, its mono-carboxylate form, its di-carboxylate form, its mono-phenoxide form, its di-phenoxide form, and combinations thereof.

In some embodiments, the MOF linker is one or more of the following linkers:

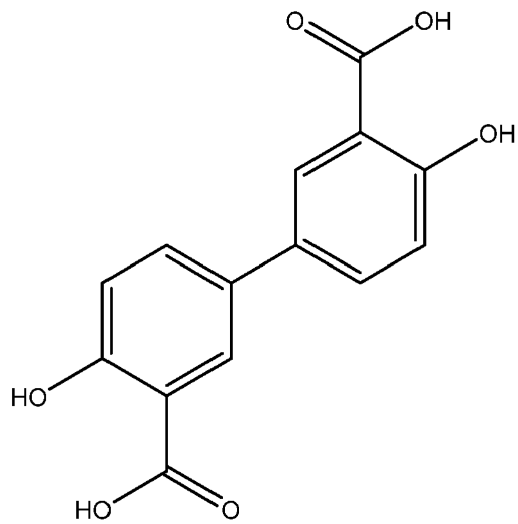

4,4'-dihydroxy-[1,1'-biphenyl]-3,3'-dicarboxylic acid. ,

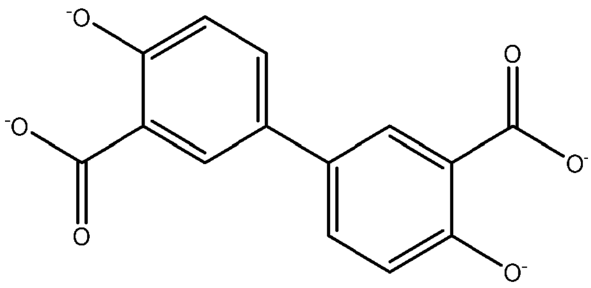

4,4'-dioxidobiphenyl-3,3'-dicarboxylate ;

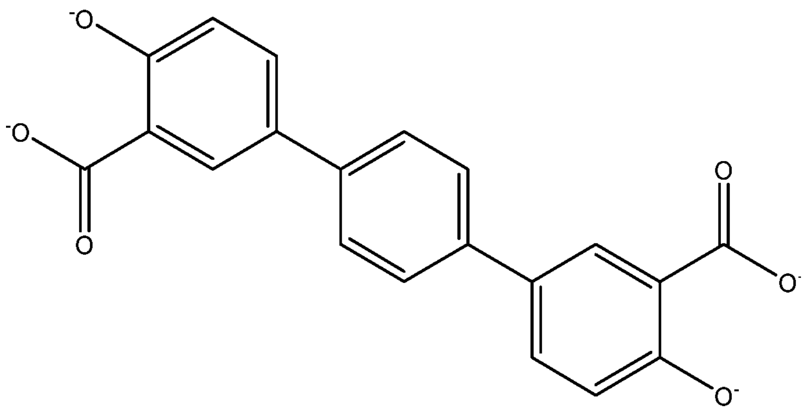

4,4"-dioxido-[1,1':4',1"-terphenyl]-3,3"-dicarboxylate ;

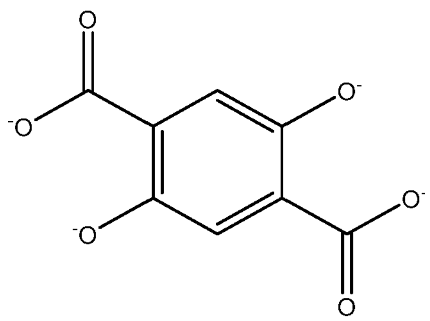

2,5-dioxidobenzene-1,4-dicarboxylate ;

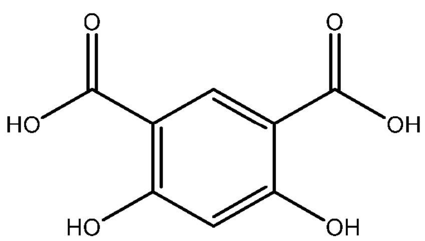

4,6-Dihydroxyisophthalic acid ;

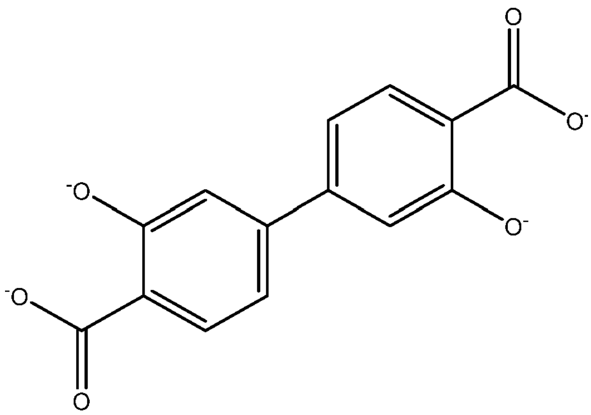

3,3'-dioxido-biphenyl-4,4'-dicarboxylate ;

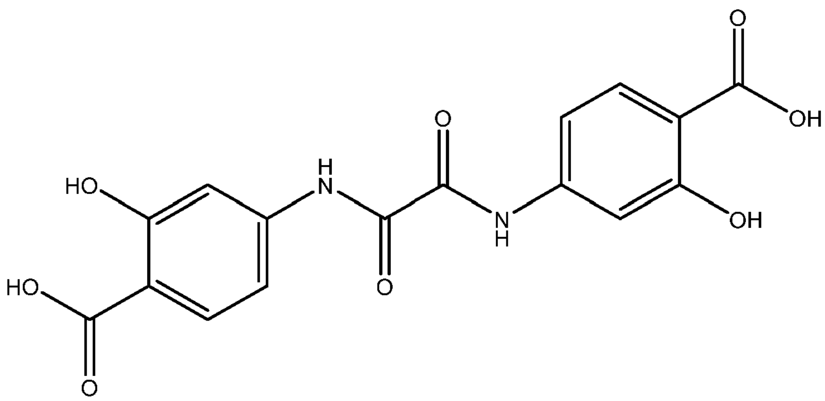

4,4'-[oxalylbis(imino)]bis(2-hydroxybenzoic acid) ;

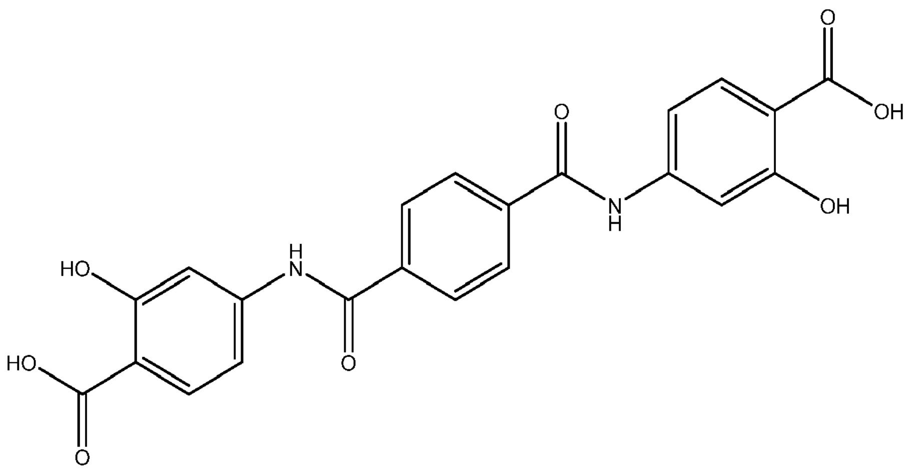

4,4'-[1,4-phenylenebis-(carbonylimino)]bis(2-hydroxybenzoic acid) ; and/or

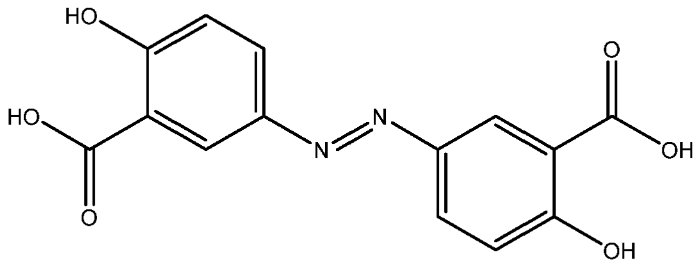

4,4'-Dihydroxyazobenzene-3,3'-dicarboxylic acid

In some embodiments, the MOF compound is a MOF compound of the MOF-74 family. In some embodiments, the MOF compound is a MOF compound of the MOF-274 family. In some embodiments, the MOF compound is a MOF compound of the MOF-303 family. In some embodiments, the MOF compound is $Mg_2$(dobpdc).

In some embodiments, the functionalized sorbent is a functionalized MOF compound of Formula (A-I)

$$M_xL_yF_a^AF_b^B \quad \text{(Formula A-I)},$$

wherein:

- $M$ is a MOF metal or metal-containing cluster;
- $L$ is a MOF linker;
- $F^A$ is at least one functionalization ligand comprising an aminosilicone group;
- $F^B$ is at least one functionalization ligand not comprising an aminosilicone group;
- $x$ is a value in a range of 1 to 6;
- $y$ is a value in a range of 1 to 6;
- $a$ is a value greater than 0 and less than or equal to 2; and
- $b$ is a value in a range of 0 to 2.

In some embodiments, the functionalized sorbent includes a second type of functionalization ligand, wherein the second type of functionalization ligand includes at least one functionalization ligand that does not include an aminosilicone group. In some embodiments, the functionalized sorbent also includes at least one functionalization ligand that does not include an aminosilicone group. Generally, the at least one functionalization ligand that does not include an aminosilicone group may include any such suitable ligand that facilitates the functionalized sorbent described herein. The at least one functionalization ligand that does not include an aminosilicone group may include only one functionalization ligand that does not include an aminosilicone group or two or more functionalization ligands that each do not include an aminosilicone group.

In some embodiments, the at least one functionalization ligand that does not include an aminosilicone group is selected from the group consisting of amine ligands, monoamine ligands, diamine ligands, triamine ligands, tetra-amine ligands, penta-amine ligands, hexa-amine ligands, polyamine ligands, alkylamine ligands, and aminoalcohol ligands. Exemplary ligands include, but are not limited to, ethylenediamine, N-methylethylenediamine, N-ethylethylenediamine, N,N-dimethylethylenediamine, N,N-diethylethylenediamine, di(N-methyl)ethylene diamine, N-isopropylethylenediamine, N,N-dimethyl-N-methylethylene diamine, di(N,N-dimethyl)ethylene diamine, N,N-diisopropylethylene diamine, 2,2-dimethyl-1,3-diaminopropane, 1,3-diaminopentane, diethylenetriamine, N-(2-aminoethyl)-1,3-propanediamine, bis(3-aminopropyl)amine, N-(3-aminopropyl)-1,4-diaminobutane (spermidine), triethylenetetramine, N,N'-bis(2-aminoethyl)-1,3-propanediamine, 1,2-bis(3-aminopropylamino)ethane, N,N'-bis(3-aminopropyl)-1,3-propanediamine, N,N'-bi s(3 -aminopropyl)-1,4-diaminobutane (spermine), tetraethylenepentamine, and/or combinations thereof.

Generally, the at least one functionalization ligand including an aminosilicone group and the at least one functionalization ligand not including an aminosilicone group may be present in any suitable ratio known in the art that facilitates the functionalized sorbent described herein. In some embodiments, the ratio is selected from the group consisting of a molar ratio, a weight ratio, and a volume ratio. In some embodiments, the at least one functionalization ligand including an aminosilicone group and the at least one functionalization ligand not including an aminosilicone group are present in a ratio in a range of from about 10:1 to about 1:10. In some embodiments, the at least one functionalization ligand including an aminosilicone group and the at least one functionalization ligand not including an aminosilicone group are present in a ratio in a range of from about 9:1 to about 1:9. In some embodiments, the at least one functionalization ligand including an aminosilicone group and the at least one functionalization ligand not including an aminosilicone group

are present in a ratio in a range of from about 8:1 to about 1:8. In some embodiments, the at least one functionalization ligand including an aminosilicone group and the at least one functionalization ligand not including an aminosilicone group are present in a ratio in a range of from about 7:1 to about 1:7. In some embodiments, the at least one functionalization ligand including an aminosilicone group and the at least one functionalization ligand not including an aminosilicone group are present in a ratio in a range of from about 6:1 to about 1:6. In some embodiments, the at least one functionalization ligand including an aminosilicone group and the at least one functionalization ligand not including an aminosilicone group are present in a ratio in a range of from about 5:1 to about 1:5. In some embodiments, the at least one functionalization ligand including an aminosilicone group and the at least one functionalization ligand not including an aminosilicone group are present in a ratio in a range of from about 4:1 to about 1:4. In some embodiments, the at least one functionalization ligand including an aminosilicone group and the at least one functionalization ligand not including an aminosilicone group are present in a ratio in a range of from about 3:1 to about 1:3. In some embodiments, the at least one functionalization ligand including an aminosilicone group and the at least one functionalization ligand not including an aminosilicone group are present in a ratio in a range of from about 2:1 to about 1:2. In some embodiments, the at least one functionalization ligand including an aminosilicone group and the at least one functionalization ligand not including an aminosilicone group are present in a ratio of about 1:1.

In some embodiments, the at least one functionalization ligand including an aminosilicone group is present in a lesser amount than the at least one functionalization ligand not including an aminosilicone group.

In some embodiments, the at least one functionalization ligand including an aminosilicone group and the at least one functionalization ligand not including an aminosilicone group are present in a ratio of about 1:2, about 1:3, about 1:4, about 1:5, about 1:6, about 1:7, about 1:8, about 1:9, or about 1:10.

In many embodiments, the at least one functionalization ligand including an aminosilicone group may be any suitable at least one functionalization ligand including an aminosilicone group known in the art that facilitates the functionalized sorbent described herein.

In some embodiments, the at least one functionalization ligand including an aminosilicone group includes at least one amine selected from the group consisting of primary amines, secondary amines, tertiary amines, and combinations thereof. In some embodiments, the at least one functionalization ligand including an aminosilicone group includes at least one primary amine or at least one secondary amine.

In some embodiments, the at least one functionalization ligand including an aminosilicone group includes at least one amine selected from the group consisting of monoamines, diamines, triamines, tetra-amines, penta-amines, hexa-amines, polyamines, and combinations thereof.

In some embodiments, the at least one functionalization ligand including an aminosilicone group includes at least one aminosilicone selected from the group consisting of linear aminosilicones, cyclic aminosilicones, branched aminosilicones, amino-substituted siloxanes, linear amino-substituted disiloxanes, cyclic amino-substituted disiloxanes, linear amino-substituted trisiloxanes, cyclic amino-substituted trisiloxanes, linear amino-substituted tetrasiloxanes, cyclic amino-substituted tetrasiloxanes, linear amino-substituted polysiloxanes, cyclic amino-substituted polysiloxanes, silsesquioxanes, polyoctahedral silsesquioxanes, and combinations thereof.

In some embodiments, the at least one functionalization ligand including an aminosilicone group includes a symmetrical structure. In some embodiments, the at least one functionalization ligand including an aminosilicone group includes an asymmetrical structure.

In some embodiments, when the at least one functionalization ligand including an aminosilicone group includes a disiloxane group, the at least one functionalization ligand including an aminosilicone group includes the same amines on both sides of the disiloxane group. In some embodiments, when the at least one functionalization ligand including an aminosilicone group includes a disiloxane group, the at least one functionalization ligand including an aminosilicone group includes different amines on either side of the disiloxane group.

In some embodiments, the at least one functionalization ligand including an aminosilicone group is an amino-substituted siloxane of Formula (A-II), Formula (A-III), Formula (A-IV), Formula (A-V), Formula (A-VI), or Formula (A-VII)

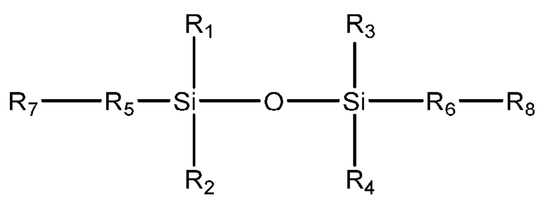

(Formula A-II)

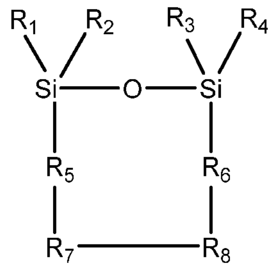

(Formula A-III)

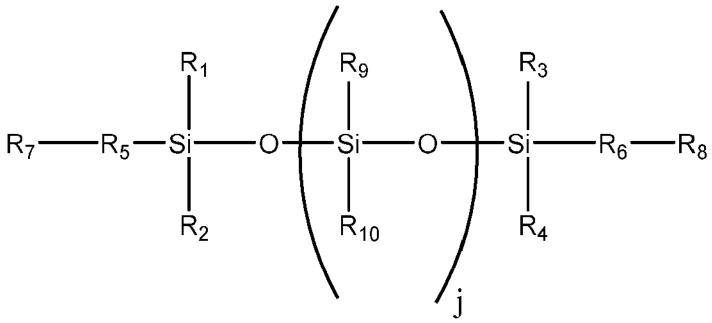

(Formula A-IV)

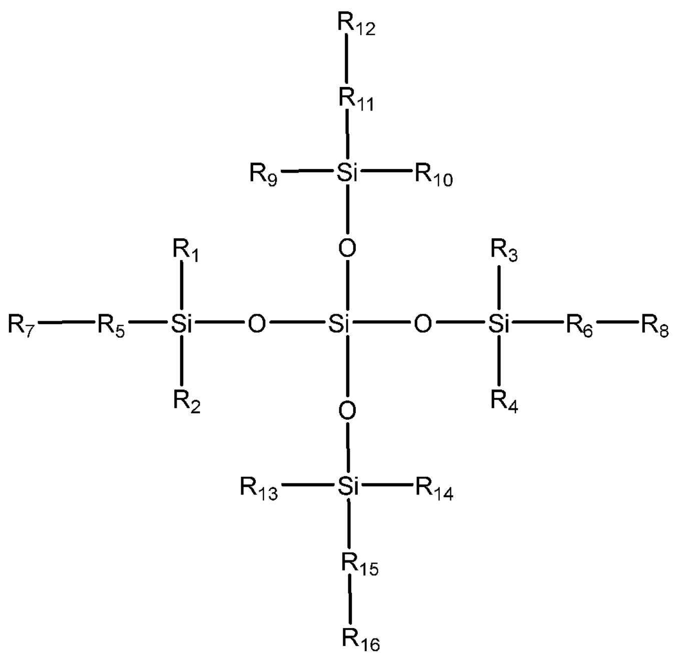

(Formula A-V)

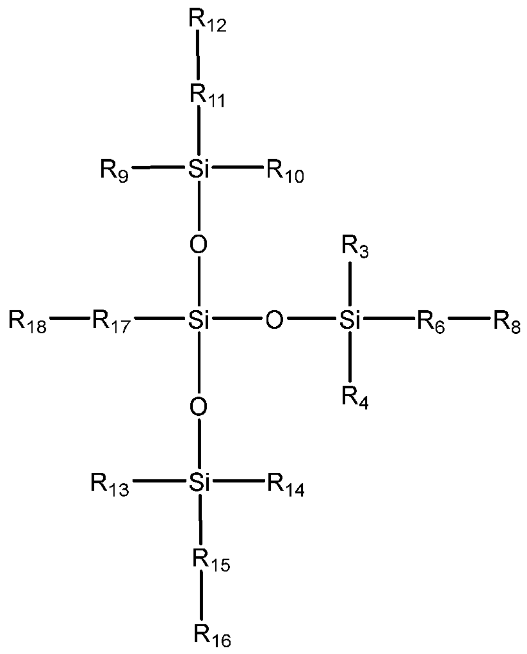

(Formula A-VI)

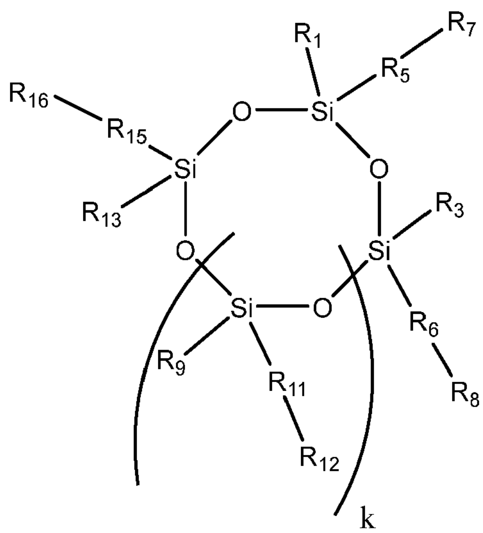

(Formula A-VII)

wherein:

$R_1$, $R_2$, $R_3$, $R_4$, $R_9$, $R_{10}$, $R_{13}$, $R_{14}$, and $R_{18}$ are each individually selected from the group consisting of hydrogen, substituted or unsubstituted linear alkyl, substituted or unsubstituted $C_1$-$C_6$ linear alkyl, substituted or unsubstituted branched alkyl, substituted or unsubstituted $C_3$-$C_6$ branched alkyl, substituted or unsubstituted linear heteroalkyl, substituted or unsubstituted branched heteroalkyl, aryl, phenyl, heteroaryl, methyl, ethyl, propyl, isopropyl, butyl, pentyl, and hexyl;

$R_5$, $R_6$, $R_{11}$, $R_{15}$, and $R_{17}$ are each individually selected from the group consisting of direct bonds, substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, and $C_6$ alkyl,

$R_7$, $R_8$, $R_{12}$, and $R_{16}$ are each individually selected from the group consisting of direct bonds, substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, $C_6$ alkyl, and substituents of Formula (A-VIII)

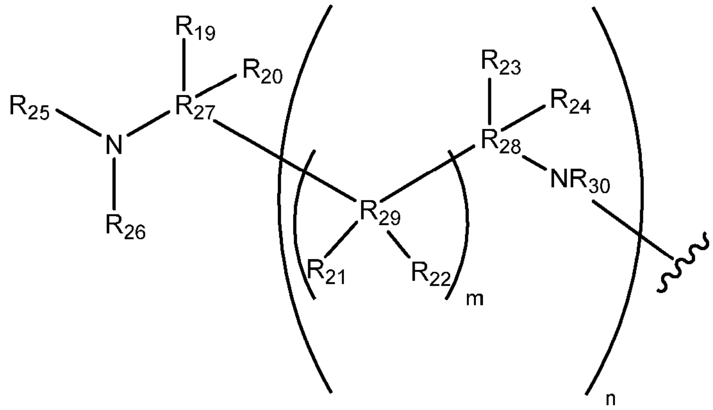

(Formula A-VIII);

wherein:

the wavy bond indicates a bonding location to Formula (A-II) or Formula (A-III) or Formula (A-IV) or Formula (A-V) or Formula (A-VI) or Formula (A-VII);

$R_{19}$, $R_{20}$, $R_{21}$, $R_{22}$, $R_{23}$, and $R_{24}$ are each individually selected from the group consisting of hydrogen, substituted or unsubstituted linear alkyl, substituted or unsubstituted $C_1$-$C_6$ linear alkyl, substituted or unsubstituted branched alkyl, substituted or unsubstituted $C_3$-$C_6$ branched alkyl, substituted or unsubstituted linear heteroalkyl, substituted or unsubstituted $C_1$-$C_6$ linear heteroalkyl, substituted or unsubstituted branched heteroalkyl, substituted or unsubstituted $C_3$-$C_6$ branched heteroalkyl, aryl, heteroaryl, methyl, ethyl, propyl, isopropyl, butyl, pentyl, and hexyl;

$R_{25}$ and $R_{26}$ are each individually selected from the group consisting of hydrogen, substituted or unsubstituted linear alkyl, substituted or unsubstituted $C_1$-$C_6$ linear alkyl, substituted or unsubstituted $C_1$-$C_3$ linear alkyl, substituted or unsubstituted branched alkyl, substituted or unsubstituted $C_3$-$C_6$ branched alkyl, methyl, ethyl, propyl, substituted or unsubstituted cycloalkyl, substituted or unsubstituted $C_3$-$C_6$ cycloalkyl, and substituted or unsubstituted $C_4$-$C_6$ cycloalkyl, or, when taken together, $R_{25}$ and $R_{26}$ form a single ring selected from the group consisting of heterocycloalkyl and heteroaryl;

$R_{27}$, $R_{28}$, and $R_{29}$ are each individually selected from the group consisting of direct bonds, substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, $C_6$ alkyl, ether, $-OCH_2CH_2-$, $-OCH_2CH_2CH_2-$, $-OCH_2CH_2CH_2CH_2-$, $-NHCH_2CH_2-$, $-NHCH_2CH_2CH_2-$, and $-NHCH_2CH_2CH_2CH_2-$;

$R_{30}$ is selected from the group consisting of hydrogen, substituted or unsubstituted linear alkyl, substituted or unsubstituted $C_1$-$C_6$ linear alkyl, substituted or unsubstituted $C_1$-$C_3$ linear alkyl, substituted or unsubstituted branched alkyl, substituted or unsubstituted $C_3$-$C_6$ branched alkyl, methyl, ethyl, propyl, substituted or unsubstituted cycloalkyl, substituted or unsubstituted $C_3$-$C_6$ cycloalkyl, substituted or unsubstituted $C_4$-$C_6$ cycloalkyl, heterocycloalkyl, and heteroaryl;

j is an integer in a range of 0 to 20;

k is an integer in a range of 0 to 20;

m is an integer in a range of 0 to 20; and

n is an integer in a range of 0 to 20.

In some embodiments, the at least one functionalization ligand including an aminosilicone group is selected from the group consisting of

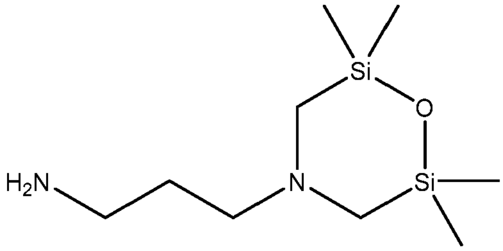

,

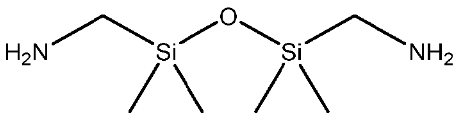

,

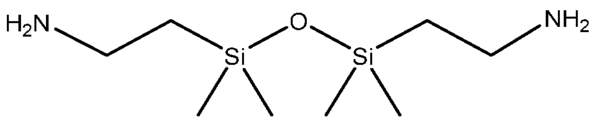

,

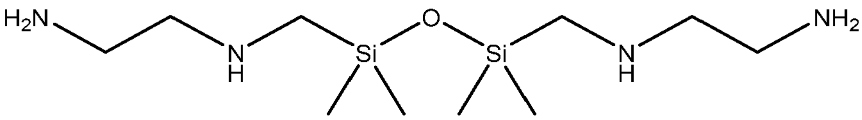

,

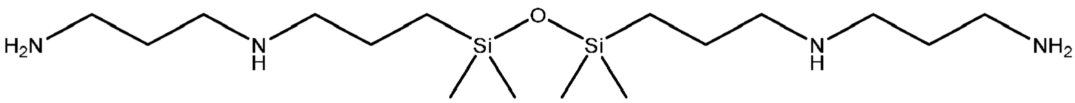

,

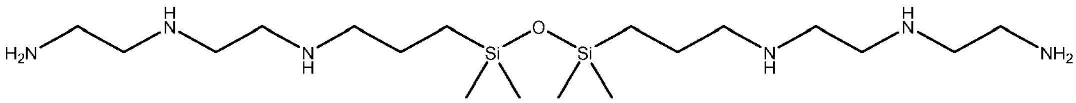

,

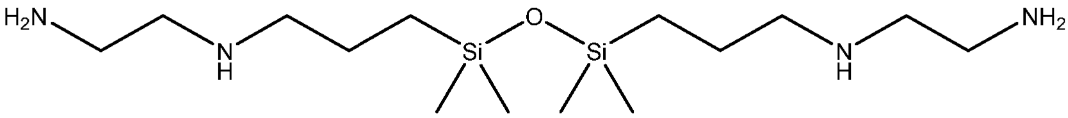

,

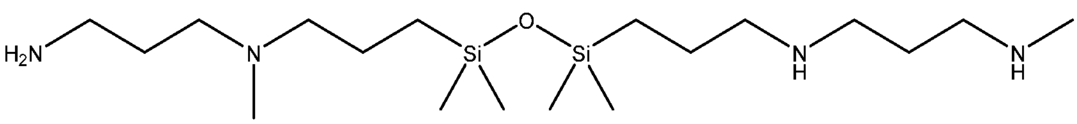

,

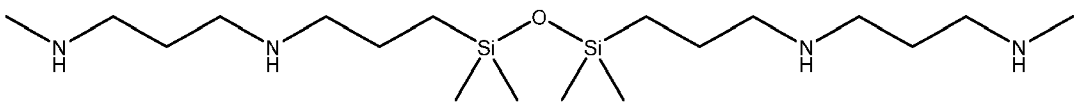

,

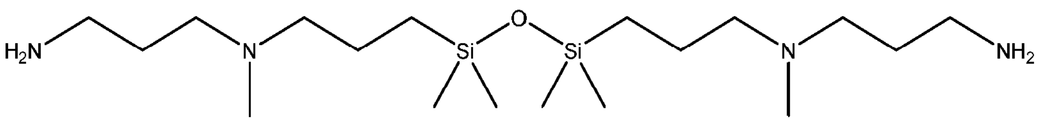

,

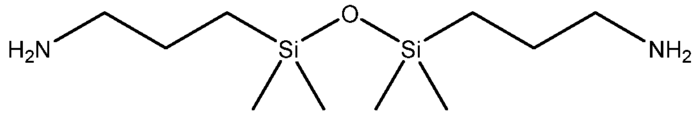

,

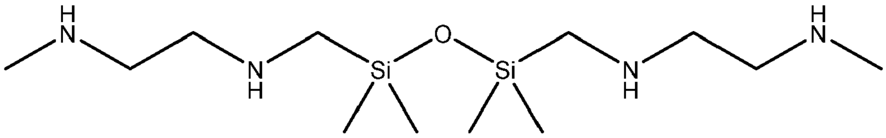

,

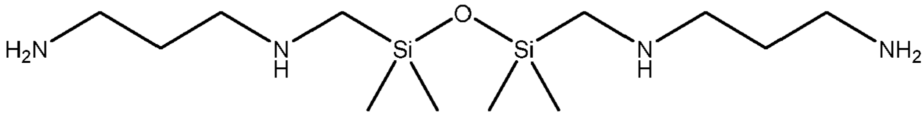

,

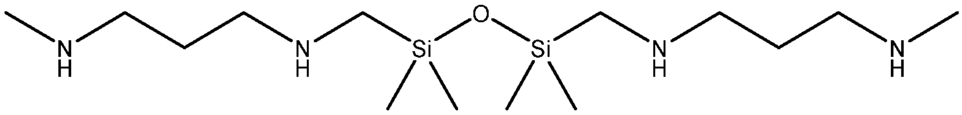

,

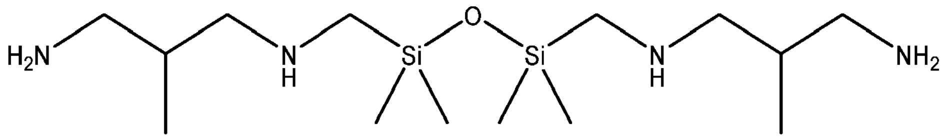

,

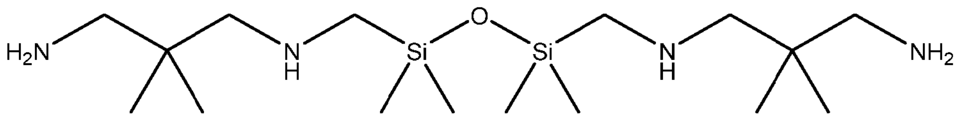

,

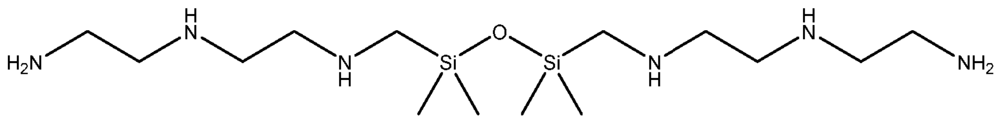

,

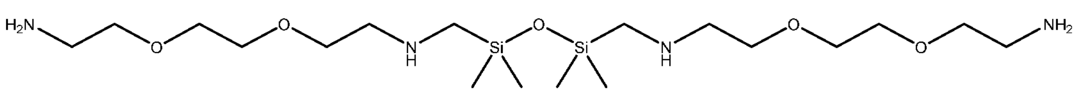

,

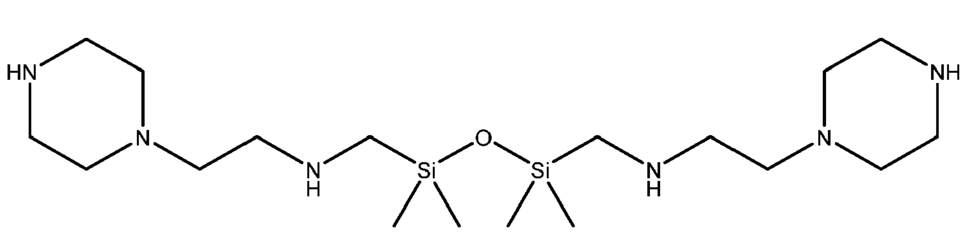

,

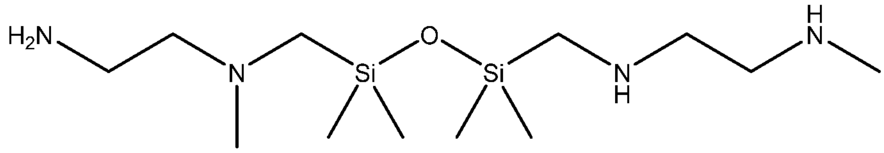

,

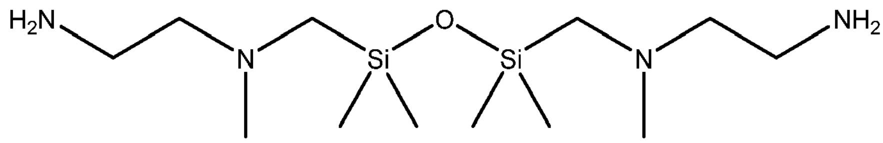

,

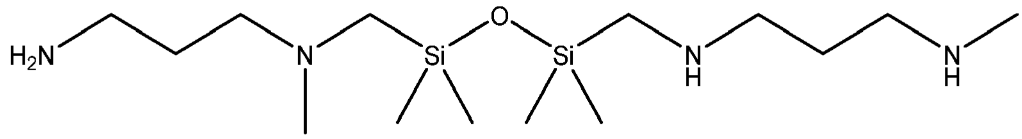

,

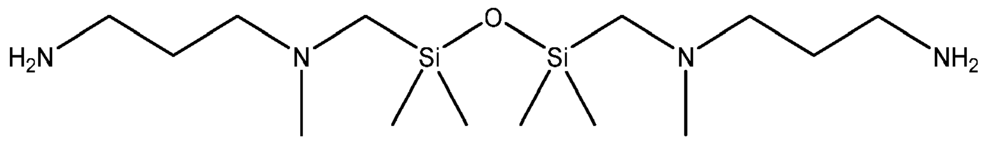

,

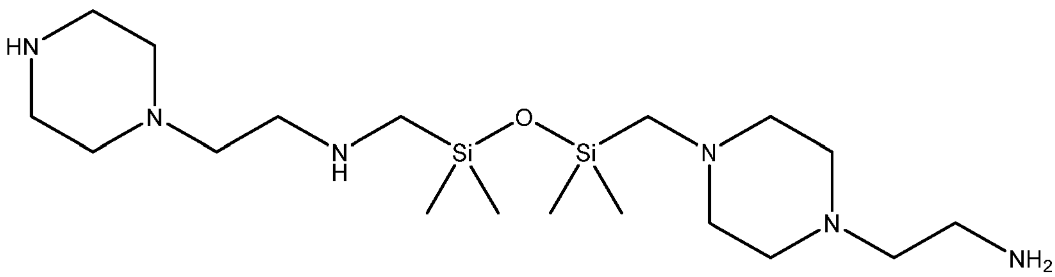

,

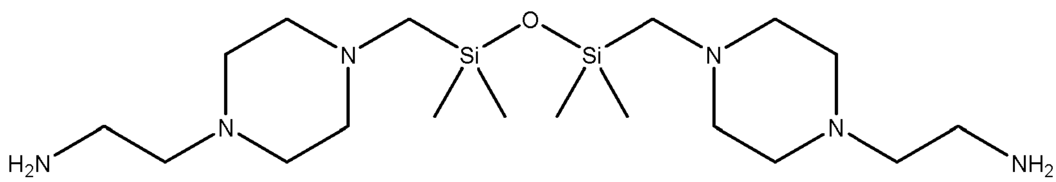

,

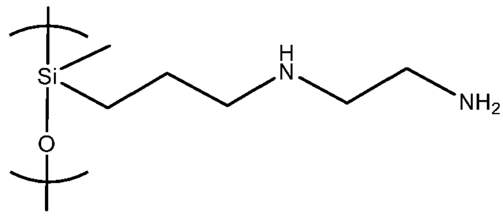

,

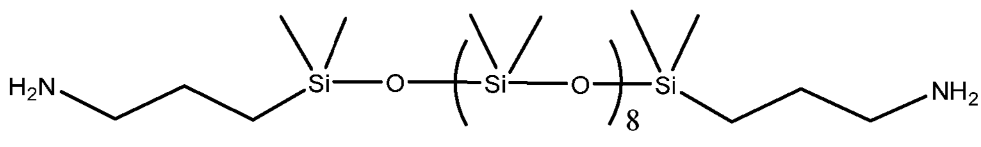

,

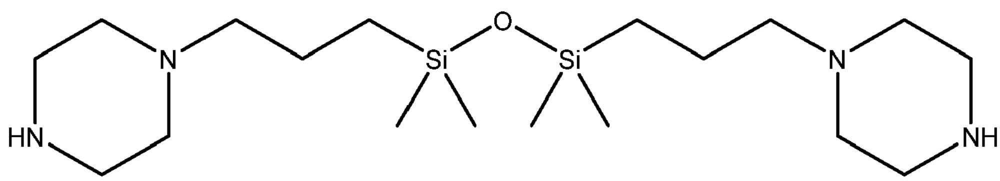

,

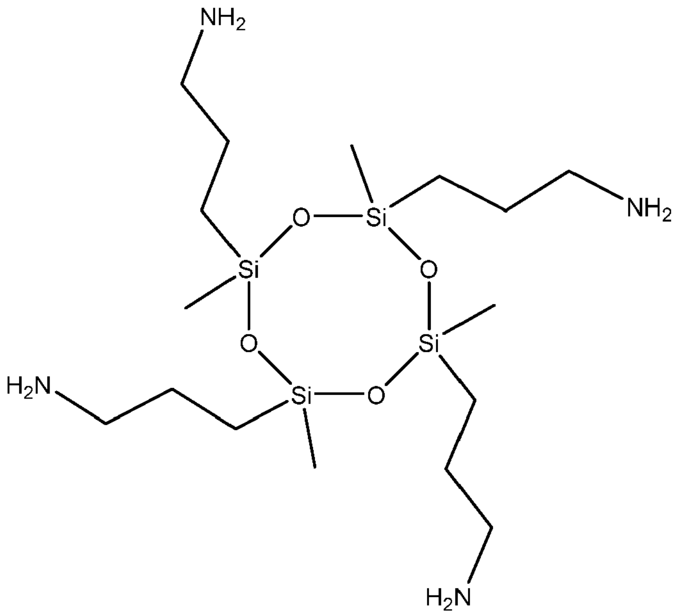

,

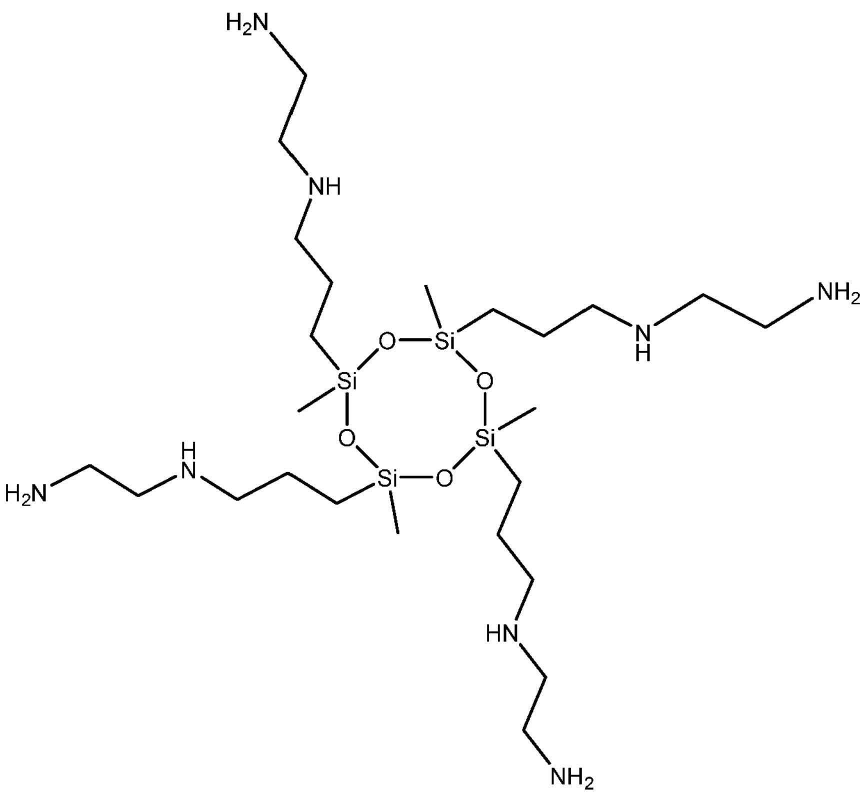

,

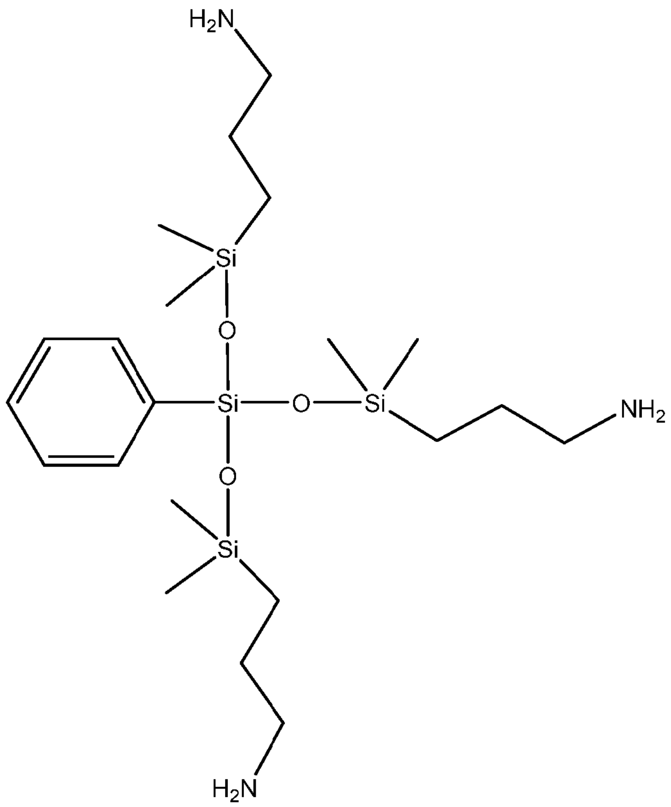

,

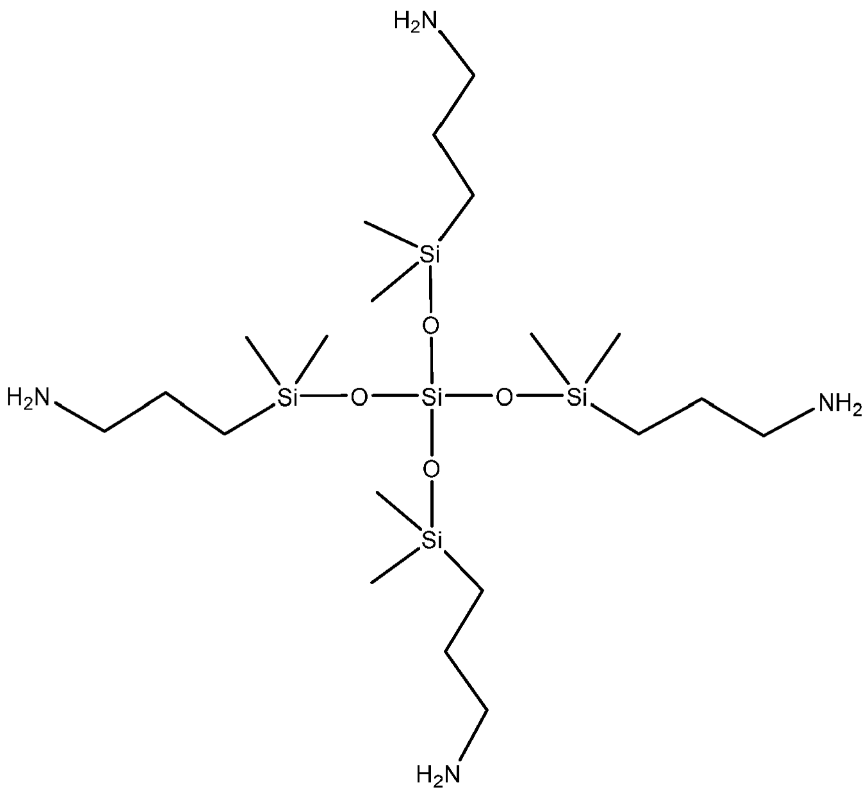

,

and

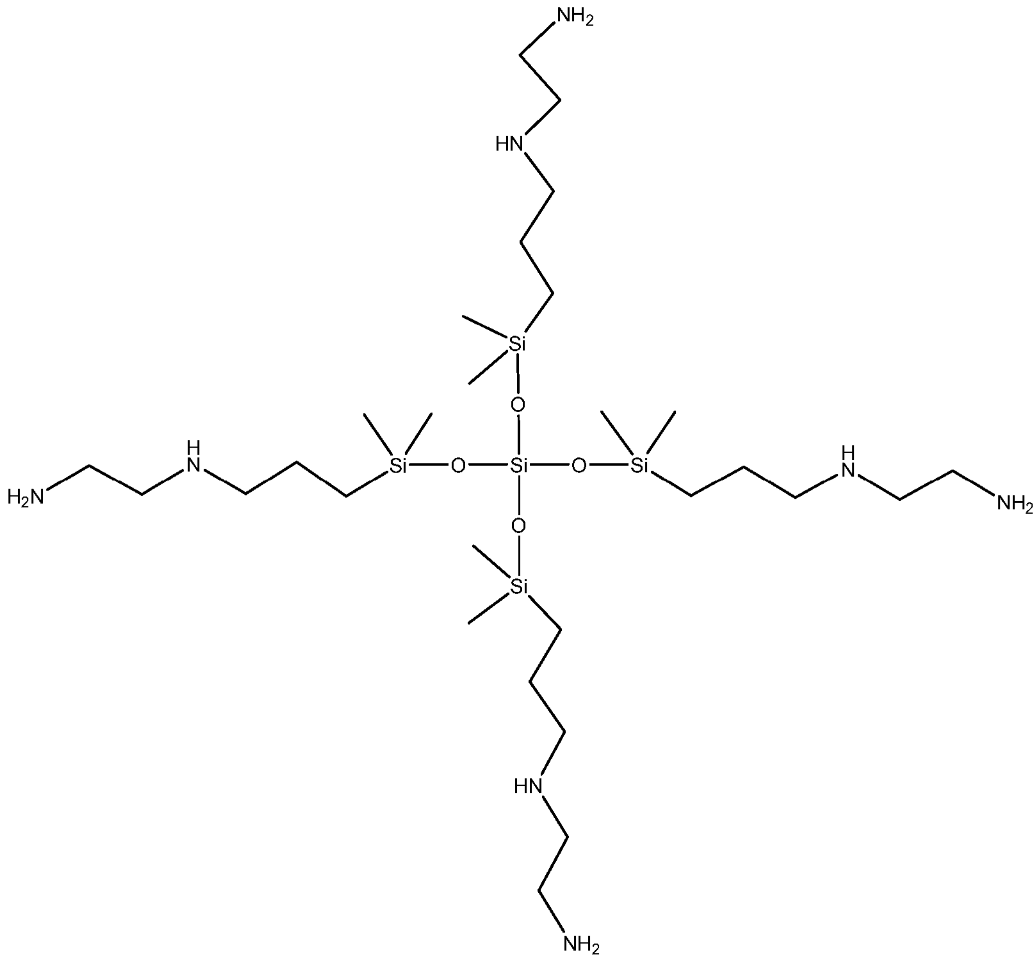

Figure 4 is a schematic of an exemplary control system 400 that may be used to capture $CO_2$ with a capture system, such as the capture system 100 (shown in Figure 1) and/or the capture system 200 (shown in Figure 2). In the exemplary embodiment, the controller 116 includes a memory 402 and a processor 404. The controller 116 may adjust the temperature of one or more adsorption modules 104a-d based on data received by the control system 400 from the contactor sensor 130, such as, but not limited to, the regulated temperature $T_{reg}$ of the first stream 122. The controller 116 may adjust the temperature of one or more adsorption modules 104a-d based on comparisons to data stored in the memory 402, such as desired ranges of the regulated temperature $T_{reg}$, instructions stored in the memory 402, and/or data analyzed by the processor 404.

Additionally, the controller 116 may adjust the temperature of one or more adsorption modules 104a-d based on data received by the control system 400 from the module sensor 134, such as, but not limited to, the control temperature $T_{cnt1}$ and/or the $H_2O$ relative humidity within one or more adsorption modules 104a-d. The controller 116 may adjust the temperature of one or more adsorption modules 104a-d based on comparisons to data stored in the memory 402, such as desired ranges of the control temperature $T_{cnt1}$ and/or the $H_2O$ relative humidity, instructions stored in the memory 402, and/or data analyzed by the processor 404.

Exemplary systems for using functionalized chemisorbents in the presence of water to facilitate optimizing the adsorption and desorption of carbon dioxide by an adsorbent bed are described herein. The exemplary systems as described herein provide several advantages over conventional designs and processes, including, at least, increasing the efficiency and performance of carbon dioxide adsorption and desorption due to the use of changes in temperature of the adsorbent bed, increasing the efficiency and performance of carbon dioxide adsorption and desorption due to the use of functionalized sorbents within the adsorbent bed, increasing the efficiency and performance of carbon dioxide adsorption and desorption due to the use of changes in water relative humidity within the adsorbent bed, and increasing the performance of the capture system due to the modulation of temperature and water relative humidity within one or more adsorption modules within the adsorbent bed based on the functionalized sorbent within the one or more adsorption modules.

Further aspects of the invention are provided by the subject matter of the following clauses:

1. A capture system for use in capturing carbon dioxide, the capture system comprising: an adsorbent bed comprising at least one adsorption module and a functionalized sorbent, the at least one adsorption module oriented to: receive a gas stream; adsorb carbon dioxide from the gas stream via the functionalized sorbent; and discharge an exhaust stream; a contactor for use in dynamically controlling a temperature and a relative humidity of the at least one adsorption module; and a controller configured to modulate the temperature and the relative humidity based on the functionalized sorbent to facilitate increasing an amount of carbon dioxide captured by the adsorbent bed.

2. The capture system in accordance with any of the preceding clauses, wherein the contactor is oriented to receive a regulating fluid for use in dynamically controlling the temperature of the at least one adsorption module.

3. The capture system in accordance with any of the preceding clauses, further comprising at least one injector oriented to discharge a moisture stream to control a water relative humidity of the at least one adsorption module.

4. The capture system in accordance with any of the preceding clauses, wherein the controller is further configured to decrease a fluid temperature of the regulating fluid received by the contactor to facilitate increasing the water relative humidity .

5. The capture system in accordance with any of the preceding clauses, wherein the controller is further configured to modulate the water relative humidity of the at least one adsorption module to facilitate increasing an amount of carbon dioxide captured by the adsorbent bed.

6. The capture system in accordance with any of the preceding clauses, wherein the controller is further configured to increase the water relative humidity of the at least one adsorption module to facilitate increasing an amount of carbon dioxide adsorbed by the functionalized sorbent.

7. The capture system in accordance with any of the preceding clauses, wherein the controller is further configured to increase a pressure of the moisture stream discharged from the injector to facilitate increasing the water relative humidity of the at least one adsorption module.

8. The capture system in accordance with any of the preceding clauses, wherein the controller is further configured to modulate the temperature and the water relative humidity of the at least one adsorption module to achieve a desirable relative humidity based on a moisture adsorption isotherm of the functionalized sorbent.

9. The capture system in accordance with any of the preceding clauses, wherein the temperature and the water relative humidity of the at least one adsorption module are based on the relative humidity at a knee point of the moisture adsorption isotherm of the functionalized sorbent.

10. The capture system in accordance with any of the preceding clauses, wherein the at least one adsorption module comprises a plurality of adsorption modules coupled in a series flow arrangement.

11. The capture system in accordance with any of the preceding clauses, wherein the at least one injector comprises an injector coupled to each of the plurality of adsorption modules.

12. The capture system in accordance with any of the preceding clauses, wherein the controller is further configured to modulate the temperature and the water relative humidity of each of the plurality of adsorption modules.

13. The capture system in accordance with any of the preceding clauses, wherein the functionalized sorbent comprises a sorbent and at least one functionalization ligand comprising an amine group.

14. The capture system in accordance with any of the preceding clauses, wherein the at least one functionalization ligand comprising an amine group comprises at least one amine selected from the group consisting of primary amines, secondary amines, tertiary amines, and combinations thereof.

15. The capture system in accordance with any of the preceding clauses, wherein the at least one functionalization ligand comprising an amine group comprises at least one amine selected from the group consisting of monoamines, diamines, triamines, tetra-amines, penta-amines, hexa-amines, polyamines, and combinations thereof.

16. The capture system in accordance with any of the preceding clauses, wherein the functionalized sorbent

comprises a sorbent and at least one functionalization ligand comprising an aminosilicone group.

17. The capture system in accordance with any of the preceding clauses, wherein the functionalized sorbent is a functionalized MOF compound of Formula (A-I)

$$M_x L_y F_a^A F_b^B \quad \text{(Formula A-I)},$$

wherein:

Mis a MOF metal or metal-containing cluster;

*L* is a MOF linker;

$F^A$ is the at least one functionalization ligand comprising an aminosilicone group;

$F^B$ is at least one functionalization ligand not comprising an aminosilicone group;

x is a value in a range of 1 to 6;

y is a value in a range of 1 to 6;

*a* is a value greater than 0 and less than or equal to 2; and

*b* is a value in a range of 0 to 2.

18. The capture system in accordance with any of the preceding clauses, wherein the MOF metal or metal-containing cluster comprises a metal selected from the group consisting of alkali metals, alkaline earth metals, transition metals, Mg, Ca, Mn, Cr, Fe, Co, Ni, Cu, Zn, ions thereof, hydrates thereof, salts thereof, halides thereof, fluorides thereof, chlorides thereof, bromides thereof, iodides thereof, nitrates thereof, acetates thereof, sulfates thereof, phosphates thereof, carbonates thereof, oxides thereof, formates thereof, carboxylates thereof, and combinations thereof.

19. The capture system in accordance with any of the preceding clauses, wherein the MOF linker comprises at least one or more linker selected from the group consisting of polytopic linkers, 4,4'-dihydroxy-[1,1'-biphenyl]-3,3'-dicarboxylic acid ($H_4$dobpdc), 4,4'-dioxidobiphenyl-3,3'-dicarboxylate (dobpdc$^{4-}$), 4,4"-dioxido-[1,1':4',1"-terphenyl]-3,3"-dicarboxylate (dotpdc$^{4-}$), 2,5-dioxidobenzene-1,4-dicarboxylate (dobdc$^{4-}$), 4,6-Dihydroxyisophthalic acid (m-dobdc$^{4-}$), 3,3'-dioxido-biphenyl-4,4'-dicarboxylate (para-carboxylate-dobpdc$^{4-}$), 4,4'-[oxalylbis(imino)]bis(2-hydroxybenzoic acid) ($H_4$ODA), 4,4'-[1,4-phenylenebis-(carbonylimino)]bis(2-hydroxybenzoic acid) ($H_4$TDA), 4,4'-Dihydroxyazobenzene-3,3'-dicarboxylic acid ($H_4$OSA), dicarboxylates, terephthalic acid, tricarboxylates, 1,3,5-benzentricarboxylic acid, azolates, tetrazolates, 1,4-butanedicarboxylic acid, 4-oxopyran-2,6-dicarboxylic acid, 1,6-hexanedicarboxylic acid, decanedicarboxylic acid, 1,8-heptadecanedicarboxylic acid, 1,9-heptadecanedicarboxylic acid, heptadecanedicarboxylic acid, acetylenedicarboxylic acid, 1,2-benzenedicarboxylic acid, 2,3-pyridinedicarboxylic acid, pyridine-2,3-dicarboxylic acid, 1,3-butadiene-1,4-dicarboxylic acid, 1,4-benzenedicarboxylic acid, p-benzenedicarboxylic acid, imidazole-2,4-dicarboxylic acid, 2-methylquinoline-3,4-dicarboxylic acid, quinoline-2,4-dicarboxylic acid, quinoxaline-2,3-dicarboxylic acid, 6-chloroquinoxaline-2,3-dicarboxylic acid, 4,4'-diaminophenylmethane-3,3'-dicarboxylic acid, quinoline-3,4-dicarboxylic acid, 7-chloro-4-hydroxyquinoline-2,8-dicarboxylic acid, diimidedicarboxylic acid, pyridine-2,6-dicarboxylic acid, 2-methylimidazole-4,5-dicarboxylic acid, thiophene-3,4-dicarboxylic acid, 2-isopropylimidazole-4,5-dicarboxylic acid, tetrahydropyran-4,4-dicarboxylic acid, perylene-3,9-dicarboxylic acid, perylenedicarboxylic acid, Pluriol E 200-dicarboxylic acid, 3,6-dioxaoctanedicarboxylic acid, 3,5-cyclohexadiene-1,2-dicarboxylic acid, octanedicarboxylic acid, pentane-3,3-carboxylic acid, 4,4'-diamino-1,1'-diphenyl-3,3'-dicarboxylic acid, 4,4'-diaminodiphenyl-3,3'-dicarboxylic acid, benzidine-3,3'-dicarboxylic acid, 1,4-bis-(phenylamino)benzene-2,5-dicarboxylic acid, 1,1'-dinaphthyl-8,8'-dicarboxylic acid, 7-chloro-8-methylquinoline-2,3-dicarboxylic acid, 1-anilinoanthraquinone-2,4'-dicarboxylic acid, polytetrahydrofuran-250-dicarboxylic acid, 1,4-bis(carboxymethyl)piperazine-2,3-dicarboxylic acid, 7-chloroquinoline-3,8-dicarboxylic acid, 1-(4-carboxy)phenyl-3-(4-chloro) phenylpyrazoline-4,5-dicarboxylic acid, 1,4,5,6,7,7,-hexachloro-5-norbornene-2,3-dicarboxylic acid, phenylindanedicarboxylic acid, 1,3-dibenzyl-2-oxoimidazolidine-4,5-dicarboxylic acid, 1,4-cyclohexanedicarboxylic acid, naphthalene-1,8-dicarboxylic acid, 2-benzoylbenzene-1,3-dicarboxylic acid, 1,3-dibenzyl-2-oxoimidazolidine-4,5-cisdicarboxylic acid, 2,2'-biquinoline-4,4'-dicarboxylic acid, pyridine-3,4-dicarboxylic acid, 3,6,9-trioxaundecanedicarboxylic acid, o-hydroxybenzophenonedicarboxylic acid, Pluriol E 300-dicarboxylic acid, Pluriol E 400-dicarboxylic acid, Pluriol E 600-dicarboxylic acid, pyrazole-3,4-dicarboxylic acid, 2,3-pyrazinedicarboxylic acid, 5,6-dimethyl-2,3-pyrazinedicarboxylic acid, 4,4'-diaminodiphenyletherdiimidedicarboxylic acid, 4,4'-diaminodiphenylmethanediimidedicarboxylic acid, 4,4'-diaminodiphenylsulfonediimidedicarboxylic acid, 2,6-naphthalenedicarboxylic acid, 1,3-adamantanedicarboxylic acid, 1,8-naphthalenedicarboxylic acid, 2,3-naphthalenedicarboxylic acid, 8-methoxy-2,3-naphthalenedicarboxylic acid, 8-nitro-2,3-naphthalenedicarboxylic acid, 8-sulfo-2,3-naphthalenedicarboxylic acid, anthracene-2,3-dicarboxylic acid, 2'-3'-diphenyl-p-terphenyl-4,4"-dicarboxylic acid, diphenylether-4,4'-dicarboxylic acid, imidazole-4,5-dicarboxylic acid, 4(1H)-oxothiochromene-2,8-dicarboxylic acid, 5-t-butyl-1,3-benzenedicarboxylic acid, 7,8-quinolinedicarboxylic acid, 4,5-imidazoledicarboxylic acid, 4-cyclohexene-1,2-dicarboxylic acid, hexatriacontanedicarboxylic acid, tetradecanedicarboxylic acid, 1,7-heptanedicarboxylic acid, 5-hydroxy-1,3-benzenedicarboxylic acid, pyrazine-2,3-dicarboxylic acid, furan-2,5-dicarboxylic acid, 1-nonene-6,9-dicarboxylic acid, eicosenedicarboxylic acid, 4,4'-dihydroxydiphenylmethane-3,3'-dicarboxylic acid, 1-amino-4-methyl-9,10-dioxo-9,10-dihydroanthracene-2,3-dicarboxylic acid, 2,5-pyridinedicarboxylic acid, cyclohexene-2,3-dicarboxylic acid, 2,9-dichlorofluorubin-4,11-dicarboxylic acid, 7-chloro-3-methylquinoline-6,8-dicarboxylic acid, 2,4-dichlorobenzophenone-2',5'-dicarboxylic acid, 1,3-benzenedicarboxylic acid, 2,6-pyridinedicarboxylic acid, 1-methylpyrrole-3,4-dicarboxylic acid, 1-benzyl-1H-pyrrole-3,4-dicarboxylic acid, anthraquinone-1,5-dicarboxylic acid, 3,5-pyrazoledicarboxylic acid, 2-nitrobenzene-1,4-dicarboxylic acid, heptane-1,7-dicarboxylic acid, cyclobutane-1,1-dicarboxylic acid, 1,14-tetradecanedicarboxylic acid, 5,6-dehydronorbornane-2,3-dicarboxylic acid, 5-ethyl-2,3-pyridinedicarboxylic acid, 2-hydroxy-1,2,3-propanetricarboxylic acid, 7-chloro-2,3,8-quinolinetricarboxylic acid, 1,2,4-benzenetricarboxylic acid, 1,2,4-butanetricarboxylic acid, 2-phosphono-1,2,4-butanetricarboxylic acid, 1,3,5-benzenetricarboxylic acid, 1-hydroxy-1,2,3-propanetricarboxylic acid, 4,5-dihydro-4,5-dioxo-1H-pyrrolo[2,3-F] quinoline-2,7,9-tricarboxylic acid, 5-acetyl-3-amino-6-methylbenzene-1,2,4-tricarboxylic acid, 3-amino-5-benzoyl-6-methylbenzene-1,2,4-tricarboxylic acid, 1,2,3-propanetricarboxylic acid, aurinetricarboxylic acid, 1,1-dioxide-perylo[1,12-BCD]thiophene-3,4,9,10-tetracarboxylic acid, perylenetetracarboxylic acids, perylene-3,4,9,10-tetracarboxylic acid, perylene-1,12-sulfone-3,4,9,10-tetracarboxylic acid, butanetetracarboxylic acids, 1,2,3,4-butanetetracarboxylic acid, meso-1,2,3,4-butanetetracarboxylic acid, decane-2,4,6,8-tetracarboxylic acid, 1,4,7,10,13,16-hexaoxacyclooctadecane-2,3,11,12-tetracarboxylic acid, 1,2,4,5-benzenetetracarboxylic acid, 1,2,11,12-dodecanetetracarboxylic acid, 1,2,5,6-hexanetetracarboxylic acid, 1,2,7,8-octanetetracarboxylic acid, 1,4,5,8-naphthalenetetracarboxylic acid, 1,2,9,10-decanetetracarboxylic acid, benzophenonetetracarboxylic acid, 3,3',4,4'-benzophenonetetracarboxylic acid, tetrahydrofurantetracarboxylic acid, cyclopentanetetracarboxylic acids, cyclopentane-1,2,3,4-tetracarboxylic acid, polytopic linkers, ditopic linkers, tritopic linkers, tetratopic linkers, pentatopic linkers, hexatopic linkers, heptatopic linkers, octatopic linkers, mixed linkers, desymmetrized linker, metallo linkers, N-heterocyclic linkers, protonated, partially and fully deprotonated forms thereof, and combinations thereof.

20. The capture system in accordance with any of the preceding clauses, wherein the at least one functionalization ligand comprising an aminosilicone group comprises at least one aminosilicone selected from the group consisting of linear aminosilicones, cyclic aminosilicones, branched aminosilicones, amino-substituted siloxanes, linear amino-substituted disiloxanes, cyclic amino-substituted disiloxanes, linear amino-substituted trisiloxanes, cyclic amino-substituted trisiloxanes, linear amino-substituted tetrasiloxanes, cyclic amino-substituted tetrasiloxanes, linear amino-substituted polysiloxanes, cyclic amino-substituted polysiloxanes, silsesquioxanes, polyoctahedral silsesquioxanes, and combinations thereof.

Synthesis of Aminoalkyl-Substituted Disiloxanes.

In one aspect, a method of preparing an aminoalkyl-substituted disiloxane is provided. The method includes: I) forming a mixture including: a di- or polyamine containing at least one primary amine group; and a silane; II) reacting the mixture in a first reaction; III) adding a hydrolysis agent to the mixture; and IV) reacting the mixture in a second reaction to form the aminoalkyl-substituted disiloxane.

In another aspect, an aminoalkyl-substituted disiloxane of Formula (B-I) is provided. The Formula is:

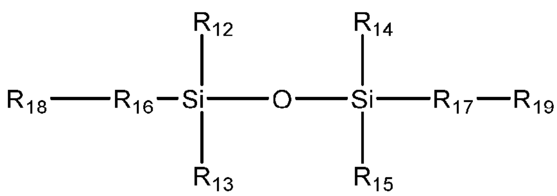

(Formula B-I)

wherein:

$R_{12}$, $R_{13}$, $R_{14}$, $R_{15}$, are each individually selected from the group consisting of hydrogen, substituted or unsubstituted linear alkyl, substituted or unsubstituted $C_1$-$C_6$ linear alkyl, substituted or unsubstituted branched alkyl, substituted or unsubstituted $C_3$-$C_6$ branched alkyl, substituted or unsubstituted linear heteroalkyl, substituted or unsubstituted branched heteroalkyl, aryl, phenyl, heteroaryl, methyl, ethyl, propyl, isopropyl, butyl, pentyl, and hexyl;

$R_{16}$ and $R_{17}$ are each individually selected from the group consisting of direct bonds, substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, and $C_6$ alkyl; and

$R_{18}$ and $R_{19}$ are each individually selected from the group consisting of substituents of Formula (B-IV)

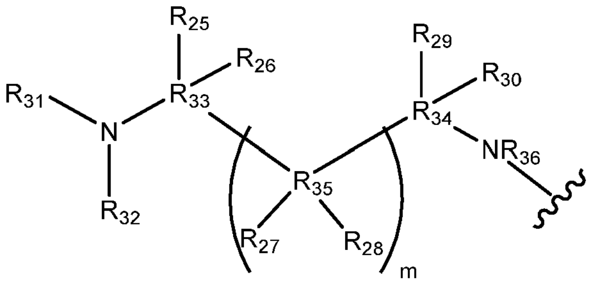

(Formula B-IV);

wherein:

the wavy bond indicates a bonding location to Formula (B-I);

$R_{25}$, $R_{26}$, $R_{27}$, $R_{28}$, $R_{29}$, and $R_{30}$ are each individually selected from the group consisting of hydrogen, substituted or unsubstituted linear alkyl, substituted or unsubstituted $C_1$-$C_6$ linear alkyl, substituted or unsubstituted branched alkyl, substituted or unsubstituted $C_3$-$C_6$ branched alkyl, substituted or unsubstituted linear heteroalkyl, substituted or unsubstituted $C_1$-$C_6$ linear heteroalkyl, substituted or unsubstituted branched heteroalkyl, substituted or unsubstituted $C_3$-$C_6$ branched heteroalkyl, aryl, heteroaryl, methyl, ethyl, propyl, isopropyl, butyl, pentyl, and hexyl;

$R_{31}$ and $R_{32}$ are each individually selected from the group consisting of hydrogen, substituted or unsubstituted linear alkyl, substituted or unsubstituted $C_1$-$C_6$ linear alkyl, substituted or unsubstituted $C_1$-$C_3$ linear alkyl, substituted or unsubstituted branched alkyl, substituted or unsubstituted $C_3$-$C_6$ branched alkyl, methyl, ethyl, propyl, substituted or unsubstituted cycloalkyl, substituted or unsubstituted $C_3$-$C_6$ cycloalkyl, and substituted or unsubstituted $C_4$-$C_6$ cycloalkyl, or, when taken together, $R_{31}$ and $R_{32}$ form a single ring selected from the group consisting of heterocycloalkyl or heteroaryl;

$R_{33}$, $R_{34}$, and $R_{35}$ are each individually selected from the group consisting of direct bonds, substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, $C_6$ alkyl, ether, $-OCH_2CH_2-$, $-OCH_2CH_2CH_2-$, $-OCH_2CH_2CH_2CH_2-$, $-NHCH_2CH_2-$, $-NHCH_2CH_2CH_2-$, and - $NHCH_2CH_2CH_2CH_2-$;

$R_{36}$ is selected from the group consisting of hydrogen, substituted or unsubstituted linear alkyl, substituted or unsubstituted $C_1$-$C_6$ linear alkyl, substituted or unsubstituted $C_1$-$C_3$ linear alkyl, substituted or unsubstituted branched alkyl, substituted or unsubstituted $C_3$-$C_6$ branched alkyl, methyl, ethyl, propyl, substituted or unsubstituted cycloalkyl, substituted or unsubstituted $C_3$-$C_6$ cycloalkyl, substituted or unsubstituted $C_4$-$C_6$ cycloalkyl, heterocycloalkyl, and heteroaryl; and

m is an integer in a range of 0 to 20;

provided that the aminoalkyl-substituted disiloxane is not

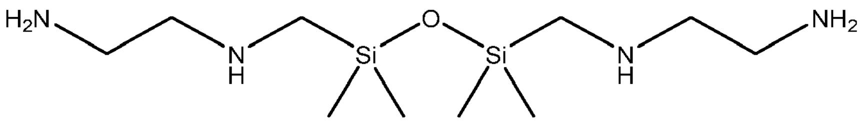

The embodiments described herein overcome at least some of the disadvantages of known methods of preparing aminoalkyl-substituted disiloxanes and known aminoalkyl-substituted disiloxanes. The exemplary embodiments described herein include a method of preparing an aminoalkyl-substituted disiloxane, wherein the method includes: I) forming a mixture including: a di- or polyamine containing at least one primary amine group; and a silane; II) reacting the mixture in a first reaction; III) adding a hydrolysis agent to the mixture; and IV) reacting the mixture in a second reaction to form the aminoalkyl-substituted disiloxane. The exemplary embodiments described herein avoid side reactions and/or produce the desired product in fewer steps and with superior yields and purity, as compared to known methods of preparing an aminoalkyl-substituted disiloxane.

In many embodiments, the method is a one-pot synthesis. As used herein, a one-pot synthesis is a synthesis that occurs in a single reaction vessel. It is not necessary to remove intermediates from the reaction vessel for separation and/or purification. The one-pot synthesis may include one reaction or more than one reaction. One-pot syntheses are particularly advantageous in reducing reaction complexity and avoiding lengthy and costly separations and purifications.

In many embodiments, the aminoalkyl-substituted disiloxanes are amino-$C_1$-$C_6$ alkyl substituted disiloxanes. Embodiments including $C_1$-$C_6$ alkyl groups are thermodynamically favorable to form compared to other compounds including larger aminoalkyl substituents or alternative substituents. In some embodiments, the aminoalkyl-substituted disiloxanes are aminomethyl-substituted disiloxanes.

Figure 13 is an exemplary method flow chart 1310. In this exemplary embodiment, method flow chart 1310 depicts the essential method steps of the exemplary embodiments described herein and is not intended to limit the method embodiments. Initially, a mixture is formed 1312 that includes: a di- or polyamine containing at least one primary amine group; and a silane. The mixture is reacted 1314 in a first reaction, and a hydrolysis agent is added 1316 to the mixture. The mixture is then reacted 1318 in a second reaction to form the aminoalkyl-substituted disiloxane.

In some embodiments, the aminoalkyl-substituted disiloxanes in accordance with the present disclosure are selected from the group consisting of aminoalkyl-substituted disiloxanes of Formula (B-I)

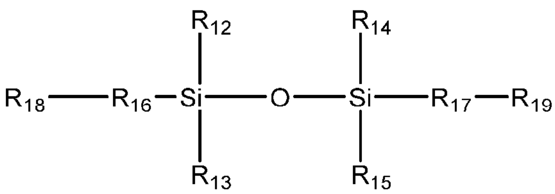

(Formula B-I)

wherein:

$R_{12}$, $R_{13}$, $R_{14}$, $R_{15}$, are each individually selected from the group consisting of hydrogen, substituted or unsubstituted linear alkyl, substituted or unsubstituted $C_1$-$C_6$ linear alkyl, substituted or unsubstituted branched alkyl, substituted or unsubstituted $C_3$-$C_6$ branched alkyl, substituted or unsubstituted linear heteroalkyl, substituted or unsubstituted branched heteroalkyl, aryl, phenyl, heteroaryl, methyl, ethyl, propyl, isopropyl, butyl, pentyl, and hexyl;

$R_{16}$ and $R_{17}$ are each individually selected from the group consisting of direct bonds, substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, and $C_6$ alkyl, preferably $C_1$-$C_6$ linear alkyl, even more preferably $C_1$ alkyl;

$R_{18}$ and $R_{19}$ are each individually selected from the group consisting of substituents of Formula (B-IV)

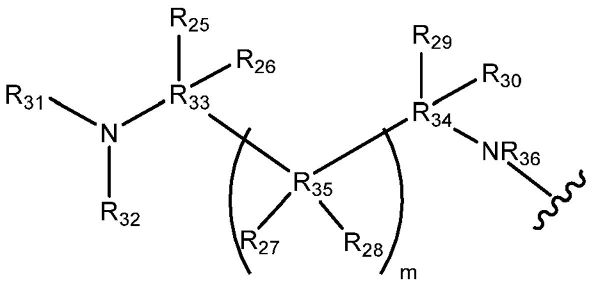

(Formula B-IV);

wherein:

the wavy bond indicates a bonding location to Formula (B-I);

$R_{25}$, $R_{26}$, $R_{27}$, $R_{28}$, $R_{29}$, and $R_{30}$ are each individually selected from the group consisting of hydrogen, substituted or unsubstituted linear alkyl, substituted or unsubstituted $C_1$-$C_6$ linear alkyl, substituted or unsubstituted branched alkyl, substituted or unsubstituted $C_3$-$C_6$ branched alkyl, substituted or unsubstituted linear heteroalkyl, substituted or unsubstituted $C_1$-$C_6$ linear heteroalkyl, substituted or unsubstituted branched heteroalkyl, substituted or unsubstituted $C_3$-$C_6$ branched heteroalkyl, aryl, heteroaryl, methyl, ethyl, propyl, isopropyl, butyl, pentyl, and hexyl;

$R_{31}$ and $R_{32}$ are each individually selected from the group consisting of hydrogen, substituted or unsubstituted linear alkyl, substituted or unsubstituted $C_1$-$C_6$ linear alkyl, substituted or unsubstituted $C_1$-$C_3$ linear alkyl, substituted or unsubstituted branched alkyl, substituted or unsubstituted $C_3$-$C_6$ branched alkyl, methyl, ethyl, propyl, substituted or unsubstituted cycloalkyl, substituted or unsubstituted $C_3$-$C_6$ cycloalkyl, and substituted or unsubstituted $C_4$-$C_6$ cycloalkyl, or, when taken together, $R_{31}$ and $R_{32}$ form a single ring selected from the group consisting of heterocycloalkyl or heteroaryl;

$R_{33}$, $R_{34}$, and $R_{35}$ are each individually selected from the group consisting of direct bonds, substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, $C_6$ alkyl, ether, $-OCH_2CH_2-$, $-OCH_2CH_2CH_2-$, $-OCH_2CH_2CH_2CH_2-$, $-NHCH_2CH_2-$, $-NHCH_2CH_2CH_2-$, and - $NHCH_2CH_2CH_2CH_2-$;

$R_{36}$ is selected from the group consisting of hydrogen, substituted or unsubstituted linear alkyl, substituted or unsubstituted $C_1$-$C_6$ linear alkyl, substituted or unsubstituted $C_1$-$C_3$ linear alkyl, substituted or unsubstituted branched alkyl, substituted or unsubstituted $C_3$-$C_6$ branched alkyl, methyl, ethyl, propyl, substituted or unsubstituted cycloalkyl, substituted or unsubstituted $C_3$-$C_6$ cycloalkyl, substituted or unsubstituted $C_4$-$C_6$ cycloalkyl, heterocycloalkyl, and heteroaryl; and

m is an integer in a range of 0 to 20, preferably in a range of 0 to 10, even more preferably in a range of 0 to 3;

provided that the aminoalkyl-substituted disiloxane is not

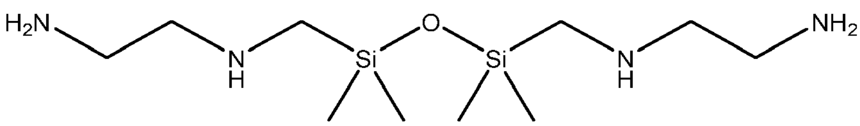

In some embodiments, the aminoalkyl-substituted disiloxanes are selected from the group consisting of

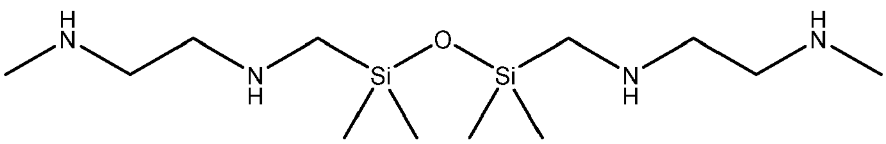

,

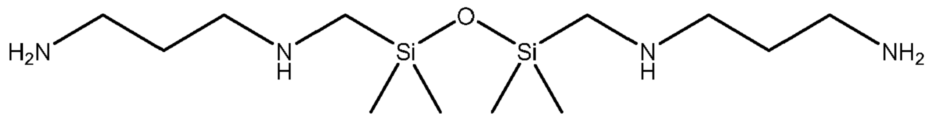

,

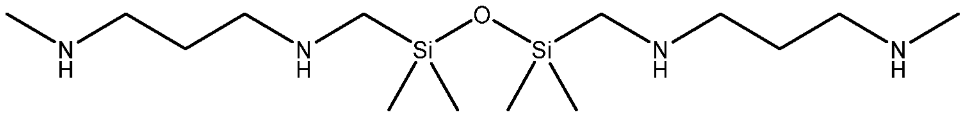

,

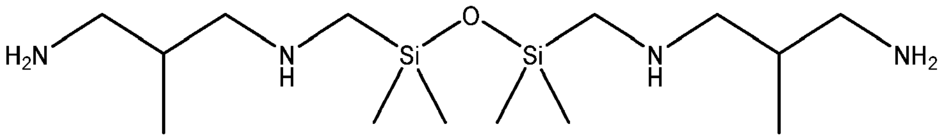

,

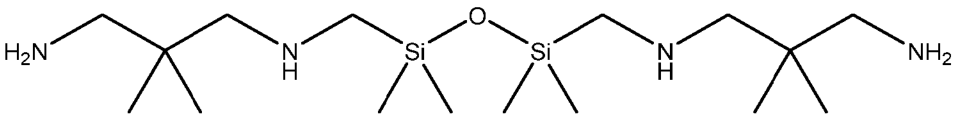

,

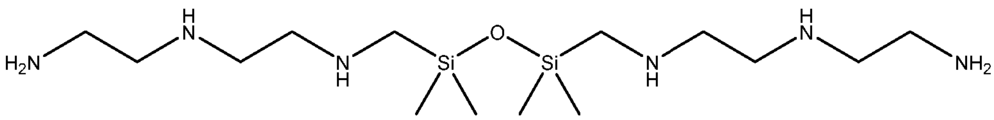

,

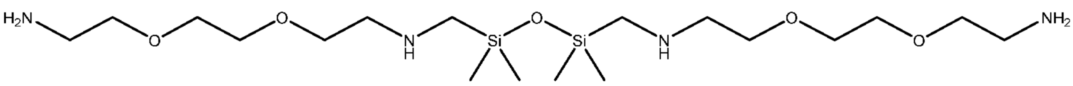

,

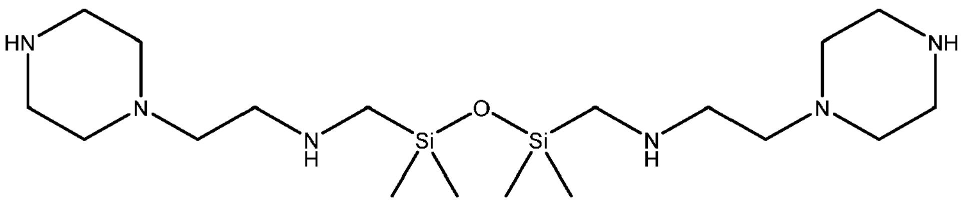

,

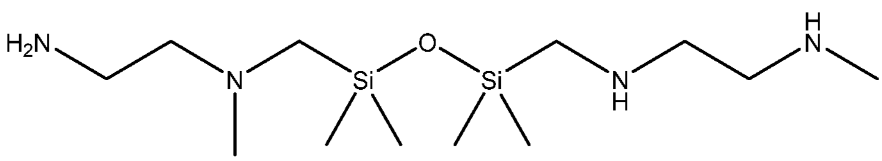

,

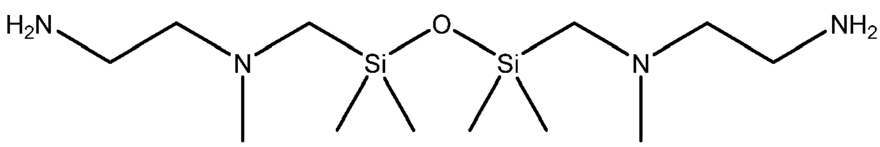

,

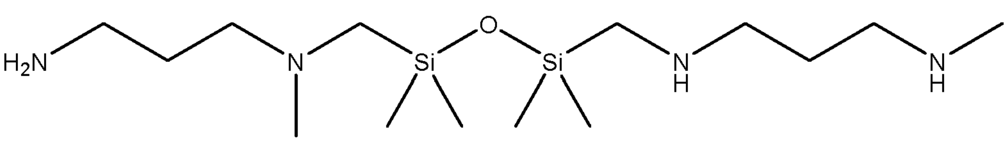

,

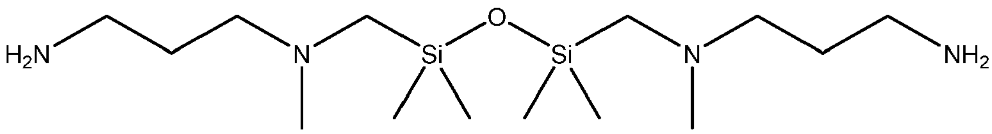

,

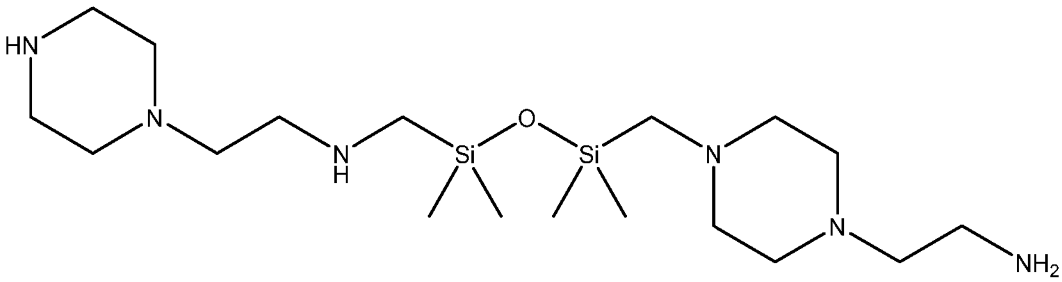

,

and

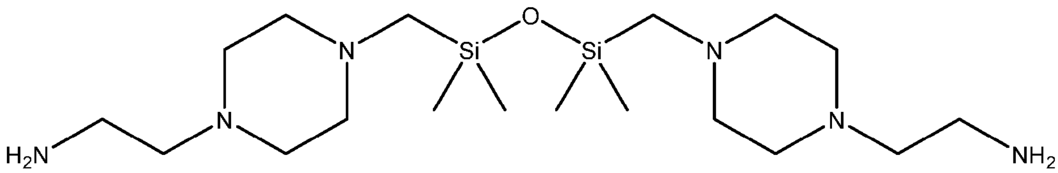

In some embodiments, the di- or polyamine containing at least one primary amine group may be any suitable di- or polyamine containing at least one primary amine group known in the art that facilitates the method described herein. In other embodiments, the di- or polyamine containing at least one primary amine group is a compound of Formula (B-II)

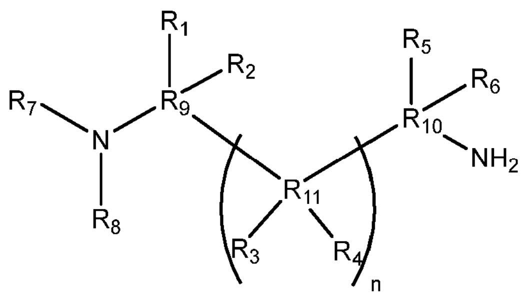

(Formula B-II);

wherein:

$R_1$, $R_2$, $R_3$, $R_4$, $R_5$, and $R_6$ are each individually selected from the group consisting of hydrogen, substituted or unsubstituted linear alkyl, substituted or unsubstituted $C_1$-$C_6$ linear alkyl, substituted or unsubstituted branched alkyl, substituted or unsubstituted $C_3$-$C_6$ branched alkyl, substituted or unsubstituted linear heteroalkyl, substituted or unsubstituted branched heteroalkyl, substituted or unsubstituted $C_3$-$C_6$ branched heteroalkyl, aryl, phenyl, heteroaryl, methyl, ethyl, propyl, isopropyl, butyl, pentyl, and hexyl;

$R_7$ and $R_8$ are each individually selected from the group consisting of hydrogen, substituted or unsubstituted linear alkyl, substituted or unsubstituted $C_1$-$C_6$ linear alkyl, substituted or unsubstituted $C_1$-$C_3$ linear alkyl, substituted or unsubstituted branched alkyl, substituted or unsubstituted $C_3$-$C_6$ branched alkyl, methyl, ethyl, propyl, substituted or unsubstituted cycloalkyl, substituted or unsubstituted $C_3$-$C_6$ cycloalkyl, and substituted or unsubstituted $C_4$-$C_6$ cycloalkyl, or, when taken together, $R_7$ and $R_8$ form a single ring selected from the group consisting of heterocycloalkyl or heteroaryl;

$R_9$, $R_{10}$, and $R_{11}$ are each individually selected from the group consisting of direct bonds, substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, $C_6$ alkyl, ether, $-OCH_2CH_2-$, $-OCH_2CH_2CH_2-$, $-OCH_2CH_2CH_2CH_2-$, $-NHCH_2CH_2-$, $-NHCH_2CH_2CH_2-$, and -

$NHCH_2CH_2CH_2CH_2$-; and

n is an integer in a range of 0 to 20, preferably in a range of 0 to 10, even more preferably in a range of 0 to 3.

In some embodiments, the silane may be any suitable silane known in the art that facilitates the method described herein. In some embodiments, the silane is an alkoxysilane. In at least some embodiments, the silane is a compound of Formula (B-III)

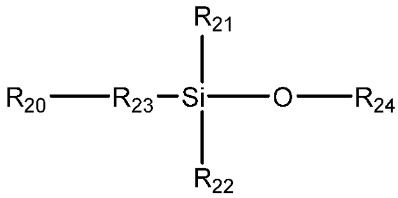

(Formula B-III)

wherein:

$R_{20}$ is selected from the group consisting of halide, fluoride, chloride, bromide, and iodide;

$R_{21}$ and $R_{22}$ are each individually selected from the group consisting of hydrogen, substituted or unsubstituted linear alkyl, substituted or unsubstituted $C_1$-$C_6$ linear alkyl, substituted or unsubstituted branched alkyl, substituted or unsubstituted $C_3$-$C_6$ branched alkyl, substituted or unsubstituted linear heteroalkyl, substituted or unsubstituted branched heteroalkyl, aryl, phenyl, heteroaryl, methyl, ethyl, propyl, isopropyl, butyl, pentyl, and hexyl;

$R_{23}$ and $R_{24}$ are each individually selected from the group consisting of substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, $C_6$ alkyl, aryl, and phenyl.

In some embodiments, $R_{23}$ and $R_{24}$ are each individually selected from the group consisting of substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, and $C_6$ alkyl, preferably $C_1$-$C_6$ linear alkyl.

In some embodiments, $R_{23}$ is $C_1$ alkyl.

In some embodiments, $R_{24}$ is $C_1$ alkyl, $C_2$ alkyl, $C_3$ alkyl, $C_4$ alkyl, $C_5$ alkyl, $C_6$ alkyl, aryl, or phenyl.

In some embodiments, the silane is

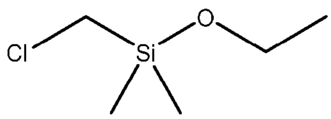

In some embodiments, the silane is

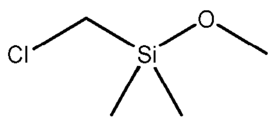

In many embodiments, reacting 1314 the mixture in a first reaction may occur under any suitable reaction conditions known in the art that facilitates the method described herein. In some embodiments, reacting 1314 the mixture in a first reaction includes stirring the mixture.

In many embodiments, reacting 1314 the mixture in a first reaction may occur for any suitable amount of time known in the art that facilitates the method described herein. In some embodiments, the mixture is reacted 1314 in a first reaction for an elapsed time in a range of from about 1 second to about 12 hours. In some embodiments, the mixture is reacted 1314 in a first reaction for an elapsed time in a range of from about 1 second to about 6 hours. In some embodiments, the mixture is reacted 1314 in a first reaction for an elapsed time in a range of from about 1 second to about 3 hours. In some embodiments, the mixture is reacted 1314 in a first reaction for an elapsed time in a range of from about 1 hour to about 3 hours. In some embodiments, the mixture is reacted 1314 in a first reaction for an elapsed time in a range of

from about 2 hours to about 3 hours.

In some embodiments, reacting 1314 the mixture in a first reaction includes adding the silane (e.g. chloromethyldimethylethoxysilane) dropwise over about 1 hour to the neat di- or polyamine containing at least one primary amine group. The reaction temperature is allowed to increase due to the reaction exotherm to about 90°C and is retained at this temperature for the duration of the reaction (about 2-3 hours total). During this time, an HCl salt of the amine forms and may precipitate to varying degrees depending on the amine.

In some embodiments, the hydrolysis agent is added 1316 dropwise to the mixture. In some embodiments, the hydrolysis agent is added to the mixture over a time period. In some embodiments, the hydrolysis agent is added 1316 to the mixture over a time period in a range of from about 1 second to about 12 hours. In some embodiments, the hydrolysis agent is added 1316 over 30 minutes and exothermic conditions and allowed to cool to room temperature prior to reacting 1318 the mixture in a second reaction.

In some embodiments, the hydrolysis agent is added 1316 over 30 minutes and exothermic conditions before reacting 1318 the mixture in a second reaction. In these embodiments, the reacting 1318 is complete before the reaction mixture is allowed to cool to room temperature.

In many embodiments, the hydrolysis agent may be any suitable hydrolysis agent known in the art that facilitates the method described herein. In some embodiments, the hydrolysis agent is an aqueous solution. In some embodiments, the hydrolysis agent is water.

In many embodiments, reacting 1318 the mixture in a second reaction may occur under any suitable reaction conditions known in the art that facilitates the method described herein. In some embodiments, reacting 1318 the mixture in a second reaction includes adjusting a temperature of the mixture. In some embodiments, reacting 1318 the mixture in a second reaction includes cooling the mixture.

In some embodiments, the aminoalkyl-substituted disiloxane is further extracted from the reaction mixture. In some embodiments, the aminoalkyl-substituted disiloxane is further extracted from the reaction mixture with an organic solvent.

In some embodiments, extracting the aminoalkyl-substituted disiloxane from the reaction mixture includes adding an organic solvent (e.g chloroform and/or toluene) to the reaction mixture dropwise over 30 min and stirring the reaction mixture vigorously for about 1 hour or until cooled to room temperature. Once cool, the organic layer is isolated, the aqueous layer is back-extracted with minimal organic solvent, and the combined organic layers are concentrated under vacuum, triturated with organic solvent once and then dried under vacuum.

In some embodiments, the aminoalkyl-substituted disiloxane is further purified. In some embodiments, the further purification includes using distillation, vacuum distillation, and/or heat. In some embodiments, the further purification includes using vacuum distillation to remove impurities and byproducts. In these embodiments, the remaining material in the distillation pot is a product of higher purity relative to the product before purification.

In many embodiments, reacting 1318 the mixture in a second reaction may occur for any suitable amount of time known in the art that facilitates the method described herein. In some embodiments, the mixture is reacted 1318 in a second reaction for an elapsed time in a range of from about 1 second to about 12 hours. In some embodiments, the mixture is reacted 1318 in a second reaction for an elapsed time in a range of from about 1 second to about 6 hours. In some embodiments, the mixture is reacted 1318 in a second reaction for an elapsed time in a range of from about 1 second to about 3 hours. In some embodiments, the mixture is reacted 1318 in a second reaction for an elapsed time in a range of from about 1 hour to about 3 hours. In some embodiments, the mixture is reacted 1318 in a second reaction for an elapsed time in a range of from about 2 hours to about 3 hours.

In many embodiments, the method may also include any further suitable processing steps known in the art that facilitate the success of the method described herein. Such processing steps may include, but are not limited to only including, washing, drying, filtering, purifying, separating, centrifuging, and any combinations thereof. In some embodiments, the method further includes washing the aminoalkyl-substituted disiloxane compound. In some embodiments, the method further includes purifying the aminoalkyl-substituted disiloxane compound. In some embodiments, the purifying includes using distillation, vacuum distillation, and/or heat. In some embodiments, the method further includes removing a volatile reaction byproduct.

In some embodiments, the method includes: I) forming a mixture including: a di- or polyamine containing at least one primary amine group; and a choloromethyldimethylalkoxysilane; II) reacting the mixture, by nature of controlled exotherm, in a first reaction; III) adding a hydrolysis agent to the mixture; IV) reacting the mixture in a second reaction to form an aminoalkyl-substituted; (V) extracting the aminoalkyl-substituted disiloxane; and (VI) purifying the aminoalkyl-substituted disiloxane.

In many embodiments, the aminoalkyl-substituted disiloxane may be used according to any suitable purpose known in the art. In some embodiments, the aminoalkyl-substituted disiloxane is used in a carbon capture system. In some embodiments, the aminoalkyl-substituted disiloxane is used in an aminosilicone-based product.

Further aspects of the present disclosure are provided by the subject matter of the following clauses:

1. A method of preparing an aminoalkyl-substituted disiloxane, the method comprising: I) forming a mixture comprising: a di- or polyamine containing at least one primary amine group; and a silane; II) reacting the mixture in a first reaction; III) adding a hydrolysis agent to the mixture; and IV) reacting the mixture in a second reaction to form the aminoalkyl-substituted disiloxane.

2. The method in accordance with the preceding clause, wherein the aminoalkyl-substituted disiloxane is a compound of Formula (B-I)

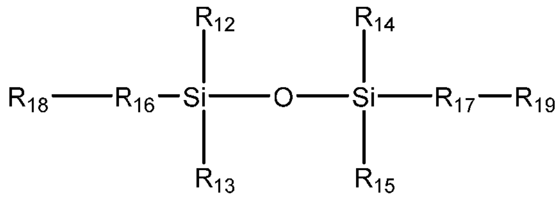

(Formula B-I)

wherein:

$R_{12}$, $R_{13}$, $R_{14}$, $R_{15}$, are each individually selected from the group consisting of hydrogen, substituted or unsubstituted linear alkyl, substituted or unsubstituted $C_1$-$C_6$ linear alkyl, substituted or unsubstituted branched alkyl, substituted or unsubstituted $C_3$-$C_6$ branched alkyl, substituted or unsubstituted linear heteroalkyl, substituted or unsubstituted branched heteroalkyl, aryl, phenyl, heteroaryl, methyl, ethyl, propyl, isopropyl, butyl, pentyl, and hexyl;

$R_{16}$ and $R_{17}$ are each individually selected from the group consisting of direct bonds, substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, and $C_6$ alkyl;

$R_{18}$ and $R_{19}$ are each individually selected from the group consisting of substituents of Formula (B-IV)

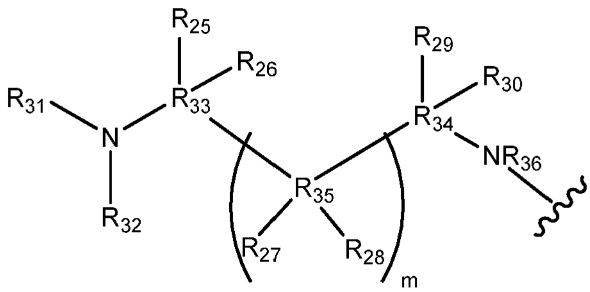

(Formula B-IV);

wherein:

the wavy bond indicates a bonding location to Formula (B-I);

$R_{25}$, $R_{26}$, $R_{27}$, $R_{28}$, $R_{29}$, and $R_{30}$ are each individually selected from the group consisting of hydrogen, substituted or unsubstituted linear alkyl, substituted or unsubstituted $C_1$-$C_6$ linear alkyl, substituted or unsubstituted branched alkyl, substituted or unsubstituted $C_3$-$C_6$ branched alkyl, substituted or unsubstituted linear heteroalkyl, substituted or unsubstituted $C_1$-$C_6$ linear heteroalkyl, substituted or unsubstituted branched heteroalkyl, substituted or unsubstituted $C_3$-$C_6$ branched heteroalkyl, aryl, heteroaryl, methyl, ethyl, propyl, isopropyl, butyl, pentyl, and hexyl;

$R_{31}$ and $R_{32}$ are each individually selected from the group consisting of hydrogen, substituted or unsubstituted linear alkyl, substituted or unsubstituted $C_1$-$C_6$ linear alkyl, substituted or unsubstituted $C_1$-$C_3$ linear alkyl, substituted or unsubstituted branched alkyl, substituted or unsubstituted $C_3$-$C_6$ branched alkyl, methyl, ethyl, propyl, substituted or unsubstituted cycloalkyl, substituted or unsubstituted $C_3$-$C_6$ cycloalkyl, and substituted or unsubstituted $C_4$-$C_6$ cycloalkyl, or, when taken together, $R_{31}$ and $R_{32}$ form a single ring selected from the group consisting of heterocycloalkyl or heteroaryl;

$R_{33}$, $R_{34}$, and $R_{35}$ are each individually selected from the group consisting of direct bonds, substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, $C_6$ alkyl, ether, $-OCH_2CH_2-$, $-OCH_2CH_2CH_2-$, $-OCH_2CH_2CH_2CH_2-$, $-NHCH_2CH_2-$, $-NHCH_2CH_2CH_2-$, and - $NHCH_2CH_2CH_2CH_2-$;

$R_{36}$ is selected from the group consisting of hydrogen, substituted or unsubstituted linear alkyl, substituted or unsubstituted $C_1$-$C_6$ linear alkyl, substituted or unsubstituted $C_1$-$C_3$ linear alkyl, substituted or unsubstituted branched alkyl, substituted or unsubstituted $C_3$-$C_6$ branched alkyl, methyl, ethyl, propyl, substituted or unsubstituted cycloalkyl, substituted or unsubstituted $C_3$-$C_6$ cycloalkyl, substituted or unsubstituted $C_4$-$C_6$ cycloalkyl, heterocycloalkyl, and heteroaryl; and

m is an integer in a range of 0 to 20.

3. The method in accordance with any preceding clause, wherein the aminoalkyl-substituted disiloxane is a compound selected from the group consisting of

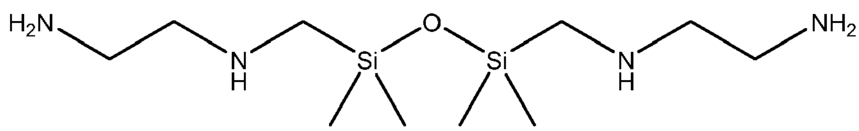

,

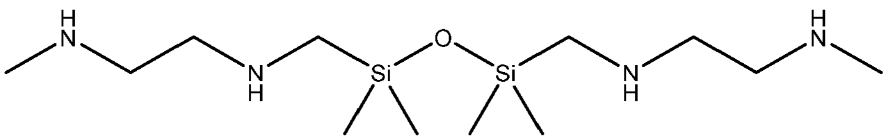

,

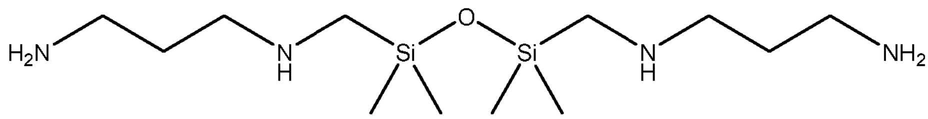

,

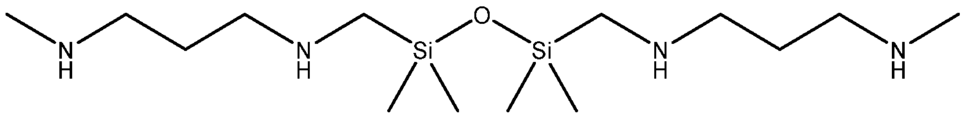

,

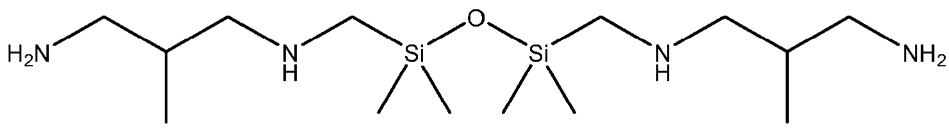

,

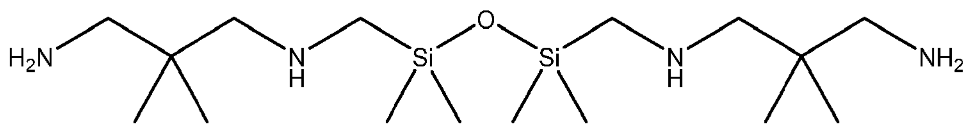

,

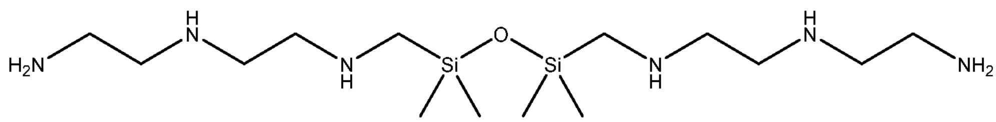

,

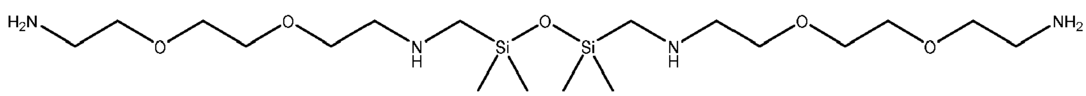

,

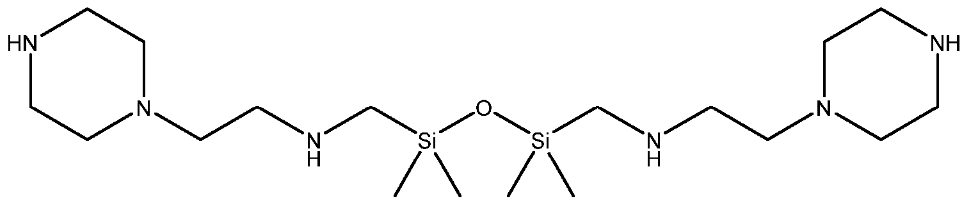

,

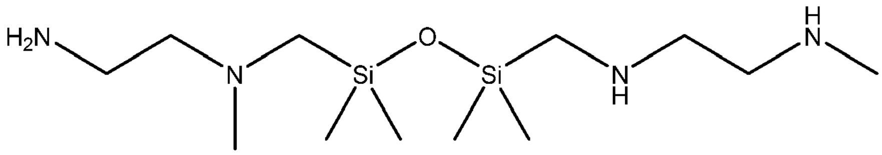

,

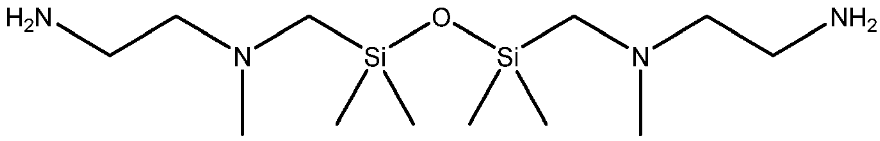

,

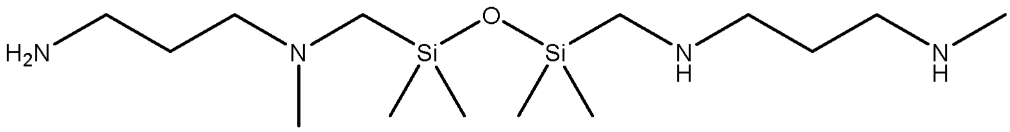

,

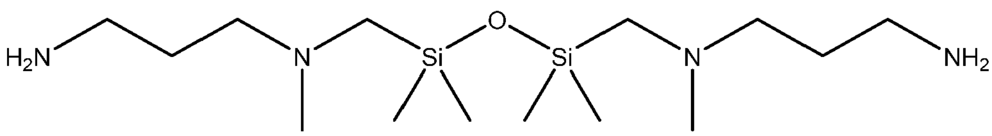

,

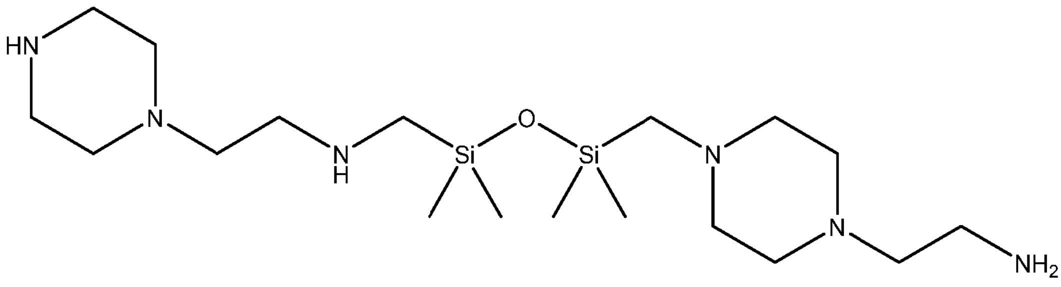

,

and

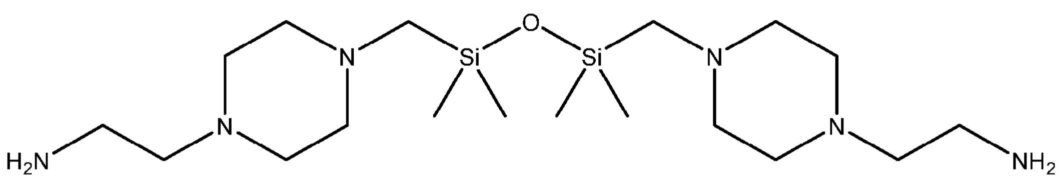

4. The method in accordance with any preceding clause, wherein the di- or polyamine containing at least one primary amine group is a compound of Formula (B-II)

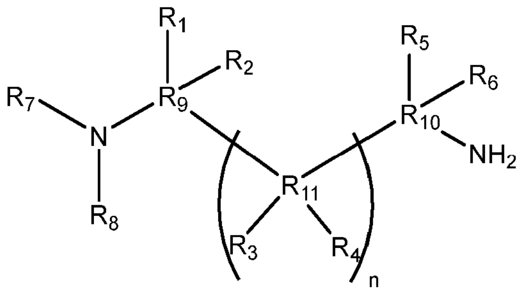

(Formula B-II);

wherein:

$R_1$, $R_2$, $R_3$, $R_4$, $R_5$, and $R_6$ are each individually selected from the group consisting of hydrogen, substituted or unsubstituted linear alkyl, substituted or unsubstituted $C_1$-$C_6$ linear alkyl, substituted or unsubstituted branched alkyl, substituted or unsubstituted $C_3$-$C_6$ branched alkyl, substituted or unsubstituted linear heteroalkyl, substituted or unsubstituted branched heteroalkyl, substituted or unsubstituted $C_3$-$C_6$ branched heteroalkyl, aryl, phenyl, heteroaryl, methyl, ethyl, propyl, isopropyl, butyl, pentyl, and hexyl;

$R_7$ and $R_8$ are each individually selected from the group consisting of hydrogen, substituted or unsubstituted linear alkyl, substituted or unsubstituted $C_1$-$C_6$ linear alkyl, substituted or unsubstituted $C_1$-$C_3$ linear alkyl, substituted or unsubstituted branched alkyl, substituted or unsubstituted $C_3$-$C_6$ branched alkyl, methyl, ethyl, propyl, substituted or unsubstituted cycloalkyl, substituted or unsubstituted $C_3$-$C_6$ cycloalkyl, and substituted or unsubstituted $C_4$-$C_6$ cycloalkyl, or, when taken together, $R_7$ and $R_8$ form a single ring selected from the group consisting of heterocycloalkyl or heteroaryl;

$R_9$, $R_{10}$, and $R_{11}$ are each individually selected from the group consisting of direct bonds, substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, $C_6$ alkyl, ether, $-OCH_2CH_2-$, $-OCH_2CH_2CH_2-$, $-OCH_2CH_2CH_2CH_2-$, $-NHCH_2CH_2-$, $-NHCH_2CH_2CH_2-$, and $-NHCH_2CH_2CH_2CH_2-$; and

n is an integer in a range of 0 to 20.

5. The method in accordance with any preceding clause, wherein the silane is a compound of Formula (B-III)

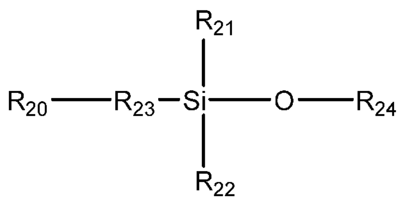

(Formula B-III)

wherein:

$R_{20}$ is selected from the group consisting of halide, fluoride, chloride, bromide, and iodide;

$R_{21}$ and $R_{22}$ are each individually selected from the group consisting of hydrogen, substituted or unsubstituted linear alkyl, substituted or unsubstituted $C_1$-$C_6$ linear alkyl, substituted or unsubstituted branched alkyl, substituted or unsubstituted $C_3$-$C_6$ branched alkyl, substituted or unsubstituted linear heteroalkyl, substituted or unsubstituted branched heteroalkyl, aryl, phenyl, heteroaryl, methyl, ethyl, propyl, isopropyl, butyl, pentyl, and hexyl;

$R_{23}$ and $R_{24}$ are each individually selected from the group consisting of substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, $C_6$ alkyl, aryl, and phenyl.

6. The method in accordance with any preceding clause, wherein the silane is

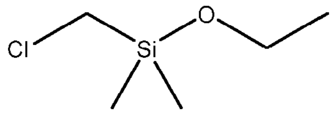

or

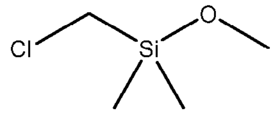

7. The method in accordance with any preceding clause, wherein reacting the mixture in a first reaction comprises stirring the mixture.

8. The method in accordance with any preceding clause, wherein reacting the mixture in a first reaction comprises reacting the mixture for a first time period.

9. The method in accordance with any preceding clause, wherein the first time period is a time in a range of from about 1 second to about 12 hours.

10. The method in accordance with any preceding clause, wherein the hydrolysis agent is an aqueous solution.

11. The method in accordance with any preceding clause, wherein the hydrolysis agent is water.

12. The method in accordance with any preceding clause, wherein the hydrolysis agent is added to the mixture over a second time period.

13. The method in accordance with any preceding clause, wherein the second time period is a time in a range of from about 1 second to about 12 hours.

14. The method in accordance with any preceding clause, wherein the hydrolysis agent is added dropwise to the mixture.

15. The method in accordance with any preceding clause, wherein the method further comprises purifying the aminoalkyl-substituted disiloxane.

16. The method in accordance with any preceding clause, wherein at least one method step comprises adjusting a temperature of the mixture.

17. The method in accordance with any preceding clause, wherein reacting the mixture in a second reaction comprises adjusting a temperature of the mixture.

18. The method in accordance with any preceding clause, wherein reacting the mixture in a second reaction comprises cooling the mixture.

19. The method in accordance with any preceding clause, wherein the method is a one-pot synthesis.

20. An aminoalkyl-substituted disiloxane prepared by the method in accordance with any preceding clause.

21. An aminoalkyl-substituted disiloxane of Formula (B-I)

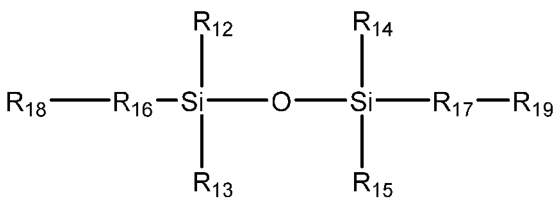

(Formula B-I)

wherein:

$R_{12}$, $R_{13}$, $R_{14}$, $R_{15}$, are each individually selected from the group consisting of hydrogen, substituted or unsubstituted linear alkyl, substituted or unsubstituted $C_1$-$C_6$ linear alkyl, substituted or unsubstituted branched alkyl, substituted or unsubstituted $C_3$-$C_6$ branched alkyl, substituted or unsubstituted linear heteroalkyl, substituted or unsubstituted branched heteroalkyl, aryl, phenyl, heteroaryl, methyl, ethyl, propyl, isopropyl, butyl, pentyl, and hexyl;

$R_{16}$ and $R_{17}$ are each individually selected from the group consisting of direct bonds, substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, and $C_6$ alkyl;

$R_{18}$ and $R_{19}$ are each individually selected from the group consisting of substituents of Formula (B-IV)

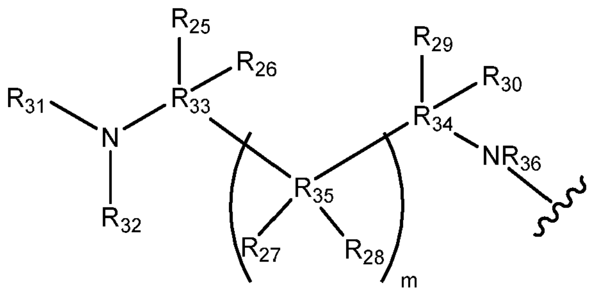

(Formula B-IV);

wherein:

the wavy bond indicates a bonding location to Formula (B-I);

$R_{25}$, $R_{26}$, $R_{27}$, $R_{28}$, $R_{29}$, and $R_{30}$ are each individually selected from the group consisting of hydrogen, substituted or unsubstituted linear alkyl, substituted or unsubstituted $C_1$-$C_6$ linear alkyl, substituted or unsubstituted branched alkyl, substituted or unsubstituted $C_3$-$C_6$ branched alkyl, substituted or unsubstituted linear heteroalkyl, substituted or unsubstituted $C_1$-$C_6$ linear heteroalkyl, substituted or unsubstituted branched heteroalkyl, substituted or unsubstituted $C_3$-$C_6$ branched heteroalkyl, aryl, heteroaryl, methyl, ethyl, propyl, isopropyl, butyl, pentyl, and hexyl;

$R_{31}$ and $R_{32}$ are each individually selected from the group consisting of hydrogen, substituted or unsubstituted linear alkyl, substituted or unsubstituted $C_1$-$C_6$ linear alkyl, substituted or unsubstituted $C_1$-$C_3$ linear alkyl, substituted or unsubstituted branched alkyl, substituted or unsubstituted $C_3$-$C_6$ branched alkyl, methyl, ethyl, propyl, substituted or unsubstituted cycloalkyl, substituted or unsubstituted $C_3$-$C_6$ cycloalkyl, and substituted or unsubstituted $C_4$-$C_6$ cycloalkyl, or, when taken together, $R_{31}$ and $R_{32}$ form a single ring selected from the group consisting of heterocycloalkyl or heteroaryl;

$R_{33}$, $R_{34}$, and $R_{35}$ are each individually selected from the group consisting of direct bonds, substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, $C_6$ alkyl, ether, $-OCH_2CH_2-$, $-OCH_2CH_2CH_2-$, $-OCH_2CH_2CH_2CH_2-$, $-NHCH_2CH_2-$, $-NHCH_2CH_2CH_2-$, and - $NHCH_2CH_2CH_2CH_2-$;

$R_{36}$ is selected from the group consisting of hydrogen, substituted or unsubstituted linear alkyl, substituted or unsubstituted $C_1$-$C_6$ linear alkyl, substituted or unsubstituted $C_1$-$C_3$ linear alkyl, substituted or unsubstituted branched alkyl, substituted or unsubstituted $C_3$-$C_6$ branched alkyl, methyl, ethyl, propyl, substituted or unsubstituted cycloalkyl, substituted or unsubstituted $C_3$-$C_6$ cycloalkyl, substituted or unsubstituted $C_4$-$C_6$ cycloalkyl, heterocycloalkyl, and heteroaryl; and

m is an integer in a range of 0 to 20;

provided that the aminoalkyl-substituted disiloxane is not

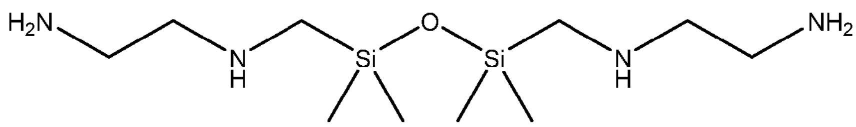

22. The aminoalkyl-substituted disiloxane in accordance with the preceding clause, wherein the aminoalkyl-substituted disiloxane is a compound selected from the group consisting of

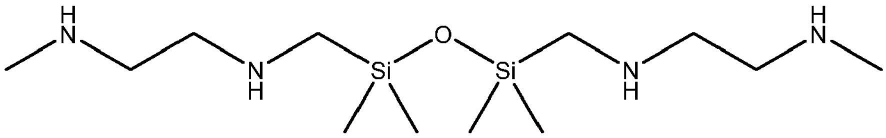

,

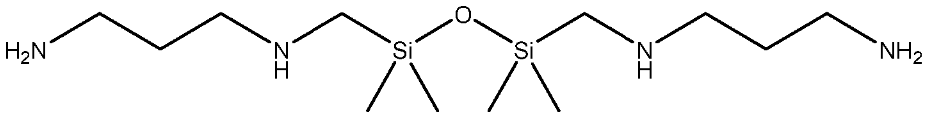

,

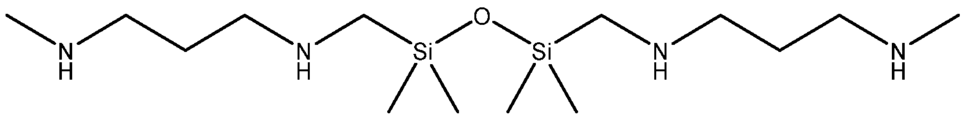

,

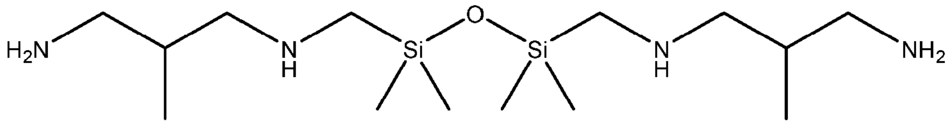

,

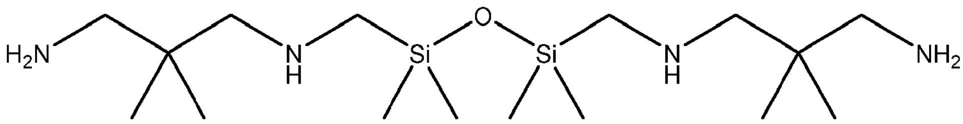

,

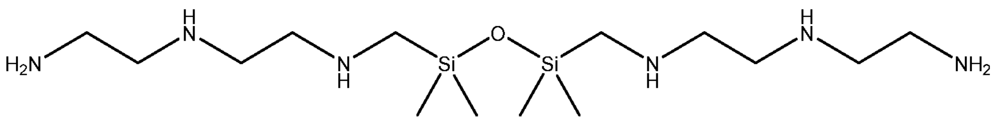

,

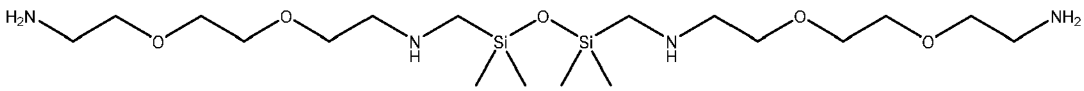

,

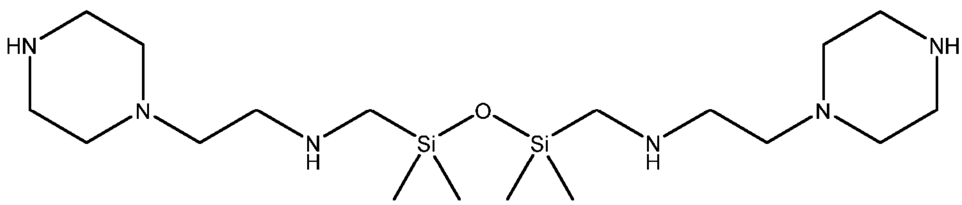

,

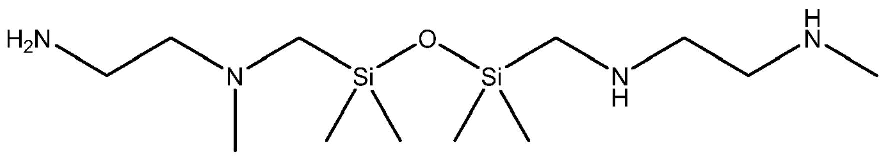

,

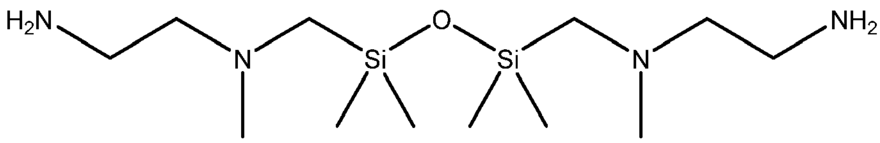

,

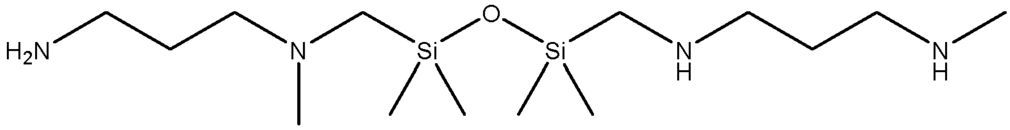

,

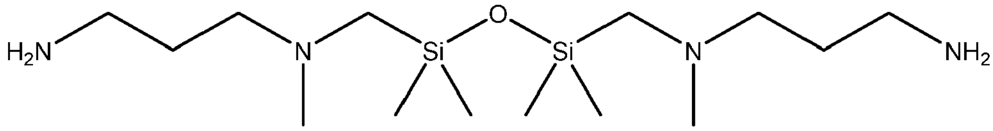

,

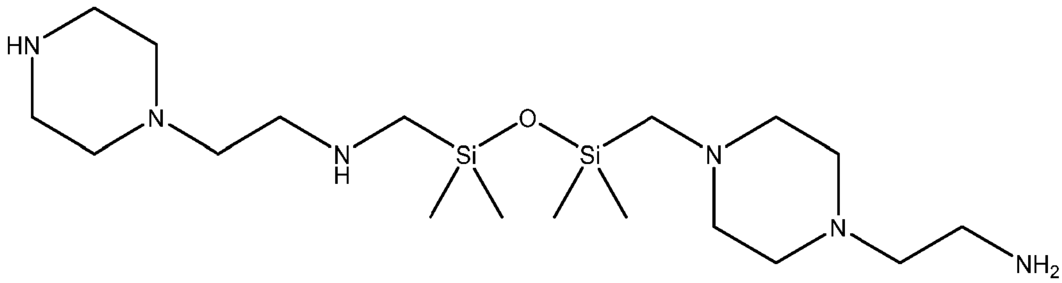

,

and

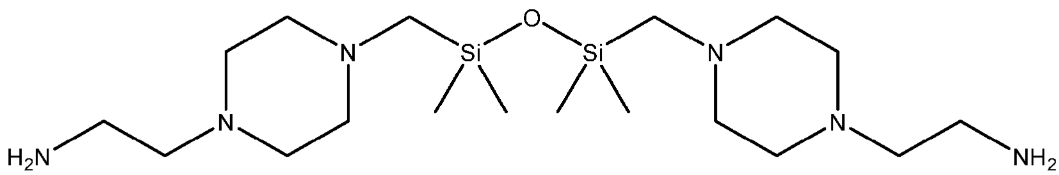

Machine Learning Model Incorporating Physical Features of Sorbents For Post Combustion Carbon Capture

In one aspect, a power generation system is provided. The power generation system includes a capture system for use in capturing carbon dioxide, a controller configured to operate the capture system, and a modeling system including a processor. The processor is configured to identify a model training data set, each instance of the model training data set identifying a sorbent used by the capture system, a carbon capture performance value for the sorbent, and a plurality of primary feature values associated with a plurality of primary features. The processor is also configured to generate one or more secondary features based on one or more of the plurality of primary features, each of the one or more secondary features being a combination of at least two of the plurality of primary features, and determine a plurality of correlation magnitude values including a correlation magnitude value between each of the plurality of primary features and each of the one or more secondary features. The processor is also configured to identify a first subset of the model training data set based on the plurality of correlation magnitude values, determine a statistical significance for each instance of the first subset of the model training data set, and identify a second subset of the model training data set based on the statistical significance, wherein the statistical significance for each instance of the second subset of the model training data set is below a pre-determined threshold. The processor is further configured to generate a transfer function based on the second subset of the model training data set, and determine, using the transfer function, one or more prospective sorbents to be used by the capture system based on the carbon capture performance value. The controller operates the capture system using the one or more prospective sorbents determined by the modeling system.

In another aspect, a method of selecting one or more prospective sorbents for use in operating a capture system to capture carbon dioxide. The method comprises identifying a model training data set, each instance of the model training data set identifying a sorbent used by the capture system, a carbon capture performance value for the sorbent, and a plurality of primary feature values associated with a plurality of primary features. The method also comprises generating

one or more secondary features based on one or more of the plurality of primary features, each of the one or more secondary features being a combination of at least two of the plurality of primary features, determining a plurality of correlation magnitude values including a correlation magnitude value between each of the plurality of primary features and each of the one or more secondary features, and identifying a first subset of the model training data set based on the plurality of correlation magnitude values. The method also includes determining a statistical significance for each instance of the first subset of the model training data set, identifying a second subset of the model training data set based on the statistical significance, wherein the statistical significance for each instance of the second subset of the model training data set is below a pre-determined threshold, and generating a transfer function based on the second subset of the model training data set. The method further includes determining, using the transfer function, one or more prospective sorbents to be used by the capture system based on the carbon capture performance value, wherein a controller operates the capture system using the one or more prospective sorbents determined using the transfer function.

In one embodiment, a computer program is provided, and the program is embodied on a computer readable medium. In the exemplary embodiment, the system is executed on a single computer system, without requiring a connection to a sever computer. In a further embodiment, the system is being run in a Windows® environment (Windows is a registered trademark of Microsoft Corporation, Redmond, Washington). In yet another embodiment, the system is run on a mainframe environment and a UNIX® server environment (UNIX is a registered trade-mark of X/Open Company Limited located in Reading, Berkshire, United Kingdom). In a further embodiment, the system is run on an iOS® environment (iOS is a registered trademark of Cisco Systems, Inc. located in San Jose, CA). In yet a further embodiment, the system is run on a Mac OS® environment (Mac OS is a registered trademark of Apple Inc. located in Cupertino, CA). In still yet a further embodiment, the system is run on Android® OS (Android is a registered trademark of Google, Inc. of Mountain View, CA). In another embodiment, the system is run on Linux® OS (Linux is a registered trademark of Linus Torvalds of Boston, MA). The application is flexible and designed to run in various different environments without compromising any major functionality. In some embodiments, the system includes multiple components distributed among a plurality of computing devices. One or more components may be in the form of computer-executable instructions embodied in a computer-readable medium.

Embodiments of the invention relate generally to systems and methods for analyzing physical features of sorbents for post combustion carbon capture (PCC), and more particularly, to systems and methods for modeling aspects of metal-organic frameworks (MOFs) based on their constituents and their performance in capture capacity for carbon dioxide ($CO_2$). In example embodiments, a modeling system is configured to train a model based on performance characteristics of known metal-organic frameworks (MOFs) and their associated constituents. This model may then be used to evaluate the anticipated performance of other MOFs based on their particular constituents. Such modeling can help scientists and engineers evaluate different MOFs without having to physically test each candidate, thus leading to the quicker development of MOFs having improved performance in capture capacity for $CO_2$.

Figure 14 illustrates an example PCC modeling system 1440 that can be used to anticipate how particular MOFs may perform in capturing carbon dioxide ($CO_2$) from exhaust gases 1416 of a coal-fired power plant 1410. In the example embodiment, the power plant 1410 generates electricity 1412 that is distributed via a power transmission and distribution grid 1414. The power plant 1410 also includes a post-combustion carbon capture (PCC) system 1420 that is configured to remove $CO_2$ from the exhaust gases 1416 before the treated exhaust is released into the environment. The example PCC system 1420 includes a metal-organic framework (MOF) 1422 that performs the capturing functionality of the PCC system 1420. The MOF 1422 is comprised of three primary constituents, namely a metal 1424, an organic linker 1426, and one or more functional groups 1428. During operation, the PCC system 1420 yields some performance results, represented here generally as "capture performance" 1430 (e.g., PCC capacity) for purposes of discussion. The PCC modeling system 1440 is configured to estimate how particular MOFs (e.g., particular combinations of constituents and various associated physical features) would perform if implemented in the PCC system 1420 (e.g., performance predictions in a "real world" setting).

In the example embodiment, the PCC modeling system 1440 includes a data collection and preparation module 1442 that is configured to identify and store data that will be used to train a machine learning model (e.g., a supervised forecasting model). The preparation module 1442 stores historical records of various sorbents (e.g., MOFs 1422) and their associated features and known performance. Each historical record can include, for example, sorbent data such as the constituents of the particular sorbent (e.g., information on the metal 1424 used in the secondary building unit or SBU, information on the organic linker 1426, and/or information on any functional groups 1428 or amines associated with the particular MOF 1422), various physical features of the sorbent (e.g., pore size, pore volume, pore size distribution, surface area, and the like), and known performance data for the sorbent (e.g., isosteric heat of adsorption ($Q_{ST}$), Henry's Law constant, selectivity ratio, sorbent capacity in millimoles of $CO_2$ per gram of sorbent, sorbent productivity in millimoles of $CO_2$ per gram of sorbent per unit time, or the like, at a particular pressure and/or temperature). Each of these historical records may be stored as model data 1460 (e.g., in a database) and may include other data described herein. Some of these records may be collected from publication literature, where other records may include data collected from laboratory measured data or operational performance data of the PCC system 1420 (e.g., data collected during operation).

The PCC modeling system 1440 also includes an exploratory data analysis module 1444 that is configured to help an analyst 1402 perform univariate data analysis on aspects of the historical data. In an example embodiment, the exploratory data analysis module 1444 is configured to generate graphs that display a single constituent of known MOFs against a single feature, thereby allowing the analyst 1402 to see trends for the feature across various MOFs. For example, the analysis module 1444 may generate a plot of chemisorbents and physisorbents, two types of MOFs, and how they perform with regard to Henry's constant, selectivity ratio, heat of adsorption, PCC capacity, and PCC productivity (e.g., as a composite across those two types of MOFs). In another example, the analysis module 1444 may generate a plot of various metal types in physisorbent or chemisorbent MOFs and their respective adsorption heat (e.g., ranges of values, average value, or the like, for each metal type). These plots may be compiled and generated from the historical records identified in the model data 1460 and displayed to the analyst 1402 via a display of the computing device 1404. From this data, the analyst 1402 may further identify one or more second order features, which may be combinations of two or more of first order features, as discussed further below. Such second order features may be used in later model training and analysis.

The PCC modeling system 1440, in the example embodiment, also includes a correlation and bivariate analysis module 1446 that is configured to analyze the model data 1460 with respect to positive or negative correlations between the pairs of various features of the historical records. For example, the analysis module 1446 may identify a set of first order features, and perhaps one or more second order features, and perform a correlation analysis between the associated features. For each particular pairing of two features, the analysis module 1446 computes a correlation coefficient (e.g., across all records in the model data 1460) that identifies how those two features correlate with each other (e.g., where a positive coefficient indicates a positive correlation between the two features, and where a negative coefficient indicates a negative correlation between those two features). These correlation coefficients may be, for example, Pearson's correlation coefficients or the like. These correlation coefficients may be displayed to the analyst 1402 in a matrix format, thereby allowing the analyst 1402 to view the strengths of correlations between the various feature pairs. In some examples, the matrix may be a heat map that, for example, displays each correlation coefficient in a color of a color spectrum having strong positive correlations in a color at one end of the spectrum (e.g., dark blue) and having strong negative correlations in another color at the opposite end of the spectrum (e.g., dark red), being colored along the spectrum based on the magnitude of the correlation coefficient. In some examples, the analysis module 1446 may generate pair plots for each of the feature pairs, thereby allowing the analyst 1402 to evaluate what type of relationship the two features have (e.g., linear, non-linear, or such).

The PCC modeling system 1440 also includes a regression analysis module 1448 that is configured to perform regression analysis using the model data 1460. In the example embodiment, the regression analysis module 1448 identifies one or more features of interest for regression analysis. In some embodiments, the analyst 1402 may inspect the correlation matrix and/or pair plots discussed above and may select a subset of features of interest. In some embodiments, the regression analysis module 1448 may automatically identify one or more features of interest for the regression analysis (e.g., based on the correlation coefficients of the matrix). For example, the regression analysis module 1448 may select all features that have a positive correlation coefficient with the PCC capacity above a particular threshold (e.g., strongly positively correlated). In some embodiments, the regression analysis module 1448 may also select all features that have a negative correlation coefficient with the PCC capacity that is below a particular threshold (e.g., strongly negatively correlated). In some embodiments, the features that are used to start the regression analysis are manually selected, such as by a user.

Once a subset of features are identified, the regression analysis module 1448 performs a regression analysis process starting with the subset of features. In some embodiments, a portion of the model data 1460 may be automatically or manually identified as training data (e.g., to be used in this regression analysis process) and the remaining portion of the model data 1460 may be reserved for evaluating the resulting model (e.g., 60% training data, 40% testing data). In the example embodiment, the regression analysis process is performed in one or more stages, where each stage includes performing multiple linear regression analyses on a current set of features. Based on the results at each stage, one or more features may be removed for a subsequent stage of analysis, leaving a further subset of down-selected features for the next stage of analysis until a particular stop criterion is achieved. At this final stage, the regression analysis module 148 generates a transfer function using the final remaining down-selected feature(s) (e.g., PCC capacity as a function the particular down-selected features). This transfer function thus can be applied to a new MOF, and its associated feature values, to anticipate how that novel MOF may perform with respect to PCC capacity, productivity, or the like.

Additional details and related functions performed by the PCC modeling system 1440 are described in greater detail as related to Figure 16 and Figure 17.

Figure 15 is a graph 1500 that illustrates a drop in $CO_2$ adsorptive productivity for an example sorbent (e.g., an example MOF) when going from a synthesized powder measured under equilibrium conditions to a final film coating on a substrate measured under dynamic conditions. In the example embodiment, the Y-axis 1502 of the graph 1500 is the sorbent productivity of the MOF in kilograms of $CO_2$ ($kgCO_2$) per kilogram of sorbent (kgs) per hour (hr). The X-axis illustrates several stages 1504 of PCC productivity between an equilibrium powder productivity of initial stage 1504A through a kinetic time effect stage 1504B, a film mass transfer effect stage 1504C, a thermodynamics effect (working

capacity between adsorption and desorption) stage 1504D, to a final coating working productivity stage 1504E. In this example, at the initial stage 1504A, the sorbent exhibits a productivity of approximately 0.58 kg$CO_2$/kgs/hr in synthesized powder measured under equilibrium conditions. At each of the stages 1504A-1504E, the sorbent experiences various reductions in productivity based on the various effects described above. For example, at the kinetic time effect stage 1504B, the sorbent may experience a production reduction 1512 of approximately 0.2 down to a total of approximately 0.35 kg$CO_2$/kgs/hr. Additionally, for example, at the film mass transfer effect stage 1504C, the sorbent may experience a second production reduction 1514 of approximately 0.05 down to a total of just below approximately 0.3 kg$CO_2$/kgs/hr. Further, for example, at the thermodynamics effect working capacity stage 1504D, the sorbent may experience a third production reduction 1516 of approximately 0.1 down to a final coating working productivity 1520 of approximately 0.2 kg$CO_2$/kgs/hr. As such, in this example, the sorbent may experience a total productivity reduction 1522 of approximately 0.38 kg$CO_2$/kgs/hr, or an approximately 65% reduction (e.g., approximately 35% utilization). This knockdown effect is specific for each sorbent, film coating, and cycle time operation.

The exhibited drop in PCC productivity of the example sorbent of Figure 15 generally depends on the coating type and the measurement type properties, and can be due to a combination of multiple factors such as kinetics of cycle time for adsorption not allowing for equilibrium to be achieved, coating mass transfer resistance, and isosteric heat of adsorption heating the sorbent and reducing performance capacity. Without the PCC modeling system 1440 of Figure 14, all of these factors are generally experimentally determined in order to understand the final productivity of a given sorbent.

For the initial sorption at low concentration, the Henry's Law constant determines the equilibrium capacity of the sorbent. The sorbent capacity of the sorbent i, $N_i$, is a function of the Henry's Law constant, $H_i$, multiplied by the gas phase concentration of the sorbent, $C_i$, as: $N_i = H_iC_i$. The larger the value of the Henry's constant, the steeper the initial slope of the isotherm. This means that a sorbent with a higher $H_i$ has a larger capacity for the sorbate in this low concentration linear region of the isotherm. Maximizing the $H_i$ also increases the productivity of the sorbent at low gas phase sorbate concentrations. As such, the PCC modeling system 1440 will look to find sorbents with high Henry's Law constants for $CO_2$ adsorption by analyzing how the various MOF constituents independently vary with the Henry's constant. Since the Henry's constant is a thermodynamic term (e.g., not a kinetic term), the kinetics of the sorbent may also be evaluated in order to determine sorbent productivity. These measurements are not typically reported in the literature of known MOFs, and as such, this PCC modeling system 1440 may look first at the Henry's constant to identify MOF constituents with the potential for the highest capacity of $CO_2$ at the lowest gas phase concentration of $CO_2$. Where kinetic uptake data are available, they are used as data inputs to the PCC modeling system.

Figures 16A - 16C are a flow chart illustrating an example method 1600 for analyzing anticipated performance for prospective sorbents in post-combustion carbon capture systems. In some embodiments, the method 1600 may be performed by the PCC modeling system 1440 and the identified sorbents may be installed within the PCC system 1420 of Figure 14. In the example embodiment, the method 1600 includes collecting or otherwise identifying model training data for known sorbents (e.g., MOFs for which there is known performance data) at operation 1610.

The identified model training data, in example embodiments, includes instances of individual sorbents and their particular composures and known performance data stored in a database such as the model data database (e.g., various variables for particular known sorbents). Each sorbent may include information on constituents of that particular sorbent instance (e.g., a particular metal, organic linker, and/or functional groups or functionalities), various physical features of the sorbent instance (e.g., pore size, pore volume, isometric heat of adsorption, Henry's Law constant, selectivity ratio, Langmuir/BET area, uptake rate, or the like), known performance data for the sorbent instance (e.g., PCC capacity and productivity), and perhaps other information on the sorbent instance, such as a unique identifier or other sorbent data (e.g., physisorbent or chemisorbent classification). Metals can include, for example, nickel, chromium, magnesium, copper, manganese, zirconium, zinc, cobalt, indium, iron, aluminum, dysprosium, titanium, potassium, or the like, or some combination or alloy). Organic linkers can include, for example, 1,4-dioxido-2,5-Benzenedicarboxylate (DOBDC), 1,4-benzene-dicarboxylate (BDC), 4,4'-oxido-1,1'-biphenyl-3,3'-dicarboxylate (DOBPDC), 1,3,5-tri(1H-1,2,3-trizol-4-yl)benzene) (BTTri), 1,3,5-benzene tricarboxylate (BTC), 1H,5H-benzo(1,2- d:4,5-d')bistriazole (BBTA), 1,1'-Biphenyl-4,4'-dicarboxylate (BPDC), 1,1'-biphenyl-3,3' ,5,5'-tetracarboxylate (BPTC), 1,5-dioxido-2,6-naphthalenedicarboxylate (DONDC), 1,2,4,5-benzene-tetra-carboxylate (BTEC), 1,4-bix(1H-pyrazol-4-ylethynyl)benzene (BPEP), 2,5-di(1H-1,2,4-triazol-1-yl)terephthalate (BTTA), 2,4,6-tris(3,5-dicarboxylphenylamino)- 1,3,5-triazine (TDPAT), 2,3,5,6-tetrachloo terephthalate (TCDC), 4,4'-dibenzoic acid-2,2'sulfone (SBPDC), or the like. Functionalities can include, for example, Open Metal Sites [OMS], Microporosity [MP], Lewis Basic Site [LBS], Polar Functional Site [PFS], Post Synthetic Modifications [PSM], or the like. While example metals, linkers, functional groups, and physical features are provided here, it should be understood that others are possible and within the scope of this disclosure. In some situations, such model training data of sorbents may be collected and recorded in the model data database manually (e.g., by the analyst 1402). In some embodiments, the PCC modeling system 1440 may be configured to collect such data (e.g., via other online databases, from performance or testing data captured via the PCC system 1420, or the like).

This sorbent data is used by the PCC modeling system 1440, in the example embodiment, as model training data for training a machine learning model to analyze anticipated performance of prospective sorbents (e.g., novel combinations of metals, linkers, and functionalities not already studied and tested in real-world conditions). This model training data can be used as labeled training data in model construction (e.g., instances of model training data of particular "inputs" having a known result or "label"). In some embodiments, one subset of the model training data may be identified for purposes of training the model and another subset may be identified for purposes of testing the model (e.g., 60% of sorbents being identified for training and 40% being identified for testing, 70% being identified for training and 30% being identified for testing, or the like). In some embodiments, the analyst 1402 may manually identify the sorbents to use for training and testing (e.g., by particular rows of the database). In some embodiments, the PCC modeling system 1440 may automatically identify the training subset and the testing subset (e.g., using preconfigured percentages, randomly selected, or the like).

In some embodiments, the method 1600 also includes performing aspects of univariate data analysis on the model training data at operation 1620. This data analysis includes evaluating particular individual sorbent variables (e.g., a particular constituent or feature) relative to other variables (e.g., another constituent, feature, or performance value) across the body of training data. This analysis can be used to identify high level trends relative to the particular constituents or features.

In the example embodiment, the PCC modeling system 1440 may provide the analyst 1402 with a graphical user interface that displays plots of particular features against other target features of interest, thereby allowing the analyst 1402 to investigate trends and relations between those particular features. The interface may allow the analyst 1402 to select a primary variable (e.g., as a domain) and a secondary variable (e.g., as a range) of interest and the PCC modeling system 1440 may then compute, across all of the training data having those variables, average/mean/median values and/or ranges of values for a bar chart, forest plot, or the like (e.g., for a domain variable with discrete values with a continuous secondary variable), or may generate a scatterplot or the like (e.g., for continuous primary and secondary variables). For example, the PCC modeling system 1440 may generate a plot of organic linkers versus isosteric heat of adsorption or Henry's Law constant or average pore size, and may separately identify physisorbents or chemisorbents (e.g., via distinct colors or shading). In another example, the PCC modeling system 1440 may generate a plot of metals identified in the training data against isosteric heat of adsorption or a selectivity ratio.

At operation 1630, in the example embodiment, the PCC modeling system 1440 generates secondary features to use during model training. Secondary features are a combination of two or more primary features. The term "primary feature" refers to one of the known variables (e.g., pre-existing main effects parameters for the historical sorbent), such as isosteric heat of adsorption, Henry's Law constant, pore size, pore volume, surface area, or the like. The term "secondary feature" refers to a combination of two or more of those primary features that involves an interaction between the two primary features (e.g., an interaction parameter). In some embodiments, the analyst 1402 may manually create, within the PCC modeling system 1440, a secondary feature by designating two or more primary features to be combined as a new secondary feature of the model. In one example, a secondary feature "A" may be created as (BET area * Pore Volume ($V_{pore}$)), a secondary feature "B" as ($V_{pore}$ * isosteric heat of adsorption ($Q_{st}$)), and a secondary feature "C" as (BET area * $Q_{st}$). These secondary features may be used in the model training and analysis described below.

In some embodiments, the PCC modeling system 1440 may select secondary features to use during model training by used an automated selection process. For example, the PCC modeling system 1440 may analyze the statistical significance of each of the primary features, such as via a probability value. The probability value (p-value) is a measure of the significance of a variable to the model. A p-value less than 0.05 means that the factor in the model is statistically significant with 95% confidence, which indicates strong evidence against the results being random, with less than a 5% probability that the results are random.

In some embodiments, the PCC modeling system 1440 may select a set number of secondary features. For example, for *n* as the number of primary features analyzed by the PCC modeling system 1440, the set number of secondary features may be ${}^{n}C$. In this example, a total number of primary and secondary features equal to $(n + {}^{n}C)$ may be automatically selected by the PCC modeling system 1440.

At operation 1640, in the example embodiment, the PCC modeling system 1440 performs correlation and bivariate analysis of the model data. Referring now to Figure 16B, this analysis includes identifying a feature set for model training. At operation 1642, a prospective feature set is identified for model training. This feature set includes a list of primary features 1602 (or first order features) and secondary features 1604 (or second order features) to be used in the model training. As described above, the primary features 1602 include a list of physical features or known variables that are provided for sorbents in the model data 1460 (e.g., heat of adsorption, pore size, pore volume, Henry's constant, and the like), and the secondary features 1604 include those combined features defined in operation 1630. The primary and secondary features 1602, 1604 are referred to collectively as the "feature set" 1606 for the model training. In an example embodiment, the primary features 1602 include PCC capacity, BET area, Langmuir surface area, pore volume ($V_{pore}$), isosteric heat of adsorption ($Q_{st}$), and average pore size (Å), and the secondary features 1604 include the three example secondary features mentioned above, namely "A" = (BET area * Pore Volume ($V_{pore}$)), "B" = ($V_{pore}$ * isosteric heat of adsorption ($Q_{st}$)), and "C" = (BET area * $Q_{st}$). As such, the training data can be considered as defining an n-dimensional space, where n is the number of features 1606 used in the model training.

At operation 1644, the PCC modeling system 1440 may generate pair plots or scatter plots for each unique combination of the primary and secondary features 1602, 1604 in the feature set 1606, and using the selected training data sorbents from the model data 1460. For example, the PCC modeling system 1440 may generate a first pair plot showing BET area and PCC capacity over the training data, a second pair plot showing Langmuir surface area and PCC capacity over the training data, a third pair plot showing $V_{pore}$ and PCC capacity over the training data, and so forth for each unique combination of features 1606. The PCC modeling system 1440 may display these plots in a graphical user interface for inspection and consideration by the analyst 1402. For some combinations, these plots may help the analyst 1402 identify whether there is any correlation between those two variables within the training data, whether that correlation is linear or non-linear, and whether it is a positive or negative correlation. Additionally, these plots may help the analyst 1402 identify the variables within the training data that are statistically significant.

At operation 1646, the PCC modeling system 1440 generates a correlation matrix 1608 of correlation coefficients for the various pairs of the primary and secondary features 1602, 1604 in the feature set 1606. More specifically, in the example embodiment, the correlation matrix 1608 is an *n* by *n* matrix, where each unique feature 1602, 1604 in the feature set 1606 is assigned both a row and a column (e.g., a square, reflective matrix). Each cell of the matrix 308 represents some combination of two of the features 1602, 1604 in the feature set 1606 (e.g., based on the particular row and column of that cell), and the value contained in that cell is a correlation coefficient that represents a degree or magnitude of correlation between those two particular features. For each combination of two features 1602, 1604, the PCC modeling system 1440 computes a correlation coefficient for those two features (e.g., across the training data) at operation 1648. Correlation coefficients, in the example embodiment, are normalized from a range between +1.0 and -1.0, with more positive correlations between the two features being closer to +1.0, more negative correlations being closer to -1.0, and neutral (e.g., weak or non-existent) correlations being closer to 0.0 (e.g., a Pearson's correlation coefficient). At operation 1650, the PCC modeling system 1440 populates the particular cell(s) with the correlation coefficient associated with those two features 1602, 1604. Upon completion, this correlation matrix and associated values may be displayed to the analyst 1402 for inspection and consideration, and in some embodiments may be presented as a heat map (e.g., coloring each individual cell based on its value), thus allowing the analyst 1402 to more easily see positive and negative correlations between particular features. Additional details regarding an example correlation matrix 1608 is provided as related to Figure 17.

Returning again to Figure 16A, the example method 1600 continues at operation 1660, where the PCC modeling system 1440 performs regression analysis to generate a transfer function that can help approximate PCC performance of other (e.g., untested) sorbents. More specifically, Figure 16C illustrates an example regression analysis process of operation 1660.

In the example embodiment, a set of model training data is identified from the model data 1460 for use during the regression operation 1660. In some embodiments, and as described above, the particular instances of training data may be manually identified (e.g., by the analyst 1402) or may be selected by the PCC modeling system 1440 (e.g., automatically). The training data thus represents which known sorbents are within the scope of this particular regression analysis, where the remaining model data may be used to verify the results of this training.

At operation 1664, a set of features are selected (e.g., from the primary and secondary features 1602, 1604 of the full feature set 1606) for an initial feature set 1680. In some embodiments, all of the features of the full feature set 1606 may be initially used as the initial feature set 1680. In other embodiments, the analyst 1402 may manually select the features in the initial feature set 1680 (e.g., based on reviewing the pair plots and/or correlation matrix). In still other embodiments, the PCC modeling system 1440 may automatically select the initial feature set 1680. For example, the PCC modeling system 1440 may selectively add all features 1602, 1604 to the initial feature set 1680 that have a correlation coefficient with the PCC capacity above a predetermined threshold (e.g., greater than 0.2), or below a predetermined threshold (e.g., less than -0.2). A number of these features, *f*, are then used as a current feature set 1682 to begin the regression.

At operation 1666, the PCC modeling system 1440 performs multiple linear regressions on the model training data using the current feature set (e.g., using an ordinary least-squared model fit of the training data, where the PCC productivity is the dependent variable of interest, as determined based on PCC capacity and the $CO_2$ uptake rate (e.g., adsorption kinetics)). Here, a linear regression method is applied to Eq. 1 to study the dependence between the parameter of interest (e.g., the PCC capacity, Å) and the various physical attributes selected for the initial feature set 1680 (e.g., BET area, pore volume, isosteric heat, and the second order features "A", "B", and "C" described above):

$$\text{Å} = b_0 + b_1 X_1 + b_2 X_2 + \cdots + b_p X_p \qquad \text{Eq. 1}$$

In this regression, each of the *f* current features 1682 are represented in Eq. 1 by $X_i$, along with an associated linear coefficient $b_i$. At first, all initial features 1680 are included in the transfer function of Eq. 1 as the regression iterates, then the current feature 1682 with the highest p-value is eliminated until all current features 1682 have a p-value of less than a predetermined value (e.g., less than 0.05 meaning they have a 95% probability of being statistically significant). The

relevant variables in the model are those that have a probability value ("p-value") less than the predetermined threshold.

More specifically, in the example embodiment, at each step in the iteration, p-values are generated for each feature remaining in the set of current features 1682. At test 1668, the PCC modeling system 1440 tests whether the regression is complete by evaluating the p-values of the current features 1682. If all of the p-values of the remaining current features 1682 are below the predetermined threshold, the iteration terminates. Otherwise, the iteration continues to operation 1670. At operation 1670, the PCC modeling system 1440 identifies the current feature having the highest p-value and removes that particular feature from the current features 1682 for the next iteration. The regression process returns to operation 1666, continuing on with a reduced current feature set 1682, again generating new p-values until all remaining features are below the predetermined threshold. If a primary feature has a p-value above the threshold, but a secondary feature that includes the primary feature has a p-value below the threshold, then the primary feature is kept as part of the model, even though it's individual p-value is larger than the threshold. This is necessary in order to keep the secondary feature with p-value below the threshold as part of the model.

Upon completion and exit of the regression iterations, the PCC modeling system 1440 may have identified one or more remaining features to be included in a final feature set 1684, each of which has a p-value at or below the predetermined threshold and is therefore statistically significant. In the example embodiment, the PCC modeling system 1440 inspects the final results for possible indications of overfitting in the model. For the final feature set 1684, the PCC modeling system 1440 also generates an r-squared and adjusted r-squared value, and the difference between these two values can be an indication of overfitting (e.g., if they are too far apart). If the difference between the r-squared and adjusted r-squared values (e.g., abs(r-squared - adjusted r-squared)) is greater than a predetermined threshold, then there are chances of overfitting in the model. In such situations, the PCC modeling system 1440 then analyzes each unique combination of the remaining features in the final feature set 1684, runs the model with that combination to generate r-squared and adjusted r-squared values for each combination, and then selects the particular combination that has the closest r-squared and adjusted r-squared values (e.g., the smallest abs(r-squared - adjusted r-squared)).

The remaining features and their associated values are used to generate a final transfer function from this model. More specifically, the regression yields a final coefficient for each of the remaining features in the final feature set 1684, as well as a constant coefficient (e.g., y-intercept value). As such, each of the $X_f$ variables of Eq. 1 are identified with each of the remaining features, and each associated coefficient $b_f$ is added into Eq. 1, as well as the constant coefficient $b_0$, to generate the final transfer function. As such, this transfer function can be used with prospective sorbents and their associated values to determine an anticipated PCC capacity of that particular sorbent.

In some embodiments, the PCC modeling system 1440 may use the model on test data to evaluate how it performs in predictive capability. For example, the PCC modeling system 1440 may generate a residual plot for the linear regression model for both the training data and the test data, thereby allowing the analyst 1402 to evaluate how well the model performs.

In one particular example, a regression operation 1660 is performed on an example training set starting with an initial feature set of isosteric heat of adsorption ($Q_{st}$), BET area, Pore Volume ($V_{pore}$)), and the three example secondary features "A", "B", and "C". At a first iteration, the p-value of BET area is identified as the highest at 0.948 and is removed. At a second iteration, the p-value of the "A" secondary feature is identified as the highest at 0.769 and is removed. At a third iteration, the p-value of the "B" secondary feature is identified as the highest at 0.441 and is removed. At a fourth iteration, the p-values of all of the remaining current features (e.g., $Q_{st}$, $V_{pore}$, and the "C" secondary feature) are below 0.05, and thus the regression iteration terminates with these three features as the final feature set. However, in this example, the final r-squared value is 0.400 and the adjusted r-squared value is 0.363, a difference which triggers analysis for overfitting. Since there are three remaining features in the final feature set 1684, each combination of those features is inspected with the model (e.g., a total of 3! = 6 unique combinations, namely [$Q_{st}$], [$Q_{st}$, $V_{pore}$], [$Q_{st}$, $V_{pore}$, "C"], [$V_{pore}$], [$V_{pore}$, "C"], and ["C"]). In this example, the combination of just [$Q_{st}$] yields an r-squared of 0.567 and an adjusted r-squared of 0.560, for the smallest difference of 0.007. As such, only the $Q_{st}$ feature and its associated values are used to generate the final transfer function with only the one remaining feature (e.g., $X_1 = Q_{st}$), namely $\text{Å} = b_1X_1 + b_0 = 0.0318 * Q_{st} - 0.4243$, where $b_1 = 0.0318$ is the final coefficient generated for $Q_{st}$ and where $b_0 = -0.4243$ is the constant coefficient. Applying test data to the trained model, in this particular example, yielded a test r-squared value of 0.331, where the r-squared of the trained model was 0.567. As such, the equation includes only features for which the p-value is less than 0.05. Further, the positive r-square of the test data is indicates that the model is able to explain about 60% of the capacity using the heat of adsorption ($Q_{st}$).

The PCC modeling system 1440 may use the generated transfer function to operate a post combustion carbon capture system, such as, but not limited to, by determining the one or more prospective sorbents to be used by the post combustion carbon system. For example, the PCC modeling system 1440 may identify one or more prospective sorbents based on a carbon capture performance value as determined by the transfer function to facilitate improving the overall carbon capture performance of the post combustion carbon capture system.

Figure 17 illustrates an example correlation matrix 1608. In some embodiments, the correlation matrix 1608 is generated by the PCC modeling system 1440 and used in the method 1600 described in Figures 16B-16C. In the example embodiment, the correlation matrix 1608 is a 9x9 square, reflective matrix. There are nine rows 1702 and nine columns

1704, as well as nine features 1712 that are the subjects of this example model. Each of the nine features 1712 has both an associated row 1702 and an associated column 1704. The features 1712 include six first order ("primary") features 1712A and three second order ("secondary") features 1712B, similar to the examples provided in Figures 16B-16C. Each cell of the matrix includes a correlation coefficient that is computed between the two particular intersecting features of that cell. For example, the correlation coefficient between BET area and PCC capacity is -0.12.

Further aspects of the invention are provided by the subject matter of the following clauses:

1. A power generation system comprising: a capture system for use in capturing carbon dioxide; a controller configured to operate the capture system; and a modeling system including a processor configured to: identify a model training data set, each instance of the model training data set identifying a sorbent used by the capture system, a carbon capture performance value for the sorbent, and a plurality of primary feature values associated with a plurality of primary features; generate one or more secondary features based on one or more of the plurality of primary features, each of the one or more secondary features being a combination of at least two of the plurality of primary features; determine a plurality of correlation magnitude values including a correlation magnitude value between each of the plurality of primary features and each of the one or more secondary features; identify a first subset of the model training data set based on the plurality of correlation magnitude values; determine a statistical significance for each instance of the first subset of the model training data set; identify a second subset of the model training data set based on the statistical significance, wherein the statistical significance for each instance of the second subset of the model training data set is below a pre-determined threshold; generate a transfer function based on the second subset of the model training data set; and determine, using the transfer function, one or more prospective sorbents to be used by the capture system based on the carbon capture performance value, wherein the controller operates the capture system using the one or more prospective sorbents determined by the modeling system.

2. The power generation system in accordance with the preceding clause, wherein generating the one or more secondary features based on one or more of the plurality of primary features comprises performing a univariate data analysis on the plurality of primary features.

3. The power generation system in accordance with any of the preceding clauses, wherein determining the plurality of correlation magnitude values comprises generating a correlation matrix comprising a plurality of cells, the plurality of cells being arranged in a plurality of rows and a plurality of columns for the plurality of primary features and the one or more secondary features with each of the plurality of cells including one of the plurality of correlation magnitude values.

4. The power generation system in accordance with any of the preceding clauses, wherein the processor of the modeling system is configured to select an initial feature set from the plurality of primary features and the one or more secondary features.

5. The power generation system in accordance with any of the preceding clauses, wherein selecting the initial feature set comprises receiving, from a user, user input indicating a selection of one or more features of the plurality of primary features and the one or more secondary features.

6. The power generation system in accordance with any of the preceding clauses, wherein selecting the initial feature set comprises selecting one or more features of the plurality of primary features and the one or more secondary features, each of the one or more features having a correlation coefficient greater than a predetermined threshold.

7. The power generation system in accordance with any of the preceding clauses, wherein each of the one or more features have one or more PCC performance data values greater than a predetermined threshold.

8. The power generation system in accordance with any of the preceding clauses, wherein the processor of the modeling system is configured to: determine an r-squared value and an associated adjusted r-squared value for each unique combination of each instance of the second subset of the model training data set; determine a difference value between the r-squared value and the associated adjusted r-squared value for each instance of the second subset of the model training data set; and identify a third subset of the model training data set based on the difference value, wherein the difference value for each instance of the third subset of the model training data set is greater than a predetermined difference value threshold.

9. The power generation system in accordance with any of the preceding clauses, wherein the difference value for each instance of the third subset of the model training data set is less than the predetermined difference value

threshold.

10. The power generation system in accordance with any of the preceding clauses, wherein the plurality of primary features includes at least a carbon capture capacity and an isosteric adsorption heat value.

11. The power generation system in accordance with any of the preceding clauses, wherein the one or more secondary features are based on one or more of a selectivity ratio, a pore volume, and an isosteric adsorption heat value.

12. A method of selecting one or more prospective sorbents for use in operating a capture system to capture carbon dioxide, the method comprising: identifying a model training data set, each instance of the model training data set identifying a sorbent used by the capture system, a carbon capture performance value for the sorbent, and a plurality of primary feature values associated with a plurality of primary features; generating one or more secondary features based on one or more of the plurality of primary features, each of the one or more secondary features being a combination of at least two of the plurality of primary features; determining a plurality of correlation magnitude values including a correlation magnitude value between each of the plurality of primary features and each of the one or more secondary features; identifying a first subset of the model training data set based on the plurality of correlation magnitude values; determining a statistical significance for each instance of the first subset of the model training data set; identifying a second subset of the model training data set based on the statistical significance, wherein the statistical significance for each instance of the second subset of the model training data set is below a pre-determined threshold; generating a transfer function based on the second subset of the model training data set; and determining, using the transfer function, one or more prospective sorbents to be used by the capture system based on the carbon capture performance value, wherein a controller operates the capture system using the one or more prospective sorbents determined using the transfer function.

13. The method in accordance with the preceding clause, wherein generating the one or more secondary features based on one or more of the plurality of primary features comprises performing a univariate data analysis on the plurality of primary features.

14. The method in accordance with any of the preceding clauses, wherein determining the plurality of correlation magnitude values comprises generating a correlation matrix comprising a plurality of cells, the plurality of cells being arranged in a plurality of rows and a plurality of columns for the plurality of primary features and the one or more secondary features with each of the plurality of cells including one of the plurality of correlation magnitude values.

15. The method in accordance with any of the preceding clauses, further comprising selecting an initial feature set from the plurality of primary features and the one or more secondary features.

16. The method in accordance with any of the preceding clauses, wherein selecting the initial feature set comprises receiving, from a user, user input indicating a selection of one or more features of the plurality of primary features and the one or more secondary features.

17. The method in accordance with any of the preceding clauses, wherein selecting the initial feature set comprises selecting one or more features of the plurality of primary features and the one or more secondary features, each of the one or more features having a correlation coefficient greater than a predetermined threshold.

18. The method in accordance with any of the preceding clauses, further comprising: determining an r-squared value and an associated adjusted r-squared value for each unique combination of each instance of the second subset of the model training data set; determining a difference value between the r-squared value and the associated adjusted r-squared value for each instance of the second subset of the model training data set; and identifying a third subset of the model training data set based on the difference value.

19. The method in accordance with any of the preceding clauses, wherein identifying the third subset of the model training data comprises the difference value for each instance of the third subset of the model training data set being greater than a predetermined difference value threshold.

20. The method in accordance with any of the preceding clauses, wherein identifying the third subset of the model training data comprises the difference value for each instance of the third subset of the model training data set being less than a predetermined difference value threshold.

Solid Sorbent Materials

In one aspect, a functionalized sorbent is provided. The functionalized sorbent includes a sorbent and at least one functionalization ligand including an aminosilicone group. The sorbent has an average particle length ≤ 3 μm. In another aspect, the sorbent has an average particle length ≤ 2 μm. In another aspect, the sorbent has an average particle length ≤ 1 μm.

It has been discovered that one or more of reduced particle sizes of sorbents, increased aspect ratios of sorbents, and aqueous sorbent synthesis leads to sorbents having significantly improved $CO_2$ uptake kinetics.

Generally, the sorbent may include any suitable particle size known in the art that facilitates the functionalized sorbent described herein. In some embodiments, the sorbent has an average particle length ≤ 3 μm, ≤ 2.9 μm, ≤ 2.8 μm, ≤ 2.7 μm, ≤ 2.6 μm, ≤ 2.5 μm, ≤ 2.4 μm, ≤ 2.3 μm, ≤ 2.2 μm, ≤ 2.1 μm, ≤ 2 μm, ≤ 1.9 μm, ≤ 1.8 μm, ≤ 1.7 μm, ≤ 1.6 μm, ≤ 1.5 μm, ≤ 1.4 μm, ≤ 1.3 μm, ≤ 1.2 μm, ≤ 1.1 μm, ≤ 1 μm, ≤ 0.9 μm, ≤ 0.8 μm, ≤ 0.7 μm, ≤ 0.6 μm, ≤ 0.5 μm, ≤ 0.4 μm, ≤ 0.3 μm, ≤ 0.2 μm, or ≤ 0.1 μm. In some embodiments, the sorbent has an average particle length ≥ 3 μm, ≥ 2.9 μm, ≥ 2.8 μm, ≥ 2.7 μm, ≥ 2.6 μm, ≥ 2.5 μm, ≥ 2.4 μm, ≥ 2.3 μm, ≥ 2.2 μm, ≥ 2.1 μm, ≥ 2 μm, ≥ 1.9 μm, ≥ 1.8 μm, ≥ 1.7 μm, ≥ 1.6 μm, ≥ 1.5 μm, ≥ 1.4 μm, ≥ 1.3 μm, ≥ 1.2 μm, ≥ 1.1 μm, ≥ 1 μm, ≥ 0.9 μm, ≥ 0.8 μm, ≥ 0.7 μm, ≥ 0.6 μm, ≥ 0.5 μm, ≥ 0.4 μm, ≥ 0.3 μm, ≥ 0.2 μm, or ≥ 0.1 μm.

Generally, the sorbent may include any suitable aspect ratio known in the art that facilitates the functionalized sorbent described herein. As used herein, the aspect ratio is the ratio between the average width of the sorbent and the average length of the sorbent. In some embodiments, the sorbent has an aspect ratio in a range of from about 0 to about 1. In some embodiments, the sorbent has an aspect ratio ≤ 1, ≤ 0.9, ≤ 0.8, ≤ 0.7, ≤ 0.6, ≤ 0.5, ≤ 0.4, ≤ 0.3, ≤ 0.2, or ≤ 0.1. In some embodiments, the sorbent has an aspect ratio ≥ 0.9, ≥ 0.8, ≥ 0.7, ≥ 0.6, ≥ 0.5, ≥ 0.4, ≥ 0.3, ≥ 0.2, ≥ 0.1, or≥ 0.

All the particle size measurements we use averages determined by either individually measuring particle length & width in an SEM image or as determined by a software package from a particle size distribution. Since it shouldn't really matter how it's measured, I don't think we need to include the method we used.

In some embodiments, the particle sizes are individual particle sizes. Individual particle size measurements may be made according to any suitable means known in the art, such as by measuring particle sizes in an SEM image.

In some embodiments, the particle size measurements are average particle size measurements. Average particle size measurements may be made according to any suitable means known in the art, such as by analyzing particle size distribution information.

Generally, the particle size of the sorbent may be controlled, altered, or reduced according to any suitable technique known in the art that facilitates the functionalized sorbent described herein. In some embodiments, suitable techniques for controlling, altering, or reducing particle size include mechanical grinding (e.g., mortar and pestling), using a microfluidizer, dry milling, wet milling, chemical size reduction (e.g., incorporation of a crystal growth inhibitor), acoustic cavitation, hydrodynamic cavitation, and combinations thereof.

Generally, the sorbent may be in any suitable form known in the art that facilitates the functionalized sorbent described herein. In some embodiments, the sorbent is in a form selected from the group consisting of powders, pellets, composites, composites mixed with binders, films, coatings, packed beds, columns, monoliths, and combinations thereof.

The exemplary embodiments described herein include a sorbent system. Generally, the sorbent system may be any suitable sorbent system known in the art that facilitates the functionalized sorbent described herein. In some embodiments, the sorbent system includes the functionalized sorbent and optionally a binder. In some embodiments, the sorbent system is disposed on a polymer film.

In some embodiments, the sorbent system includes at least one contactor. In some embodiments, the sorbent system includes more than one contactor. In some embodiments, the sorbent system includes a contactor configured for an adsorption cycle and a contactor configured for a desorption cycle. The contactor may be any suitable contactor known in the art that facilitates the functionalized sorbent described herein. In some embodiments, the sorbent is integrated into at least one channel of the contactor. In some embodiments, the contactor is fabricated from the sorbent itself. In some embodiments, the contactor is coated with the sorbent system. In some embodiments, the contactor includes more than one sorbent coating, with at least one sorbent coating being the sorbent system.

In some embodiments, the sorbent system includes a frame. The frame may be any suitable frame known in the art that facilitates the functionalized sorbent described herein. The frame may be included in the contactor or between two contactors. The frame may be composed of one piece or composed of more than one piece. In some embodiments, the frame is an air frame. In some embodiments, the frame is in a configuration selected from the group consisting of polygonal configurations, rectangular configurations, square configurations, circular configurations, asymmetrical configurations, and combinations thereof. In some embodiments, the sorbent system is mounted on the frame.

In some embodiments, the sorbent system includes at least one concentrator. The concentrator may be any suitable concentrator known in the art that facilitates the functionalized sorbent described herein. The concentrator may be a passive concentrator or an active concentrator.

In some embodiments, the sorbent system includes at least one component configured to drive fluid flow. The

component configured to drive fluid flow may be any suitable component configured to drive fluid flow known in the art that facilitates the functionalized sorbent described herein. In some embodiments, the component configured to drive fluid flow is selected from the group consisting of pumps, fans, and combinations thereof.

In some embodiments, the sorbent system includes at least one component configured to alter temperature. The component configured to alter temperature may be any suitable component configured to alter temperature known in the art that facilitates the functionalized sorbent described herein. In some embodiments, the component configured to alter temperature is selected from the group consisting of heaters, coolers, and combinations thereof.

In some embodiments, the sorbent system includes at least one component configured to convey fluid. The component configured to convey fluid may be any suitable component configured to convey fluid known in the art that facilitates the functionalized sorbent described herein. In some embodiments, the component configured to convey fluid is selected from the group consisting of pipes, perforated pipes, plastic perforated pipes, polymeric perforated pipes, metal perforated pipes, composite perforated pipes, and combinations thereof.

Generally, the functionalized sorbent may be used according to any suitable purpose known in the art that facilitates the use of the functionalized sorbent described herein. In some embodiments, the functionalized sorbent is used in a sorbent system. In some embodiments, the functionalized sorbent is used in a carbon capture sorbent system. In some embodiments, the functionalized sorbent is used in a moisture sorbent system. In some embodiments, the functionalized sorbent is used in a carbon capture sorbent system in the presence of water. In some embodiments, the functionalized sorbent is used for capturing a gas. In some embodiments, the functionalized sorbent is used for post-combustion capturing of $CO_2$ and/or direct air capturing of $CO_2$.

The exemplary embodiments described herein include a method of making a sorbent system. Generally, the functionalized sorbent may be made according to any suitable synthesis method known in the art that facilitates the functionalized sorbent described herein.

In many embodiments, the method of making a sorbent system includes making a sorbent, wherein the sorbent has an average particle length $\leq 3$ μm, and optionally functionalizing the sorbent with at least one functionalization ligand including an aminosilicone group. In some embodiments, the method of making a sorbent system includes making a sorbent, wherein the sorbent has an average particle length of < 2 μm, and optionally functionalizing the sorbent with at least one functionalization ligand including an aminosilicone group. In some embodiments, the method of making a sorbent system includes making a sorbent, wherein the sorbent has an average particle length of < 1 μm, and optionally functionalizing the sorbent with at least one functionalization ligand including an aminosilicone group.

In some embodiments, the method of making a sorbent system includes functionalizing the sorbent with at least two functionalization ligands each including an aminosilicone group, wherein the aminosilicone groups are different from each other. In some embodiments, the method of making a sorbent system further includes functionalizing the sorbent with at least one functionalization ligand not including an aminosilicone group. In some embodiments, the method of making a sorbent system includes controlling the ratio between the at least one functionalization ligand including an aminosilicone group and the at least one functionalization ligand not including an aminosilicone group.

In some embodiments, the method of making a sorbent system further includes annealing the functionalized sorbent. Annealing the sorbent system may remove excess ligands. In some embodiments, annealing the functionalized sorbent includes annealing the functionalized sorbent at an elevated temperature. In some embodiments, annealing the sorbent includes annealing the sorbent at a temperature in a range of from about 50 °C to about 400 °C. In some embodiments, annealing the sorbent includes annealing the sorbent at a temperature in a range of from about 100 °C to about 300 °C. In some embodiments, annealing the sorbent includes annealing the sorbent at a temperature in a range of from about 150 °C to about 250 °C.

Figure 34 is an exemplary method flow chart 3410. In this exemplary embodiment, method flow chart 3410 depicts exemplary steps of the method embodiments described herein and is not intended to limit the method embodiments. In the exemplary embodiment, the method includes forming 3412 a mixture including: a sorbent precursor; a crystal growth inhibitor; optionally a solvent; and optionally a non-solvent. The method also includes reacting 3414 the mixture. In some embodiments, the sorbent has an average particle length $\leq 3$ μm. In some embodiments, the sorbent has an average particle length $\leq 2$ μm. In some embodiments, the sorbent has an average particle length $\leq 1$ μm.

Forming 3412 the mixture may occur by any suitable means known in the art. In some embodiments, all components are added simultaneously. In some embodiments, at least one component is added at a different time than other components.

In some embodiments, the sorbent precursor comprises a MOF linker and a MOF metal or metal-containing cluster. The sorbent precursor may be formed before the mixture is formed 3412 and added as a single component to the mixture, or it may be formed *in situ* in the mixture during the forming 3412 of the mixture. For example, a MOF linker could be deprotonated separately and then added or deprotonated *in situ.* Similarly, a MOF metal or metal-containing cluster could be pre-formed and then added or formed *in situ.*

In some embodiments, the solvent comprises an aqueous solvent. In some embodiments, the solvent comprises water. The use of an aqueous solvent provides several benefits. In particular, the use of an aqueous solvent presents

scalability, safety, cost, and waste-handling advantages as compared to at least some known methods of preparing MOF compounds. In addition, MOF compounds prepared with an aqueous solvent generally are easier to purify, e.g. via solvent washing, than the same MOF compounds prepared according to known methods. This improved purification stems from the relative ease of removing solvent molecules (e.g., water) from the MOF compounds described herein as compared to the removal of strongly bound solvent molecules (e.g., Dimethylformamide (DMF)) utilized to prepare the same MOF compounds according to known methods. In addition, the purified MOF compounds do not include strongly bound solvent molecules that decrease gas uptake, surface area, and/or overall pore volumes. Finally, the purification is improved by requiring less toxic purification methods.

In some embodiments, the solvent is an organic solvent. In some embodiments, the solvent is a mixture of an organic solvent and an aqueous solvent.

Generally, a non-solvent is a substance incapable of dissolving a given component of a solution or mixture. In some embodiments, the non-solvent is a liquid-based component that is included in the reaction mixture. In some embodiments, the non-solvent is a solvent in which one of the components of the reaction mixture has limited solubility. In some embodiments, the non-solvent is selected from the group consisting of organic solvents, aqueous solvents, and combinations thereof.

In some embodiments, the crystal growth inhibitor is selected from the group consisting of salicylic acid, 4-fluorosalicylic acid, 4,4'-biphenol, 2,2'-Bipyridine-5,5'-dicarboxylic acid (BPYDC), 2,2'-Bipyridine-5,5'-dimethanol (BPYDM), benzoic acids, biphenols, bipyridines, and combinations thereof.

Figure 35 is an exemplary method flow chart 3510. In this exemplary embodiment, method flow chart 3510 depicts exemplary steps of the method embodiments described herein and is not intended to limit the method embodiments. In the exemplary embodiment, the method includes forming 3512 a mixture including: a sorbent; at least one functionalization ligand including an aminosilicone group; optionally at least one functionalization ligand not including an aminosilicone group; optionally a solvent, and optionally a non-solvent. The method also includes functionalizing 3514 the sorbent.

In some embodiments, functionalizing 3514 the sorbent includes stirring the mixture.

In some embodiments, functionalizing 3514 the sorbent includes functionalizing 114 the sorbent in the presence of an inert gas.

In some embodiments, functionalizing 3514 the sorbent includes functionalizing 3514 the sorbent at a temperature in a range of from about 0 °C to about 100 °C. In some embodiments, functionalizing 3514 the sorbent includes functionalizing 3514 the sorbent at a temperature in a range of from about 20 °C to about 80 °C. In some embodiments, functionalizing 3514 the sorbent includes functionalizing 3514 the sorbent at a temperature in a range of from about 20 °C to about 60 °C.

In some embodiments, functionalizing 3514 the sorbent includes functionalizing 3514 the sorbent for a time in a range of from about one minute to about seven days. In some embodiments, functionalizing 3514 the sorbent includes functionalizing 3514 the sorbent for a time in a range of from about 1 hour to about three days.

In some embodiments, the sorbent is desolvated before functionalization 3514. In some embodiments, the sorbent is dry before functionalization.

In some embodiments, the sorbent is annealed after functionalization 3514. In some embodiments, annealing the sorbent includes annealing the sorbent at an elevated temperature. In some embodiments, annealing the sorbent includes annealing the sorbent at a temperature in a range of from about 50 °C to about 400 °C. In some embodiments, annealing the sorbent includes annealing the sorbent at a temperature in a range of from about 100 °C to about 300 °C. In some embodiments, annealing the sorbent includes annealing the sorbent at a temperature in a range of from about 150 °C to about 250 °C.

In some embodiments, the solvent is an organic solvent. In some embodiments, the solvent is an aqueous solvent. In some embodiments, the solvent is a mixture of an organic solvent and an aqueous solvent.

Generally, a non-solvent is a substance incapable of dissolving a given component of a solution or mixture. In some embodiments, the non-solvent is a liquid-based component that is included in the reaction mixture. In some embodiments, the non-solvent is a solvent in which one of the components of the reaction mixture has limited solubility. In some embodiments, the non-solvent is selected from the group consisting of organic solvents, aqueous solvents, and combinations thereof.

In some embodiments, the non-solvent aids in functionalization. In some embodiments, the selectivity of the functionalization is controlled by relative solubility. For example, one or more of the sorbent or amines may possess a different solubility in the liquid-based reaction mixture compared to another sorbent or amine or the functionalized sorbent. In this way, relative solubility introduces limiting reactions and/or reagents.

In many embodiments, the method may also include any further suitable processing steps known in the art that facilitate the success of the method described herein. Such processing steps may include, but are not limited to only including, washing, drying, filtering, purifying, separating, centrifuging, and any combinations thereof. In some embodiments, the method further includes washing the functionalized sorbent. In some embodiments, the method further

includes purifying the functionalized sorbent. In some embodiments, the purifying includes using distillation, vacuum distillation, and/or heat.

The exemplary embodiments described herein include a method of capturing at least one gas.

Figure 36 is an exemplary method flow chart 3610. In the exemplary embodiment, method flow chart 3610 depicts exemplary method steps of the method embodiments described herein and is not intended to limit the method embodiments. The method includes receiving 3612 a gas source including at least one gas at a functionalized sorbent, wherein the functionalized sorbent includes: a sorbent; and at least one functionalization ligand including an aminosilicone group. In some embodiments, the functionalized sorbent includes at least two functionalization ligands each including an aminosilicone group, wherein the aminosilicone groups are different from each other. In some embodiments, the functionalized sorbent further includes at least one functionalization ligand not including an aminosilicone group. The method also includes capturing 3614 an amount of the at least one gas with the functionalized sorbent. The sorbent has an average particle length ≤ 1 μm.

In some embodiments, the method includes: (I) receiving 3612 a gas source including the at least one gas at a functionalized sorbent, wherein the functionalized sorbent includes a sorbent and at least one functionalization ligand including an aminosilicone group; and (II) capturing 3614 an amount of the at least one gas with the functionalized sorbent.

Generally, the gas source may be any suitable gas source known in the art that facilitates the method described herein. In some embodiments, the gas source is selected from the group consisting of air, flue gas, post-combustion gas, natural gas, syngas, carbon dioxide, carbon monoxide, water vapor, hydrogen, nitrogen, oxygen, methane, olefin gases, nitrogen oxides, sulfur dioxide, ammonia, hydrogen sulfide, and combinations thereof.

Generally, the at least one gas may be any suitable gas known in the art that facilitates the method described herein. In some embodiments, the at least one gas is selected from the group consisting of air, flue gas, post-combustion gas, natural gas, syngas, carbon dioxide, carbon monoxide, water vapor, hydrogen, nitrogen, oxygen, methane, olefin gases, nitrogen oxides, sulfur dioxide, ammonia, hydrogen sulfide, and combinations thereof.

In some embodiments, the at least one gas is present in the source gas in an amount in a range of from about 0.001%(v/v) to about 40%(v/v). In some embodiments, the at least one gas is present in the source gas in an amount in a range of from about 0.001%(v/v) to about 15%(v/v). In some embodiments, the at least one gas is present in the source gas in an amount in a range of from about 0.001%(v/v) to about 10%(v/v). In some embodiments, the at least one gas is present in the source gas in an amount in a range of from about 0.001%(v/v) to about 5%(v/v). In some embodiments, the at least one gas is present in the source gas in an amount in a range of from about 0.001%(v/v) to about 1%(v/v). In some embodiments, the at least one gas is present in the source gas in an amount greater than 10%(v/v).

In some embodiments, the at least one gas is present in the source gas in an amount in a range of from about 100 ppmv to about 1000 ppmv. In some embodiments, the at least one gas is present in the source gas in an amount in a range of from about 300 ppmv to about 5000 ppmv.

In some embodiments, the at least one gas does not include water vapor.

In some embodiments, the at least one gas includes water vapor. In some embodiments, the at least one gas includes water vapor in an amount in a range of from about 0.001%(v/v) to about 25%(v/v). In some embodiments, the at least one gas includes water vapor in an amount in a range of from about 0.01%(v/v) to about 20%(v/v). In some embodiments, the at least one gas includes water vapor in an amount in a range of from about 0.5%(v/v) to about 15%(v/v). In some embodiments, the at least one gas includes water vapor in an amount in a range of from about 0.5%(v/v) to about 4%(v/v). In some embodiments, the at least one gas includes water vapor in an amount in a range of from about 4%(v/v) to about 15%(v/v).

In some embodiments, the at least one gas is present in the source gas in an amount in a range of from about 0.001%(v/v) to about 10%(v/v) and is in the presence of water vapor. In some embodiments, the at least one gas is present in the source gas in an amount in a range of from about 0.001%(v/v) to about 5%(v/v) and is in the presence of water vapor. In some embodiments, the at least one gas is present in the source gas in an amount in a range of from about 0.001%(v/v) to about 1%(v/v) and is in the presence of water vapor. In some embodiments, the at least one gas is present in the source gas in an amount greater than about 10%(v/v) and is in the presence of water vapor. In some embodiments, the water vapor is present in an amount in a range of from about 0.001%(v/v) to about 25%(v/v). In some embodiments, the water vapor is present in an amount in a range of from about 0.01%(v/v) to about 20%(v/v). In some embodiments, the water vapor is present in an amount in a range of from about 0.5%(v/v) to about 10%(v/v).

In some embodiments, capturing 3614 an amount of the at least one gas with the functionalized sorbent includes adsorbing an amount of the at least one gas with the functionalized sorbent. In some embodiments, capturing 3614 an amount of the at least one gas with the functionalized sorbent includes adsorbing an amount of the at least one gas with the functionalized sorbent in the presence of water vapor.

In some embodiments, the amount of the at least one gas captured 3614 with the functionalized sorbent is in a range of from about 1%(v/v) to about 100%(v/v) of the at least one gas present in the source gas. In some embodiments, the amount of the at least one gas captured 3614 with the functionalized sorbent is in a range of from about 10%(v/v) to about 90%(v/v) of the at least one gas present in the source gas. In some embodiments, the amount of the at least one gas

captured 3614 with the functionalized sorbent is in a range of from about 20%(v/v) to about 80%(v/v) of the at least one gas present in the source gas. In some embodiments, the amount of the at least one gas captured 3614 with the functionalized sorbent is in a range of from about 30%(v/v) to about 70%(v/v) of the at least one gas present in the source gas. In some embodiments, the amount of the at least one gas captured 3614 with the functionalized sorbent is in a range of from about 40%(v/v) to about 60%(v/v) of the at least one gas present in the source gas.

In some embodiments, the amount of the at least one gas captured 3614 with the functionalized sorbent is in a range of from about 1%(v/v) to about 25%(v/v) of the at least one gas present in the source gas. In some embodiments, the amount of the at least one gas captured 3614 with the functionalized sorbent is in a range of from about 1%(v/v) to about 20%(v/v) of the at least one gas present in the source gas. In some embodiments, the amount of the at least one gas captured 3614 with the functionalized sorbent is in a range of from about 1%(v/v) to about 15%(v/v) of the at least one gas present in the source gas. In some embodiments, the amount of the at least one gas captured 3614 with the functionalized sorbent is in a range of from about 1%(v/v) to about 10%(v/v) of the at least one gas present in the source gas. In some embodiments, the amount of the at least one gas captured 3614 with the functionalized sorbent is in a range of from about 1%(v/v) to about 5%(v/v) of the at least one gas present in the source gas.

In some embodiments, the amount of the at least one gas captured 3614 with the functionalized sorbent is in a range of from about 80%(v/v) to about 100%(v/v) of the at least one gas present in the source gas. In some embodiments, the amount of the at least one gas captured 3614 with the functionalized sorbent is in a range of from about 85%(v/v) to about 100%(v/v) of the at least one gas present in the source gas. In some embodiments, the amount of the at least one gas captured 3614 with the functionalized sorbent is in a range of from about 90%(v/v) to about 100%(v/v) of the at least one gas present in the source gas. In some embodiments, the amount of the at least one gas captured 3614 with the functionalized sorbent is in a range of from about 95%(v/v) to about 100%(v/v) of the at least one gas present in the source gas.

In some embodiments, the source gas is modified to alter the amount of water vapor. In some embodiments, altering the amount of water vapor includes increasing the amount of water vapor. In some embodiments, altering the amount of water vapor includes decreasing the amount of water vapor. In some embodiments, increasing the amount of water vapor includes adding or injecting water vapor into the source gas. In some embodiments, decreasing the amount of water vapor includes removing water vapor from the source gas by evaporation, condensation, and/or pre-adsorption. In some embodiments, altering the amount of water vapor includes exhaust gas recirculation (EGR) and/or mixing.

In many embodiments, the functionalized sorbent, the source gas, the at least one gas, or a combination thereof are at a certain temperature. Each temperature may be altered to facilitate the method described herein. Each temperature may have a uniform temperature profile, a gradient temperature profile, a discrete temperature profile, or a combination thereof.

In some embodiments, the method includes an adsorption cycle. In some embodiments, the method includes a desorption cycle. In some embodiments, at least one of the functionalized sorbent, the source gas, the at least one gas, or a combination thereof are at a temperature in a range of from about 0 °C to about 150 °C during the gas adsorption cycle. In some embodiments, at least one of the functionalized sorbent, the source gas, the at least one gas, or a combination thereof are at a temperature in a range of from about 60 °C to about 250 °C during the gas desorption cycle.

In some embodiments, the method includes controlling a temperature. Temperature may be controlled for the functionalized sorbent, the source gas, the at least one gas, or a combination thereof.

The exemplary embodiments described herein include a method of collecting at least one gas from a gas source.

Figure 37 is an exemplary method flow chart 3710. In this exemplary embodiment, method flow chart 3710 depicts exemplary method steps of the method embodiments described herein and is not intended to limit the method embodiments. The method includes receiving 3712 a gas source including at least one gas at a functionalized sorbent, wherein the functionalized sorbent includes: a sorbent; and at least one functionalization ligand including an aminosilicone group. In some embodiments, the functionalized sorbent includes at least two functionalization ligands each including an aminosilicone group, wherein the aminosilicone groups are different from each other. In some embodiments, the functionalized sorbent further includes at least one functionalization ligand not including an aminosilicone group. The method also includes capturing 3714 an amount of the at least one gas with the functionalized sorbent. The method also includes releasing 3716 the at least one gas from the functionalized sorbent. The sorbent has an average particle length $\leq 1$ $\mu$m.

In some embodiments, the method includes: (I) receiving 3712 a gas source including at least one gas at a functionalized sorbent, wherein the functionalized sorbent includes a sorbent and at least one functionalization ligand including an aminosilicone group; (II) capturing 3714 an amount of the at least one gas with the functionalized sorbent; and (III) releasing 3716 the at least one gas from the functionalized sorbent.

In some embodiments, releasing 3716 the at least one gas from the functionalized sorbent includes purging the at least one gas from the functionalized sorbent with a purge gas. In some embodiments, releasing 3716 the at least one gas from the functionalized sorbent includes receiving a change in temperature or pressure at the functionalized sorbent.

In some embodiments, the at least one gas is released 3716 from the functionalized sorbent into a receiving gas.

In some embodiments, the receiving gas is selected from the group consisting of air, $N_2$, steam, and combinations thereof. In some embodiments, the receiving gas is removed from the presence of the functionalized sorbent after receiving the at least one gas. In some embodiments, the receiving gas has a higher concentration of the at least one gas compared to the source gas.

Further aspects of the present disclosure are provided by the subject matter of the following clauses:

1. A functionalized sorbent comprising:

a sorbent; and

at least one functionalization ligand comprising an aminosilicone group;

wherein the sorbent has an average particle length ≤ 3 μm.

2. The functionalized sorbent of the preceding embodiment, further comprising at least one functionalization ligand that does not comprise an aminosilicone group.

3. The functionalized sorbent of any preceding embodiment, wherein the at least one functionalization ligand comprising an aminosilicone group and the at least one functionalization ligand not comprising an aminosilicone group are present in a ratio in a range of from about 10:1 to about 1:10.

4. The functionalized sorbent of any preceding embodiment, wherein the functionalized sorbent is a functionalized MOF compound of Formula (A-I)

$$M_xL_yF_a^AF_b^B \quad \text{(Formula A-I)},$$

wherein:

AT is a MOF metal or metal-containing cluster;

*L* is a MOF linker;

$F^A$ is the at least one functionalization ligand comprising an aminosilicone group;

$F^B$ is at least one functionalization ligand not comprising an aminosilicone group;

x is a value in a range of 1 to 6;

y is a value in a range of 1 to 6;

*a* is a value greater than 0 and less than or equal to 2; and

*b* is a value in a range of 0 to 2.

5. The functionalized sorbent of any preceding embodiment, wherein the MOF metal or metal-containing cluster comprises a metal selected from the group consisting of alkali metals, alkaline earth metals, transition metals, Mg, Ca, Mn, Cr, Fe, Co, Ni, Cu, Zn, ions thereof, hydrates thereof, salts thereof, halides thereof, fluorides thereof, chlorides thereof, bromides thereof, iodides thereof, nitrates thereof, acetates thereof, sulfates thereof, phosphates thereof, carbonates thereof, oxides thereof, formates thereof, carboxylates thereof, and combinations thereof.

6. The functionalized sorbent of any preceding embodiment, wherein the MOF linker comprises a linker selected from the group consisting of polytopic linkers, 4,4'-dihydroxy-[1,1'-biphenyl]-3,3'-dicarboxylic acid ($H_4$dobpdc), 4,4'-dioxidobiphenyl-3,3'-dicarboxylate (dobpdc$^{4-}$), 4,4"-dioxido-[1,1':4',1"-terphenyl]-3,3"-dicarboxylate (dotpdc$^{4-}$), 2,5-dioxidobenzene-1,4-dicarboxylate (dobdc$^{4-}$), 4,6-Dihydroxyisophthalic acid (m-dobdc$^{4-}$), 3,3'-dioxido-biphenyl-4,4'-dicarboxylate (para-carboxylate-dobpdc$^{4-}$), 4,4'-[oxalylbis(imino)]bis(2-hydroxybenzoic acid) ($H_4$ODA), 4,4'-[1,4-phenylenebis-(carbonylimino)]bis(2-hydroxybenzoic acid) ($H_4$TDA), 4,4'-Dihydroxyazobenzene-3,3'-dicar-

boxylic acid ($H_4OSA$), dicarboxylates, terephthalic acid, tricarboxylates, 1,3,5-benzentricarboxylic acid, azolates, tetrazolates, 1,4-butanedicarboxylic acid, 4-oxopyran-2,6-dicarboxylic acid, 1,6-hexanedicarboxylic acid, decanedicarboxylic acid, 1,8-heptadecanedicarboxylic acid, 1,9-heptadecanedicarboxylic acid, heptadecanedicarboxylic acid, acetylenedicarboxylic acid, 1,2-benzenedicarboxylic acid, 2,3-pyridinedicarboxylic acid, pyridine-2,3-dicarboxylic acid, 1,3-butadiene-1,4-dicarboxylic acid, 1,4-benzenedicarboxylic acid, p-benzenedicarboxylic acid, imidazole-2,4-dicarboxylic acid, 2-methylquinoline-3,4-dicarboxylic acid, quinoline-2,4-dicarboxylic acid, quinoxaline-2,3-dicarboxylic acid, 6-chloroquinoxaline-2,3-dicarboxylic acid, 4,4'-diaminophenylmethane-3,3'-dicarboxylic acid, quinoline-3,4-dicarboxylic acid, 7-chloro-4-hydroxyquinoline-2,8-dicarboxylic acid, diimidedicarboxylic acid, pyridine-2,6-dicarboxylic acid, 2-methylimidazole-4,5-dicarboxylic acid, thiophene-3,4-dicarboxylic acid, 2-isopropylimidazole-4,5-dicarboxylic acid, tetrahydropyran-4,4-dicarboxylic acid, perylene-3,9-dicarboxylic acid, perylenedicarboxylic acid, Pluriol E 200-dicarboxylic acid, 3,6-dioxaoctanedicarboxylic acid, 3,5-cyclohexadiene-1,2-dicarboxylic acid, octanedicarboxylic acid, pentane-3,3-carboxylic acid, 4,4'-diamino-1,1'-diphenyl-3,3'-dicarboxylic acid, 4,4'-diaminodiphenyl-3,3'-dicarboxylic acid, benzidine-3,3'-dicarboxylic acid, 1,4-bis-(phenylamino)benzene-2,5-dicarboxylic acid, 1,1'-dinaphthyl-8,8'-dicarboxylic acid, 7-chloro-8-methylquinoline-2,3-dicarboxylic acid, 1-anilinoanthraquinone-2,4'-dicarboxylic acid, polytetrahydrofuran-250-dicarboxylic acid, 1,4-bis(carboxymethyl)piperazine-2,3-dicarboxylic acid, 7-chloroquinoline-3,8-dicarboxylic acid, 1-(4-carboxy)phenyl-3-(4-chloro) phenylpyrazoline-4,5-dicarboxylic acid, 1,4,5,6,7,7,-hexachloro-5-norbornene-2,3-dicarboxylic acid, phenylindanedicarboxylic acid, 1,3-dibenzyl-2-oxoimidazolidine-4,5-dicarboxylic acid, 1,4-cyclohexanedicarboxylic acid, naphthalene-1,8-dicarboxylic acid, 2-benzoylbenzene-1,3-dicarboxylic acid, 1,3-dibenzyl-2-oxoimidazolidine-4,5-cisdicarboxylic acid, 2,2'-biquinoline-4,4'-dicarboxylic acid, pyridine-3,4-dicarboxylic acid, 3,6,9-trioxaundecanedicarboxylic acid, o-hydroxybenzophenonedicarboxylic acid, Pluriol E 300-dicarboxylic acid, Pluriol E 400-dicarboxylic acid, Pluriol E 600-dicarboxylic acid, pyrazole-3,4-dicarboxylic acid, 2,3-pyrazinedicarboxylic acid, 5,6-dimethyl-2,3-pyrazinedicarboxylic acid, 4,4'-diaminodiphenyletherdiimidedicarboxylic acid, 4,4'-diaminodiphenylmethanediimidedicarboxylic acid, 4,4'-diaminodiphenylsulfonediimidedicarboxylic acid, 2,6-naphthalenedicarboxylic acid, 1,3-adamantanedicarboxylic acid, 1,8-naphthalenedicarboxylic acid, 2,3-naphthalenedicarboxylic acid, 8-methoxy-2,3-naphthalenedicarboxylic acid, 8-nitro-2,3-naphthalenedicarboxylic acid, 8-sulfo-2,3-naphthalenedicarboxylic acid, anthracene-2,3-dicarboxylic acid, 2'-3'-diphenyl-p-terphenyl-4,4"-dicarboxylic acid, diphenylether-4,4'-dicarboxylic acid, imidazole-4,5-dicarboxylic acid, 4(1H)-oxothiochromene-2,8-dicarboxylic acid, 5-t-butyl-1,3-benzenedicarboxylic acid, 7,8-quinolinedicarboxylic acid, 4,5-imidazoledicarboxylic acid, 4-cyclohexene-1,2-dicarboxylic acid, hexatriacontanedicarboxylic acid, tetradecanedicarboxylic acid, 1,7-heptanedicarboxylic acid, 5-hydroxy-1,3-benzenedicarboxylic acid, pyrazine-2,3-dicarboxylic acid, furan-2,5-dicarboxylic acid, 1-nonene-6,9-dicarboxylic acid, eicosenedicarboxylic acid, 4,4'-dihydroxydiphenylmethane-3,3'-dicarboxylic acid, 1 -amino-4-methyl-9,10-dioxo-9,10-dihydroanthracene-2,3-dicarboxylic acid, 2,5-pyridinedicarboxylic acid, cyclohexene-2,3-dicarboxylic acid, 2,9-dichlorofluorubin-4,11-dicarboxylic acid, 7-chloro-3-methylquinoline-6,8-dicarboxylic acid, 2,4-dichlorobenzophenone-2',5'-dicarboxylic acid, 1,3-benzenedicarboxylic acid, 2,6-pyridinedicarboxylic acid, 1-methylpyrrole-3,4-dicarboxylic acid, 1-benzyl-1H-pyrrole-3,4-dicarboxylic acid, anthraquinone-1,5-dicarboxylic acid, 3,5-pyrazoledicarboxylic acid, 2-nitrobenzene-1,4-dicarboxylic acid, heptane-1,7-dicarboxylic acid, cyclobutane-1,1-dicarboxylic acid, 1,14-tetradecanedicarboxylic acid, 5,6-dehydronorbornane-2,3-dicarboxylic acid, 5-ethyl-2,3-pyridinedicarboxylic acid, 2-hydroxy-1,2,3-propanetricarboxylic acid, 7-chloro-2,3,8-quinolinetricarboxylic acid, 1,2,4-benzenetricarboxylic acid, 1,2,4-butanetricarboxylic acid, 2-phosphono-1,2,4-butanetricarboxylic acid, 1,3,5-benzenetricarboxylic acid, 1-hydroxy-1,2,3-propanetricarboxylic acid, 4,5-dihydro-4,5-dioxo-1H-pyrrolo[2,3-F]quinoline-2,7,9-tricarboxylic acid, 5-acetyl-3-amino-6-methylbenzene-1,2,4-tricarboxylic acid, 3-amino-5-benzoyl-6-methylbenzene-1,2,4-tricarboxylic acid, 1,2,3-propanetricarboxylic acid, aurinetricarboxylic acid, 1,1-dioxide-perylo[1,12-BCD]thiophene-3,4,9,10-tetracarboxylic acid, perylenetetracarboxylic acids, perylene-3,4,9,10-tetracarboxylic acid, perylene-1,12-sulfone-3,4,9,10-tetracarboxylic acid, butanetetracarboxylic acids, 1,2,3,4-butanetetracarboxylic acid, meso-1,2,3,4-butanetetracarboxylic acid, decane-2,4,6,8-tetracarboxylic acid, 1,4,7,10,13,16-hexaoxacyclooctadecane-2,3,11,12-tetracarboxylic acid, 1,2,4,5-benzenetetracarboxylic acid, 1,2,11,12-dodecanetetracarboxylic acid, 1,2,5,6-hexanetetracarboxylic acid, 1,2,7,8-octanetetracarboxylic acid, 1,4,5,8-naphthalenetetracarboxylic acid, 1,2,9,10-decanetetracarboxylic acid, benzophenonetetracarboxylic acid, 3,3',4,4'-benzophenonetetracarboxylic acid, tetrahydrofurantetracarboxylic acid, cyclopentanetetracarboxylic acids, cyclopentane-1,2,3,4-tetracarboxylic acid, polytopic linkers, ditopic linkers, tritopic linkers, tetratopic linkers, pentatopic linkers, hexatopic linkers, heptatopic linkers, octatopic linkers, mixed linkers, desymmetrized linker, metallo linkers, N-heterocyclic linkers, protonated, partially and fully deprotonated forms thereof, and combinations thereof.

7. The functionalized sorbent of any preceding embodiment, wherein the sorbent has an aspect ratio of >0.2.

8. The functionalized sorbent of any preceding embodiment, wherein the sorbent has an average particle length < 1 μm.

9. The functionalized sorbent of any preceding embodiment, wherein the at least one functionalization ligand comprising an aminosilicone group is an amino-substituted siloxane of Formula (A-II), Formula (A-III), Formula (A-IV), Formula (A-V), Formula (A-VI), or Formula (A-VII)

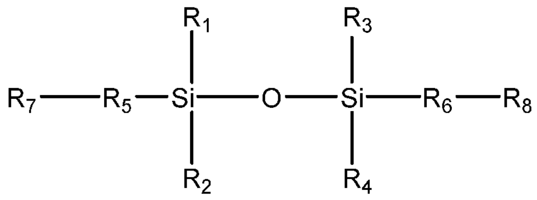

(Formula A-II)

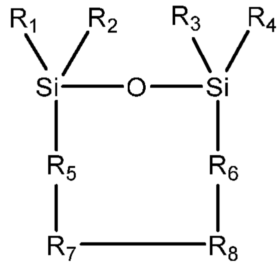

(Formula A-III)

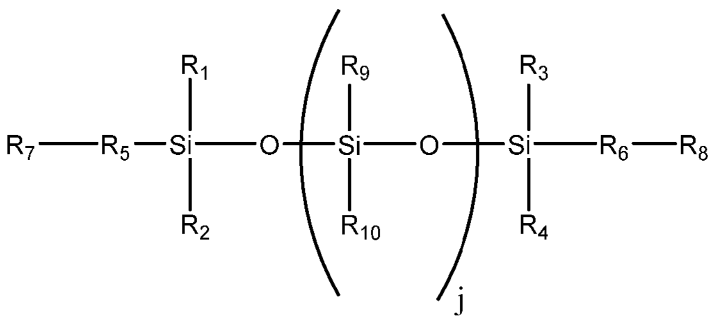

(Formula A-IV)

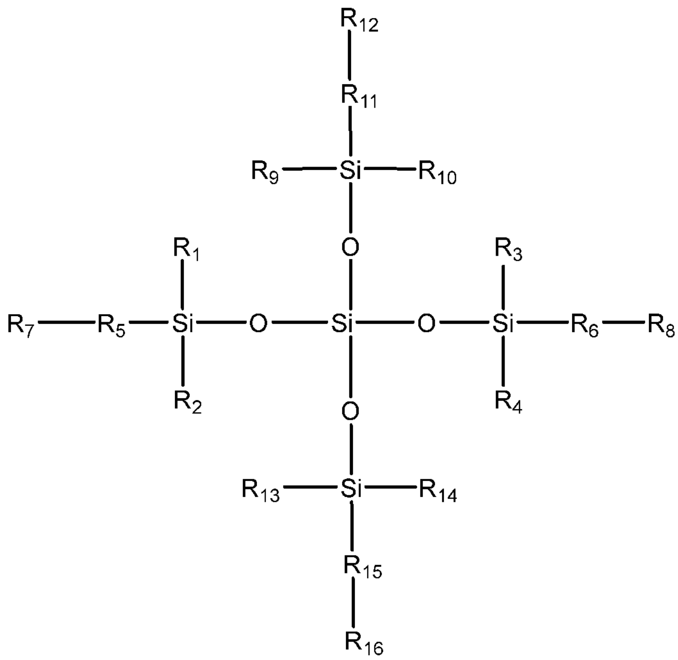

(Formula A-V)

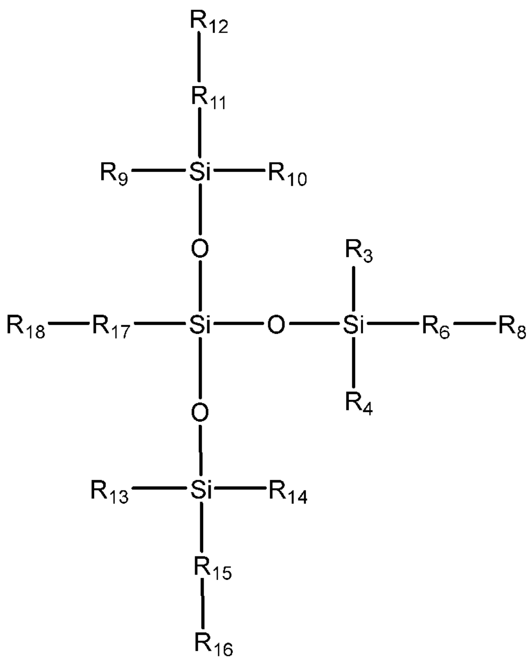

(Formula A-VI)

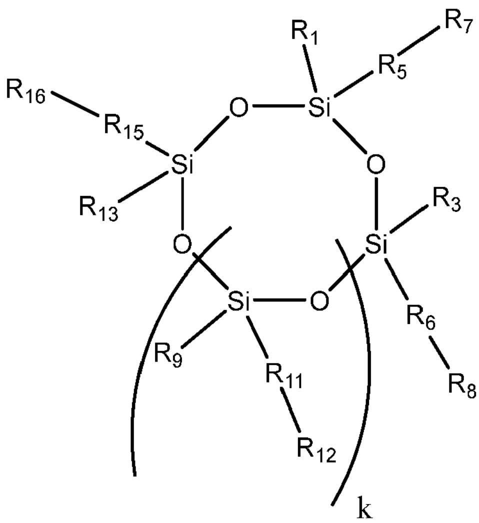

(Formula A-VII)

wherein:

$R_1$, $R_2$, $R_3$, $R_4$, $R_9$, $R_{10}$, $R_{13}$, $R_{14}$, and $R_{18}$ are each individually selected from the group consisting of hydrogen, substituted or unsubstituted linear alkyl, substituted or unsubstituted $C_1$-$C_6$ linear alkyl, substituted or unsubstituted branched alkyl, substituted or unsubstituted $C_3$-$C_6$ branched alkyl, substituted or unsubstituted linear heteroalkyl, substituted or unsubstituted branched heteroalkyl, aryl, phenyl, heteroaryl, methyl, ethyl, propyl, isopropyl, butyl, pentyl, and hexyl;

Rs, $R_6$, $R_{11}$, $R_{15}$, and $R_{17}$ are each individually selected from the group consisting of direct bonds, substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, Cs alkyl, and $C_6$ alkyl,

$R_7$, $R_8$, $R_{12}$, and $R_{16}$ are each individually selected from the group consisting of direct bonds, substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, $C_6$ alkyl, and substituents of Formula (A-VIII)

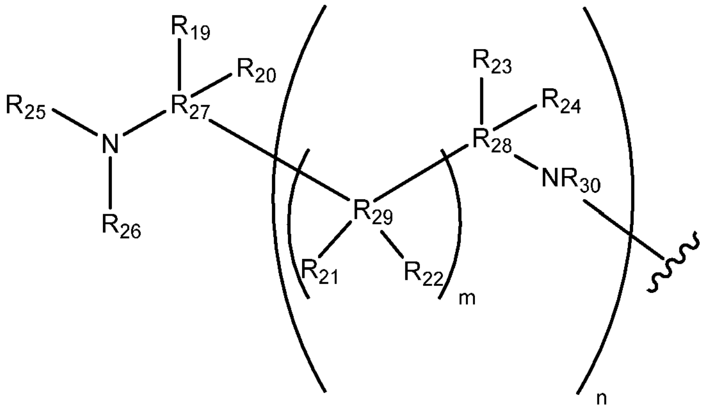

(Formula A-VIII);

wherein:

the wavy bond indicates a bonding location to Formula (A-II) or Formula (A-III) or Formula (A-IV) or Formula (A-V) or Formula (A-VI) or Formula (A-VII);

$R_{19}$, $R_{20}$, $R_{21}$, $R_{22}$, $R_{23}$, and $R_{24}$ are each individually selected from the group consisting of hydrogen, substituted or unsubstituted linear alkyl, substituted or unsubstituted $C_1$-$C_6$ linear alkyl, substituted or unsubstituted branched alkyl, substituted or unsubstituted $C_3$-$C_6$ branched alkyl, substituted or unsubstituted linear heteroalkyl, substituted or unsubstituted $C_1$-$C_6$ linear heteroalkyl, substituted or unsubstituted branched heteroalkyl, substituted or unsubstituted $C_3$-$C_6$ branched heteroalkyl, aryl, heteroaryl, methyl, ethyl, propyl, isopropyl, butyl, pentyl, and hexyl;

$R_{25}$ and $R_{26}$ are each individually selected from the group consisting of hydrogen, substituted or unsubstituted linear alkyl, substituted or unsubstituted $C_1$-$C_6$ linear alkyl, substituted or unsubstituted $C_1$-$C_3$ linear alkyl, substituted or unsubstituted branched alkyl, substituted or unsubstituted $C_3$-$C_6$ branched alkyl, methyl, ethyl, propyl, substituted or unsubstituted cycloalkyl, substituted or unsubstituted $C_3$-$C_6$ cycloalkyl, and substituted or unsubstituted $C_4$-$C_6$ cycloalkyl, or, when taken together, $R_{25}$ and $R_{26}$ form a single ring selected from the group consisting of heterocycloalkyl and heteroaryl;

$R_{27}$, $R_{28}$, and $R_{29}$ are each individually selected from the group consisting of direct bonds, substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, $C_6$ alkyl, ether, $-OCH_2CH_2-$, $-OCH_2CH_2CH_2-$, $-OCH_2CH_2CH_2CH_2-$, $-NHCH_2CH_2-$, $-NHCH_2CH_2CH_2-$, and $-NHCH_2CH_2CH_2CH_2-$;

$R_{30}$ is selected from the group consisting of hydrogen, substituted or unsubstituted linear alkyl, substituted or unsubstituted $C_1$-$C_6$ linear alkyl, substituted or unsubstituted $C_1$-$C_3$ linear alkyl, substituted or unsubstituted branched alkyl, substituted or unsubstituted $C_3$-$C_6$ branched alkyl, methyl, ethyl, propyl, substituted or unsubstituted cycloalkyl, substituted or unsubstituted $C_3$-$C_6$ cycloalkyl, substituted or unsubstituted $C_4$-$C_6$ cycloalkyl, heterocycloalkyl, and heteroaryl;

j is an integer in a range of 0 to 20;

k is an integer in a range of 0 to 20;

m is an integer in a range of 0 to 20; and

n is an integer in a range of 0 to 20.

10. The functionalized sorbent of any preceding embodiment, wherein the at least one functionalization ligand comprising an aminosilicone group is selected from the group consisting of

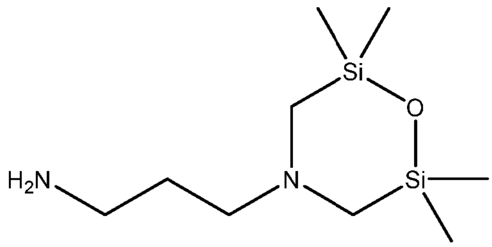

,

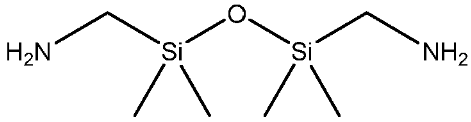

,

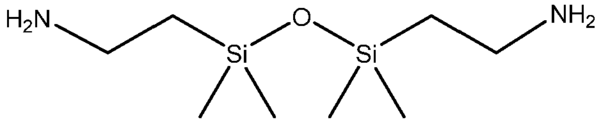

,

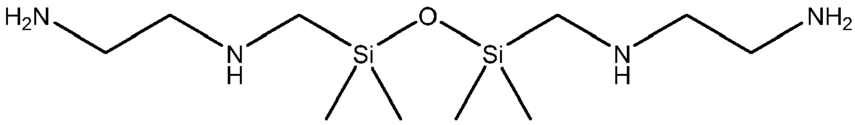

,

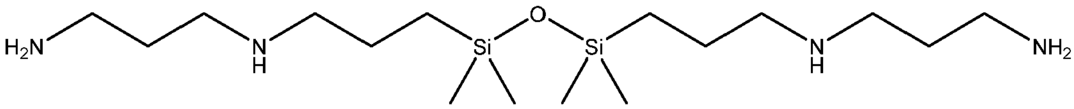

,

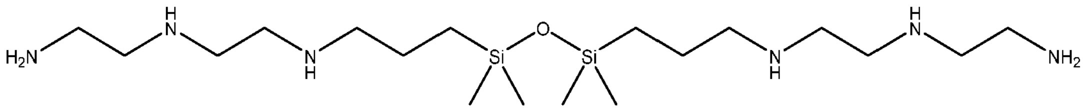

,

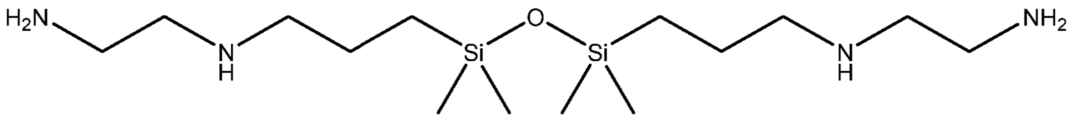

,

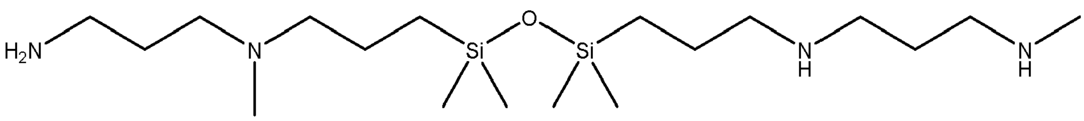

,

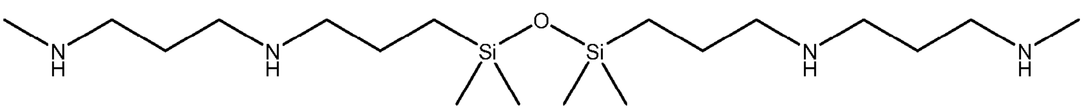

,

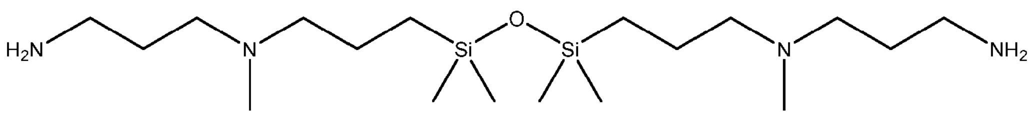

,

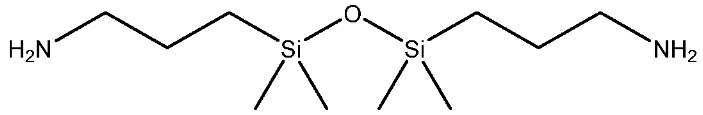

,

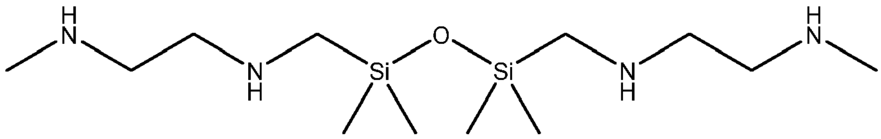

,

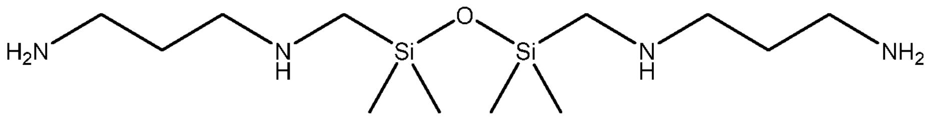

,

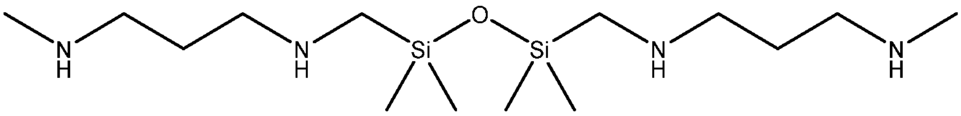

,

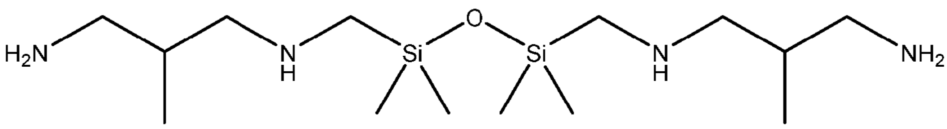

,

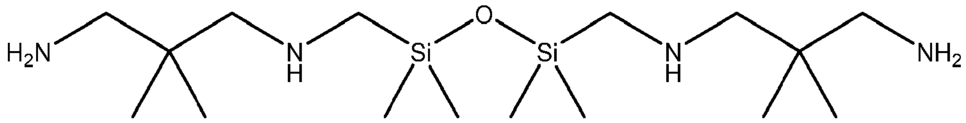

,

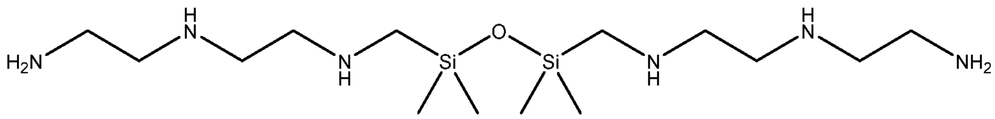

,

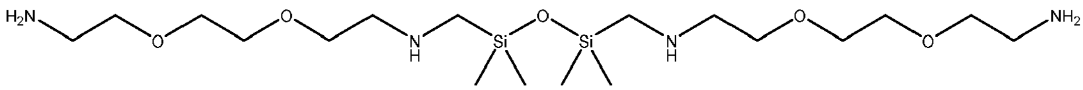

,

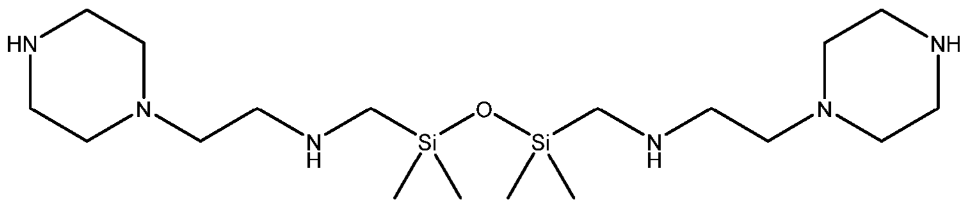

,

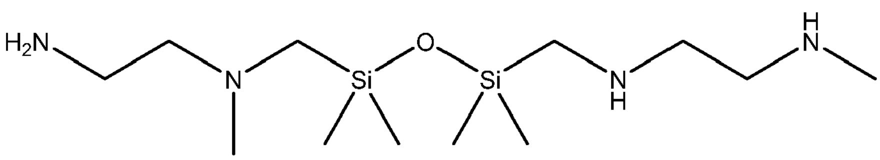

,

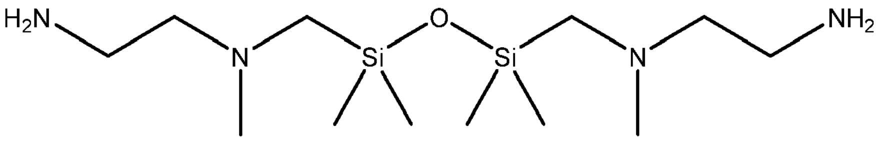

,

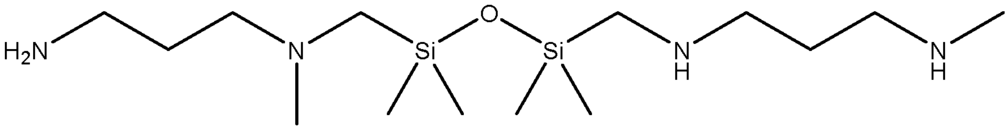

,

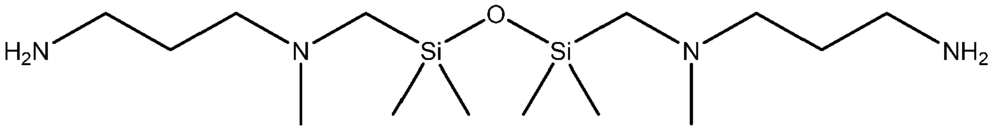

,

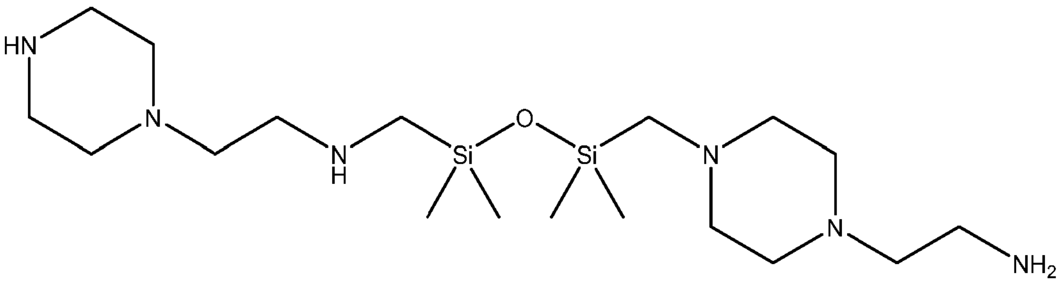

,

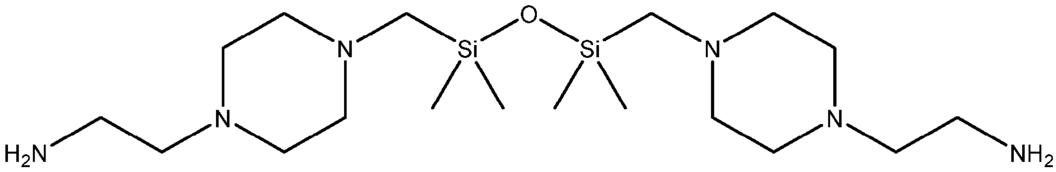

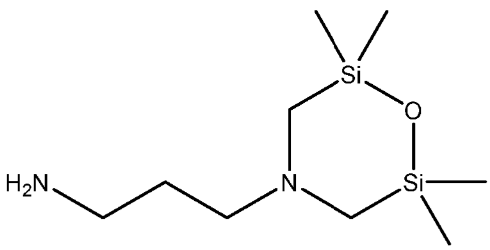

,

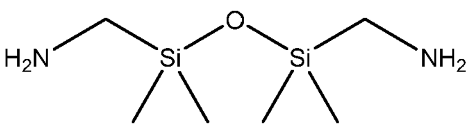

,

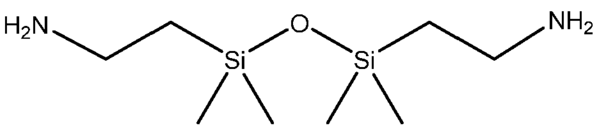

,

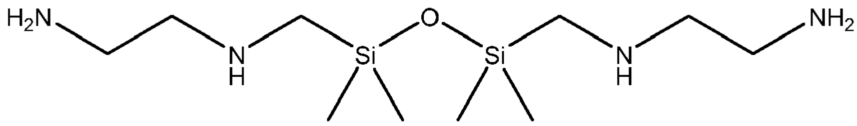

,

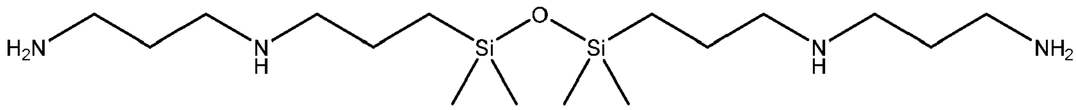

,

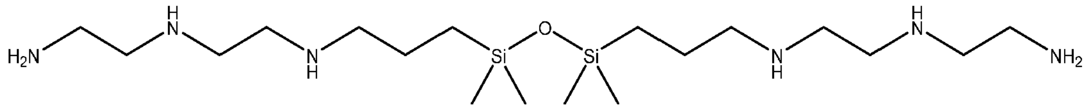

,

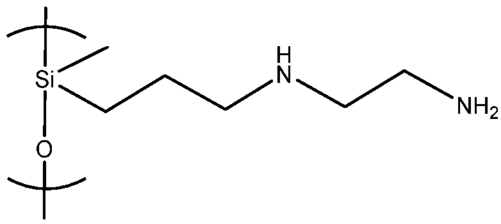

,

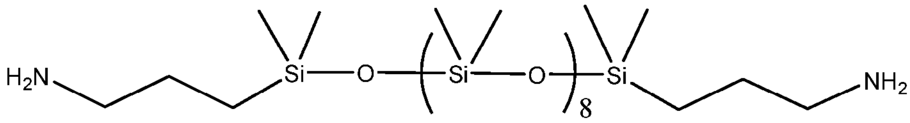

,

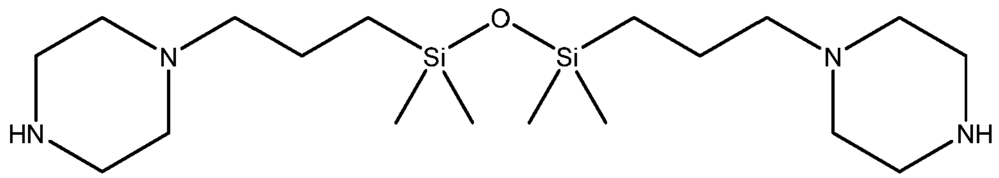

,

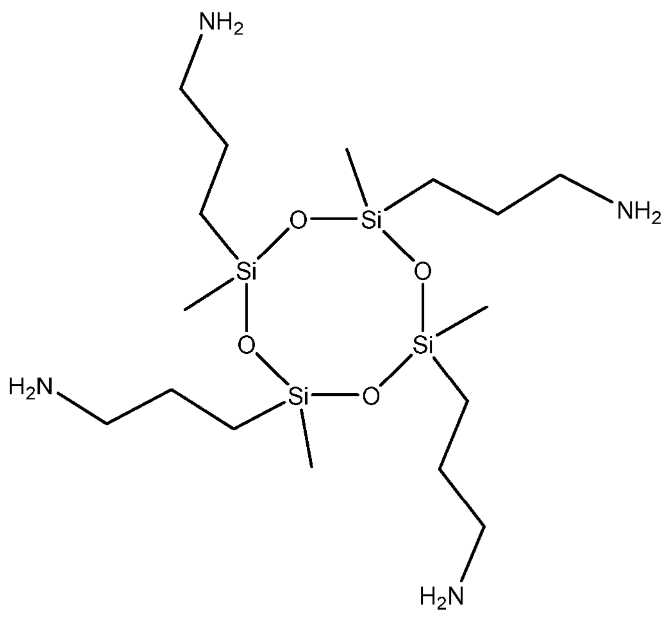

,

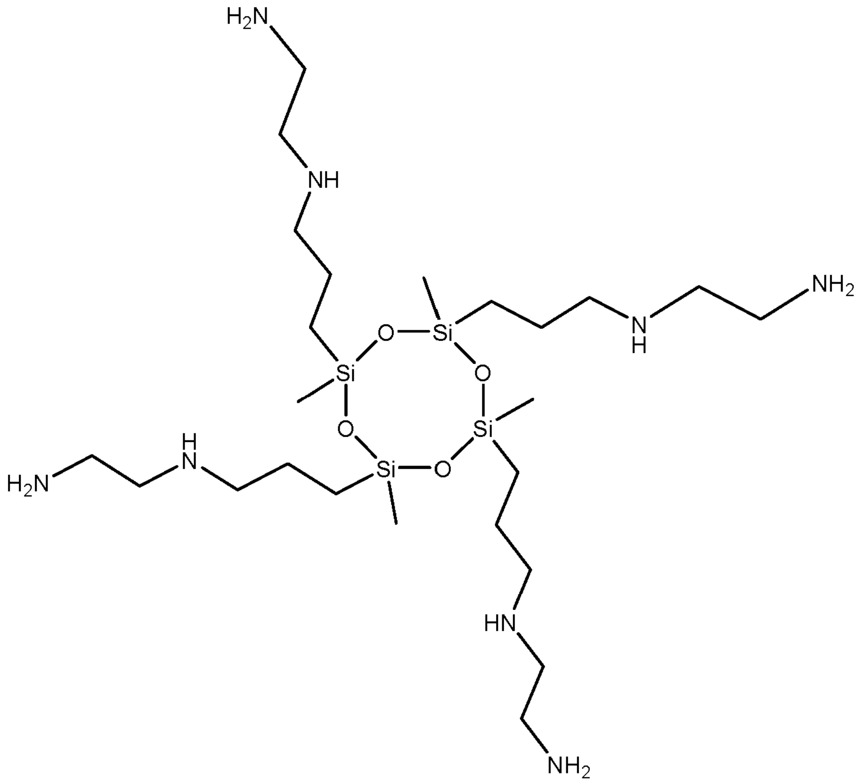

,

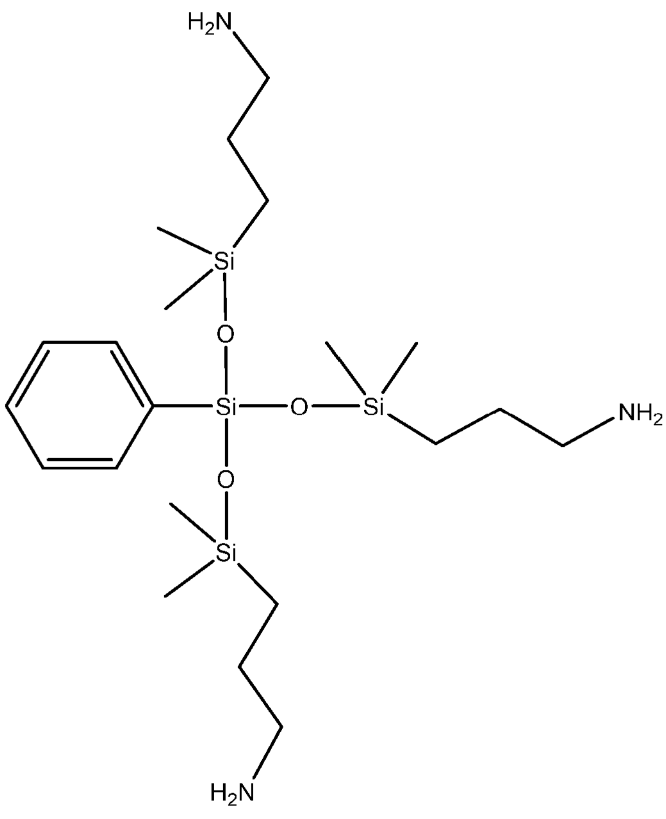

,

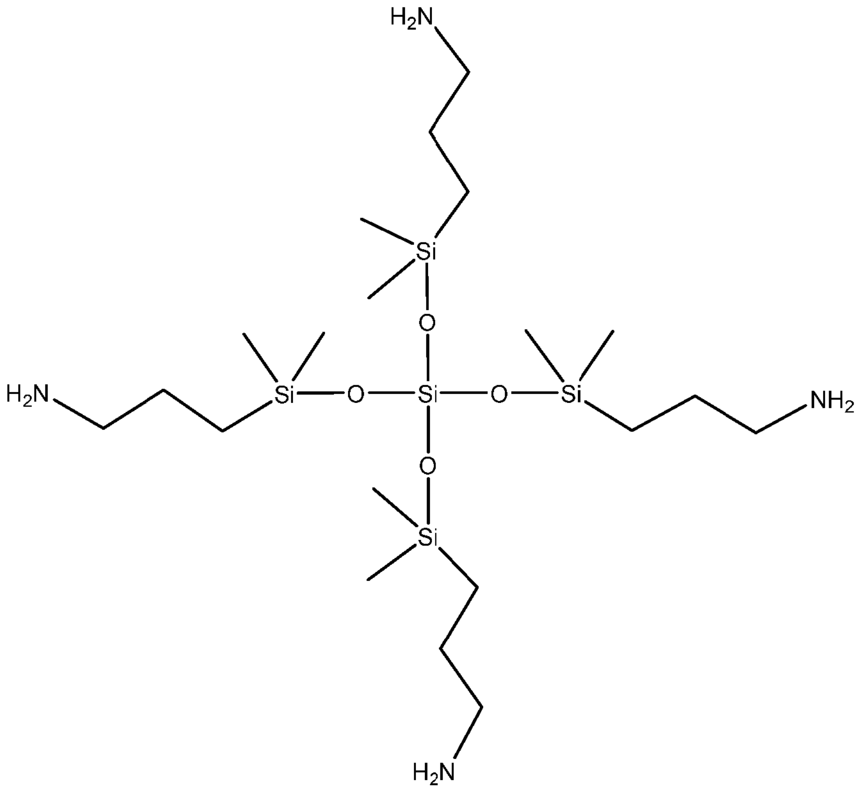

,

and

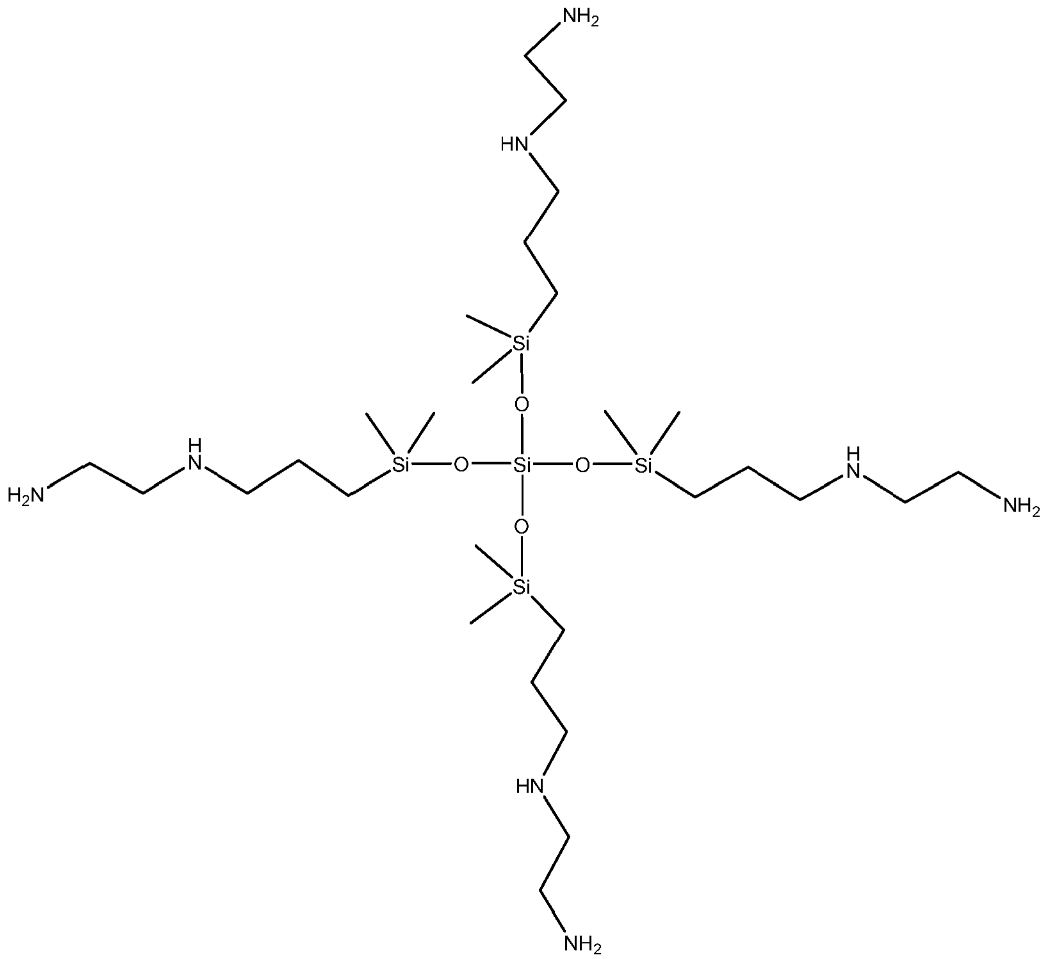

11. A sorbent system comprising the functionalized sorbent of any preceding embodiment.

12. A method of making a sorbent, the method comprising:

(I) forming a mixture comprising:

a sorbent precursor;
a crystal growth inhibitor;
optionally a solvent; and
optionally a non-solvent; and

(II) reacting the mixture;
wherein the sorbent has an average particle length ≤ 3 μm.

13. The method of the preceding embodiment, wherein the sorbent precursor comprises a MOF linker and a MOF metal or metal-containing cluster.

14. The method of any preceding embodiment, wherein the solvent comprises an aqueous solvent.

15. The method of any preceding embodiment, wherein the crystal growth inhibitor is selected from the group consisting of salicylic acid, 4-fluorosalicylic acid, 4,4'-biphenol, 2,2'-Bipyridine-5,5'-dicarboxylic acid (BPYDC), 2,2'-Bipyridine-5,5'-dimethanol (BPYDM), benzoic acids, biphenols, bipyridines, and combinations thereof.

16. A method of making a functionalized sorbent, the method comprising:

(I) forming a mixture comprising:

the sorbent prepared according to any preceding embodiment;

at least one functionalization ligand including an aminosilicone group;

optionally at least one functionalization ligand not including an aminosilicone group;

optionally a solvent; and

optionally a non-solvent; and

(II) functionalizing the sorbent.

17. A method of capturing at least one gas, the method comprising:

(I) receiving a gas source comprising the at least one gas at a functionalized sorbent, wherein the functionalized sorbent comprises:

a sorbent, wherein the sorbent has an average particle length ≤ 3 μm;
at least one functionalization ligand comprising an aminosilicone group; and

(II) capturing an amount of the at least one gas with the functionalized sorbent.

18. The method of the preceding embodiment, wherein the gas source is selected from the group consisting of air, flue gas, post-combustion gas, natural gas, syngas, carbon dioxide, carbon monoxide, water vapor, hydrogen, nitrogen, oxygen, methane, olefin gases, nitrogen oxides, sulfur dioxide, ammonia, hydrogen sulfide, and combinations thereof.

19. The method of any preceding embodiment, wherein the at least one gas is selected from the group consisting of air, flue gas, post-combustion gas, natural gas, syngas, carbon dioxide, carbon monoxide, water vapor, hydrogen, nitrogen, oxygen, methane, olefin gases, nitrogen oxides, sulfur dioxide, ammonia, hydrogen sulfide, and combinations thereof.

20. A method of collecting at least one gas from a gas source, the method comprising:

capturing the at least one gas according to the method of any preceding embodiment, and

(III) releasing the at least one gas from the functionalized sorbent.

## EXAMPLES

Without further elaboration, it is believed that one skilled in the art using the preceding description can utilize the present invention to its fullest extent. The following Examples are, therefore, to be construed as merely illustrative, and not limiting of the disclosure in any way whatsoever. The starting material for the following Examples may not have necessarily been prepared by a particular preparative run whose procedure is described in other Examples. It also is understood that any numerical range recited herein includes all values from the lower value to the upper value. For example, if a range is stated as 10-50, it is intended that values such as 12-30, 20-40, or 30-50, etc., are expressly enumerated in this specification. These are only examples of what is specifically intended, and all possible combinations of numerical values between and including the lowest value and the highest value enumerated are to be considered to be expressly stated in this application.

### Systems for Carbon Dioxide Capture Using Functionalized Sorbents and Water Management

### Example A1. Comparative Moisture Isotherms.

The $H_2O$ adsorption capacity of sorbents functionalized with AEAM, spermidine, a hybrid of spermine:AEAM=0.65:0.35 ("Hybrid Compound 1"), and a hybrid of spermine:AEAM=0.32:0.46 ("Hybrid Compound 2) as a function of relative humidity at 25°C measured using the DVS gravimetric method is shown in Figure 5. This figure illustrates that the moisture adsorption isotherm, and therefore the relative humidity at which the knee point occurs for

monolayer adsorption of $H_2O$, varies with changes to the chemical structure of the functionalized sorbent. As shown in Figure 5, all sorbents except AEAM have a moisture adsorption isotherm shape that most closely resembles type IV, including a flattened region leading up to the knee point corresponding to monolayer coverage and adsorption of $H_2O$ at approximately 30% relative humidity for the two hybrid compounds and approximately 35% for Spermidine.

Example A2. Moisture Adsorption Isotherms of Hybrid Compound 1.

The $H_2O$ adsorption capacity of Hybrid Compound 1 (spermine:AEAM=0.65:0.35) as a function of relative humidity at varying temperatures is shown in Figure 6. The $H_2O$ adsorption capacity of Hybrid Compound 1 (spermine:AEAM=0.65:0.35) as a function of $H_2O$ partial pressure (kPa) at varying temperatures measured using the DVS gravimetric method is shown in Figure 7. These figures illustrate that although the absolute H2O partial pressure varies, the shape of the moisture isotherms, and therefore the relative humidity at which the knee point occurs for monolayer adsorption of $H_2O$, stay approximately the same when the temperature changes.

Example A3. Adsorption Performance of Hybrid Compound 1.

The $CO_2$ and $H_2O$ adsorption performance of Hybrid Compound 1 (spermine:AEAM=0.65:0.35) as a function of relative humidity at 40°C under 4.5v% $CO_2$ measured using the DVS gravimetric method is shown in Figure 8. This figure suggests that $CO_2$ adsorption is sensitive to relative humidity. The knee point for monolayer adsorption of $H_2O$, as shown for Hybrid Compound 1 in Figure 5, appears to be a critical threshold. Since the DVS gravimetric method is based on measuring change in accumulated mass, the amount of individual $CO_2$ adsorption vs $H_2O$ adsorption cannot be accurately calculated due to the lack of differentiation of individual components in a binary system (e.g., $CO_2$ and $H_2O$ in this case). However, breakthrough test rigs and analyzers with individual sensors designated for $CO_2$ and $H_2O$ should be used to quantitatively evaluate discrete $CO_2$ and $H_2O$ adsorption.

Example A4. Adsorption Performances of Hybrid Compound 1 as a function of temperature, water content and relative humidity.

The $CO_2$ adsorption performance of Hybrid Compound 1 (spermine:AEAM=0.65:0.35) under 4.5v% $CO_2$ as a function of water pressure (kPa) at varying temperatures measured using the DVS gravimetric method is shown in Figure 9. The $H_2O$ adsorption capacity of Hybrid Compound 1 (spermine:AEAM=0.65:0.35) as a function of water pressure (kPa) at varying temperatures measured using the DVS gravimetric method is shown in Figure 10. The $CO_2$ adsorption performance of Hybrid Compound 1 (spermine:AEAM=0.65:0.35) as a function of relative humidity at varying temperatures measured using the DVS gravimetric method is shown in Figure 11. These figures illustrate that although the adsorption performance of Hybrid Compound 1 varies in relation to temperature and water pressure, the high performance can be maintained by modulating relative humidity through adjusting temperature and water content. These figures further suggest that $CO_2$ adsorption is sensitive to relative humidity. The knee point for monolayer adsorption of $H_2O$, as shown for Hybrid Compound 1 in Figure 5, appears to be a critical threshold. Similarly, breakthrough test rigs and analyzers with individual sensors designated for $CO_2$ and $H_2O$ should be used to quantitatively evaluate discrete $CO_2$ and $H_2O$ adsorption.

Example A5. Comparative Adsorption Capacities.

The $CO_2$ adsorption isotherms of Hybrid Compound 1 (spermine:AEAM=0.65:0.35) for dry $CO_2$ and wet $CO_2$ with 30% relative humidity at 40°C measured using the DVS gravimetric method is shown in Figure 12A. This figure illustrates that the adsorption capacity of Hybrid Compound 1 is increased under wet conditions, at 30% relative humidity, as compared to dry conditions.

The $CO_2$ adsorption of Hybrid Compound 3 (spermine:AEAM=0.69:0.23) for dry $CO_2$ and wet $CO_2$ with varying relative humidity at a DAC relevant condition of 25°C and 400ppmv $CO_2$ concentration measured using the break through test rig with individual $CO_2$ and $H_2O$ sensors is shown in Figure 12B. Also shown in Figure 12B is the isotherm of pure $H_2O$ adsorption of Hybrid Compound 3. This figure quantitatively illustrates that, at least for the testing condition relevant to DAC applications, (1) wet $CO_2$ leads to increased $CO_2$ adsorption with respect to dry $CO_2$, i.e., with relative humidity of 0%, (2) the amount of $CO_2$ adsorption is sensitive to the actual relative humidity and (3) $CO_2$ adsorption appears to be flatten out once a minimum relative humidity is reached, in alignment with the knee point for monolayer adsorption of $H_2O$, as shown for Hybrid Compound 3 in Figure 12B.

Exemplary systems for using functionalized chemisorbents in the presence of water to facilitate optimizing the adsorption and desorption of carbon dioxide by an adsorbent bed are described herein. The exemplary systems as described herein provide several advantages over conventional designs and processes, including, at least, increasing the

efficiency and performance of carbon dioxide adsorption and desorption due to the use of changes in temperature and/or water relative humidity within the adsorbent bed, changes in the functionalized sorbent within the adsorbent bed, and/or increasing the performance of the capture system due to the modulation of temperature and water relative humidity within one or more adsorption modules within the adsorbent bed based on the functionalized sorbent within the one or more adsorption modules.

Synthesis of Aminoalkyl-substituted Disiloxanes.

Example B1. Synthesis of aminomethyl-substituted disiloxane 1,3-bis(2-aminoethylaminomethyl)tetramethyldisiloxane with 4 eq. ethylenediamine.

Ethylenediamine (396 mL, 5.93 mol) was added to a 2L 3 neck round bottomed flask fitted with an addition funnel and reflux condenser. The flask was placed in an ice water bath and the head space was purged with $N_2$. Chloromethyldimethylethoxysilane (240 mL, 1.48 mol) was added to the addition funnel and added dropwise to the ethylenediamine over 1 hour during which the reaction exotherms to 90-100°C. After an additional 1 hour the reaction was judged complete by $^1$H NMR at which point 300 mL of water was added dropwise to the reaction mixture over 30 minutes, resulting in an exotherm. The reaction mixture was allowed to cool to room temperature while stirring at which point 300 mL of chloroform was added dropwise. The resulting mixture was stirred vigorously for 1 hour after which the organic layer was isolated and the aqueous layer was extracted with a minimum volume of chloroform. The combined organic layers were dried under reduced pressure at room temperature. The resulting material was then purified by vacuum distillation. A first fraction was collected over 40-80°C and 380 mTorr containing primarily cyclic byproduct and some product. The remaining material (167g, 81% yield) was deemed to be >75% pure by $^1$H NMR spectroscopy. $^1$H NMR ($CDCl_3$) $\delta$: 2.80 (t, 4H, $H_2NCH_2CH_2$), 2.65 (t, 4H, $H_2NCH_2$), 2.05 (s, 4H, $SiCH_2$), 1.30 (br s, 6H, NH & $NH_2$), 0.12 (s, 12H, $SiCH_3$).

Example B2. Synthesis of aminomethyl-substituted disiloxane 1,3-bis(3-aminopropylaminomethyl)tetramethyldisiloxane.

The same procedure for Example B1 was followed but in a 250 mL 3 neck flask using 1,3-propanediamine (52 mL, 0.62 mol), chloromethyldimethylethoxysilane (25 mL, 0.15 mol), 40 mL of water, and 40 mL of chloroform. The resulting material was then purified by vacuum distillation. A first fraction was collected over 40-65°C containing primarily cyclic byproduct and some product. The remaining material (17.6g, 74% yield) was deemed to be >95% pure by $^1$H NMR spectroscopy. $^1$H NMR ($CDCl_3$) $\delta$: 2.75 (t, 4H, $H_2NCH_2CH_2CH_2$), 2.65 (t, 4H, $H_2NCH_2$), 2.05 (s, 4H, $SiCH_2$), 1.60 (mult, 4H, $H_2NCH_2CH_2$), 1.30 (br s, 6H, NH & $NH_2$), 0.12 (s, 12H, $SiCH_3$).

Example B3. Synthesis of aminomethyl-substituted disiloxane 1,3-bis(2-methyl-3-aminopropylaminomethyl)tetramethyldisiloxane.

The same procedure for Example B1 was followed but in a 15 mL flask using 2-methyl-1,3-propanediamine (2.84 mL, 0.028 mol), chloromethyldimethylethoxysilane (1.14 mL, 0.0071 mol), 2 mL of water, and 2 mL of chloroform. The resulting material was then purified by vacuum distillation. A first fraction was collected at 110°C containing byproduct and some product. The remaining material (0.60g, 51% yield) was deemed to be >95% pure by $^1$H NMR spectroscopy. $^1$H NMR ($CDCl_3$) $\delta$: 2.8-2.5 (overlapping mult, 8H, $H_2NCH_2CH(CH_3)CH_2$), 2.05 (mult, 4H, $SiCH_2$), 1.75 (mult, 2H, $H_2NCH_2CH$), 1.95 (br s, 6H, NH & $NH_2$), 0.90 (d, 6H, $H_2NCH_2CHCH_3$) 0.12 (s, 12H, $SiCH_3$).

Example B4. Synthesis of aminomethyl-substituted disiloxane 1,3-bis(2,2-dimethyl-3-aminopropylaminomethyl)tetramethyldisiloxane.

The same procedure for Example B1 was followed but in a 15 mL flask using 2,2-dimethyl-1,3-propanediamine (3.41 mL, 0.028 mol), chloromethyldimethylethoxysilane (1.12 mL, 0.0071 mol), 2 mL of water, and 2 mL of chloroform. The resulting material was then purified by vacuum distillation. A first fraction was collected at 80-90°C containing byproduct and some product. The remaining material (0.95g, 74% yield) was deemed to be >95% pure by $^1$H NMR spectroscopy. $^1$H NMR ($CDCl_3$) $\delta$: 3.10 (br s, 6H, NH & $NH_2$), 2.67 (s, 4H, $H_2NCH_2$), 2.60 (s, 4H, $H_2NCH_2C(CH_3)_2CH_2$), 2.15 (s, 4H, $SiCH_2$), 0.95 (s, 12H, $H_2NCH_2C(CH_3)_2$), 0.19 (s, 12H, $SiCH_3$).

Example B5. Synthesis of aminomethyl-substituted disiloxane 1,3-bis(2-aminoethylaminomethyl)tetramethyldisiloxane with 8 eq. ethylenediamine.

Ethylenediamine (793 mL, 11.9 mol) was added to a 2L 3 neck round bottomed flask fitted with an addition funnel

and reflux condenser. The flask was placed in an ice water bath and the head space was purged with $N_2$. Chloromethyldimethylethoxysilane (240 mL, 1.48 mol) was added to the addition funnel and added dropwise to the ethylenediamine over 1 hour during which the reaction exotherms to 90-100°C. After an additional 1 hour the reaction was judged complete by $^1$H NMR at which point 300 mL of water was added dropwise to the reaction mixture over 30 minutes, resulting in an exotherm. The reaction mixture was allowed to cool to room temperature while stirring at which point 300 mL of chloroform was added dropwise. The resulting mixture was stirred vigorously for 1 hour after which the organic layer was isolated, and the aqueous layer was extracted with a minimum volume of chloroform. The combined organic layers were dried under reduced pressure at room temperature. The resulting material was then purified by vacuum distillation. A first fraction was collected over 40-80°C and 380 mTorr containing primarily cyclic byproduct and some product. The remaining material (326g, 79% yield) was deemed to be >90% pure by $^1$H NMR spectroscopy. $^1$H NMR ($CDCl_3$) δ: 2.80 (t, 4H, $H_2NCH_2CH_2$), 2.65 (t, 4H, $H_2NCH_2$), 2.05 (s, 4H, $SiCH_2$), 1.30 (br s, 6H, NH & $NH_2$), 0.12 (s, 12H, $SiCH_3$).

Example B6. Synthesis of aminomethyl-substituted disiloxane 1,3-bis(2-aminoethylaminomethyl)tetramethyldisiloxane with 10 eq. ethylenediamine.

Ethylenediamine (400 mL, 5.99 mol) was added to a 2L 3 neck round bottomed flask fitted with an addition funnel and reflux condenser. The flask was placed in an ice water bath and the head space was purged with $N_2$. Chloromethyldimethylethoxysilane (97 mL, 0.59 mol) was added to the addition funnel and added dropwise to the ethylenediamine over 1 hour during which the reaction exotherms to 90-100°C. After an additional 1 hour the reaction was judged complete by $^1$H NMR at which point 300 mL of water was added dropwise to the reaction mixture over 30 minutes, resulting in an exotherm. The reaction mixture was allowed to cool to room temperature while stirring at which point 300 mL of chloroform was added dropwise. The resulting mixture was stirred vigorously for 1 hour after which the organic layer was isolated, and the aqueous layer was extracted with a minimum volume of chloroform. The combined organic layers were dried under reduced pressure at room temperature. The resulting material was then purified by vacuum distillation. A first fraction was collected over 40-80°C and 380 mTorr containing primarily cyclic byproduct and some product. The remaining material (117g, 70% yield) was deemed to be >95% pure by $^1$H NMR spectroscopy. $^1$H NMR ($CDCl_3$) δ: 2.80 (t, 4H, $H_2NCH_2CH_2$), 2.65 (t, 4H, $H_2NCH_2$), 2.05 (s, 4H, $SiCH_2$), 1.30 (br s, 6H, NH & $NH_2$), 0.12 (s, 12H, $SiCH_3$).

Comparative Example B1. Attempted synthesis of aminomethyl-substituted disiloxane 1,3-bis(2-aminoethylaminomethyl)tetramethyldisiloxane from 1,3-bis(chloromethyl)tetramethyldisiloxane.

Ethylenediamine (13 g, 0.216 mol, 10 equiv) was added to a 50 ml 3-neck round bottom flask equipped with a nitrogen blanket, magnetic stir bar, condenser, and an addition funnel. It was then heated to an oil set of 110°C in an oil bath. Once the temperature in the oil bath stabilized 1,3-bis(chloromethyl)-1,1,3,3-tetramethyldisiloxane (5 g, 0.0216 mol) was added dropwise over a 2 hour period. The reaction was allowed to stir overnight at temperature. The reaction was cooled $^1$H NMR analysis was performed to check that the reaction was complete. The reaction mixture was then poured into a 250 ml separatory funnel and partitioned between chloroform and 10% NaOH, washed 3 times with DI water, once with saturated sodium chloride then dried over anhydrous potassium chloride. After filtration the chloroform was stripped on a rotary evaporator yielding a clear, colorless viscous liquid. $^1$H NMR analysis showed a mixture of products containing the cyclic byproduct 2,2,6,6-tetramethyl-1-oxa-4-aza-2,6-disilacyclohexane-4-ethanamine. The desired 1,3-bis(2-aminoethylaminomethyl)tetramethyldisiloxane was not formed.

Comparative Example B2. Attempted synthesis of aminomethyl-substituted disiloxane 1,3-bis(2-aminoethylaminomethyl)tetramethyldisiloxane from 1,3-bis(iodomethyl)tetramethyldisiloxane.

Ethylenediamine (13 g, 0.216 mol, 10 equiv) was added to a 50 ml 3-neck round bottom flask equipped with a nitrogen blanket, magnetic stir bar, condenser, and an addition funnel. 1,3-bis(iodomethyl)-1,1,3,3-tetramethyldisiloxane (10.16 g, 0.0216 mol) was added dropwise over a 2 hour period. The reaction was allowed to stir overnight at room temperature. $^1$H NMR analysis was performed to check that the reaction was complete. The reaction mixture was then poured into a 250 ml separatory funnel and partitioned between chloroform and 10% NaOH, washed 3 times with DI water, once with saturated sodium chloride then dried over anhydrous potassium chloride. After filtration the chloroform was stripped on a rotary evaporator yielding a clear, colorless viscous liquid. $^1$H NMR analysis showed clean formation of the cyclic byproduct 2,2,6,6-tetramethyl-1-oxa-4-aza-2,6-disilacyclohexane-4-ethanamine. The desired 1,3-bis(2-aminoethylaminomethyl)tetramethyldisiloxane was not formed. $^1$H NMR ($CDCl_3$) of 2,2,6,6-tetramethyl-1-oxa-4-aza-2,6-disilacyclohexane-4-ethanamine, δ: 2.70 (t, 2H, $CH_2$), 2.40 (t, 2H, $CH_2$), 1.75 (overlapping s, 4H + 2H, $SiCH_2NCH_2Si$ + $H_2N$), 0.10 (s, 12H, $SiCH_3$).

Solid Sorbent Materials

In these examples, MOF-274 [$Mg_2$(dobpdc)] is used as an illustrative example. However, the present examples are not limited to MOF-274, and are broadly applicable to any other material or method in accordance with the present disclosure.

Characterization Techniques.

Particle size

Scanning electron microscopy (SEM) is used to characterize average particle shapes and sizes. Aspect ratio is defined as the ratio of average to average length.

$CO_2$ and $H_2O$ uptake by dynamic vapor sorption analyzer (DVS) gravimetric method.

Performance of $CO_2$ and $H_2O$ adsorption was studied using dynamic vapor sorption analyzer (DVS) gravimetric method. In the experiments presented in this work, the gases used are $CO_2$ and water, respectively. The DVS Vacuum analyzer is designed to accurately measure a sample's change in mass as it adsorbs precisely controlled concentrations of water and or gas molecules. The sample is placed in a sample pan hung from a microbalance (an empty pan is usually hung on the other side of the microbalance as a 'reference'). The DVS Vacuum controls and measures sorbate entry and exit flows simultaneously while recording changes in sample mass. The main instrument, the microbalance (UltraBalance™) is housed in a precisely controlled temperature-controlled enclosure (referred to as an incubator). This ensures a highly stable instrument baseline and accurate vapor generation control to occur at the experimental temperature.

As shown below, a two-cycle, sequential adsorption testing protocol is developed. At the beginning of each test, the sorbent material of interest is subjected to an activation (or regeneration) step at 120°C for 30-90 minutes under a vacuum of less than $10^{-5}$ mbar. The set partial pressure of water is introduced under vacuum without the interference of a carrier gas at a given temperature. The sample's weight is measured directly and continuously using Surface Measurement Systems' Ultra precision microbalance with a resolution of 0.1 μg. All sorption measurements in this work were done using mass equilibrium mode where the mass equilibrium criterion is set as the change in mass per minute (dm/dt of <0.0035).

$CO_2$ and $H_2O$ uptake by break through test rig.

Performance of $CO_2$ and $H_2O$ adsorption can also be studied using home-made breakthrough test rigs. The test rigs have a sample chamber that houses testing samples either in a sorbent powder form or a coated form (i.e., sorbent-binder film on a substrate), and separate and calibrated $CO_2$ and relative humidity (RH) sensors located at both the gas inlet before the sample chamber and gas outlet after the sample chamber. The test rigs can measure individual breakthrough curves for $CO_2$ and $H_2O$ under either dry or wet $CO_2$ conditions with pre-set RH levels. Uptake can be calculated by integrating the break-through curve over time.

$CO_2$ and $H_2O$ uptake and kinetics.

$CO_2$ uptake or capacity is found as adsorbed $CO_2$ in gram per gram of sorbent ($gCO_2$/gSorbent). The $CO_2$ uptake can be generally considered as exponential growth over time, which can be expressed as $\frac{Q_{max}-Q_{(t)}}{Q_{max}} = e^{-kt}$ where $Q_{max}$ and $Q_{(t)}$ is equilibrium uptake and uptake at a given adsorption time of *t (min),* respectively, and *k* is the characteristics of the exponential growth with a unit of 1/min. The term of *k* is used to compare kinetics or rate of $CO_2$ uptake, i.e. the greater the *k,* the fast the $CO_2$ uptake kinetics.

Example C1. Generic procedure for MOF and sorbent synthesis.

First, MOF is synthesized via an aqueous prep and washed thrice with water and thrice with isopropyl alcohol. The reaction can be carried out using non-aqueous solvents such as dimethylformamide (DMF)/methanol (MeOH) mixtures, aqueous solvents or both as disclosed in PCT/US2022/082243. Then, the material is dried via vacuum filtration to obtain a -70-75% solvated material. To prepare the material for loading, it is desolvated in a 120 °C vacuum oven overnight to reduce the alcohol content to 0.5-1 equivalents of isopropyl alcohol (IPA) per metal site to protect the open metal site from oxidation but also remove excess solvent from the pores of the MOF. By determining how much leftover solvent is still present in the MOF via $^1$H NMR, as shown in Figure 18 (e.g., $Mg_2(dobpdc)_1(alcohol)_x$), an accurate molar amount of MOF can be determined. Therefore, by adding 1-4 equivalents of amines in a nonpolar solvent, a material can be formed with the composition of $Mg_2(dobpdc)_1(amine)_x$. Shown in Figure 19 is an SEM image of exemplary MOF-274 (sample ID# A2111) made according to the standard aqueous procedure.

Example C2. General method for analyzing amine content via NMR.

To digest the amine-appended MOFs, 10 mg of material was added to a vial along with 20 μL of 35% DCl in $D_2O$,

200 μL of $D_2O$, and 600 μL of DMSO-$d_6$. The vial was sonicated to dissolve the framework and $^1H$ NMR was performed. Loadings were determined by comparing $^1H$ NMR integrations of framework ligand peaks ($H_4$dobpdc) to the amine peaks.

Example C3. Particle size reduction.

The particle size or the length of rod crystals can be reduced by many options, including, but not limited to, mechanical grinding such as mortar and pestling, using microfluidizer, dry or wet milling or through chemical means such as incorporation of crystal-growth inhibitors. Table 1 summarizes particle sizes and aspect ratios of MOF-274 prepared according to some embodiments.

Table 1. Average particle sizes and aspect ratio of MOF-274 made with and without crystal-growth inhibitors.

| MOF-274 | Crystal-growth inhibitor | Ave. Particle size length (μm) | Ave. Particle size width (μm) | Aspect ratio (width /length) |
|---|---|---|---|---|
| A21 | No | 2.17 | 0.36 | 0.17 |
| A2111 | No | 1.93 | 0.25 | 0.13 |
| A2173 | No | 2.24 | 0.31 | 0.14 |
| A285B SA | Salicylic acid | 0.17 | 0.15 | 0.87 |
| A288B FSA | 4-Fluoro-salicylic acid | 0.31 | 0.29 | 0.92 |
| 0.13 wt% BPYDC | 2,2'-Bipyridine-5,5'-dicarboxylic acid | 0.61 | 0.16 | 0.26 |
| 2.29wt% BPYDC | 2,2'-Bipyridine-5,5'-dicarboxylic acid | 0.43 | 0.11 | 0.26 |
| 24.78wt% BPYDC | 2,2'-Bipyridine-5,5'-dicarboxylic acid | 0.27 | 0.12 | 0.44 |
| 1.17wt% BPYDM | 2,2'-Bipyridine-5,5'-dimethanol | 0.89 | 0.14 | 0.16 |
| 3.43wt% BPYDM | 2,2'-Bipyridine-5,5'-dimethanol | 0.35 | 0.10 | 0.29 |
| 6.80wt% BPYDM | 2,2'-Bipyridine-5,5'-dimethanol | 1.47 | 0.10 | 0.07 |
| 2.00wt% BP | 4,4'-biphenol | 0.45 | 0.14 | 0.31 |
| 9.24wt% BP | 4,4'-biphenol | 0.12 | 0.12 | 1.00 |

Example C4. General procedure for small size MOF-274 synthesis using crystal-growth inhibitors.

$Mg_2$(dobpdc) was synthesized by first dissolving x moles of $H_4$dobpdc, y moles of a synthetic crystal-growth inhibitor, and (x)*4+(y)*2 moles of NaOH in water by heating to 60 °C. Exemplary synthetic crystal-growth inhibitors include, but are not limited to, salicylic acid (SA), 4-fluorosalicylic acid (FSA), 4,4'-biphenol (BP), 2,2'-Bipyridine-5,5'-dicarboxylic acid (BPYDC) and 2,2'-Bipyridine-5,5'-dimethanol (BPYDM). The moles of crystal-growth inhibitor can range from 0.1-50 mol % with respect to 99.9-50 mol% of $H_4$dobpdc. To the deprotonated solution of linker and crystal-growth inhibitor, an aqueous solution of $Mg^{2+}$ salt, where the counter-anion is either $NO_3^-$, $Cl^-$, $Br^-$, $SO_4^{-2}$, $OAc^-$, $O^{-2}$, Otf, is added into the solution. Addition of the $Mg^{2+}$ salt can occur rapidly (e.g. <1 min) or dropwise over an extended period of time (e.g. > 1hr). The heat is increased to 97° C and refluxed under $N_2$ for 12-16 hours. The white precipitate is washed thrice with water and thrice with isopropyl alcohol and stored solvated for further use.

Example C5. Exemplary procedure for small size MOF-274 synthesis using salicylic acid as a crystal-growth inhibitor.

$Mg_2$(dobpdc) was prepared at a 300 mL scale. First, the linker, crystal-growth inhibitor, and base were added to a 500 mL round bottom flask and heated to dissolve in water. In this example, sodium hydroxide (76 mmol, 3.04 g), $H_4$dobpdc (18 mmol, 4.94 g) and salicylic acid (2 mmol, 0.276 g) were dissolved in water (220 mL) in the flask by stirring and heating to 60 °C under $N_2$ until the solution became clear. Next, $Mg(NO_3)_2$ hexahydrate (45 mmol, 11.54 g) was dissolved in 80 mL of water in a separate vessel and quickly added to the deprotonated linker solution to precipitate out MOF. The mixture was reacted in an open flask under ambient pressure and gentle reflux at about 97 °C for anywhere from 12-16 hours. The reaction produced MOF compound $Mg_2$(dobpdc)(salicylate)$_x$, which was subsequently washed thrice with water and thrice with isopropanol and stored in alcohol. For surface area measurements, the material was activated at 250 °C to obtain the highest uptake. The reaction produced between 4.2-4.7 g (72-81% yield) of $Mg_2$(dobpdc)(salicylate)$_x$ for each of the separate batches. Materials may be desolvated at 85 °C and loaded normally as regular MOF-274. Shown in Figure 20 are SEM images of exemplary MOF-274 made using salicylic acid (left) and fluoro-salicylic acid (right) as crystal-growth

inhibitors.

Example C6. Exemplary procedure for small size MOF-274 synthesis using 4,4'-biphenol as a crystal-growth inhibitor.

$Mg_2$(dobpdc) was prepared at a 20 mL scale. First, the linker, crystal-growth inhibitor, and base were added to a 20 mL scintillation vial and heated to dissolve in water. In this example, sodium hydroxide (4 mmol, 0.160 g), $H_4$dobpdc (0.9 mmol, 0.247 g) and 4,4'-biphenol (0.1 mmol, 0.019 g) were dissolved in water (10 mL) in the vial by stirring and heating to 60 °C until the solution became clear. Next, $Mg(NO_3)_2$ hexahydrate (2 mmol, 0.512 g) was dissolved in 5 mL of water in a separate vessel and quickly added to the deprotonated linker solution to precipitate out MOF. The mixture was reacted in a vial under ambient pressure and gentle reflux at about 97 °C for anywhere from 12-16 hours. The reaction produced MOF compound $Mg_2$(dobpdc)$(BP)_x$, which was subsequently washed thrice with water and thrice with isopropanol and stored in alcohol. For surface area measurements, the material was activated at 250 °C to obtain the highest uptake. The reaction produced between 37-72% yield of $Mg_2$(dobpdc)$(BP)_x$ based on the amount of inhibitor used. Materials may be desolvated at 85 °C and loaded normally as regular MOF-274. Shown in Figure 21 are powder X-ray diffraction spectra of MOF-274 synthesized using 4,4'-biphenol as crystal-growth inhibitor whereby the MOF-274 phase is retained at 50 mol% input of BP. Incorporation of 4,4'-biphenol clearly reduces particle size as shown in Figure 22.

| Input Molar Ratio BP:$H_4$dobpdc | Yield % | Wt % BP:$H_4$dopbdc via NMR digest |
|---|---|---|
| 0.05 | 71.6 | 0 |
| 0.10 | 67.8 | 0.34 % |
| 0.25 | 61.6 | 2.00% |
| 0.35 | 54.7 | 2.00% |
| 0.50 | 36.2 | 9.24 % |
| 0.75 | 38.2 | Unable to be determined |

Example C7. Exemplary procedure for small size MOF-274 synthesis using BPYDC as a crystal-growth inhibitor.

$Mg_2$(dobpdc) was prepared at a 20 mL scale. First, the linker, crystal-growth inhibitor, and base were added to a 20 mL scintillation vial and heated to dissolve in water. In this example, sodium hydroxide (4 mmol, 0.160 g), $H_4$dobpdc (0.9 mmol, 0.247 g) and 2,2'-bipyridine-5,5'-dicarboxylic acid (0.1 mmol, 0.024 g) were dissolved in water (10 mL) in the vial by stirring and heating to 60 °C until the solution became clear. Next, $Mg(NO_3)_2$ hexahydrate (2 mmol, 0.512 g) was dissolved in 5 mL of water in a separate vessel and quickly added to the deprotonated linker solution to precipitate out MOF. The mixture was reacted in a vial under ambient pressure and gentle reflux at about 97 °C for anywhere from 12-16 hours. The reaction produced MOF compound $Mg_2$(dobpdc)$(BPYDC)_x$, which was subsequently washed thrice with water and thrice with isopropanol and stored in alcohol. For surface area measurements, the material was activated at 250 °C to obtain the highest uptake. The reaction produced between 68-74% yield of $Mg_2$(dobpdc)$(BPYDC)_x$ based on the amount of inhibitor used. Materials may be desolvated at 85 °C and loaded normally as regular MOF-274. Shown in Figure 23 are powder X-ray diffraction spectra of MOF-274 synthesized using 2,2'-bipyridine-5,5'-dicarboxylic acid (BPYDC) as crystal-growth inhibitor. The MOF-274 phase is retained with up to 50 mol% input of BPYDC. Incorporation of BPYDC clearly reduces particle size as shown in Figure 24.

| Input Molar Ratio BPYDC:$H_4$dobpdc | Yield % | Wt % BPYDC:$H_4$dopbdc via NMR digest |
|---|---|---|
| 0.05 | 73.5 | 0.13 % |
| 0.10 | 78.2 | 0.39 % |
| 0.25 | 76.2 | 2.29% |
| 0.35 | 79.6 | 7.36% |
| 0.50 | 64.1 | 24.78 % |
| 0.75 | 67.7 | 66.12 % |

Example C8. Exemplary procedure for small size MOF-274 synthesis using BPYDM as a crystal-growth inhibitor.

$Mg_2$(dobpdc) was prepared at a 20 mL scale. First, the linker, crystal-growth inhibitor, and base were added to a 20 mL scintillation vial and heated to dissolve in water. In this example, sodium hydroxide (4 mmol, 0.160 g), $H_4$dobpdc (0.9 mmol, 0.247 g) and 2,2'-bipyridine-5,5'-dimethanol (0.1 mmol, 0.022 g) were dissolved in water (10 mL) in the vial by stirring and heating to 60 °C until the solution became clear. Next, $Mg(NO_3)_2$ hexahydrate (2 mmol, 0.512 g) was dissolved in 5 mL of water in a separate vessel and quickly added to the deprotonated linker solution to precipitate out MOF. The mixture was reacted in a vial under ambient pressure and gentle reflux at about 97 °C for anywhere from 12-16 hours. The reaction produced MOF compound $Mg_2$(dobpdc)$(BPYDM)_x$, which was subsequently washed thrice with water and thrice with isopropanol and stored in alcohol. For surface area measurements, the material was activated at 250 °C to obtain the highest uptake. The reaction produced between 53-81% yield of $Mg_2$(dobpdc)$(BPYDM)_x$ based on the amount of inhibitor used. Shown in Figure 25 are powder X-ray diffraction spectra of MOF-274 synthesized using 2,2'-bipyridine-5,5'-dimethanol (BPYDM) as a crystal-growth inhibitor. Particle length of MOF-274 reduces initially as incorporation of BPYDM increases. However, further increasing BPYDM loading leads to increased particle length and decreased aspect ratio as shown in Figure 26.

| Input Molar Ratio BPYDM:$H_4$dobpdc | Yield % | Wt % BPYDM:$H_4$dopbdc via NMR digest |
|---|---|---|
| 0.05 | 81.2 | 1.17 % |
| 0.10 | 76.6 | 1.36 % |
| 0.25 | 77.0 | 3.43% |
| 0.35 | 77.8 | 6.80 % |
| 0.50 | 67.8 | 6.63 % |
| 0.75 | 52.9 | 6.11 % |

Example C9. Bare MOF examples: Improving kinetics of $CO_2$ uptake.

Comparative example-1 (Comparative-1): a bare MOF sample with an ID of A2173 was prepared using aqueous solvent ($H_2O$) following the general procedure described in Example C1.

Comparative example-2 (Comparative-2): a bare MOF sample with an ID of A315B was prepared following the general procedure described in Example C5 but using DMF, a non-aqueous solvent.

Inventive example-1 (Inventive-1): a bare MOF sample with an ID of A2177 was prepared using aqueous solvent ($H_2O$) following the general procedure described in Example C1.

Inventive example-2 (Inventive-2): a bare MOF sample with an ID of A316 was prepared following the general procedure described in Example C5 but using salicylic acid (SA) as the crystal-growth inhibitor and an aqueous solvent ($H_2O$).

Inventive example-3 (Inventive-3): a bare MOF sample with an ID of A39C was prepared following the general procedure described in Example C5 but using salicylic acid (SA) as the crystal-growth inhibitor and an aqueous solvent ($H_2O$).

**Error! Reference source not found.** summarizes synthesis details, particle sizes, aspect ratio and $CO_2$ uptake performance measured using the DVS gravimetric method under dry $CO_2$ with a concentration of 4.5v%. The combination of reduced particle size, increased aspect ratio and aqueous MOF synthesis clearly leads to MOF with significantly improved $CO_2$ uptake kinetics.

Table 2. MOF synthesis details, particle sizes, aspect ratio and $CO_2$ performance.

| MOF sample | Examples | Crystal growth inhibitor | Reaction solvent | Length (μm) | Width (μm) | Aspect ratio | $CO_2$ uptake (g/g) | $CO_2$ kinetics (*k*) |
|---|---|---|---|---|---|---|---|---|
| A2173 | Comparative-1 | No | $H_2O$ | 2.24 | 0.31 | 0.14 | 0.030 | 0.56 |
| A315B | Comparative-2 | SA | DMF | 0.52 | 0.19 | 0.38 | 0.048 | 1.50 |
| A2177 | Inventive-1 | No | $H_2O$ | 0.53 | 0.13 | 0.25 | 0.051 | 1.96 |
| A316 | Inventive-2 | SA | $H_2O$ | 0.44 | 0.14 | 0.31 | 0.048 | 2.51 |

(continued)

| MOF sample | Examples | Crystal growth inhibitor | Reaction solvent | Length (μm) | Width (μm) | Aspect ratio | $CO_2$ uptake (g/g) | $CO_2$ kinetics (*k*) |
|---|---|---|---|---|---|---|---|---|
| A39C | Inventive-3 | SA | $H_2O$ | 0.37 | 0.15 | 0.40 | 0.044 | 3.34 |

Example C10. Sorbent examples: Improving kinetics of $CO_2$ uptake.

Aqueous synthesized MOF-274 [$Mg_2$(dobpdc)] is used as an illustrative example. Exemplary sorbent materials are MOF-274 synthesized using aqueous solvent and further functionalized with hybrid amines consisting of spermine and AEAM in accordance with the present disclosure and as disclosed in PCT/US2023/060396 and PCT/US2023/021542. Shown in Figure 27 are chemical structures of spermine and some exemplary aminosilicones. Chemical structures of additional aminosilicones can be found in the present disclosure and in PCT/US2023/060396 and PCT/US2023/021542. The MOF-274 as synthesized following the general procedure as described in Example C1, generally including a hexagonal channel, has a narrow and long rod shape with a length of 1 to a few microns (Fu et al., Science Advances, 2023, 9, 6 and US 2022/0266219).

A sorbent functionalized with spermine and AEAM using the MOF-274 prepared according to Example C1 is used as a comparative example (hereafter referred to as Comparative-3) (GE115-A259). The MOF-274 (ID# A21) has a particle size of approximately 2.2 μm (Figure 28).

Shown in Figure 29 is an exemplary SEM image of an inventive example (hereafter referred to as Inventive-4) (GE115-A272). The same batch of MOF is used for both GE115-A259 and GE115-A272. The only difference is the MOF used for GE115-A272 was mortar and pestled to reduce particle length from -2.2 μm to ~0.8 μm before amine loading. Shown in Figure 30 is an exemplary SEM image of another inventive example (hereafter referred to as Inventive-5) (GE115-A279). MOF used for GE115-A279 was mechanically ground to reduce particle length before amine loading.

$CO_2$ and $H_2O$ uptakes were measured at 25°C, 50%RH and 5000ppmv $CO_2$ using the DVS gravimetric method. Detailed amine loadings, $CO_2$ uptake and $CO_2$ kinetics are summarized in **Error! Reference source not found..** As can be seen, the inventive examples with reduced particle lengths exhibit similar $CO_2$ uptake but much increased kinetics with respect to the comparative example.

Table 3. Detailed amine loading and $CO_2$ adsorption performance of exemplary sorbents including spermine and AEAM.

| Sorbent ID | Examples | Length (μm) | Spermine | AEAM | $CO_2$ uptake ($gCO_2$/gSorbent) | $CO_2$ uptake kinetics (*k*) |
|---|---|---|---|---|---|---|
| GE115-A259 | Comparative-3 | 2.2 | 0.62 | 0.41 | 0.124 | 0.055 |
| GE115-A272 | Inventive-4 | 0.8 | 0.69 | 0.28 | 0.123 | 0.212 |
| GE115-A279 | Inventive-5 | 0.4 | 0.65 | 0.34 | 0.125 | 0.142 |

Example C11. Improving working capacity by adjusting ratio of hybrid amines.

Sorbent materials including an aqueous synthesized MOF-274 [$Mg_2$(dobpdc)] functionalized with spermine, APAP (Figure 27; $N^1$,$N^{1'}$-((1,1,3,3-tetramethyldisiloxane-1,3-diyl)bis(propane-3,1-diyl))bis(propane-1,3-diamine)), and their mixtures with different ratios are used as illustrative examples (Table 4). The MOF-274 was synthesized following the procedure described in Example C4 with an average particle size of 0.4 μm. $CO_2$ and $H_2O$ uptakes measured using the break through test rig shown in Figure 31 are measured at a DAC-relevant condition (25°C, 50%RH and 400ppmvv $CO_2$) using the breakthrough test rig described above. Shown in Figure 32 are dry $CO_2$ uptake at 120°C for the 100mbar $CO_2$ concentration measured using the DVS gravimetric method, which is used as an indication of desorption residual under 100mbar $CO_2$ partial pressure. Subtracting the desorption residual from the adsorption capacity provides an estimate of working capacity of $CO_2$ uptake (Figure 33). The sorbent (GE5-A2175) with pure spermine has the highest adsorption uptake under the DAC relevant condition and highest desorption residual as well, resulting in a working capacity of 0.07 $gCO_2$/gSorbent. The sorbent (GE281-111B1) with pure APAP has much reduced desorption residual and adsorption capacity, leading to a working capacity of 0.01 $gCO_2$/gSorbent. Sorbents with hybrid amines (GE283-151A) and

GE284-151B) may have significantly increased working capacities compared to the sorbents with pure spermine or pure APAP.

Table 4. Sorbents including pure spermine, pure APAP and mixtures with different ratios.

| Sorbent ID | Examples | Amines | Spermine | APAP |
|---|---|---|---|---|
| GE5-A2175 | Comparative-4 | Pure spermine | 1.04 | 0 |
| GE284-151B | Inventive-6 | Hybrid amines | 0.84 | 0.13 |
| GE283-151A | Inventive-7 | Hybrid amines | 0.68 | 0.23 |
| GE281-111B1 | Inventive-8 | Pure APAP | 0 | 0.98 |

It has been discovered that one or more of reduced particle sizes of sorbents, increased aspect ratios of sorbents, and aqueous sorbent synthesis leads to sorbents having significantly improved $CO_2$ uptake kinetics. In general, higher $CO_2$ uptake rates translate to higher $CO_2$ captured per unit time, which then decreases the cost and potentially energy usage of capture.

Definitions.

As used herein, references to "example embodiment" or "one embodiment" or "some embodiments" of the present disclosure are not intended to be interpreted as excluding the existence of additional embodiments that also incorporate the recited features.

Although specific features of various embodiments of the invention may be shown in some drawings and not in others, this is for convenience only. In accordance with the principles of the invention, any feature of a drawing may be referenced and/or claimed in combination with any feature of any other drawing.

While the invention has been described in terms of various specific embodiments, those skilled in the art will recognize that the invention can be practiced with modification within the spirit and scope of the claims.

When introducing elements of various embodiments disclosed herein, the articles "a," "an," "the," and "said" are intended to mean that there are one or more of the elements. The terms "comprising," "including," and "having" are intended to be inclusive and mean that there may be additional elements other than the listed elements.

Unless otherwise indicated, approximating language, such as "generally," "substantially," and "about," as used herein indicates that the term so modified may apply to only an approximate degree, as would be recognized by one of ordinary skill in the art, rather than to an absolute or perfect degree. Accordingly, a value modified by a term or terms such as "about," "approximately," and "substantially" is not to be limited to the precise value specified. In at least some instances, the approximating language may correspond to the precision of an instrument for measuring the value. Additionally, unless otherwise indicated, the terms "first," "second," etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item.

Unless otherwise indicated, approximating language, such as "generally," "substantially," and "about," as used herein indicates that the term so modified may apply to only an approximate degree, as would be recognized by one of ordinary skill in the art, rather than to an absolute or perfect degree. Accordingly, a value modified by a term or terms such as "about," "approximately," and "substantially" is not to be limited to the precise value specified. In at least some instances, the approximating language may correspond to the precision of an instrument for measuring the value. Additionally, unless otherwise indicated, the terms "first," "second," etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

It is readily understood by those skilled in the art that some substituents of the present disclosure depend on the presence of other substituents and are therefore optional. For example, in Formula A-II, when $R_9$ is a direct bond, $R_1$ and $R_2$ are optional substituents not present in the compound. Similarly, in Formula A-II, when n is 0, there is a direct bond

between $R_9$ and $R_{10}$, and $R_3$, $R_4$, and Rn are optional substituents not present in the compound. The optionality of a substituent in one embodiment is non-limiting regarding the presence of the substituent in another embodiment.

As used herein, the term "alkyl", used either alone or in compound words such as "haloalkyl" includes straight-chain or branched alkyl such as methyl, ethyl, *n*-propyl and *i*-propyl, or the different butyl, pentyl or hexyl isomers. An alkyl defined by a number of carbon atoms, e.g. $C_6$ alkyl, is understood to have that many carbon atoms but is not otherwise limited.

As used herein, the term "heteroalkyl" denotes an alkyl chain wherein at least one of the atoms forming the chain backbone is other than carbon.

As used herein, "aminoalkyl" includes an N radical substituted with straight-chain or branched alkyl.

As used herein, the term "halogen" or "halide" either alone or in compound words such as "haloalkyl", includes fluorine, chlorine, bromine or iodine. Further, when used in compound words such as "haloalkyl", said alkyl may be partially or fully substituted with halogen atoms which may be the same or different. Examples of "haloalkyl" include $F_3C$, $ClCH_2$, $CF_3CH_2$ and $CF_3CCl_2$. The term "haloalkoxy", and the like, are defined analogously to the term "haloalkyl". Examples of "haloalkoxy" include $CF_3O$, $CCl_3CH_2O$, $F_2CHCH_2CH_2O$ and $CF_3CH_2O$.

As used herein, the term "heterocycle" denotes a ring wherein at least one of the atoms forming the ring backbone is other than carbon. Unless otherwise indicated, a heterocycle can be a saturated, partially unsaturated, or fully unsaturated ring. When a fully unsaturated heterocyclic ring satisfies Hückel's rule, then said ring is also called a "heteroaryl" or aromatic heterocyclic ring. "Saturated heterocyclic ring" refers to a heterocyclic ring containing only single bonds between ring members.

As used herein, the term "aminosilicone group" includes functional groups that include both an amine group and a siloxane group (also called a disiloxane group) including a Si-O-Si linkage.

$^1$H NMR spectra are reported in ppm downfield from tetramethylsilane; "s" means singlet, "d" means doublet, "dd" means doublet of doublets, "ddd" means doublet of doublet of doublets, "t" means triplet, "m" means multiplet, and "br s" means broad singlet.

As used herein, the terms "software" and "firmware" are interchangeable, and include any computer program stored in memory for execution by a processor, including RAM memory, ROM memory, EPROM memory, EEPROM memory, and non-volatile RAM (NVRAM) memory. The above memory types are example only, and are thus not limiting as to the types of memory usable for storage of a computer program.

As used herein, a processor may include any programmable system including systems using micro-controllers, reduced instruction set circuits (RISC), application specific integrated circuits (ASICs), logic circuits, and any other circuit or processor capable of executing the functions described herein. The above examples are example only, and are thus not intended to limit in any way the definition and/or meaning of the term "processor."

The systems and processes are not limited to the specific embodiments described herein. In addition, components of each system and each process can be practiced independent and separate from other components and processes described herein. Each component and process also can be used in combination with other assembly packages and processes.

As used herein, the term "non-transitory computer-readable media" is intended to be representative of any tangible computer-based device implemented in any method or technology for short-term and long-term storage of information, such as, computer-readable instructions, data structures, program modules and sub-modules, or other data in any device. Therefore, the methods described herein may be encoded as executable instructions embodied in a tangible, non-transitory, computer readable medium, including, without limitation, a storage device and/or a memory device. Such instructions, when executed by a processor, cause the processor to perform at least a portion of the methods described herein. Moreover, as used herein, the term "non-transitory computer-readable media" includes all tangible, computer-readable media, including, without limitation, non-transitory computer storage devices, including, without limitation, volatile and nonvolatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

## Claims

**1.** A functionalized sorbent comprising:

a sorbent; and
at least one functionalization ligand comprising an aminosilicone group;
wherein the sorbent has an average particle length $\leq 3$ μm.

**2.** The functionalized sorbent of claim 1, further comprising at least one functionalization ligand that does not comprise

an aminosilicone group.

3. The functionalized sorbent of claim 2, wherein the at least one functionalization ligand comprising an aminosilicone group and the at least one functionalization ligand not comprising an aminosilicone group are present in a ratio in a range of from about 10:1 to about 1:10.

4. The functionalized sorbent of claim 1, wherein the functionalized sorbent is a functionalized MOF compound of Formula (A-I) $M_xL_yF_a^AF_b^B$ (Formula A-I), wherein:

   *M* is a MOF metal or metal-containing cluster;
   *L* is a MOF linker;
   $F^A$ is the at least one functionalization ligand comprising an aminosilicone group;
   $F^B$ is at least one functionalization ligand not comprising an aminosilicone group;
   *x* is a value in a range of 1 to 6;
   *y* is a value in a range of 1 to 6;
   *a* is a value greater than 0 and less than or equal to 2; and
   *b* is a value in a range of 0 to 2.

5. The functionalized sorbent of claim 4, wherein the MOF metal or metal-containing cluster comprises a metal selected from the group consisting of alkali metals, alkaline earth metals, transition metals, Mg, Ca, Mn, Cr, Fe, Co, Ni, Cu, Zn, ions thereof, hydrates thereof, salts thereof, halides thereof, fluorides thereof, chlorides thereof, bromides thereof, iodides thereof, nitrates thereof, acetates thereof, sulfates thereof, phosphates thereof, carbonates thereof, oxides thereof, formates thereof, carboxylates thereof, and combinations thereof.

6. The functionalized sorbent of claim 4, wherein the MOF linker comprises a linker selected from the group consisting of polytopic linkers, 4,4'-dihydroxy-[1,1'-biphenyl]-3,3'-dicarboxylic acid ($H_4$dobpdc), 4,4'-dioxidobiphenyl-3,3'-dicarboxylate (dobpdc$^{4-}$), 4,4"-dioxido-[1,1':4',1 "-terphenyl]-3,3 "-dicarboxylate (dotpdc$^{4-}$), 2,5-dioxidobenzene-1,4-dicarboxylate (dobdc$^{4-}$), 4,6-Dihydroxyisophthalic acid (m-dobdc$^{4-}$), 3,3'-dioxido-biphenyl-4,4'-dicarboxylate (para-carboxylate-dobpdc$^{4-}$), 4,4'-[oxalylbis(imino)]bis(2-hydroxybenzoic acid) ($H_4$ODA), 4,4'-[1,4-phenylenebis-(carbonylimino)]bis(2-hydroxybenzoic acid) ($H_4$TDA), 4,4'-Dihydroxyazobenzene-3,3'-dicarboxylic acid ($H_4$OSA), dicarboxylates, terephthalic acid, tricarboxylates, 1,3,5-benzentricarboxylic acid, azolates, tetrazolates, 1,4-butanedicarboxylic acid, 4-oxopyran-2,6-dicarboxylic acid, 1,6-hexanedicarboxylic acid, decanedicarboxylic acid, 1,8-heptadecanedicarboxylic acid, 1,9-heptadecanedicarboxylic acid, heptadecanedicarboxylic acid, acetylenedicarboxylic acid, 1,2-benzenedicarboxylic acid, 2,3-pyridinedicarboxylic acid, pyridine-2,3-dicarboxylic acid, 1,3-butadiene-1,4-dicarboxylic acid, 1,4-benzenedicarboxylic acid, p-benzenedicarboxylic acid, imidazole-2,4-dicarboxylic acid, 2-methylquinoline-3,4-dicarboxylic acid, quinoline-2,4-dicarboxylic acid, quinoxaline-2,3-dicarboxylic acid, 6-chloroquinoxaline-2,3-dicarboxylic acid, 4,4'-diaminophenylmethane-3,3'-dicarboxylic acid, quinoline-3,4-dicarboxylic acid, 7-chloro-4-hydroxyquinoline-2,8-dicarboxylic acid, diimidedicarboxylic acid, pyridine-2,6-dicarboxylic acid, 2-methylimidazole-4,5-dicarboxylic acid, thiophene-3,4-dicarboxylic acid, 2-isopropylimidazole-4,5-dicarboxylic acid, tetrahydropyran-4,4-dicarboxylic acid, perylene-3,9-dicarboxylic acid, perylenedicarboxylic acid, Pluriol E 200-dicarboxylic acid, 3,6-dioxaoctanedicarboxylic acid, 3,5-cyclohexadiene-1,2-dicarboxylic acid, octanedicarboxylic acid, pentane-3,3-carboxylic acid, 4,4'-diamino-1,1'-diphenyl-3,3'-dicarboxylic acid, 4,4'-diaminodiphenyl-3,3'-dicarboxylic acid, benzidine-3,3'-dicarboxylic acid, 1,4-bis-(phenylamino)benzene-2,5-dicarboxylic acid, 1,1'-dinaphthyl-8,8'-dicarboxylic acid, 7-chloro-8-methylquinoline-2,3-dicarboxylic acid, 1-anilinoanthraquinone-2,4'-dicarboxylic acid, polytetrahydrofuran-250-dicarboxylic acid, 1,4-bis(carboxymethyl)piperazine-2,3-dicarboxylic acid, 7-chloroquinoline-3,8-dicarboxylic acid, 1-(4-carboxy)phenyl-3-(4-chloro) phenylpyrazoline-4,5-dicarboxylic acid, 1,4,5,6,7,7,-hexachloro-5-norbornene-2,3-dicarboxylic acid, phenylindanedicarboxylic acid, 1,3-dibenzyl-2-oxoimidazolidine-4,5-dicarboxylic acid, 1,4-cyclohexanedicarboxylic acid, naphthalene-1,8-dicarboxylic acid, 2-benzoylbenzene-1,3-dicarboxylic acid, 1,3-dibenzyl-2-oxoimidazolidine-4,5-cisdicarboxylic acid, 2,2'-biquinoline-4,4'-dicarboxylic acid, pyridine-3,4-dicarboxylic acid, 3,6,9-trioxaundecanedicarboxylic acid, o-hydroxybenzophenonedicarboxylic acid, Pluriol E 300-dicarboxylic acid, Pluriol E 400-dicarboxylic acid, Pluriol E 600-dicarboxylic acid, pyrazole-3,4-dicarboxylic acid, 2,3-pyrazinedicarboxylic acid, 5,6-dimethyl-2,3-pyrazinedicarboxylic acid, 4,4'-diaminodiphenyletherdiimidedicarboxylic acid, 4,4'-diaminodiphenylmethanediimidedicarboxylic acid, 4,4'-diaminodiphenylsulfonediimidedicarboxylic acid, 2,6-naphthalenedicarboxylic acid, 1,3-adamantanedicarboxylic acid, 1,8-naphthalenedicarboxylic acid, 2,3-naphthalenedicarboxylic acid, 8-methoxy-2,3-naphthalenedicarboxylic acid, 8-nitro-2,3-naphthalenedicarboxylic acid, 8-sulfo-2,3-naphthalenedicarboxylic acid, anthracene-2,3-dicarboxylic acid,

2'-3'-diphenyl-p-terphenyl-4,4"-dicarboxylic acid, diphenylether-4,4'-dicarboxylic acid, imidazole-4,5-dicarboxylic acid, 4(1H)-oxothiochromene-2,8-dicarboxylic acid, 5-t-butyl-1,3-benzenedicarboxylic acid, 7,8-quinolinedicarboxylic acid, 4,5-imidazoledicarboxylic acid, 4-cyclohexene-1,2-dicarboxylic acid, hexatriacontanedicarboxylic acid, tetradecanedicarboxylic acid, 1,7-heptanedicarboxylic acid, 5-hydroxy-1,3-benzenedicarboxylic acid, pyrazine-2,3-dicarboxylic acid, furan-2,5-dicarboxylic acid, 1-nonene-6,9-dicarboxylic acid, eicosenedicarboxylic acid, 4,4'-dihydroxydiphenylmethane-3,3'-dicarboxylic acid, 1-amino-4-methyl-9,10-dioxo-9,10-dihydroanthracene-2,3-dicarboxylic acid, 2,5-pyridinedicarboxylic acid, cyclohexene-2,3-dicarboxylic acid, 2,9-dichlorofluorubin-4,11-dicarboxylic acid, 7-chloro-3-methylquinoline-6,8-dicarboxylic acid, 2,4-dichlorobenzophenone-2',5'-dicarboxylic acid, 1,3-benzenedicarboxylic acid, 2,6-pyridinedicarboxylic acid, 1-methylpyrrole-3,4-dicarboxylic acid, 1-benzyl-1H-pyrrole-3,4-dicarboxylic acid, anthraquinone-1,5-dicarboxylic acid, 3,5-pyrazoledicarboxylic acid, 2-nitrobenzene-1,4-dicarboxylic acid, heptane-1,7-dicarboxylic acid, cyclobutane-1,1-dicarboxylic acid, 1,14-tetradecanedicarboxylic acid, 5,6-dehydronorbornane-2,3-dicarboxylic acid, 5-ethyl-2,3-pyridinedicarboxylic acid, 2-hydroxy-1,2,3-propanetricarboxylic acid, 7-chloro-2,3,8-quinolinetricarboxylic acid, 1,2,4-benzenetricarboxylic acid, 1,2,4-butanetricarboxylic acid, 2-phosphono-1,2,4-butanetricarboxylic acid, 1,3,5-benzenetricarboxylic acid, 1-hydroxy-1,2,3-propanetricarboxylic acid, 4,5-dihydro-4,5-dioxo-1H-pyrrolo[2,3-F]quinoline-2,7,9-tricarboxylic acid, 5-acetyl-3-amino-6-methylbenzene-1,2,4-tricarboxylic acid, 3-amino-5-benzoyl-6-methylbenzene-1,2,4-tricarboxylic acid, 1,2,3-propanetricarboxylic acid, aurinetricarboxylic acid, 1,1-dioxide-perylo[1,12-BCD]thiophene-3,4,9,10-tetracarboxylic acid, perylenetetracarboxylic acids, perylene-3,4,9,10-tetracarboxylic acid, perylene-1,12-sulfone-3,4,9,10-tetracarboxylic acid, butanetetracarboxylic acids, 1,2,3,4-butanetetracarboxylic acid, meso-1,2,3,4-butanetetracarboxylic acid, decane-2,4,6,8-tetracarboxylic acid, 1,4,7,10,13,16-hexaoxacyclooctadecane-2,3,11,12-tetracarboxylic acid, 1,2,4,5-benzenetetracarboxylic acid, 1,2,11,12-dodecanetetracarboxylic acid, 1,2,5,6-hexanetetracarboxylic acid, 1,2,7,8-octanetetracarboxylic acid, 1,4,5,8-naphthalenetetracarboxylic acid, 1,2,9,10-decanetetracarboxylic acid, benzophenonetetracarboxylic acid, 3,3',4,4'-benzophenonetetracarboxylic acid, tetrahydrofurantetracarboxylic acid, cyclopentanetetracarboxylic acids, cyclopentane-1,2,3,4-tetracarboxylic acid, polytopic linkers, ditopic linkers, tritopic linkers, tetratopic linkers, pentatopic linkers, hexatopic linkers, heptatopic linkers, octatopic linkers, mixed linkers, desymmetrized linker, metallo linkers, N-heterocyclic linkers, protonated, partially and fully deprotonated forms thereof, and combinations thereof.

**7.** The functionalized sorbent of claim 1, wherein the sorbent has an aspect ratio of >0.2.

**8.** The functionalized sorbent of claim 1, wherein the sorbent has an average particle length < 1 μm.

**9.** The functionalized sorbent of claim 1, wherein the at least one functionalization ligand comprising an aminosilicone group is an amino-substituted siloxane of Formula (A-II), Formula (A-III), Formula (A-IV), Formula (A-V), Formula (A-VI), or Formula (A-VII)

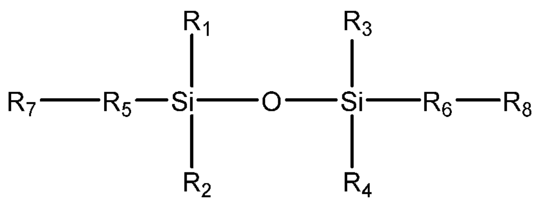

(Formula A-II)

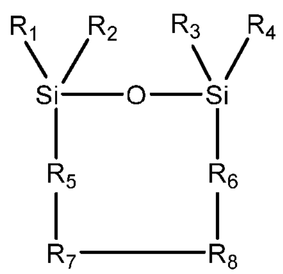

(Formula A-III)

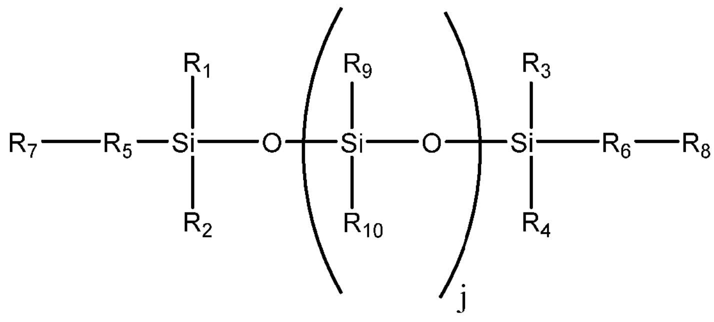

(Formula A-IV)

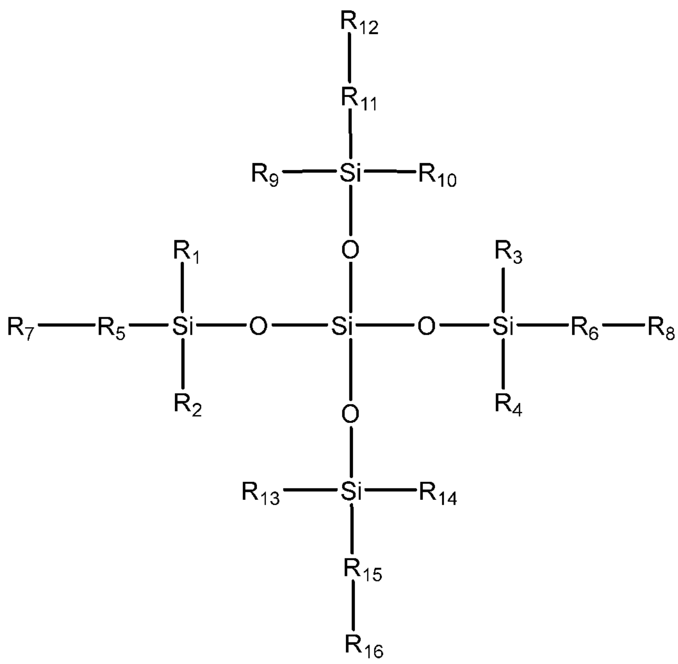

(Formula A-V)

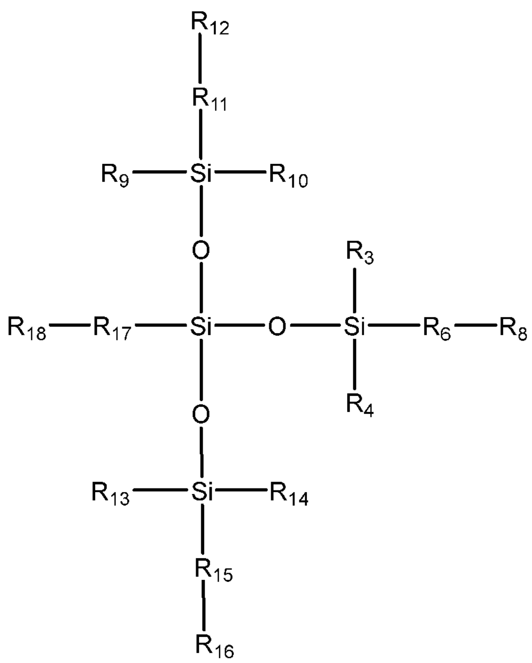

(Formula A-VI)

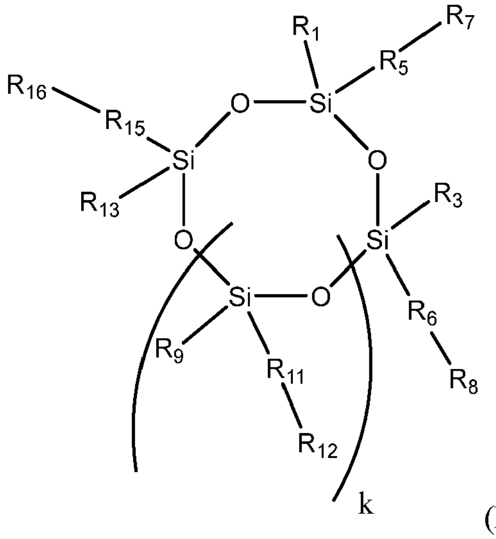

(Formula A-VII)

wherein:

$R_1$, $R_2$, $R_3$, $R_4$, $R_9$, $R_{10}$, $R_{13}$, $R_{14}$, and $R_{18}$ are each individually selected from the group consisting of hydrogen, substituted or unsubstituted linear alkyl, substituted or unsubstituted $C_1$-$C_6$ linear alkyl, substituted or unsubstituted branched alkyl, substituted or unsubstituted $C_3$-$C_6$ branched alkyl, substituted or unsubstituted linear heteroalkyl, substituted or unsubstituted branched heteroalkyl, aryl, phenyl, heteroaryl, methyl, ethyl, propyl, isopropyl, butyl, pentyl, and hexyl;

$R_5$, $R_6$, $R_{11}$, $R_{15}$, and $R_{17}$ are each individually selected from the group consisting of direct bonds, substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, and $C_6$ alkyl,

$R_7$, Rs, $R_{12}$, and $R_{16}$ are each individually selected from the group consisting of direct bonds, substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, $C_6$ alkyl, and substituents of Formula (A-VIII)

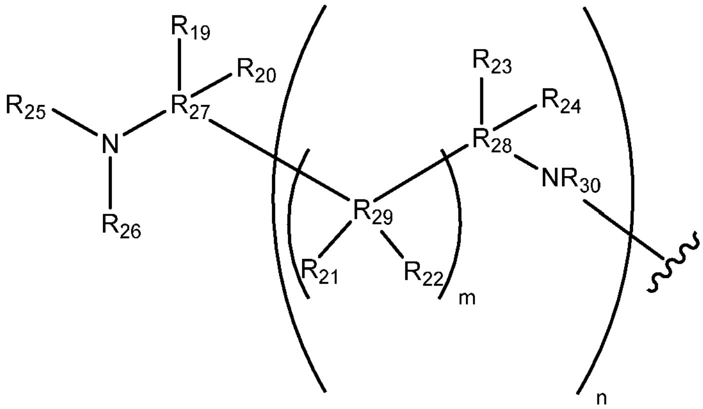

(Formula A-VIII);

wherein:

the wavy bond indicates a bonding location to Formula (A-II) or Formula (A-III) or Formula (A-IV) or Formula (A-V) or Formula (A-VI) or Formula (A-VII);

$R_{19}$, $R_{20}$, $R_{21}$, $R_{22}$, $R_{23}$, and $R_{24}$ are each individually selected from the group consisting of hydrogen, substituted or unsubstituted linear alkyl, substituted or unsubstituted $C_1$-$C_6$ linear alkyl, substituted or unsubstituted branched alkyl, substituted or unsubstituted $C_3$-$C_6$ branched alkyl, substituted or unsubstituted linear heteroalkyl, substituted or unsubstituted $C_1$-$C_6$ linear heteroalkyl, substituted or unsubstituted branched heteroalkyl, substituted or unsubstituted $C_3$-$C_6$ branched heteroalkyl, aryl, heteroaryl, methyl, ethyl, propyl, isopropyl, butyl, pentyl, and hexyl;

$R_{25}$ and $R_{26}$ are each individually selected from the group consisting of hydrogen, substituted or unsubstituted linear alkyl, substituted or unsubstituted $C_1$-$C_6$ linear alkyl, substituted or unsubstituted $C_1$-$C_3$ linear alkyl, substituted or unsubstituted branched alkyl, substituted or unsubstituted $C_3$-$C_6$ branched alkyl, methyl, ethyl, propyl, substituted or
unsubstituted cycloalkyl, substituted or unsubstituted $C_3$-$C_6$ cycloalkyl, and substituted or unsubstituted $C_4$-$C_6$ cycloalkyl, or, when taken together, $R_{25}$ and $R_{26}$ form a single ring selected from the group consisting of heterocycloalkyl and heteroaryl;
$R_{27}$, $R_{28}$, and $R_{29}$ are each individually selected from the group consisting of direct bonds, substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, $C_6$ alkyl, ether, $-OCH_2CH_2-$, $-OCH_2CH_2CH_2-$, $-OCH_2CH_2CH_2CH_2-$, $-NHCH_2CH_2-$, $-NHCH_2CH_2CH_2-$, and - $NHCH_2CH_2CH_2CH_2-$;
$R_{30}$ is selected from the group consisting of hydrogen, substituted or unsubstituted linear alkyl, substituted or unsubstituted $C_1$-$C_6$ linear alkyl, substituted or unsubstituted $C_1$-$C_3$ linear alkyl, substituted or unsubstituted branched alkyl, substituted or unsubstituted $C_3$-$C_6$ branched alkyl, methyl, ethyl, propyl, substituted or unsubstituted cycloalkyl, substituted or unsubstituted $C_3$-$C_6$ cycloalkyl, substituted or unsubstituted $C_4$-$C_6$ cycloalkyl, heterocycloalkyl, and heteroaryl;
j is an integer in a range of 0 to 20;
k is an integer in a range of 0 to 20;
m is an integer in a range of 0 to 20; and
n is an integer in a range of 0 to 20.

**10.** The functionalized sorbent of claim 1, wherein the at least one functionalization ligand comprising an aminosilicone group is selected from the group consisting of

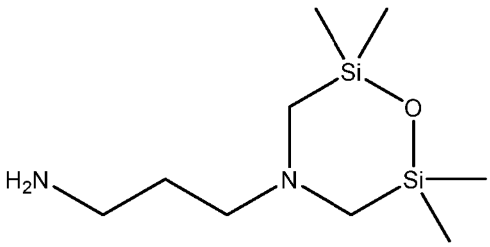

,

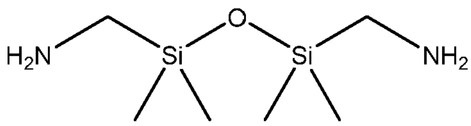

,

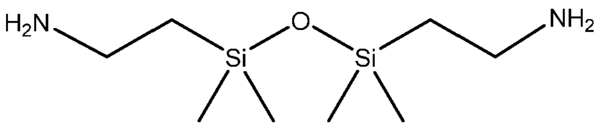

,

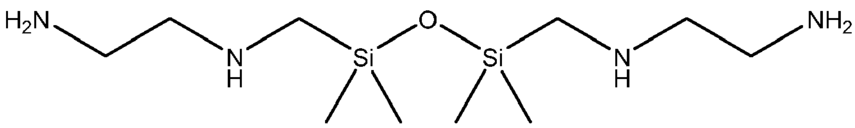

,

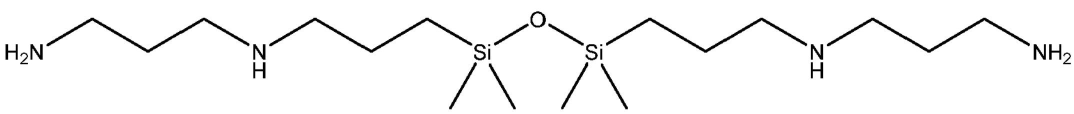

,

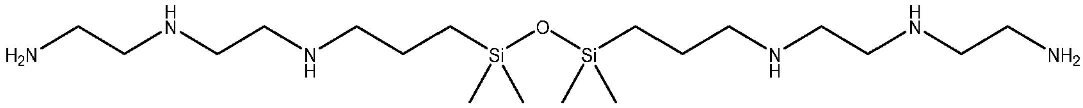

,

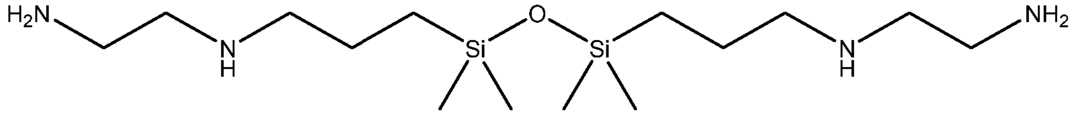

,

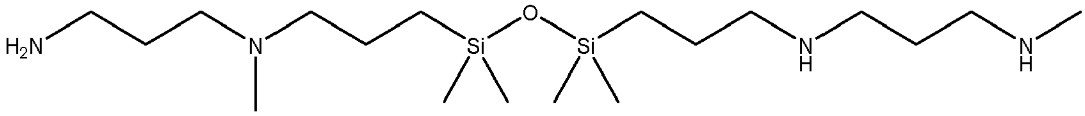

,

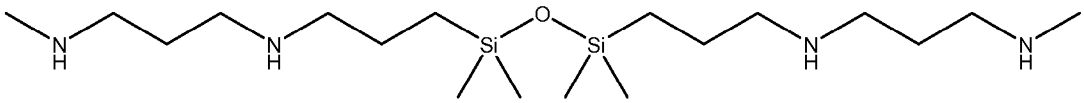

,

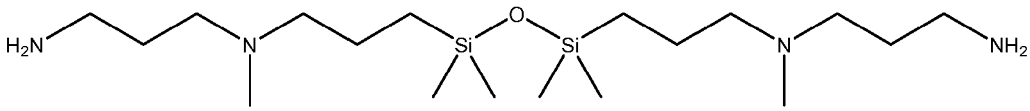

,

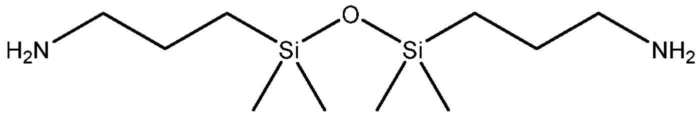

,

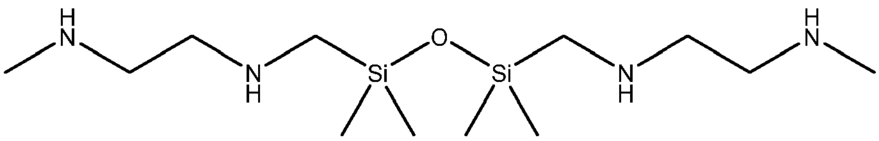

,

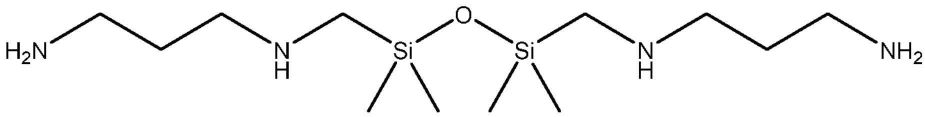

,

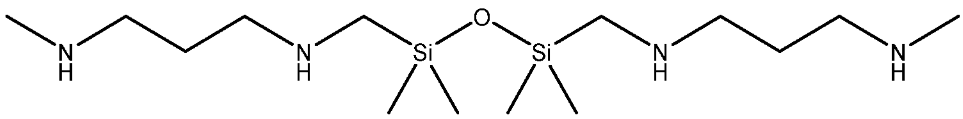

,

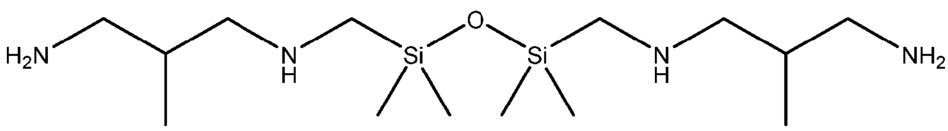

,

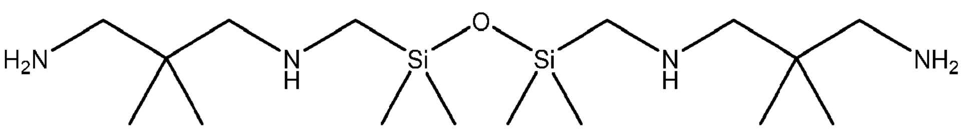

,

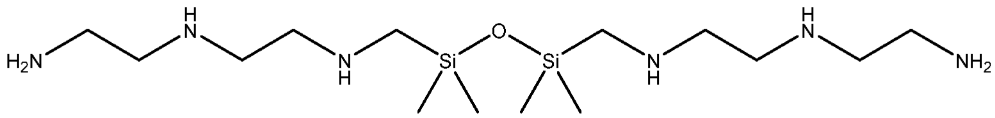

,

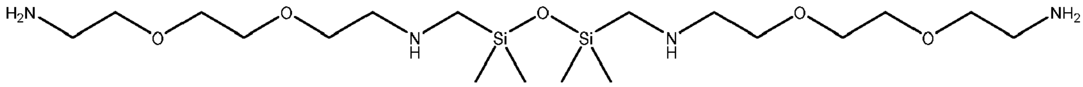

,

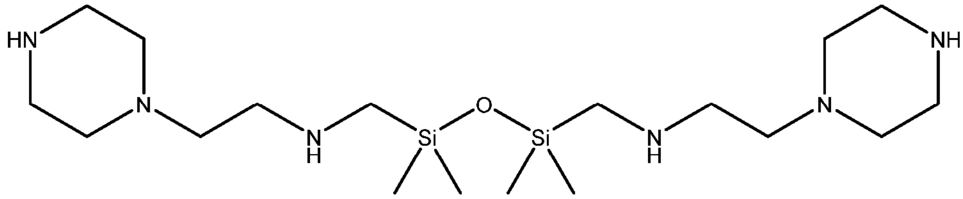

,

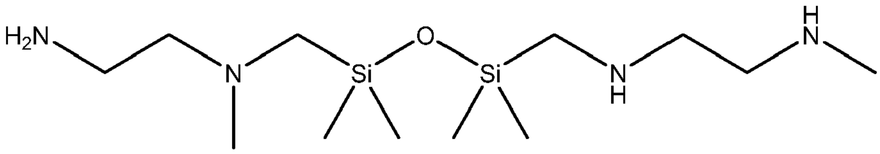

,

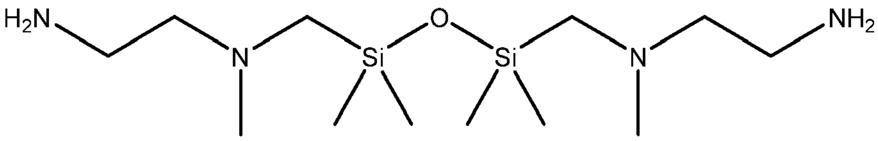

,

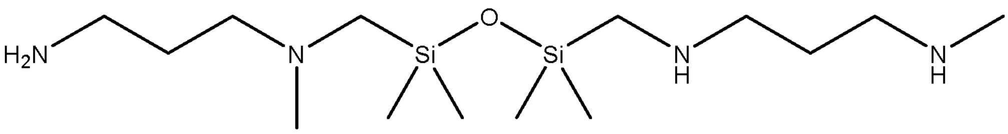

,

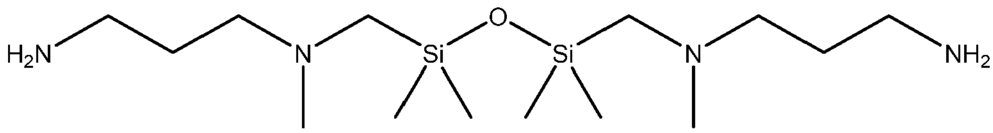

,

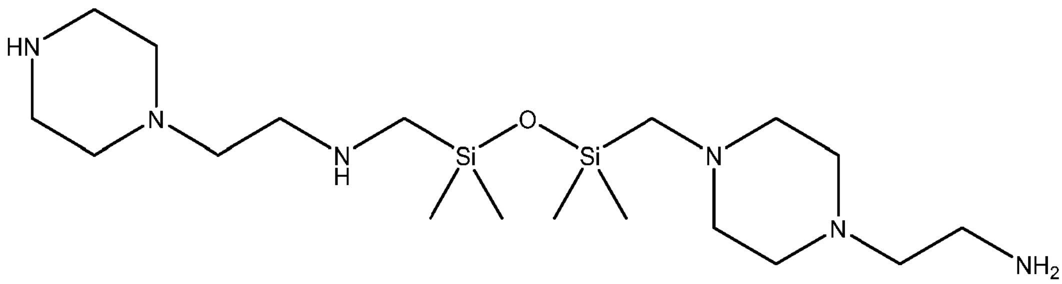

,

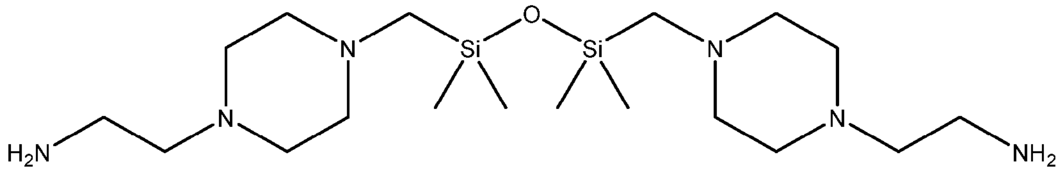

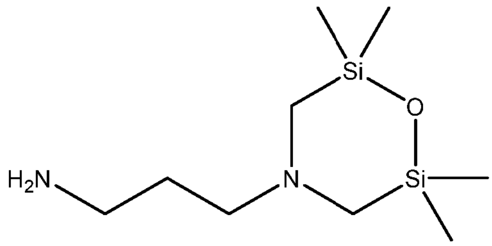

,

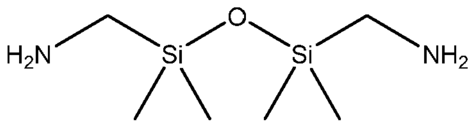

,

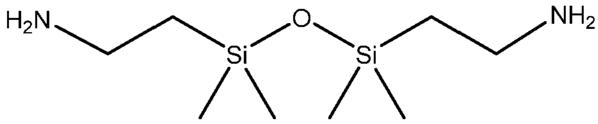

,

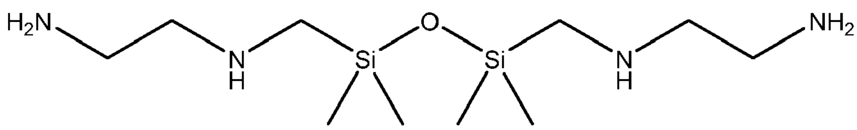

,

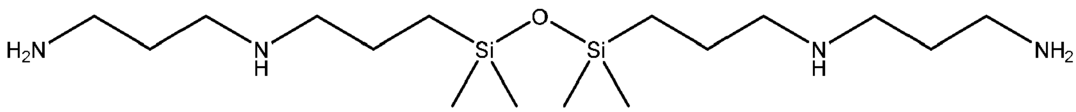

,

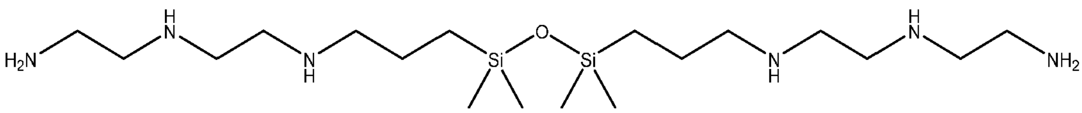

,

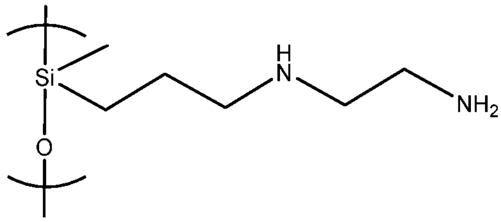

,

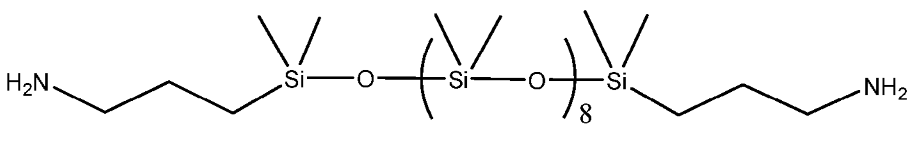

,

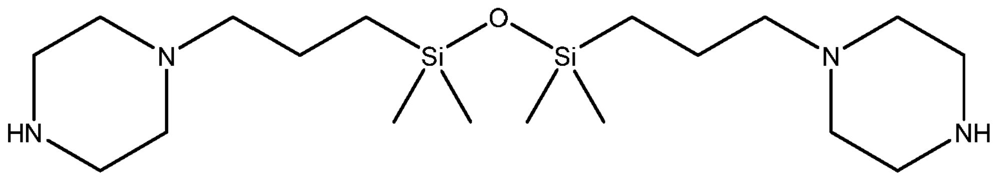

,

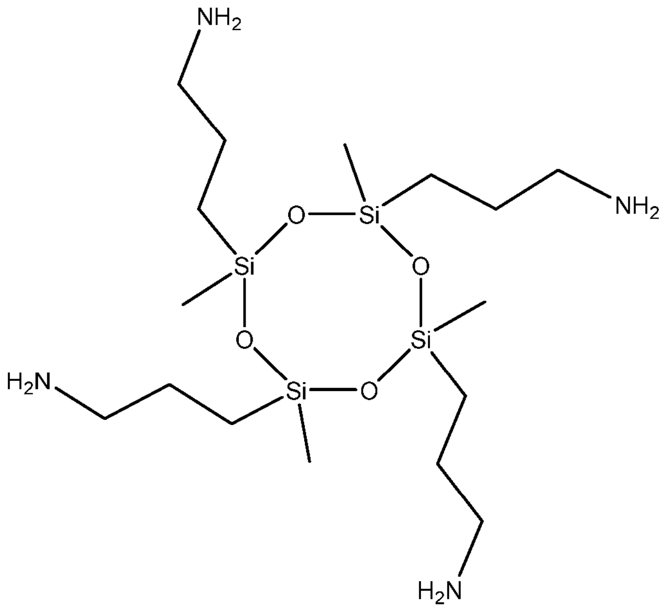

,

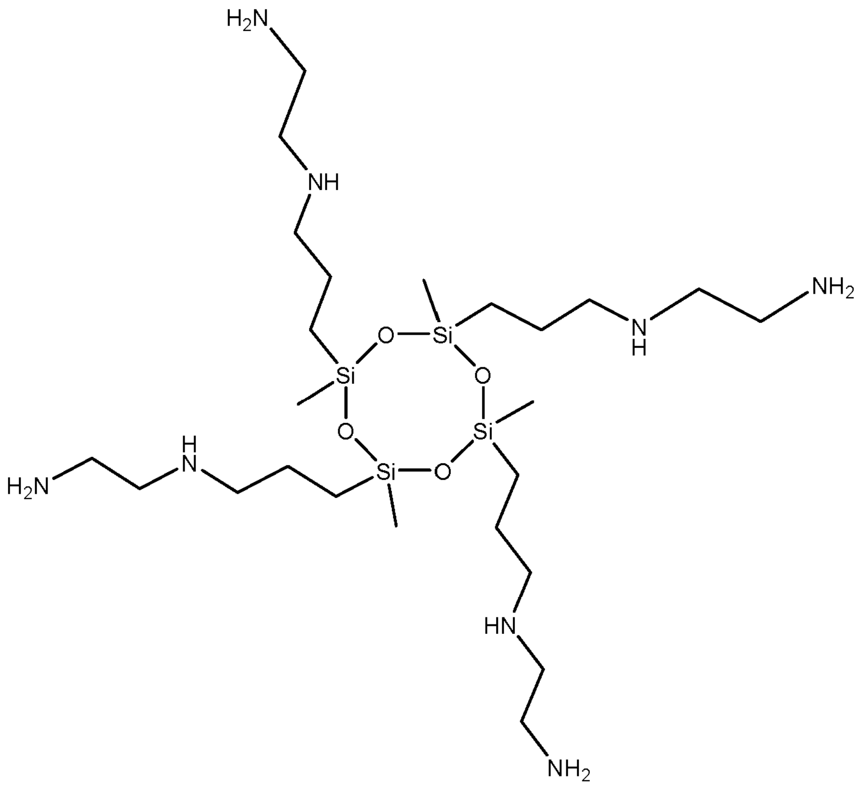

,

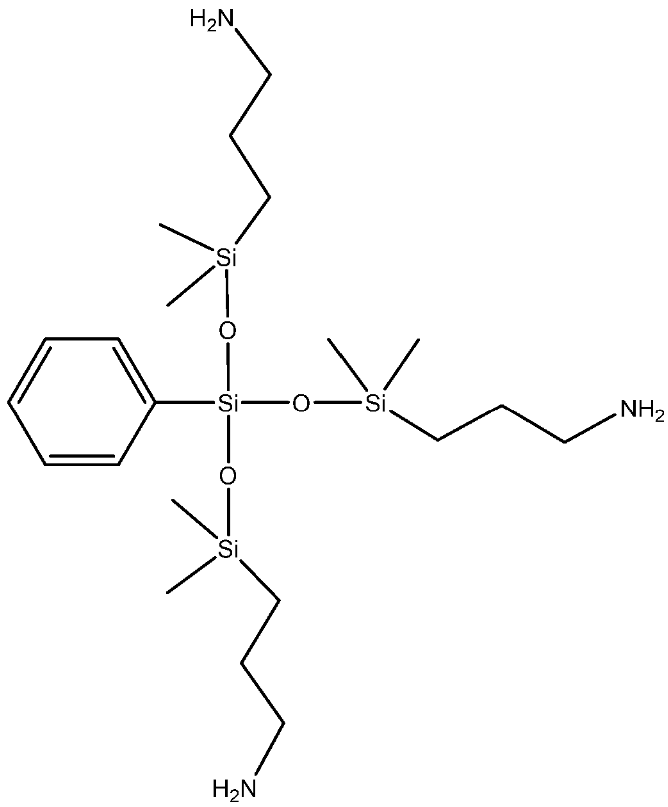

,

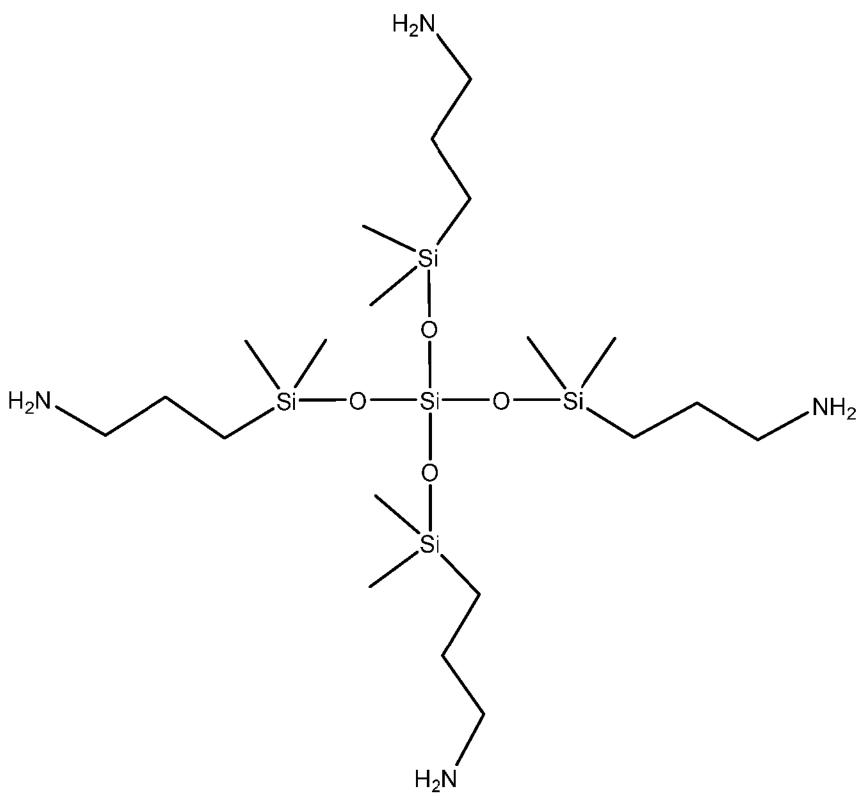

,

and

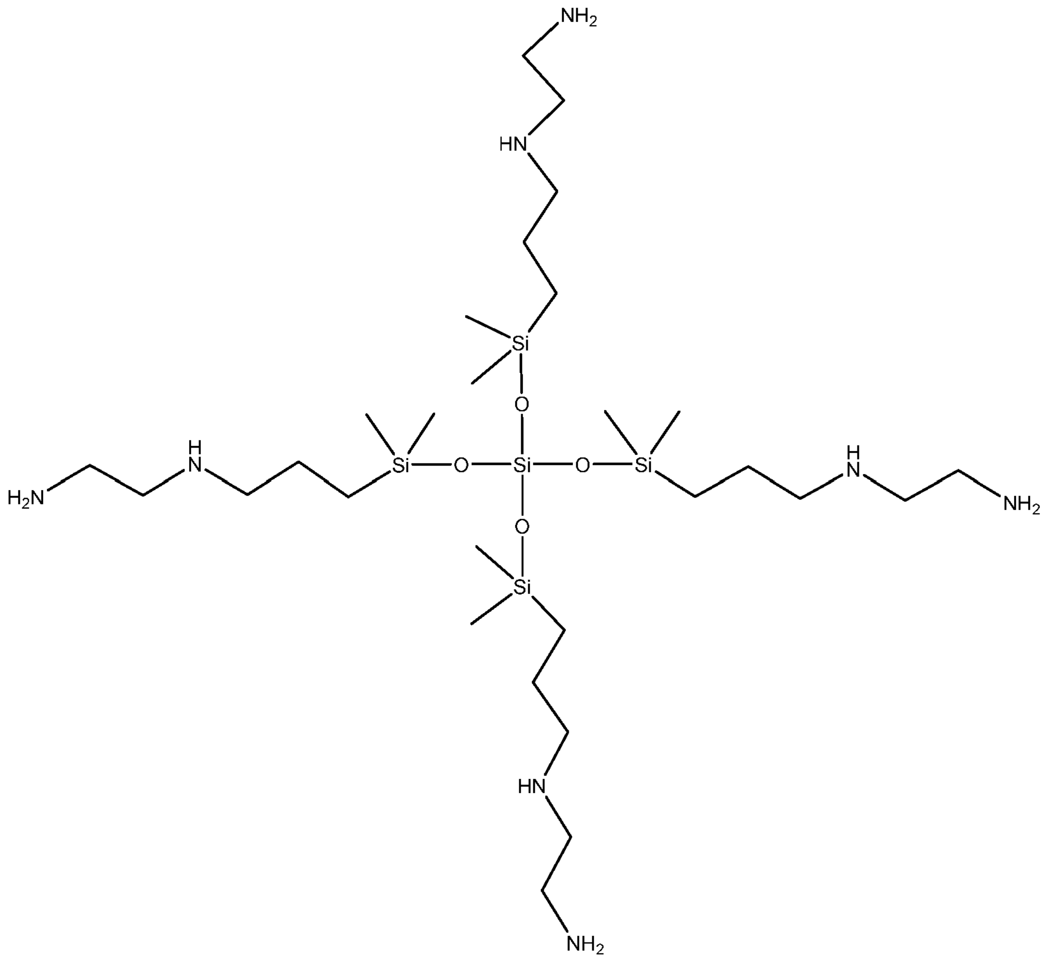

11. A sorbent system comprising the functionalized sorbent of claim 1.

12. A method of making a sorbent, the method comprising:

(I) forming a mixture comprising:

a sorbent precursor;
a crystal growth inhibitor;
optionally a solvent; and
optionally a non-solvent; and

(II) reacting the mixture;

wherein the sorbent has an average particle length ≤ 3 μm.

13. The method of claim 12, wherein the sorbent precursor comprises a MOF linker and a MOF metal or metal-containing cluster.

14. The method of claim 12, wherein the solvent comprises an aqueous solvent.

15. The method of claim 12, wherein the crystal growth inhibitor is selected from the group consisting of salicylic acid, 4-fluorosalicylic acid, 4,4'-biphenol, 2,2'-Bipyridine-5,5'-dicarboxylic acid (BPYDC), 2,2'-Bipyridine-5,5'-dimethanol (BPYDM), benzoic acids, biphenols, bipyridines, and combinations thereof.

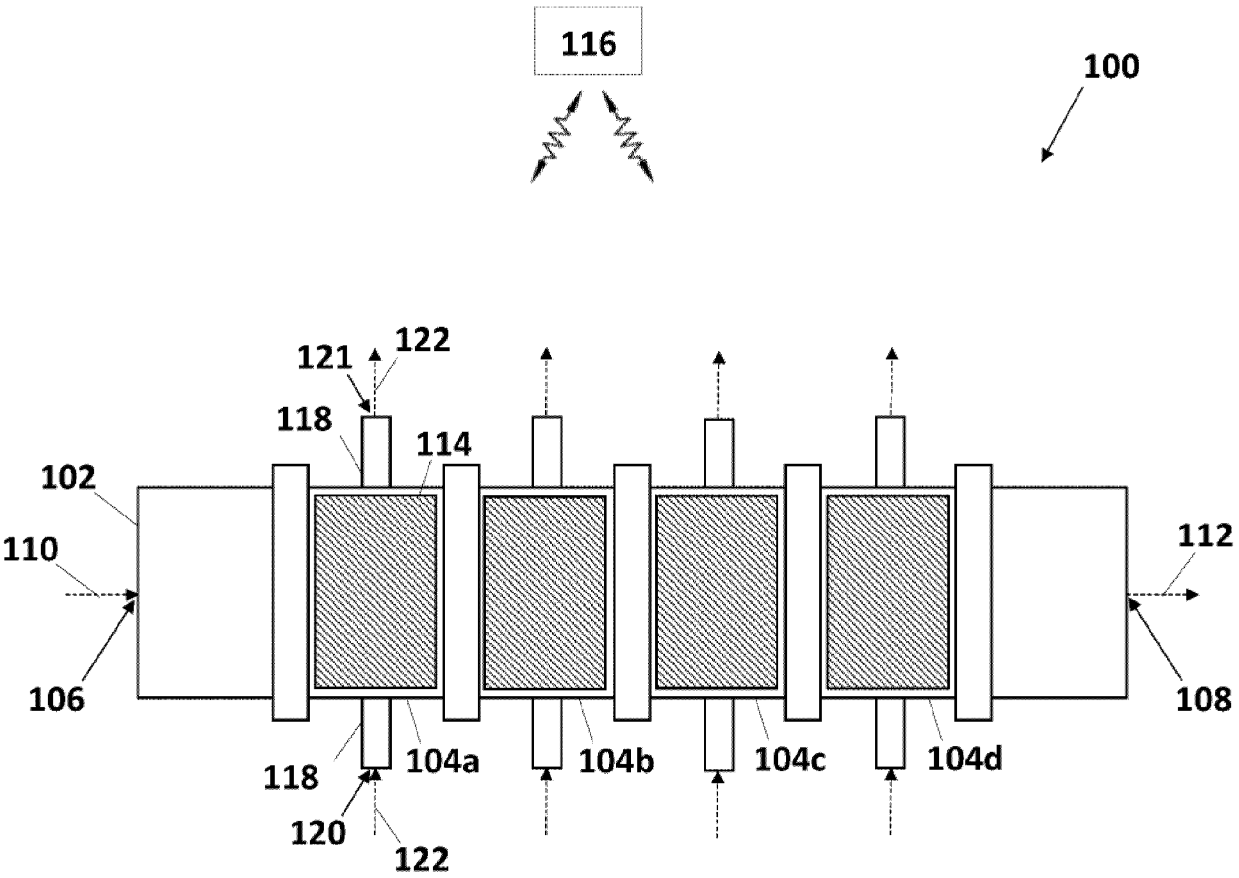
116
100
121
122
118
114
102
110
112
106
108
118
104a
104b
104c
104d
120
122

FIG. 1

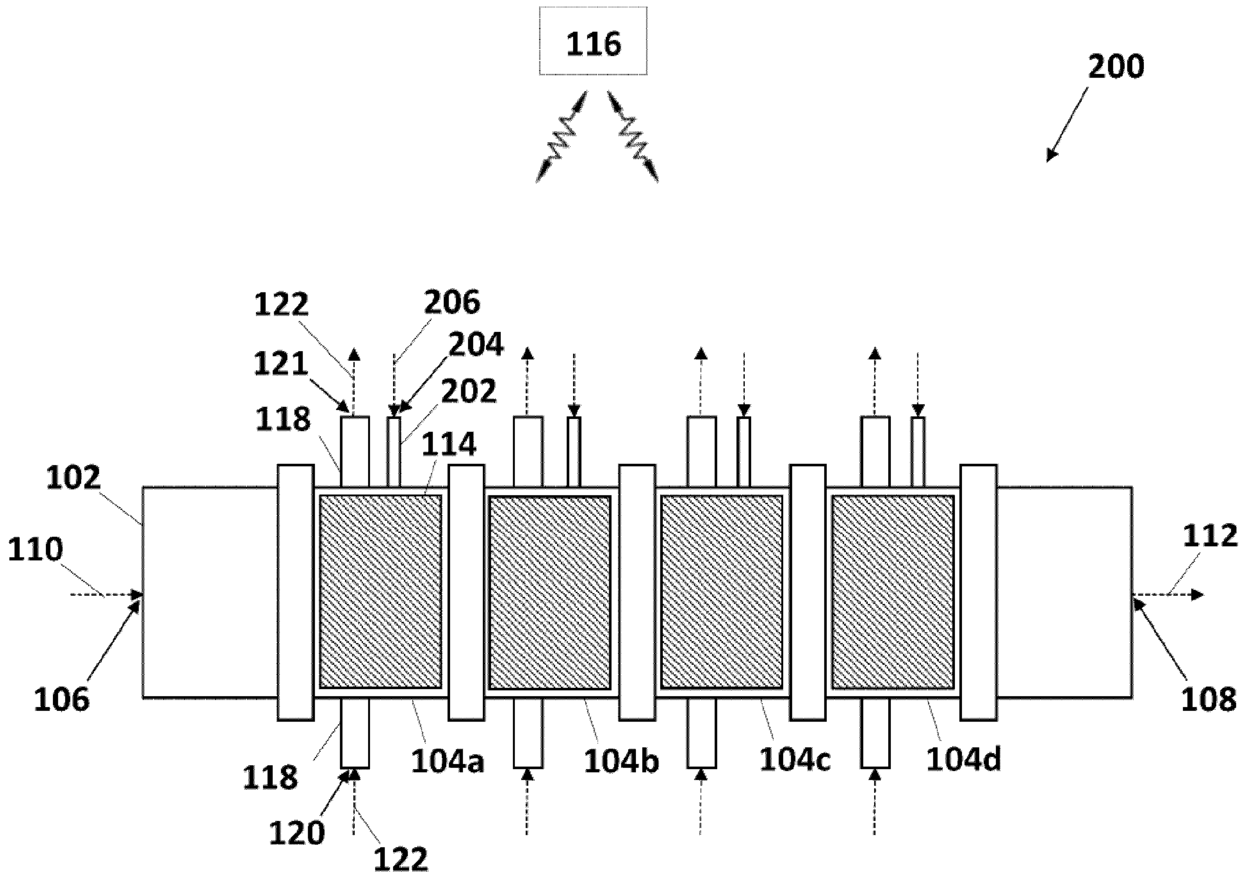
116
200
122
206
204
121
202
118
114
102
110
112
106
108
118
104a
104b
104c
104d
120
122

FIG. 2

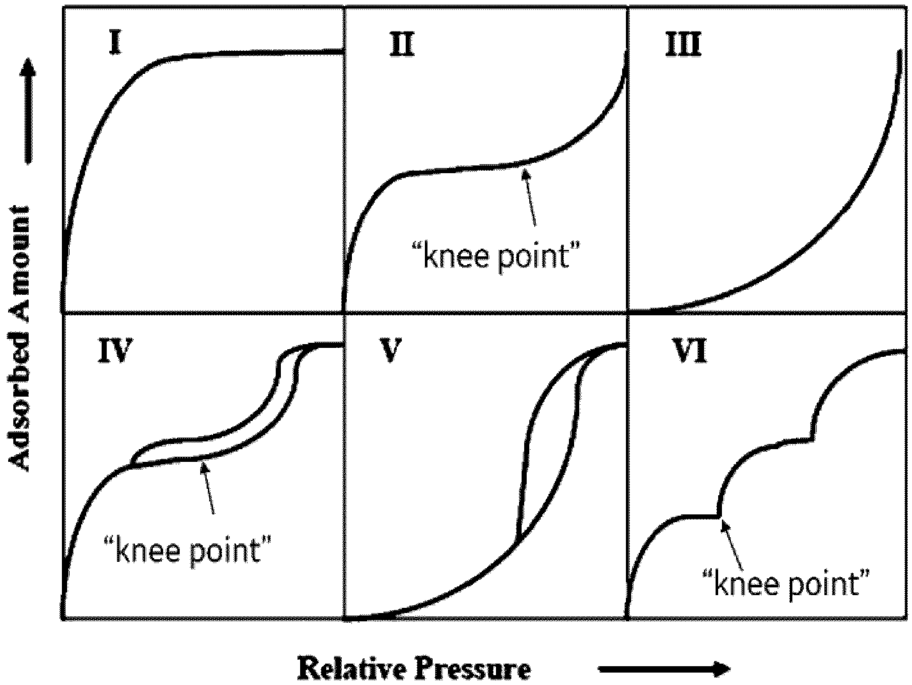
I
II
III
IV
V
VI
"knee point"
"knee point"
"knee point"
Adsorbed Amount
Relative Pressure

FIG. 3

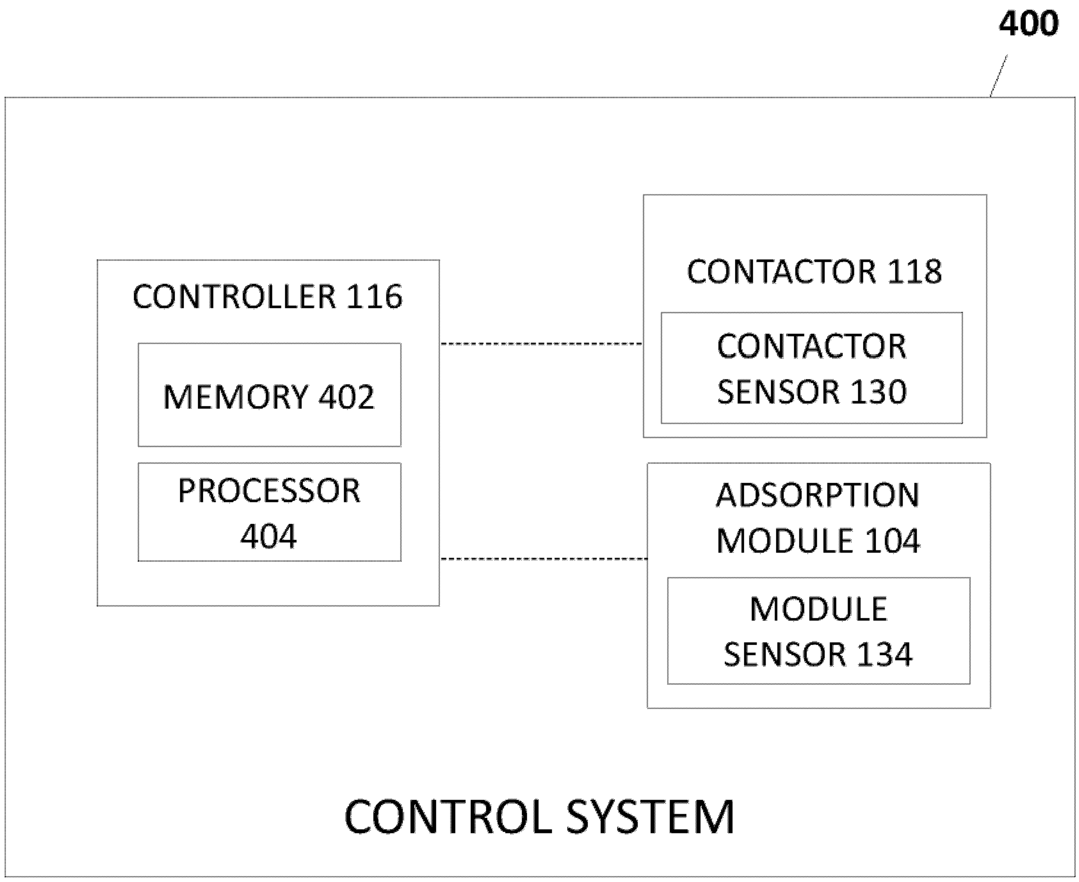
400
CONTROLLER 116
MEMORY 402
PROCESSOR 404
CONTACTOR 118
CONTACTOR SENSOR 130
ADSORPTION MODULE 104
MODULE SENSOR 134
CONTROL SYSTEM

FIG. 4

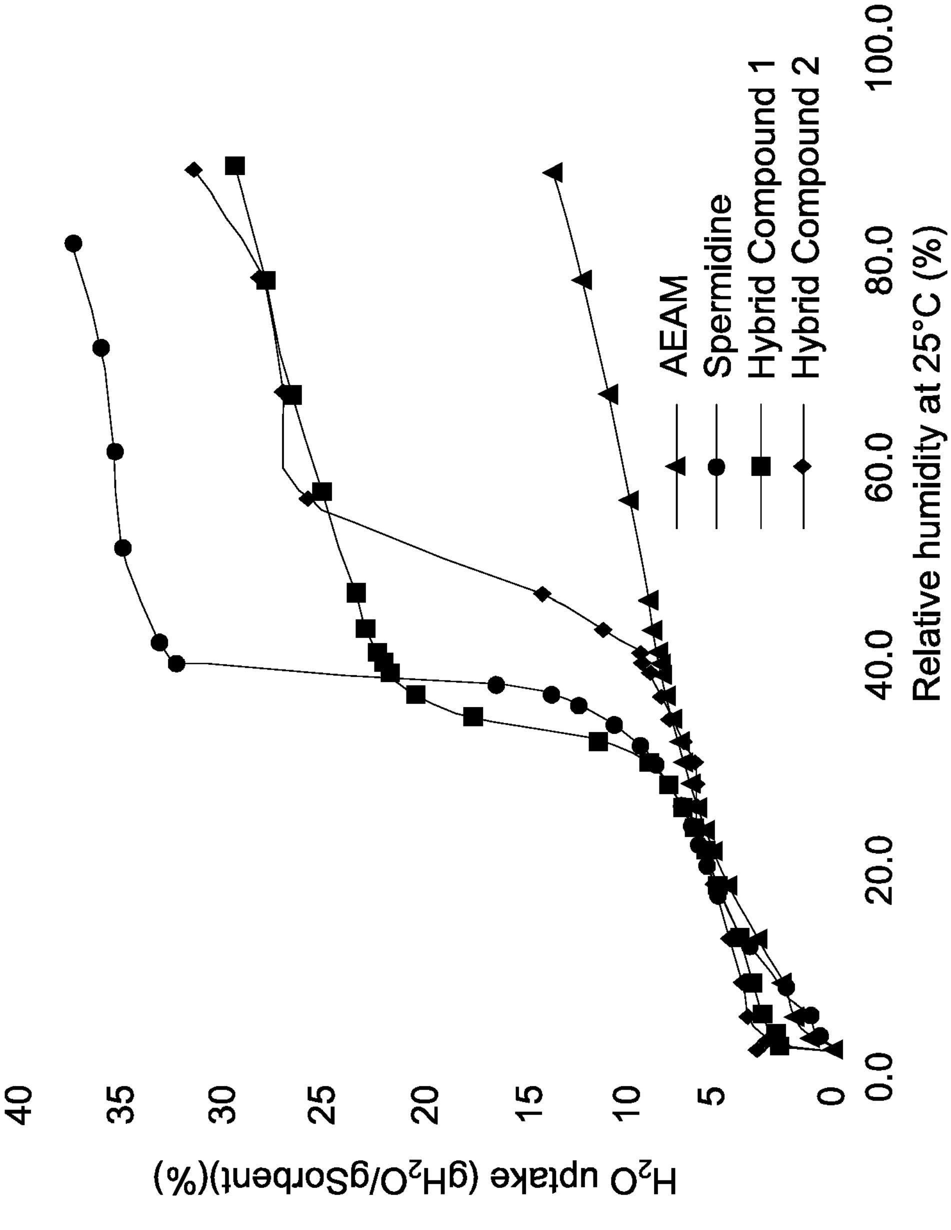

$H_2O$ uptake (g$H_2O$/gSorbent)(%)
40
35
30
25
20
15
10
5
0
0.0
20.0
40.0
60.0
80.0
100.0
Relative humidity at 25°C (%)
AEAM
Spermidine
Hybrid Compound 1
Hybrid Compound 2


FIG. 5

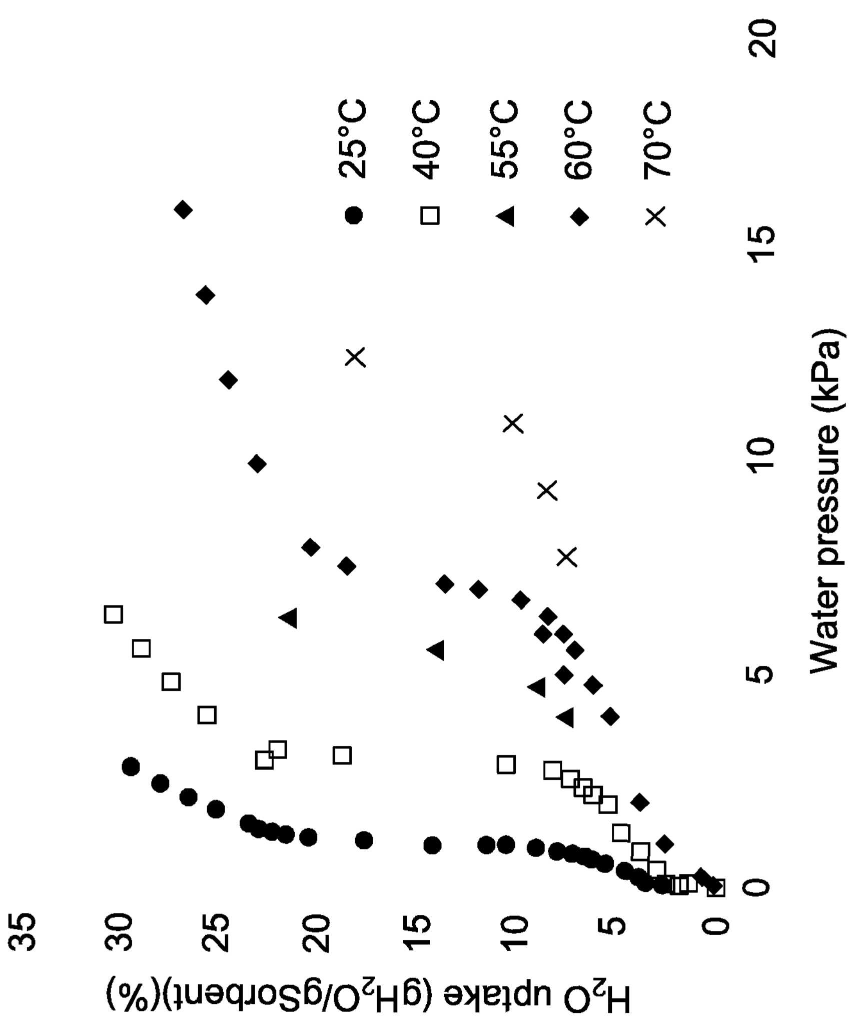

35
30
25
20
15
10
5
0
$H_2O$ uptake ($gH_2O$/gSorbent)(%)
0
5
10
15
20
Water pressure (kPa)
25°C
40°C
55°C
60°C
70°C


FIG. 6

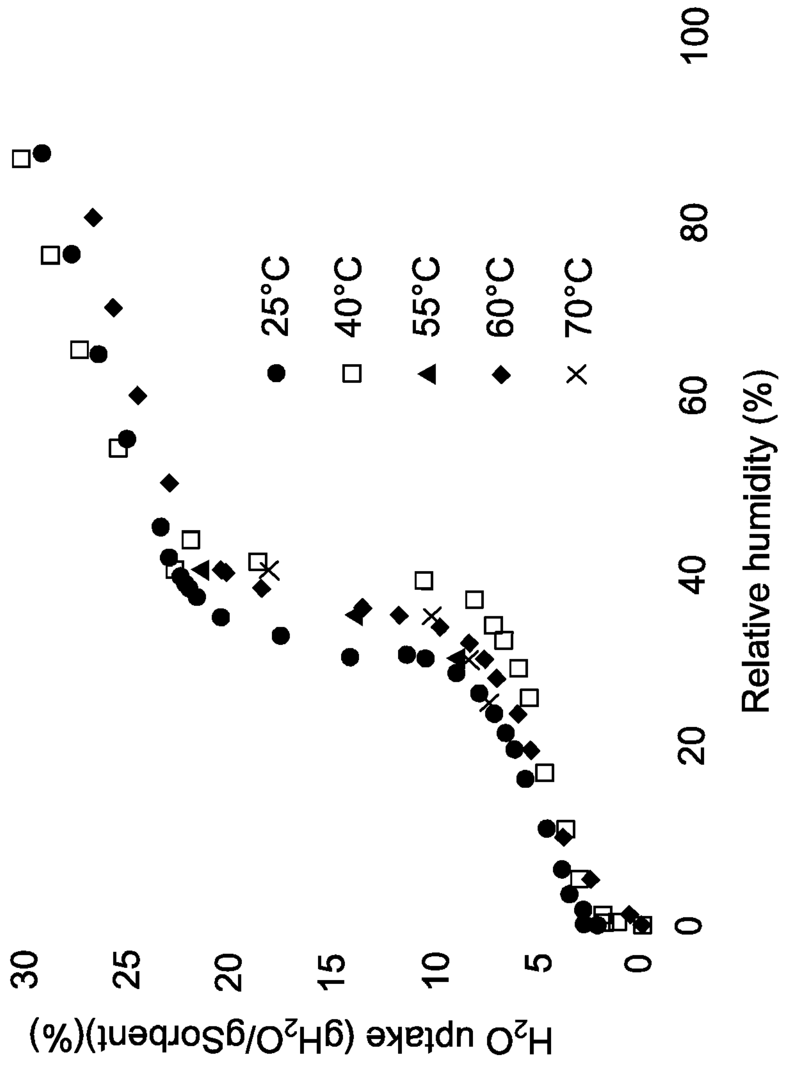

H$_2$O uptake (gH$_2$O/gSorbent)(%)
0
5
10
15
20
25
30
Relative humidity (%)
0
20
40
60
80
100
25°C
40°C
55°C
60°C
70°C


FIG. 7

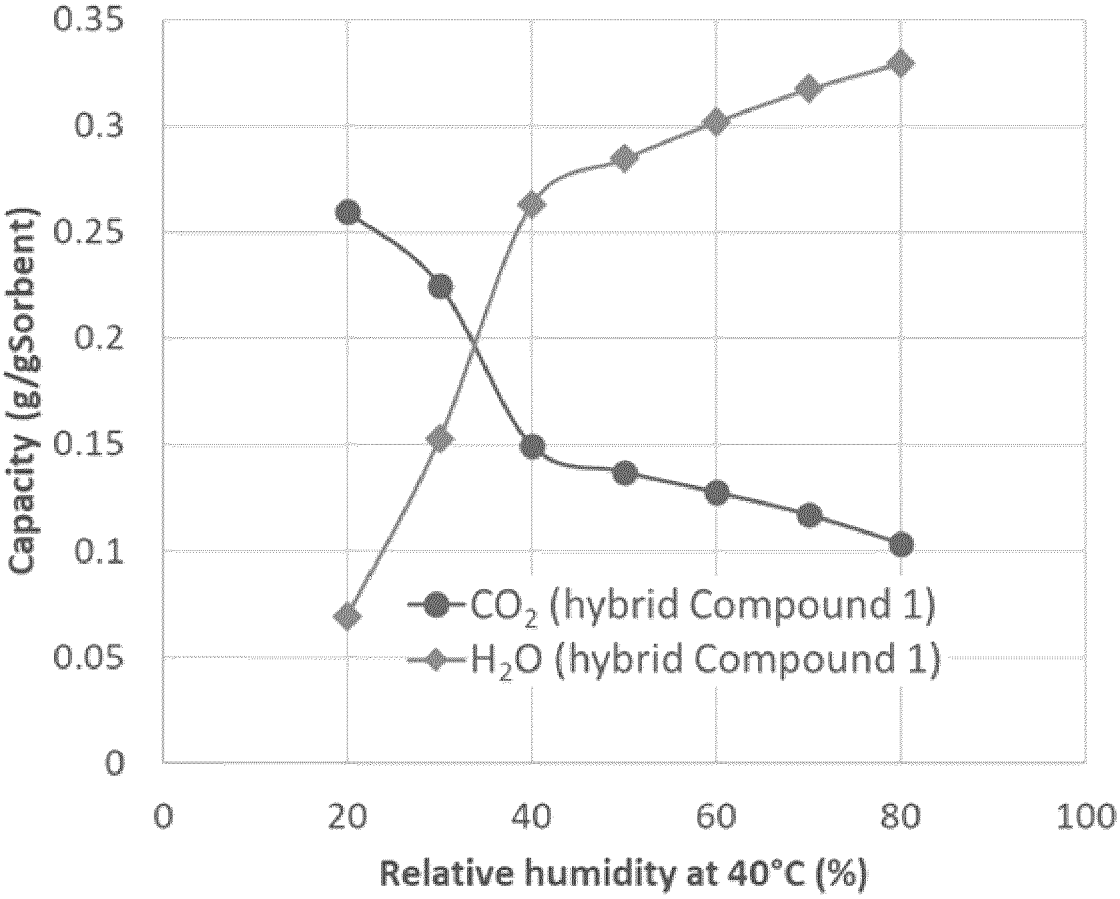
0.35
0.3
0.25
0.2
0.15
0.1
0.05
0
Capacity (g/gSorbent)
0
20
40
60
80
100
Relative humidity at 40°C (%)
$CO_2$ (hybrid Compound 1)
$H_2O$ (hybrid Compound 1)

FIG. 8

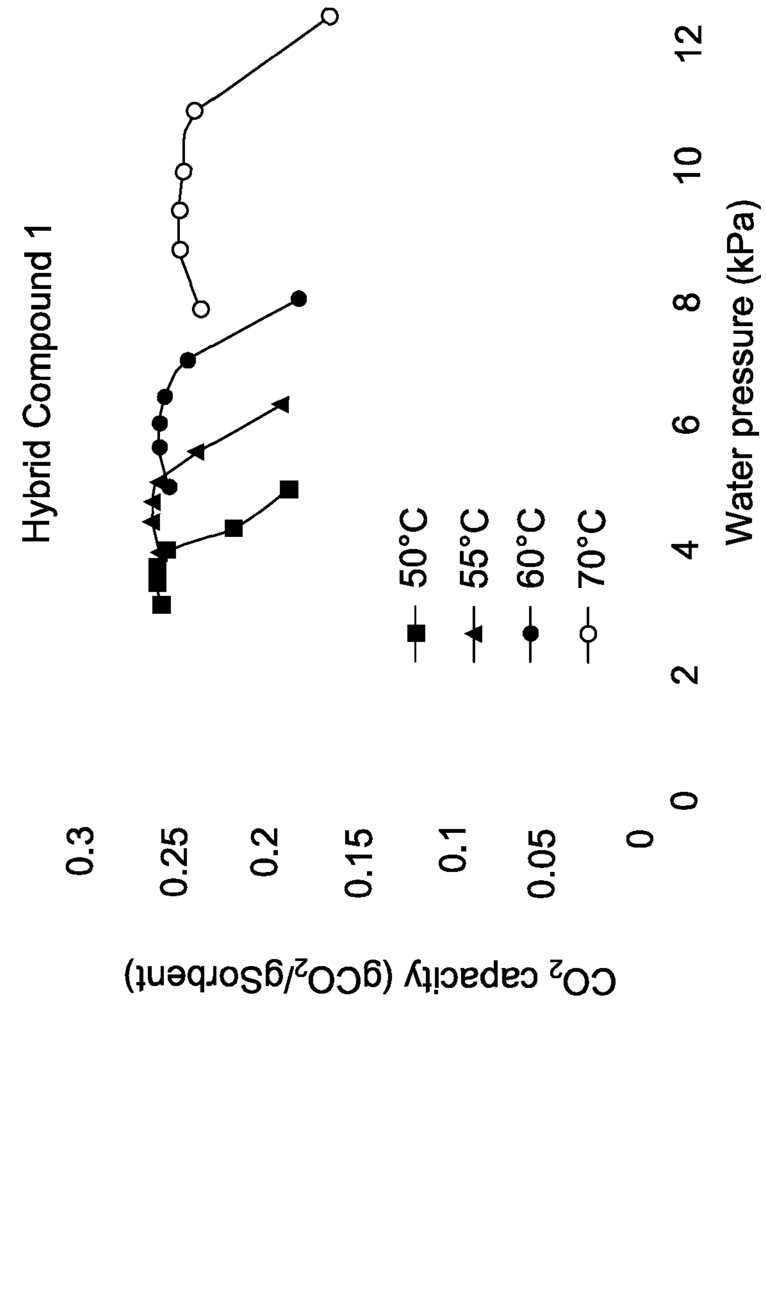
Hybrid Compound 1
$CO_2$ capacity ($gCO_2$/gSorbent)
0.3
0.25
0.2
0.15
0.1
0.05
0
Water pressure (kPa)
0
2
4
6
8
10
12
50°C
55°C
60°C
70°C

FIG. 9

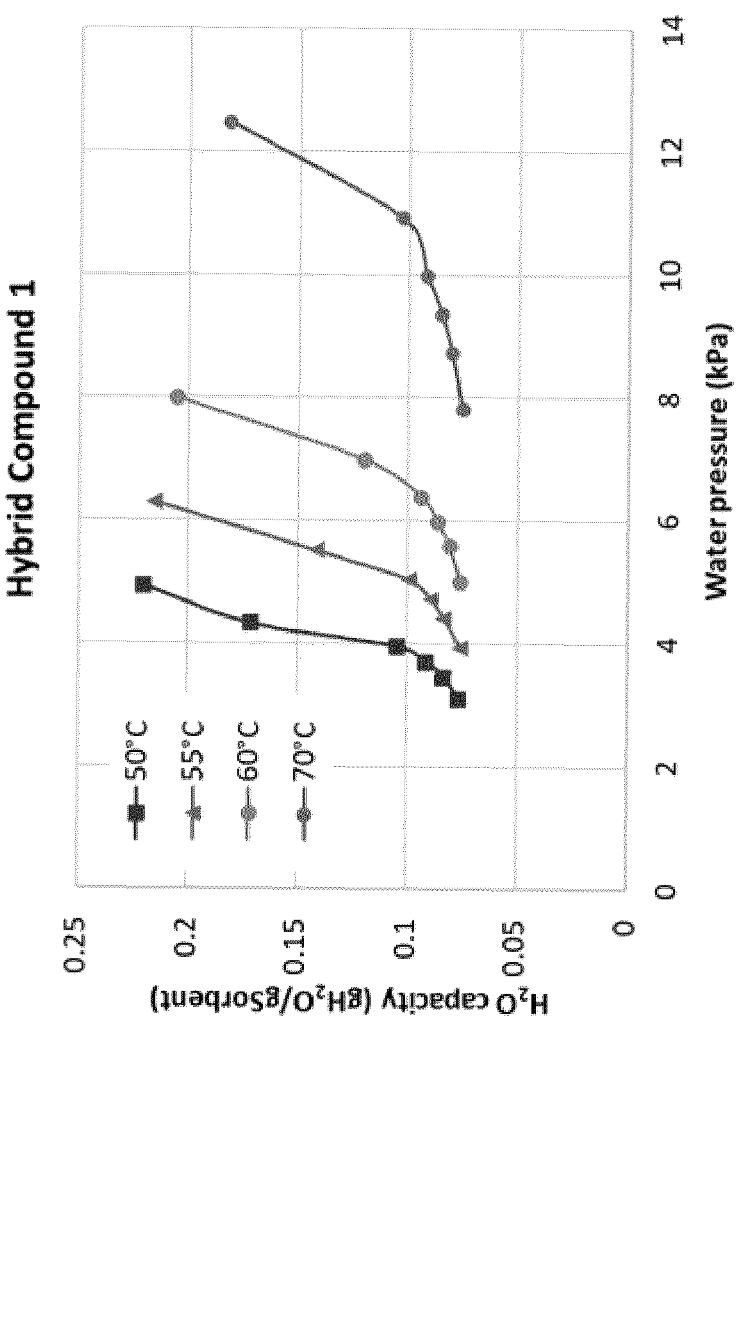
Hybrid Compound 1
50°C
55°C
60°C
70°C
$H_2O$ capacity ($gH_2O$/gSorbent)
0.25
0.2
0.15
0.1
0.05
0
0
2
4
6
8
10
12
14
Water pressure (kPa)

FIG. 10

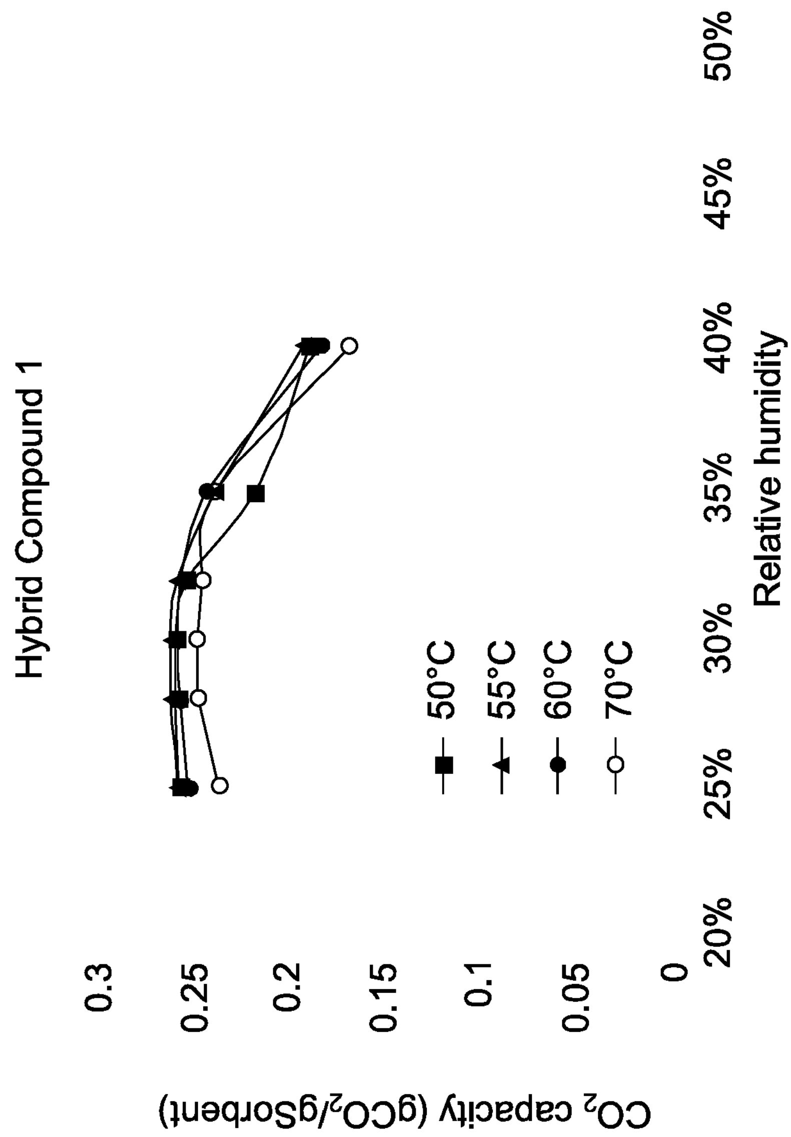
Hybrid Compound 1
CO2 capacity (gCO2/gSorbent)
0.3
0.25
0.2
0.15
0.1
0.05
0
20%
25%
30%
35%
40%
45%
50%
Relative humidity
50°C
55°C
60°C
70°C

FIG. 11

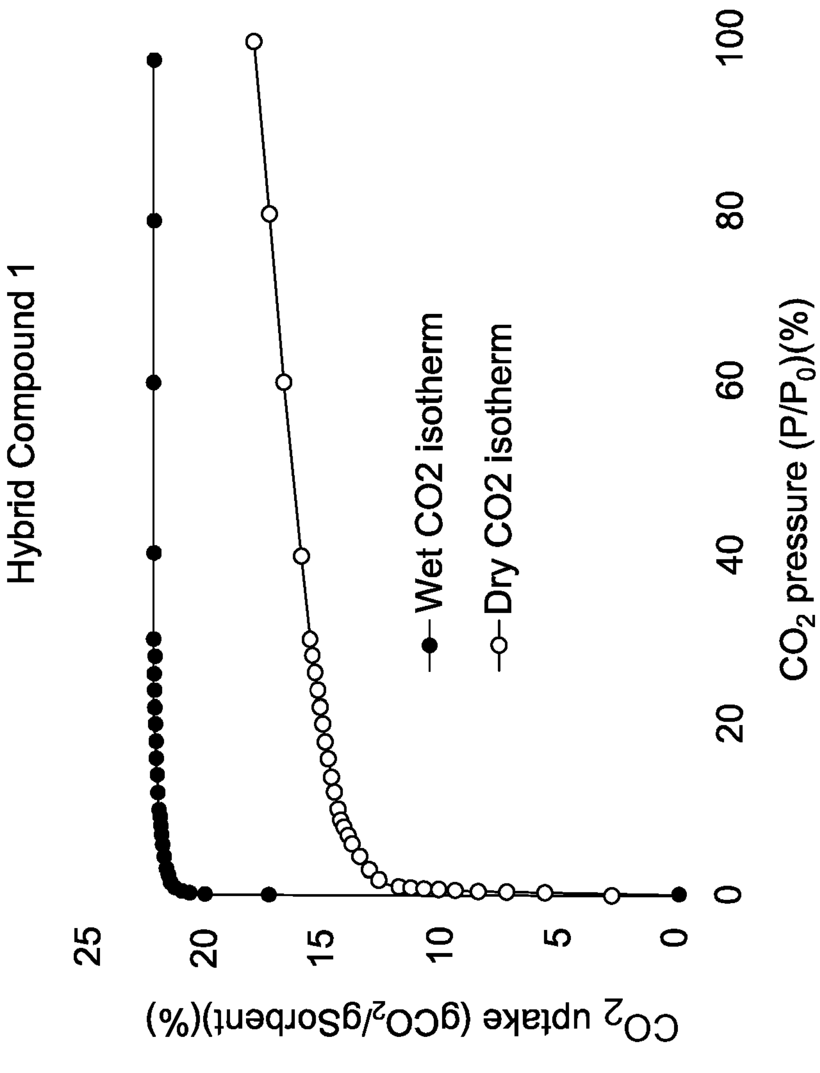

Hybrid Compound 1
Wet CO2 isotherm
Dry CO2 isotherm
CO2 uptake (gCO2/gSorbent)(%)
CO2 pressure (P/P0)(%)
0
5
10
15
20
25
0
20
40
60
80
100


FIG. 12A

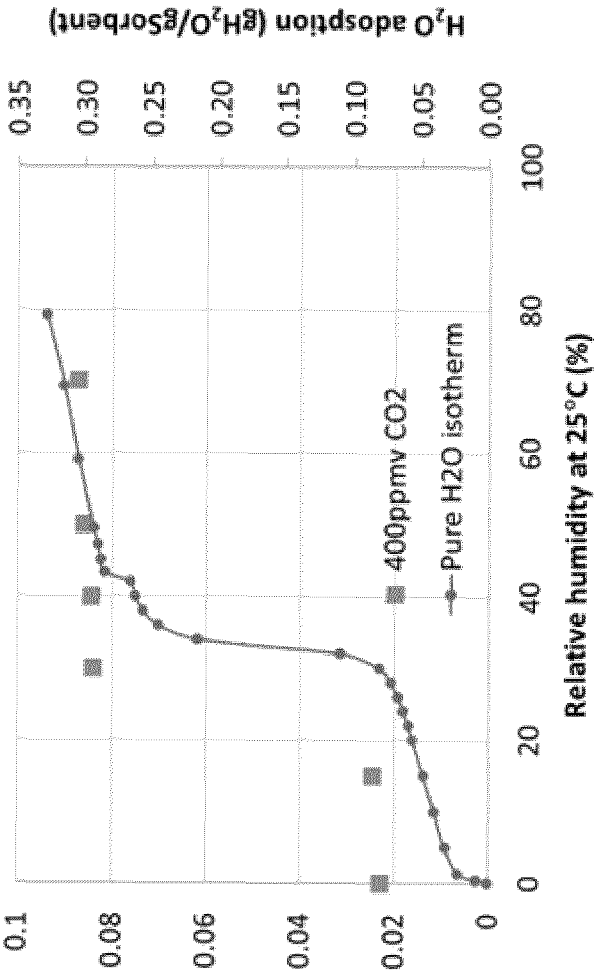

$H_2O$ adospion ($gH_2O$/gSorbent)
0.35
0.30
0.25
0.20
0.15
0.10
0.05
0.00
0.1
0.08
0.06
0.04
0.02
0
$CO_2$ adsorption ($gCO_2$/gSorbent)
0
20
40
60
80
100
Relative humidity at 25°C (%)
400ppmv CO2
Pure H2O isotherm


FIG. 12B

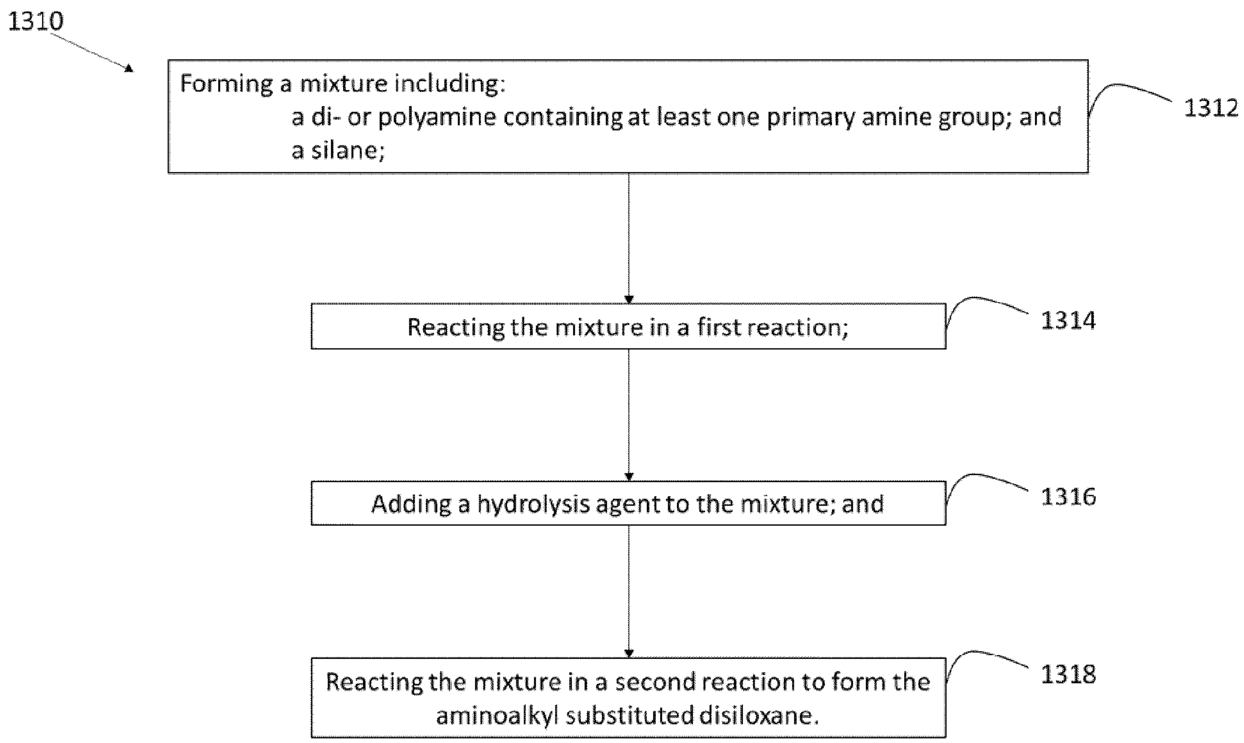
1310
Forming a mixture including:
a di- or polyamine containing at least one primary amine group; and
a silane;
1312
Reacting the mixture in a first reaction;
1314
Adding a hydrolysis agent to the mixture; and
1316
Reacting the mixture in a second reaction to form the aminoalkyl substituted disiloxane.
1318

FIG. 13

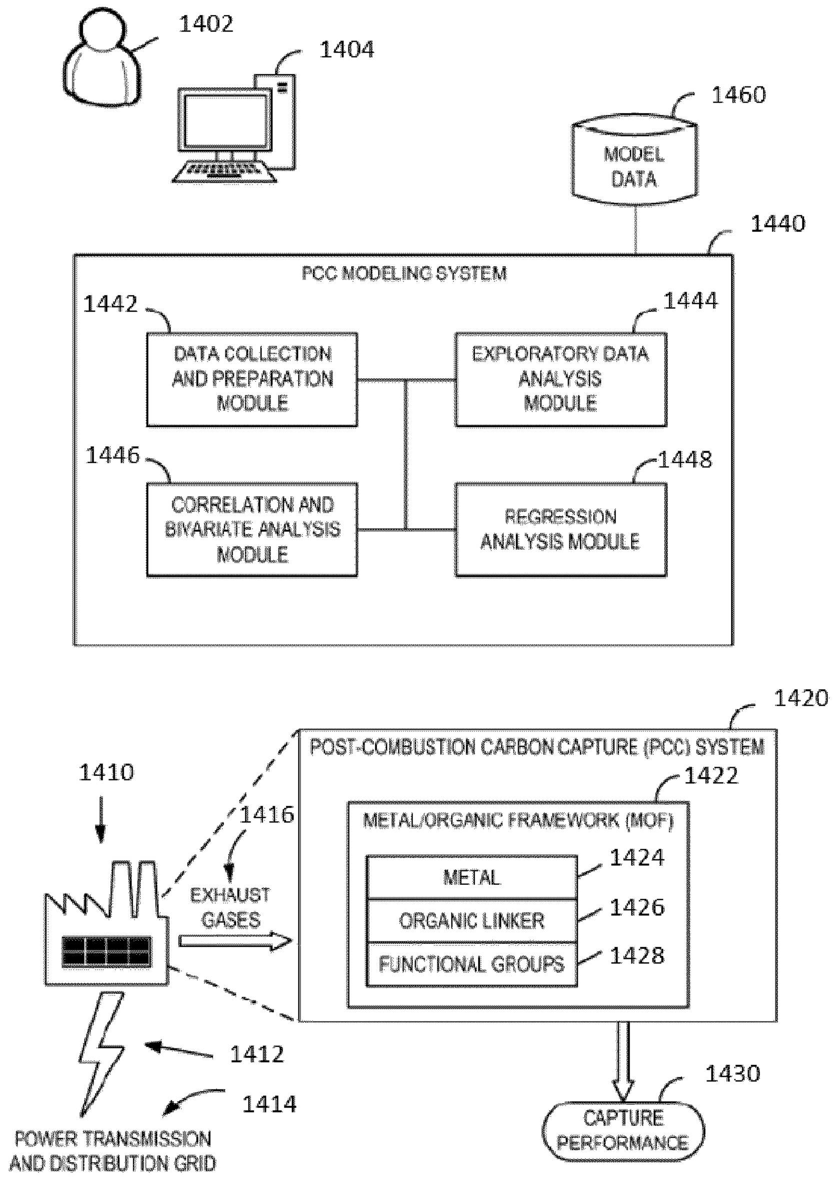
1402
1404
1460
MODEL DATA
1440
PCC MODELING SYSTEM
1442
DATA COLLECTION AND PREPARATION MODULE
1444
EXPLORATORY DATA ANALYSIS MODULE
1446
CORRELATION AND BIVARIATE ANALYSIS MODULE
1448
REGRESSION ANALYSIS MODULE
1420
POST-COMBUSTION CARBON CAPTURE (PCC) SYSTEM
1422
METAL/ORGANIC FRAMEWORK (MOF)
1410
1416
EXHAUST GASES
METAL
1424
ORGANIC LINKER
1426
FUNCTIONAL GROUPS
1428
1412
1414
1430
CAPTURE PERFORMANCE
POWER TRANSMISSION AND DISTRIBUTION GRID

FIG. 14

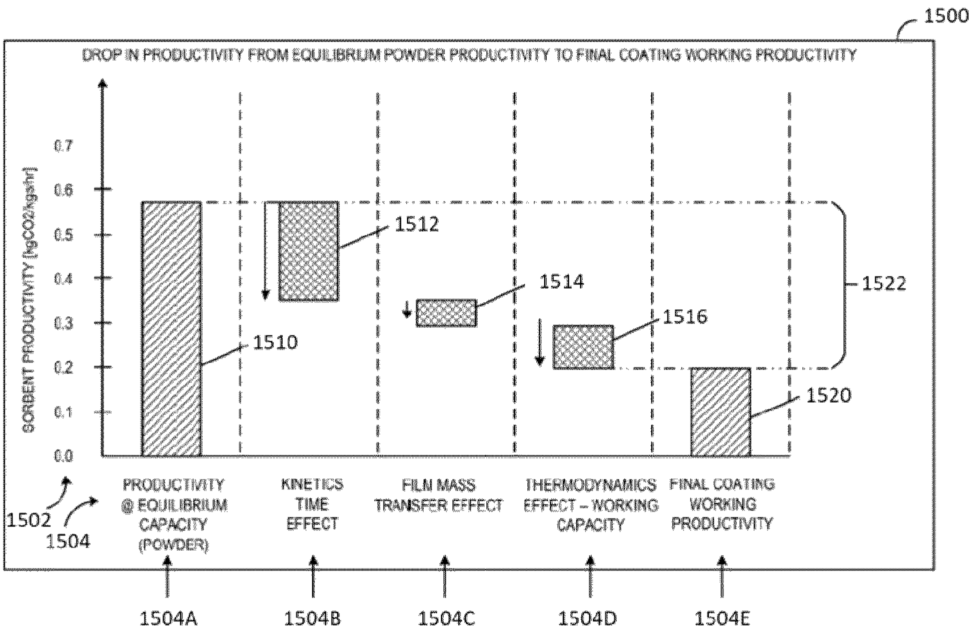
1500
DROP IN PRODUCTIVITY FROM EQUILIBRIUM POWDER PRODUCTIVITY TO FINAL COATING WORKING PRODUCTIVITY
SORBENT PRODUCTIVITY [kgCO2/kgs/hr]
0.7
0.6
0.5
0.4
0.3
0.2
0.1
0.0
1510
1512
1514
1516
1520
1522
1502
1504
PRODUCTIVITY @ EQUILIBRIUM CAPACITY (POWDER)
KINETICS TIME EFFECT
FILM MASS TRANSFER EFFECT
THERMODYNAMICS EFFECT – WORKING CAPACITY
FINAL COATING WORKING PRODUCTIVITY
1504A
1504B
1504C
1504D
1504E

FIG. 15

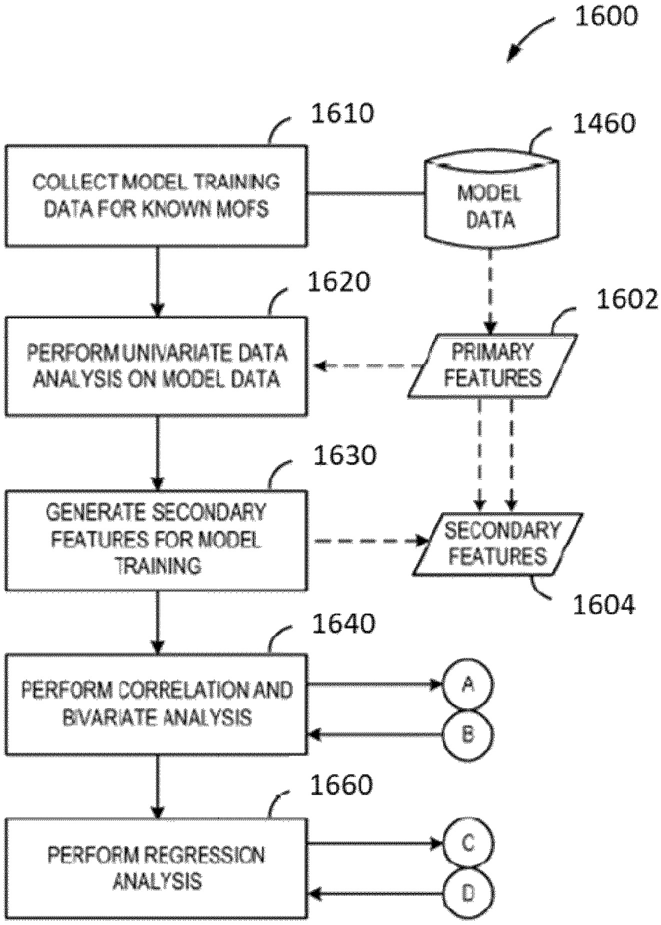
1600
1610
COLLECT MODEL TRAINING DATA FOR KNOWN MOFS
1460
MODEL DATA
1620
PERFORM UNIVARIATE DATA ANALYSIS ON MODEL DATA
1602
PRIMARY FEATURES
1630
GENERATE SECONDARY FEATURES FOR MODEL TRAINING
SECONDARY FEATURES
1604
1640
PERFORM CORRELATION AND BIVARIATE ANALYSIS
A
B
1660
PERFORM REGRESSION ANALYSIS
C
D

FIG. 16A

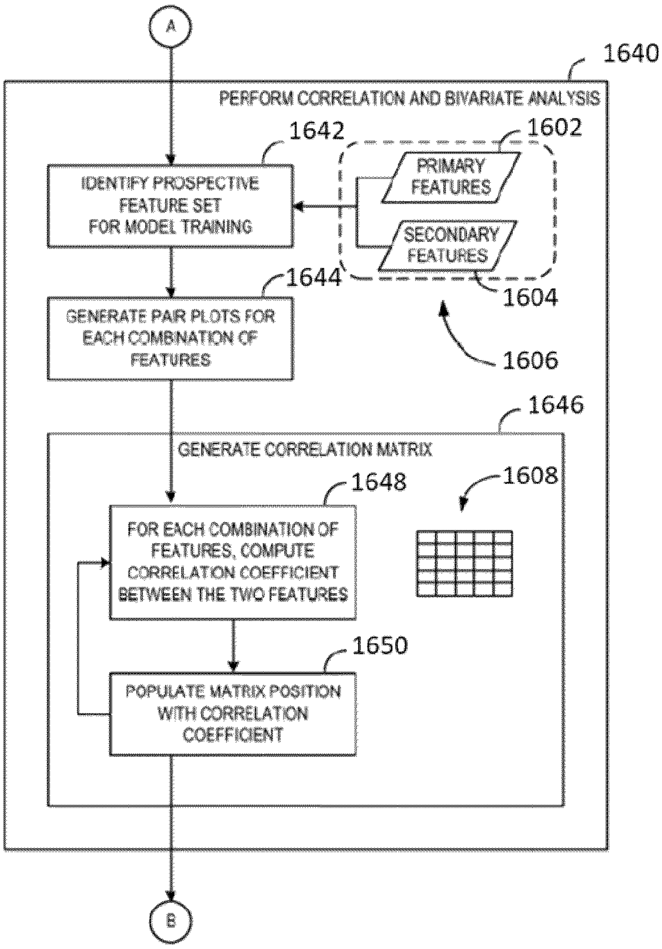
A
1640
PERFORM CORRELATION AND BIVARIATE ANALYSIS
1642
1602
PRIMARY FEATURES
IDENTIFY PROSPECTIVE FEATURE SET FOR MODEL TRAINING
SECONDARY FEATURES
1644
1604
GENERATE PAIR PLOTS FOR EACH COMBINATION OF FEATURES
1606
1646
GENERATE CORRELATION MATRIX
1648
1608
FOR EACH COMBINATION OF FEATURES, COMPUTE CORRELATION COEFFICIENT BETWEEN THE TWO FEATURES
1650
POPULATE MATRIX POSITION WITH CORRELATION COEFFICIENT
B

FIG. 16B

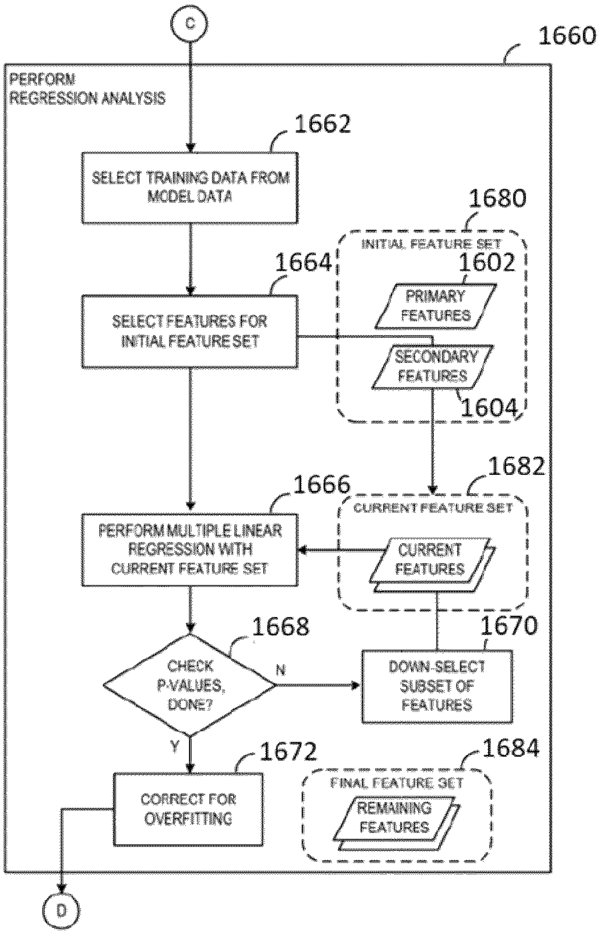

C
1660
PERFORM REGRESSION ANALYSIS
1662
SELECT TRAINING DATA FROM MODEL DATA
1680
INITIAL FEATURE SET
1664
1602
PRIMARY FEATURES
SELECT FEATURES FOR INITIAL FEATURE SET
SECONDARY FEATURES
1604
1682
1666
CURRENT FEATURE SET
PERFORM MULTIPLE LINEAR REGRESSION WITH CURRENT FEATURE SET
CURRENT FEATURES
1668
1670
CHECK P-VALUES, DONE?
N
DOWN-SELECT SUBSET OF FEATURES
Y
1672
1684
FINAL FEATURE SET
CORRECT FOR OVERFITTING
REMAINING FEATURES
D


FIG. 16C

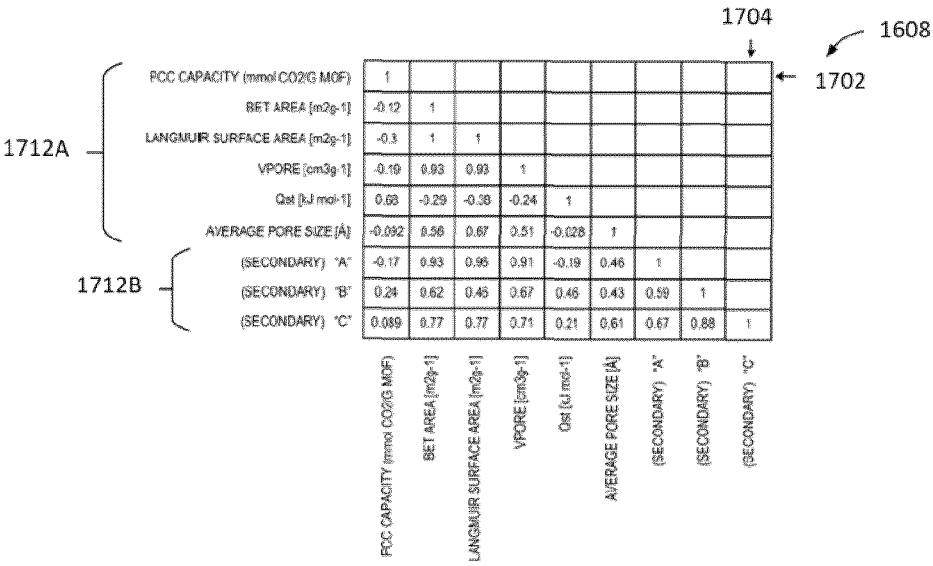
1704
1608
1702
1712A
1712B
PCC CAPACITY (mmol CO2/G MOF)
BET AREA [m2g-1]
LANGMUIR SURFACE AREA [m2g-1]
VPORE [cm3g-1]
Qst [kJ mol-1]
AVERAGE PORE SIZE [Å]
(SECONDARY) "A"
(SECONDARY) "B"
(SECONDARY) "C"
1
-0.12 1
-0.3 1 1
-0.19 0.93 0.93 1
0.68 -0.29 -0.38 -0.24 1
-0.092 0.56 0.67 0.51 -0.028 1
-0.17 0.93 0.96 0.91 -0.19 0.46 1
0.24 0.62 0.46 0.67 0.46 0.43 0.59 1
0.089 0.77 0.77 0.71 0.21 0.61 0.67 0.88 1

# FIG. 17

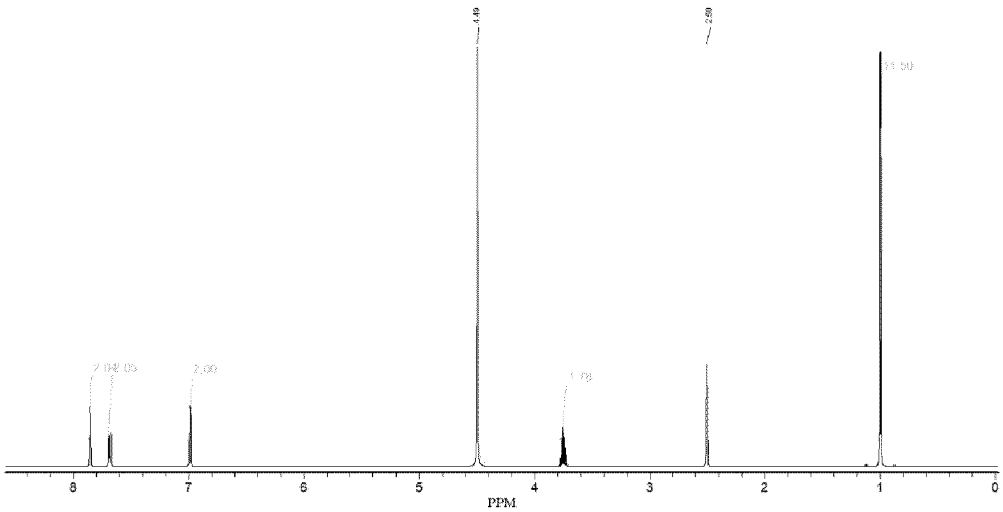


FIG. 18

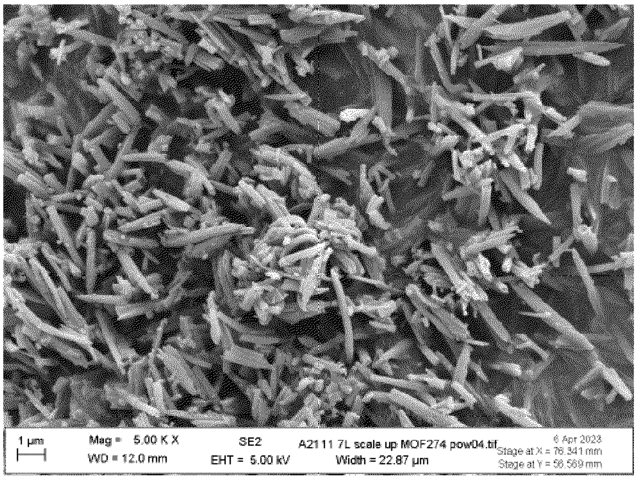
1 µm
Mag = 5.00 K X
WD = 12.0 mm
SE2
EHT = 5.00 kV
A2111 7L scale up MOF274 pow04.tif
Width = 22.87 µm
6 Apr 2023
Stage at X = 76.341 mm
Stage at Y = 56.569 mm

FIG. 19

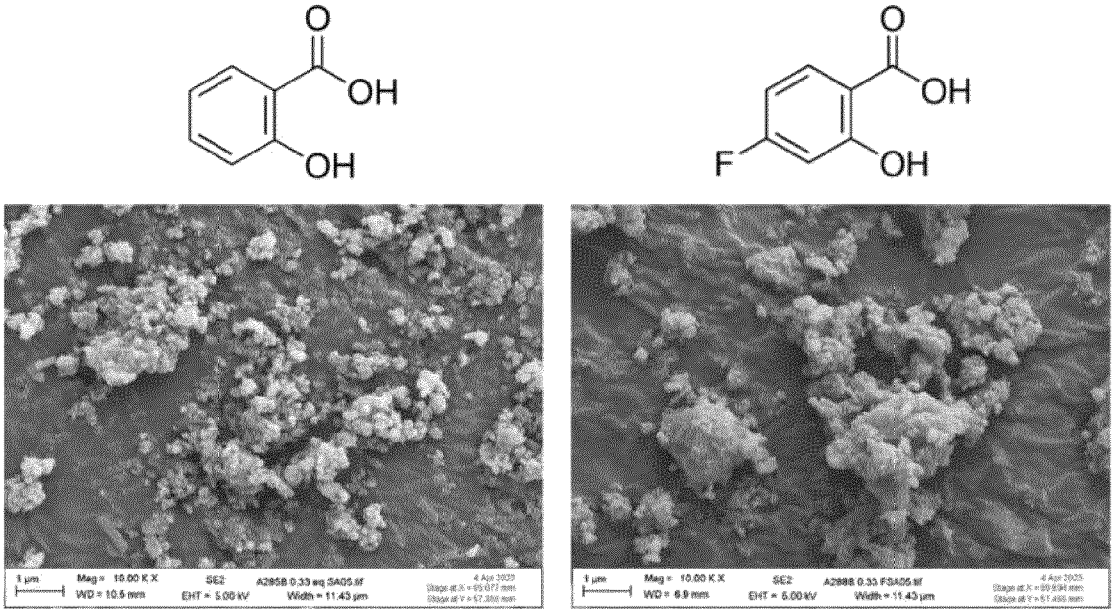

FIG. 20

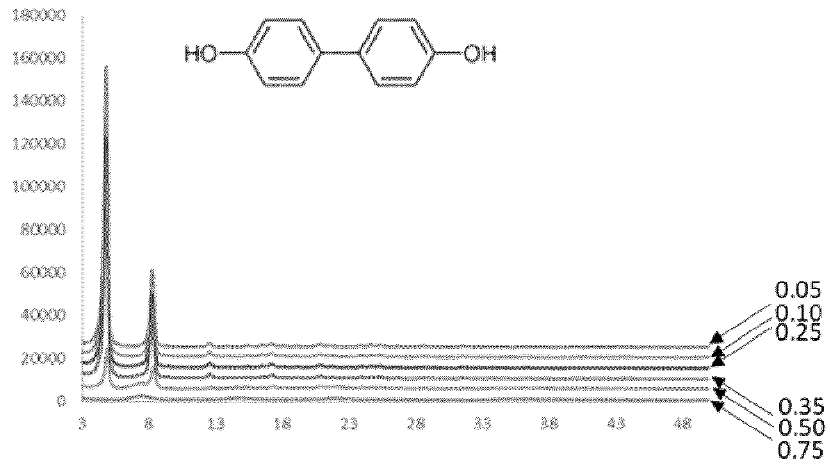
180000
160000
140000
120000
100000
80000
60000
40000
20000
0
3
8
13
18
23
28
33
38
43
48
0.05
0.10
0.25
0.35
0.50
0.75

FIG. 21

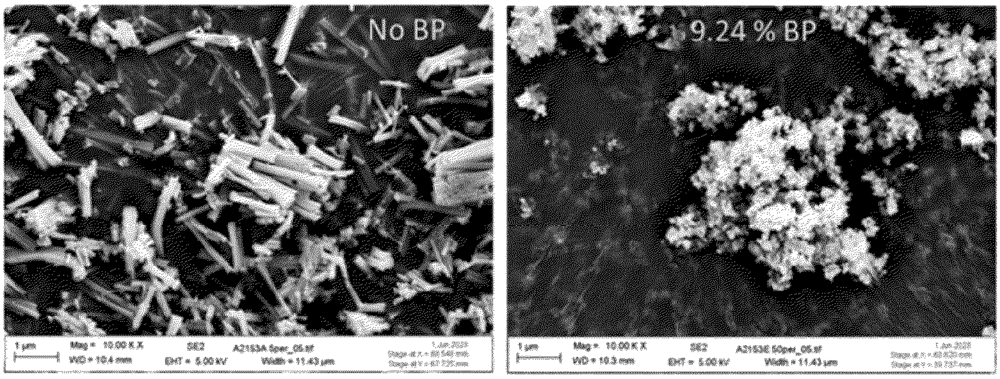


FIG. 22

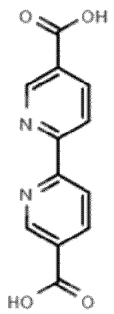

bpydc

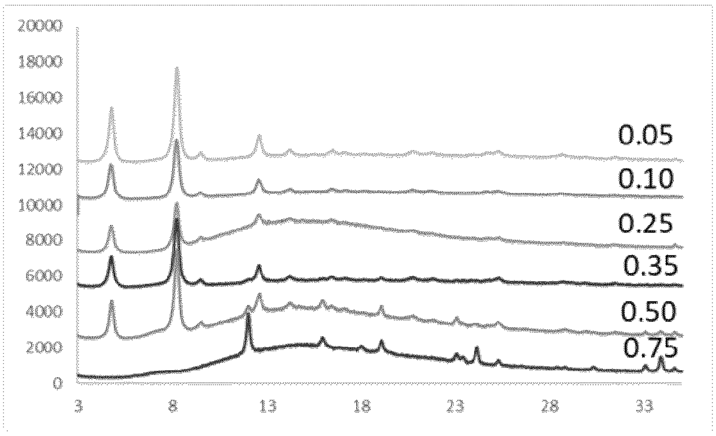
20000
18000
16000
14000
12000
10000
8000
6000
4000
2000
0
3
8
13
18
23
28
33
0.05
0.10
0.25
0.35
0.50
0.75

FIG. 23

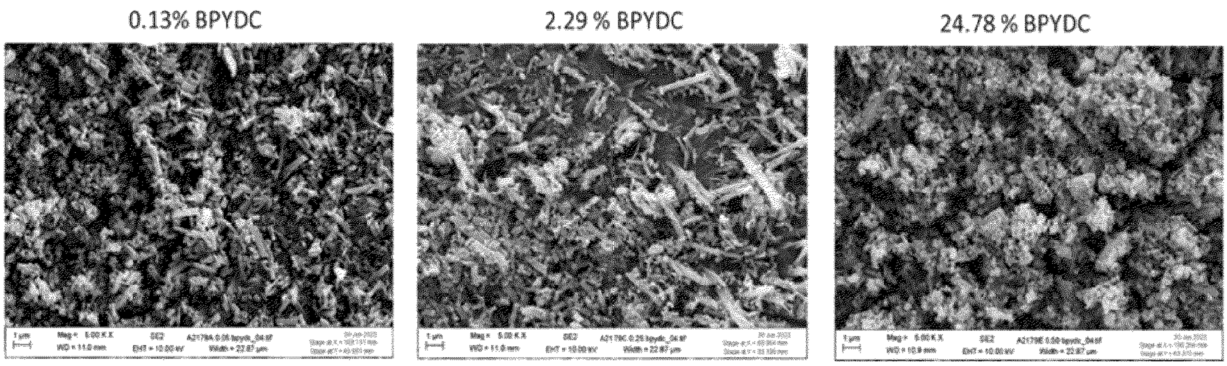


FIG. 24

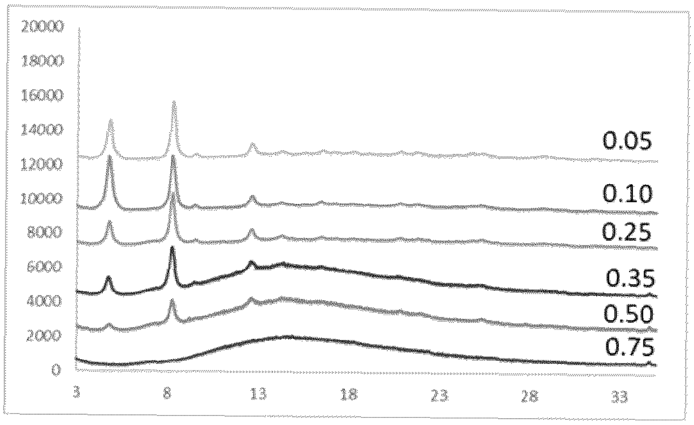
20000
18000
16000
14000
12000
10000
8000
6000
4000
2000
0
3
8
13
18
23
28
33
0.05
0.10
0.25
0.35
0.50
0.75

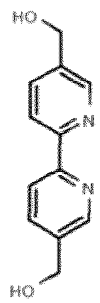

bpydm

FIG. 25

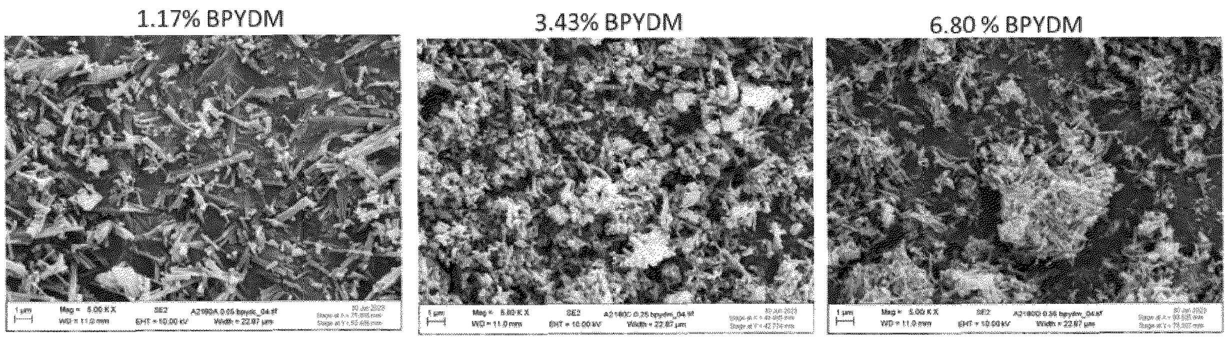


FIG. 26

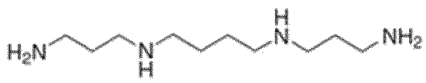

Spermine

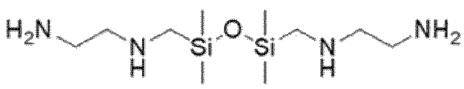

AEAM

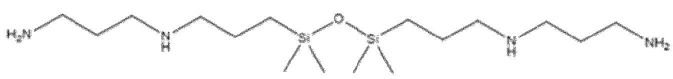

APAP

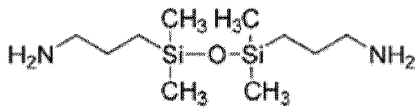

GAP-0

FIG. 27

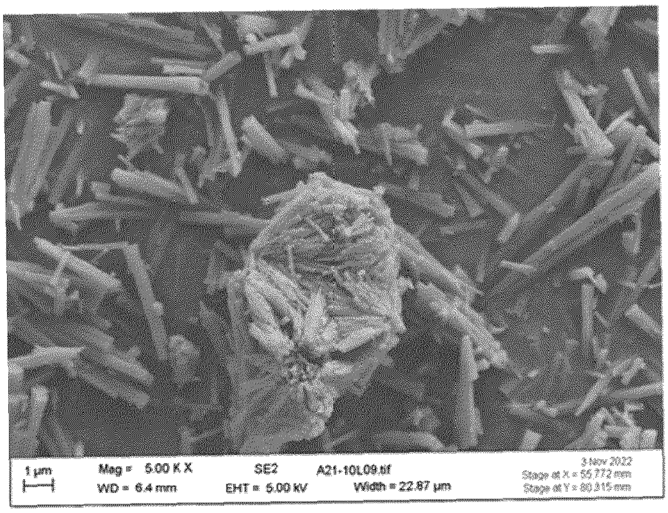
1 µm
Mag = 5.00 K X
SE2
A21-10L09.tif
3 Nov 2022
WD = 6.4 mm
EHT = 5.00 kV
Width = 22.87 µm
Stage at X = 55.772 mm
Stage at Y = 80.315 mm

FIG. 28

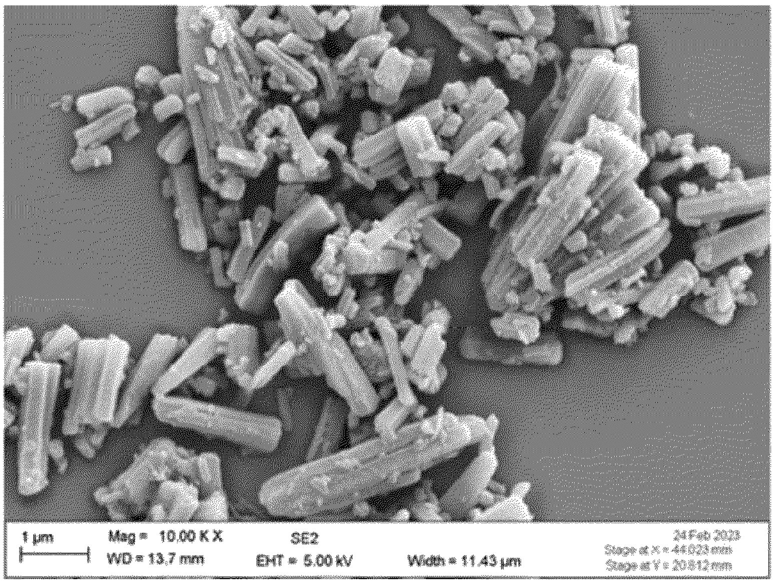
1 µm
Mag = 10.00 K X
WD = 13.7 mm
SE2
EHT = 5.00 kV
Width = 11.43 µm
24 Feb 2023
Stage at X = 44.023 mm
Stage at Y = 20.812 mm

FIG. 29

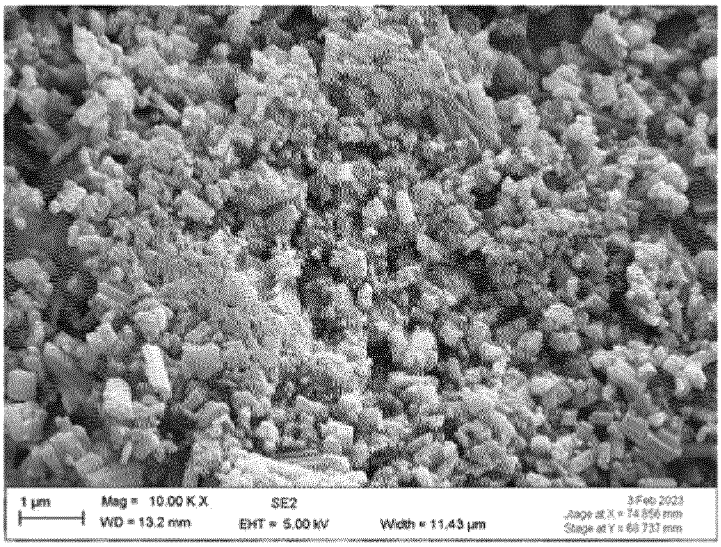


FIG. 30

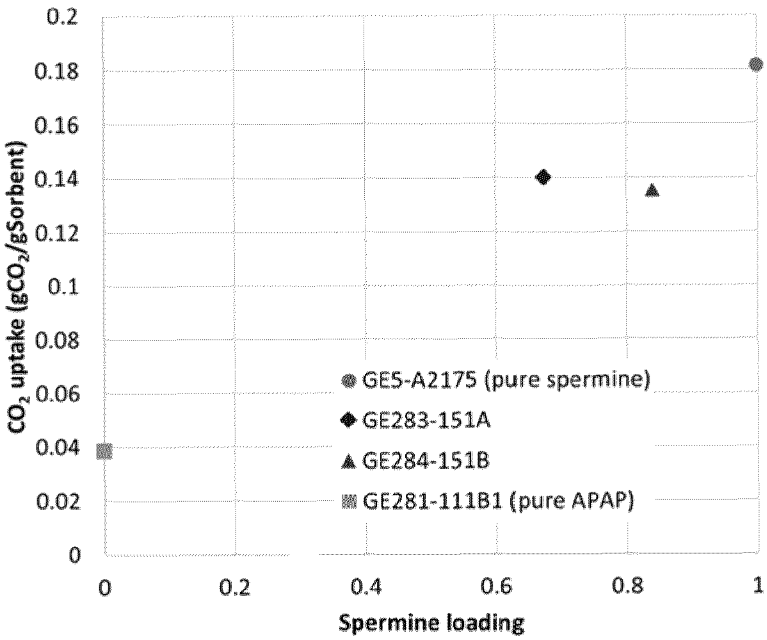
0.2
0.18
0.16
0.14
0.12
0.1
0.08
0.06
0.04
0.02
0
CO2 uptake (gCO2/gSorbent)
GE5-A2175 (pure spermine)
GE283-151A
GE284-151B
GE281-111B1 (pure APAP)
0
0.2
0.4
0.6
0.8
1
Spermine loading

FIG. 31

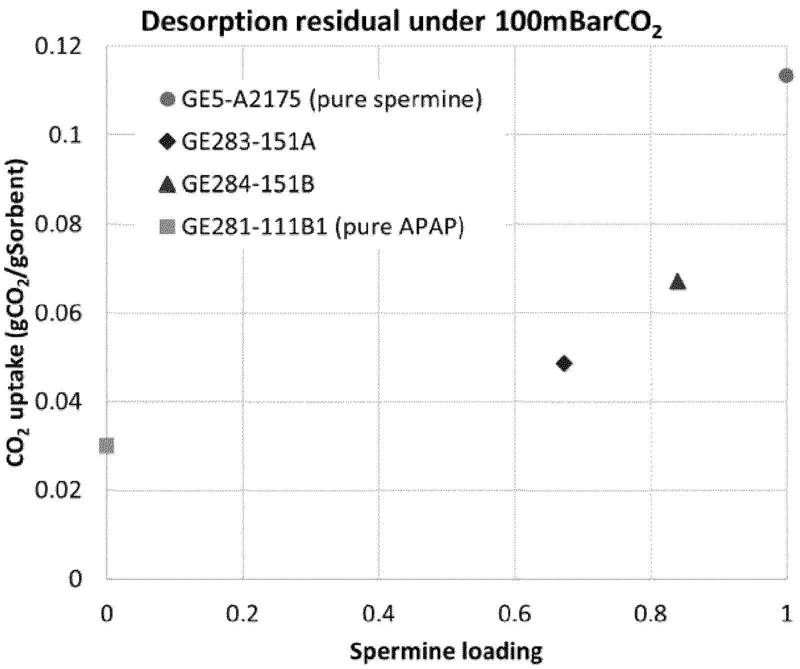
Desorption residual under 100mBarCO2
0.12
0.1
0.08
0.06
0.04
0.02
0
CO2 uptake (gCO2/gSorbent)
GE5-A2175 (pure spermine)
GE283-151A
GE284-151B
GE281-111B1 (pure APAP)
0
0.2
0.4
0.6
0.8
1
Spermine loading

**FIG. 32**

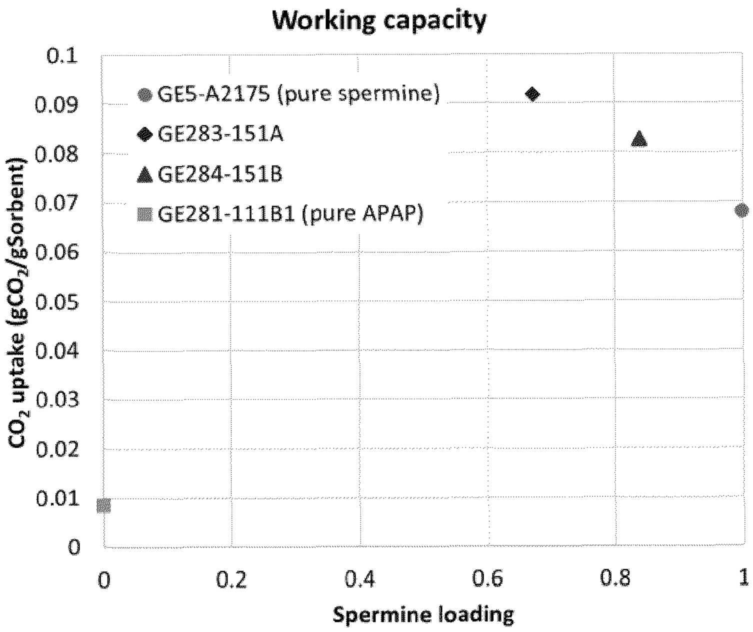
Working capacity
CO2 uptake (gCO2/gSorbent)
0.1
0.09
0.08
0.07
0.06
0.05
0.04
0.03
0.02
0.01
0
GE5-A2175 (pure spermine)
GE283-151A
GE284-151B
GE281-111B1 (pure APAP)
0
0.2
0.4
0.6
0.8
1
Spermine loading

FIG. 33

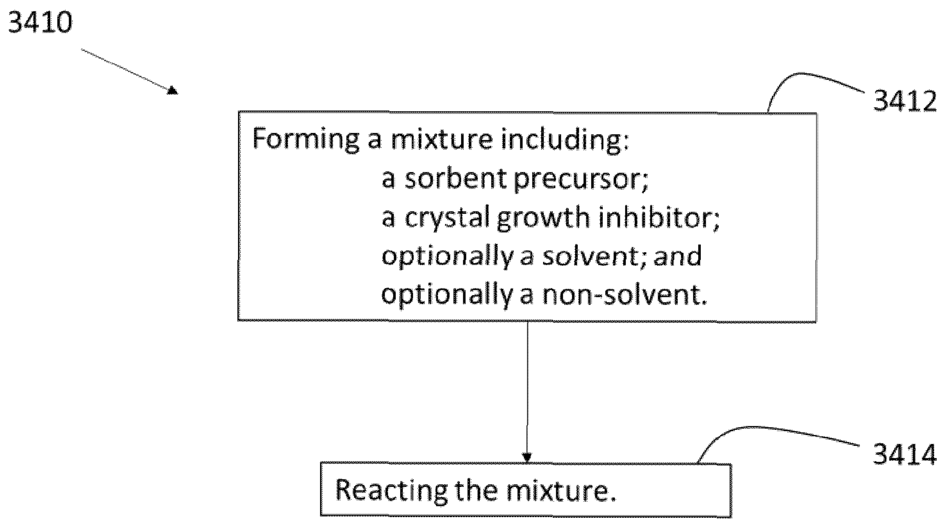
3410
3412
Forming a mixture including:
a sorbent precursor;
a crystal growth inhibitor;
optionally a solvent; and
optionally a non-solvent.
3414
Reacting the mixture.

FIG. 34

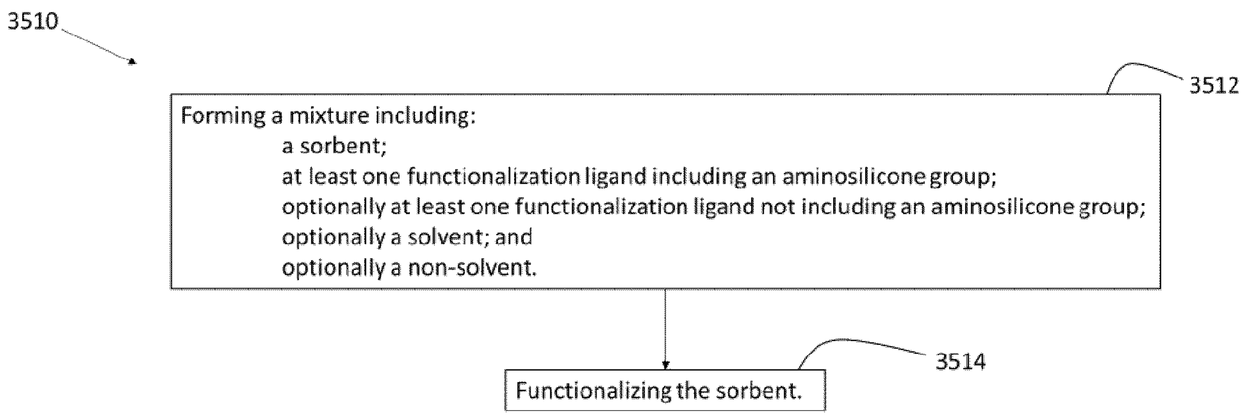
3510
3512
Forming a mixture including:
a sorbent;
at least one functionalization ligand including an aminosilicone group;
optionally at least one functionalization ligand not including an aminosilicone group;
optionally a solvent; and
optionally a non-solvent.
3514
Functionalizing the sorbent.

FIG. 35

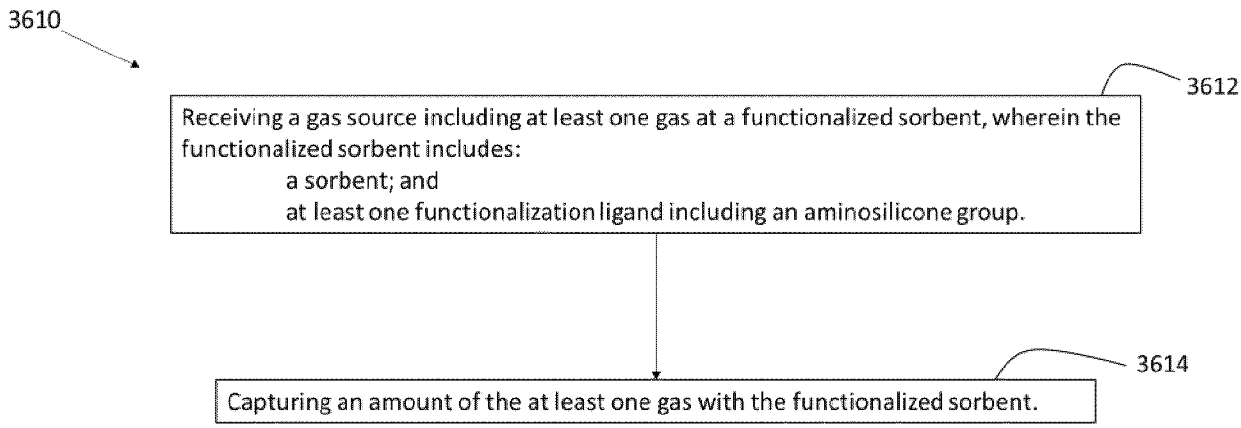
3610
3612
Receiving a gas source including at least one gas at a functionalized sorbent, wherein the functionalized sorbent includes:
a sorbent; and
at least one functionalization ligand including an aminosilicone group.
3614
Capturing an amount of the at least one gas with the functionalized sorbent.

FIG. 36

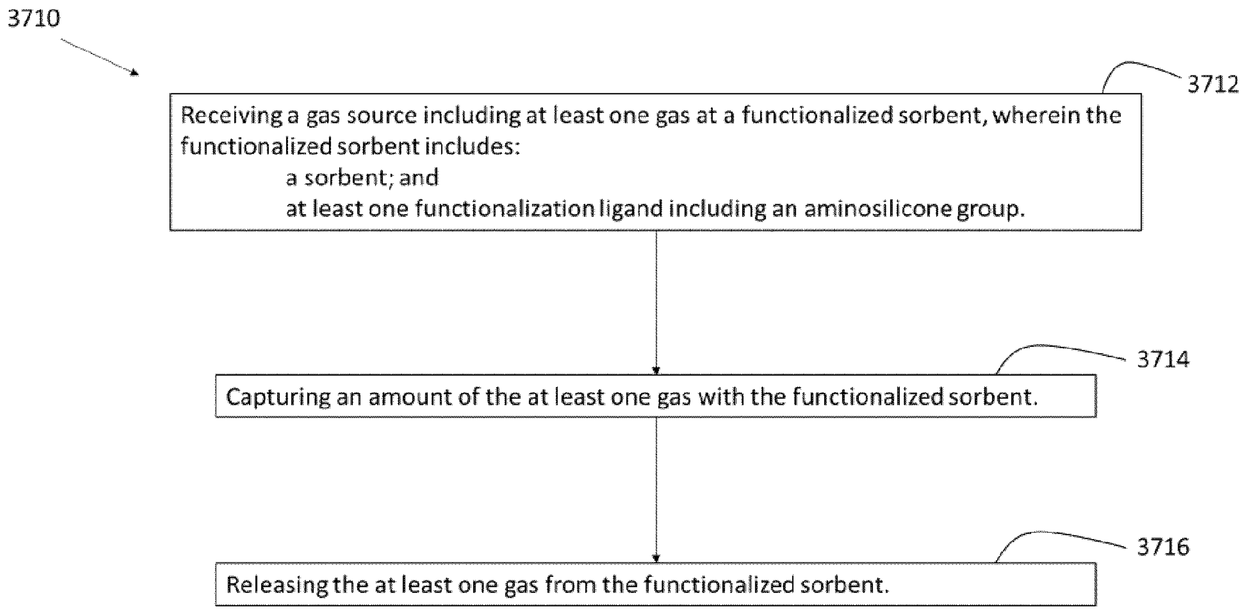
3710
3712
Receiving a gas source including at least one gas at a functionalized sorbent, wherein the functionalized sorbent includes:
a sorbent; and
at least one functionalization ligand including an aminosilicone group.
3714
Capturing an amount of the at least one gas with the functionalized sorbent.
3716
Releasing the at least one gas from the functionalized sorbent.

FIG. 37

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 63386231
- US 2023021542 W
- US 2023023746 W
- US 63592783
- CN 102675596
- CN 102351893
- US 2022082243 W
- US 2023060396 W
- US 20220266219 A


### Non-patent literature cited in the description


- **LI et al.** *Thermochimica Acta*, 2012, vol. 545, 75
- **FU et al.** *Science Advances*, 2023, vol. 9, 6